(19) Europäisches Patentamt
European Patent Office
Office européen des brevets

(11) **EP 3 313 080 A1**

(12) **EUROPEAN PATENT APPLICATION**

(43) Date of publication:
**25.04.2018 Bulletin 2018/17**

(21) Application number: **17198690.4**

(22) Date of filing: **30.11.2011**

(51) Int Cl.:
*H04N 21/258* (2011.01)       *H04N 21/443* (2011.01)
*H04N 21/431* (2011.01)       *H04N 21/6547* (2011.01)
*H04N 21/45* (2011.01)         *H04N 21/81* (2011.01)
*H04H 60/31* (2008.01)         *H04H 60/66* (2008.01)
*H04N 21/2665* (2011.01)     *H04N 21/442* (2011.01)
*H04N 21/462* (2011.01)       *H04N 21/472* (2011.01)
*H04N 21/482* (2011.01)       *H04N 21/658* (2011.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.11.2010 GB 201020290**

(62) Document number(s) of the earlier application(s) in accordance with Art. 76 EPC:
**11810622.8 / 2 647 215**

(71) Applicant: **Youview TV Ltd London EC3R 6YT (GB)**

(72) Inventor: **HUNTER, Jeff London EC3R 6YT (GB)**

(74) Representative: **Robson, Aidan John Reddie & Grose LLP The White Chapel Building 10 Whitechapel High Street London E1 8QS (GB)**

Remarks:
This application was filed on 26.10.2017 as a divisional application to the application mentioned under INID code 62.

(54) **REMOTE DEVICE CONFIGURATION**

(57) The present invention relates to a system for providing a plurality of users with access to a plurality of media content from a plurality of media content sources, comprising: means for determining a data communications network that a remote client device is connected to, the remote client device being adapted to provide one of the plurality of users with access to the media content; and means for providing configuration settings for the remote client device in dependence on said determined network. By providing such features the user experience may be improved, whilst optimising a remote client device for use on a particular network.

Figure 8

EP 3 313 080 A1

**Description**

This invention relates to a system and method for content provision. The invention is particularly relevant to the provision of data such as media content and related metadata from a plurality of media content providers to a media client device, such as a set-top box.

As the technology for transmission of media content to the home has developed - from radio to television broadcasts to Digital Terrestrial Television (DTT), Video-On-Demand (VOD) and Internet Protocol Television (IPTV) - there has been a dramatic increase in the number of media content providers resulting in a rich ecosystem of different modes and models of content provision, and a concomitant increase in the complexity of the user equipment for receiving the media content transmissions.

Typically, a user wishing to access a diversity of media content requires several receiving devices and faces the need to become familiar with each of their distinct modes of operation, knowledgeable about their specific configuration requirements and access restrictions - and proficient at navigating their diverse user interfaces - only to have the device rapidly achieve obsolescence.

The requirements of the content providers - not least in having a way of providing a high-quality media experience to an easily accessible large consumer base - are also not being met by currently available systems.

This invention may provide a solution to at least some of these problems.

*Discovery and playback*

According to one aspect of the invention, there is provided a system for providing media content to users, which comprises: means for aggregating data relating to a plurality of media content items provided by a plurality of media content providers; means for providing the aggregated data to a user; and means for enabling a user to access particular content items by means of said aggregated data, wherein the content items are in the form of both scheduled content items and unscheduled content items.

Preferably, the scheduled content item is in at least one of following forms: a scheduled broadcast content item; a scheduled multicast content item; and a scheduled streamed content item. Scheduled broadcast content items may be in the form of television programs, and scheduled multicast content items may be in the form of IP multicast programs.

Preferably, the unscheduled content item is in the form of an on-demand content item, for example, an on-demand video or audio content item. On-demand content items may be provided in the form of a virtual or placeholder channel.

Preferably, the system further comprises means for delivering content items to a user for consumption by the user, for example, to enable the user to watch and/or listen to the content items.

Preferably, the delivery means is adapted to deliver the content items via more than one delivery mechanism.

Preferably, the delivery means includes one or more communication networks.

Preferably, the communication network is in the form of at least one of the following types of network: a digital terrestrial television (DTT) network; an analogue terrestrial television network; an Internet Protocol (IP) network; a cable network; and a digital satellite network.

Preferably, the delivery means is adapted to deliver at least a portion of the aggregated data to a user.

Preferably, the delivery means is adapted to deliver content items to a user via one delivery mechanism and aggregated data to a user via a different delivery mechanism. Thus, in certain examples, aggregated data is provided, say, via an IP network, and the actual content items might be provided via a DTT network.

Preferably, the media content providers include one or more of the following: linear broadcast analogue and/or digital terrestrial channels; Video on Demand (VOD) content providers; linear IP unicast and/or multicast channels; linear IP broadcast channels; and non-linear IP channels. Typically, the media content providers are in the form of terrestrial, satellite, Internet, or cable channels, or other channels and/or services that are able to provide media content to users.

Preferably, each content provider is adapted to deliver content items to a user via an appropriate communication network infrastructure.

Preferably, the system further comprises means for receiving data relating to a plurality of media content items provided by a plurality of media content providers.

Preferably, the system further comprises means for storing the aggregated data.

Preferably, the content items are not stored together with the aggregated data. More preferably, the aggregated data is stored on a central server, and the content providers communicate with this server in order to provide metadata relating to the content items to this central server.

Preferably, the content items are stored on storage means each associated with a respective content provider.

Preferably, the data includes metadata relating to the content items.

Preferably, the data includes one or more of the following types of information relating to the content items: the location of the content item, for example, a Uniform Resource Identifier (URI) for the content item; access rights and/or user entitlement to the content item; geographical or location specific information relating to the content item; the content provider associated with the content item; the broadcast time and/or date of the content item; graphical information relating to the content items, for example, an icon or screen shot representative of the content item; the delivery method associated with the content item; and the format or type of content item.

Preferably, the system further comprises means for determining at least one characteristic associated with a user; and means for adapting access to the media content items in dependence on the at least one determined characteristic.

Preferably, the characteristic is at least one of the following: the geographical location of the user; the user's subscriptions to particular types of content items and/or content providers; an Internet Service Provider (ISP) to which the user is connected; the availability of particular content items; and the user's entitlement to particular content items.

Preferably, the access means is adapted to provide a user with access to particular content items by filtering the aggregated data provided to that user.

Preferably, the access means is adapted to provide a user with access to particular content items by providing the user with a particular subset of the aggregated data.

Preferably, the system further comprises at least one remote client device associated with a user. Preferably, the client device is in the form of an apparatus that is provided at the user's location. The apparatus is connectable to a user's display equipment (optionally a television). Alternatively, the client device might be incorporated within display equipment. Preferably, the client device includes means for playing content items, thereby to enable a user to consume content items.

Preferably, the client device is in the form of a receiver/decoder. More preferably, the client device is in the form of a Set Top Box (STB).

The term "receiver/decoder" used herein may connote a receiver for receiving either encoded or non-encoded signals, for example, television and/or radio signals, which may be broadcast, streamed, downloaded or transmitted by some other means. The term may also connote a decoder for decoding received signals. Embodiments of such receiver/decoders may include a decoder integral with the receiver for decoding the received signals, for example, in a "set-top box", such a decoder functioning in combination with a physically separate receiver, or such a decoder including additional functions, such as a web browser, a video recorder, or a television.

Preferably, the client device is connectable to a display means.

Preferably, the client device comprises means for connecting the client device to one or more communication networks.

Preferably, the communication network is in the form of at least one of the following types of network: a digital terrestrial television (DTT) network; a analogue terrestrial television network; an Internet Protocol (IP) network; a cable network; and a digital satellite network.

Preferably, the client device further comprises means for providing information relating to the client device and/or the associated user to the system.

Preferably, the information includes at least one of the following: the geographical location of the client device; user subscription information; an Internet Service Provider (ISP) to which the client is connected; and user content entitlement information.

Preferably, the system further comprises a media player for enabling users to consume content items.

Preferably, the media player is adapted to play media content items provided by a plurality of media content providers.

Preferably, the player is adapted to provide further information to a user in dependence on the content provider associated with a particular content item being played by the player, for example, relating to other content items provided by that content provider.

Preferably, the media player is provided by the client device. More preferably, the media player is stored on the client device. Alternatively, or in addition, the media player may be hosted on a server and accessible to users via a communications network.

Preferably, the system further comprises a plurality of further media players each associated with a respective content provider, and each adapted to play content items provided by that respective content provider.

Preferably, each of the further media players is adapted to provide a generic set of basic player operations.

Preferably, the system further comprises means for providing the aggregated data to a user via a user interface, thereby to enable a user to access particular content items.

Preferably, the user interface is in the form of an Electronic Programme Guide (EPG).

Preferably, the client device comprises means for displaying the aggregated data.

Preferably, the client device comprises means for storing the aggregated data. More preferably, the client device comprises means for storing the metadata.

According to another aspect of the invention, there is provided an apparatus (optionally in the form of a receiver/decoder) for enabling a user to access media content items, which comprises: means for receiving aggregated data

relating to a plurality of media content items provided by a plurality of media content providers; and means for enabling a user to access particular content items by means of said aggregated data, wherein the content items are in the form of both scheduled content items and unscheduled content items.

Preferably, the apparatus is in the form of a client device as herein described. More preferably, the apparatus is connectable to the system as herein described.

According to another aspect of the invention, there is provided an apparatus (optionally in the form of a server) for providing media content to users, which comprises: means for aggregating data relating to a plurality of media content items provided by a plurality of media content providers; means for providing the aggregated data to a user; and means for enabling a user to access particular content items by means of said aggregated data, wherein the content items are in the form of both scheduled content items and unscheduled content items.

Preferably, the apparatus is connectable to a plurality of user client devices as herein described.

According to a further aspect of the invention, there is provided a method of providing media content to users, which comprises: aggregating data relating to a plurality of media content items provided by a plurality of media content providers; providing the aggregated data to a user; and enabling a user to access particular content items by means of said aggregated data, wherein the content items are in the form of both scheduled content items and unscheduled content items.

### Software stack

According to another aspect of the invention, there is provided an apparatus, (optionally in the form of a receiver/decoder) for a content provision system, which comprises: a lower level software layer; and an upper level software layer, wherein the lower level software layer interacts directly with the hardware of the STB and provides an interface to the upper level software layer, and wherein the upper level software layer interacts with the lower level software layer and provides a user facing interface for user applications.

Preferably, the receiver/decoder is in the form of a Set top Box (STB).

Preferably, the application programming interface is provided between the software layers.

Preferably, each of the software layers is adapted to be updated independently by different parties.

Preferably, the lower level software layer is adapted to be updated by the STB manufacturer.

Preferably, the upper level software layer is adapted to be updated by a service (platform) provider.

Preferably, the upper level software layer is adapted to execute user applications.

Preferably, the upper level software layer is adapted to receive updated user applications.

Preferably, the lower level software layer includes at least some of the following modules: a kernel; a bootloader; a root file system; and middleware.

Preferably, the upper level software layer includes at least a user interface application.

Preferably, the upper level layer includes elements or modules adapted to configure and/or modify elements and/or modules in the lower level layer.

### ISP Discovery

According to one aspect of the present invention there is provided a system for providing a plurality of users with access to a plurality of media content from a plurality of media content sources, comprising: means for determining a data communications network that a remote client device is connected to, the remote client device being adapted to provide one of the plurality of users with access to the media content; and means for providing configuration settings for the remote client device in dependence on said determined network. By providing such features the user experience may be improved, whilst optimising a remote client device for use on a particular network.

Preferably, the determining means utilises the IP address of the remote client.

Preferably, the system further comprises storage means adapted to store a data communications network lookup table, the look-up table including data relating said IP address to the data communications network.

Preferably, the means for providing configuration settings comprising storage means, adapted to store a configuration settings look-up table, the look-up table including data relating said data communications network to the configuration settings.

Preferably, the configuration settings are specific to one of: all remote client devices, a plurality of remote client devices or a specific remote client device.

Preferably, the configuration settings include at least one of: a remote client device user interface; a remote client device media content player; user identifiers; media content identifiers; and media content locations. More preferably, at least one of the user interface, media content and media player is specific to the determined data communications network.

Preferably, the configuration settings are provided to the remote client by directing the remote client, utilising a Uniform Resource Indicator, to a storage means. More preferably, the Uniform Resource Indicator comprises a plurality of components, including at least one address component and at least one remote client device identification component.

Alternatively, or in addition, the storage means is provided by the ISP, and connectable to the data communications network. In this way, advantageously, the hosting of the configuration settings may be delegated to the ISP.

Preferably, the configuration settings include one or more of the following: the location (URIs) of platform services; information that is to be presented to a user; information relating to content delivery networks; and information relating to IP linear channels.

Preferably, the Uniform Resource Indicator, comprises at least one of: a base Uniform Resource Indicator; a remote client device manufacturer identifier; a remote client device identifier; a firmware identifier; a software identifier; and a configuration settings identifier.

Preferably, the configuration settings are provided in XML format.

Preferably, the system further comprises means for receiving data from the remote client device indicating the current configuration settings. More preferably, the current configuration settings data indicates whether updated configuration settings are required.

Preferably, the system further comprises means for determining whether updated configuration settings are required. More preferably, the update determining means operates at predetermined intervals. Yet more preferably, the intervals are regular, for example, daily, hourly, or upon start-up of the remote client device.

Preferably, the system further comprises means for determining the location of a remote client device, the configuration settings being dependent on said determined location.

Preferably, the data communications network is an Internet Service Provider.

Preferably, the system further comprises means for providing the remote client device with media content in dependence on the determined data communications network.

Preferably, the system further comprises a remote client device, the remote client device adapted to receive and apply said configuration settings. More preferably, the remote client device is adapted to only accept configuration settings from an authorised data communications network.

Preferably, the system further comprises means for determining the location of a remote client device, the remote client device being adapted to provide one of the plurality of users with access to the media content; and means for determining a set of media content accessible by the remote client in dependence on the determined location.

## Geo-location

According to a further aspect of the present invention, there is provided a system for providing a plurality of users with access to a plurality of media content from a plurality of media content sources, comprising: means for determining the location of a remote client device, the remote client device being adapted to provide one of the plurality of users with access to the media content; and means for determining a set of media content accessible by the remote client in dependence on the determined location. As such the user is provided with more relevant media content.

Preferably, the location determining means utilises the digital terrestrial television signal. More preferably, the location determining means utilises the relative signal strength of the digital terrestrial signal, and or triangulation of the digital terrestrial signals.

Preferably, the location determining means utilises the IP address of the remote client.

Preferably, the system further comprises storage means, adapted to store a location look-up table, the look-up table including data relating said determined location and a set of media content.

Preferably, the system further comprises means for providing the remote client with data in relation to said set of media content. More preferably, the data includes the source location of the media content.

Preferably, the system further comprises means for receiving a plurality of media content metadata relating to media content from a plurality of media content providers; means for determining at least one media content access right of a user to media content in dependence on the media content metadata and on user information; means for generating media content availability data in dependence on the determined at least one user access right.

## CREDS

According to a further aspect of the present invention there is provided a system for providing a plurality of users with access to a plurality of media content from a plurality of media content sources, comprising: means for receiving a plurality of media content metadata relating to media content from a plurality of media content providers; means for determining at least one media content access right of a user to media content in dependence on the media content metadata and on user information; and means for generating media content availability data in dependence on the determined at least one user access right. Thereby, the user is provided with aggregated content rights, and as such the user access method to media content may be simplified.

Preferably, the user information comprises media content purchase information, and the means for determining is adapted to determine a media content access right in dependence on the media content purchase information. More preferably, the media content purchase information comprises information regarding purchase of a single item of media content. Yet more preferably, the media content purchase information comprises information regarding purchase of a subscription to media content.

Preferably, the means for generating media content availability data is adapted to generate media access options data in dependence on the media content metadata, on the user information and on the user media content purchase information. More preferably, the media access options data comprises an option for the purchase of media content.

Preferably, the media access options data comprises an option for the advertisement-sponsored consumption of media content.

Preferably, the media access options data is dependent on the identity of the user.

Preferably, the system further comprises means for receiving user information from a remote client device.

Preferably, the system further comprises means for transmitting media content availability data to a client device.

Preferably, the system further comprising: means for determining at least one characteristic of a user; and means for adapting access to the plurality of media content in dependence on the at least one determined characteristic.

According to a further aspect of the present invention there is provided a remote client device (optionally including a receiver/decoder) for providing a user with access to a plurality of media content from a plurality of media content sources, comprising: means for receiving a plurality of media content metadata relating to media content from a plurality of media content providers; means for determining at least one media content access right of the user to media content in dependence on the media content metadata and on user information; and means for generating media content availability data in dependence on the determined at least one user access right.

*Chameleon System*

According to a further aspect of the present invention there is provided a system for providing a plurality of users with access to a plurality of media content from a plurality of media content sources, comprising: means for determining at least one characteristic of a user; and means for adapting access to the plurality of media content in dependence on the at least one determined characteristic. Thereby, reducing the requirement to have specialised hardware for each user characteristic.

Preferably, the at least one user characteristic includes at least one of: the location of the user; the group in which the user is categorised; the user's media content subscriptions; the user's Internet Service Provider; the user's preferences; and the availability of the media content. More preferably, the group in which the user is categorised is determined by a characteristic of the user. Yet more preferably, the characteristic being at least one of: the user's location; the user's media content subscription; the user's Internet Service Provider; the user's preferences.

Preferably, the access is adapted by at least one of: selectively providing access to media content from the plurality of media content; configuring a remote client device associated with the user; selectively providing access to media content in dependence on available bandwidth.

Preferably, the system further comprises a remote client device, adapted to provide the user access to the plurality of media content, the remote client device having a configurable media content access interface. More preferably, the interface is configurable in dependence on the determined user characteristic.

Preferably, the system further comprises means for determining a media content item selected by one of the plurality of users; means for determining at least one delivery pathway for said media content in dependence on at least one characteristic of a plurality of available delivery pathways.

*Assured delivery*

According to a further aspect of the present invention there is provided a system for providing a plurality of users with access to a plurality of media content from a plurality of media content sources, comprising: means for determining a media content item selected by one of the plurality of users; means for determining at least one delivery pathway for said media content in dependence on at least one characteristic of a plurality of available delivery pathways.

Preferably, the system further comprises means for initiating delivery of said media content, from said content provider to said user, via said determined delivery pathway.

Preferably, each of the plurality of said delivery pathways originates at a respective content delivery network. More preferably, each said content delivery network having the selected media content item.

Preferably, the at least one characteristic being at least one of: the bandwidth of the delivery method; the bitrate of the media content available; and previous usage statistics.

Preferably, the determining means is adapted to determine the or each pathway capable of delivering said media content with a bitrate greater than or equal to a minimum bitrate. More preferably, the minimum bitrate is dependent on the type of media content. Yet more preferably, the type of media content including at least one of: standard-definition; and high-definition.

Preferably, the system further comprises means for providing metadata to a remote client, the metadata comprising information relating to the at least one determined delivery pathway.

Preferably, the system further comprises a remote client device, adapted to provide a user with access to the media content in dependence on said at least one determined delivery pathway.

Preferably, the remote client being further adapted to monitor the bitrate provided by a determined delivery pathway, the remote client comprising storage, adapted to store said monitored bitrate. More preferably, the monitored bitrate being utilised to determine the at least one delivery pathway.

Alternatively, or in addition, the remote client is adapted to make the decision of where to get the content from, based on information about the possible delivery options (obtained from the content provider), and/or information about the network to which the remote client is connected to (obtained from the ISP).

It is to be appreciated that certain delivery options might be provided with assured delivery / quality of service, and that others may be accessible, but without any guarantees.

Furthermore, certain delivery options might be usable via all networks, while others might not be usable via all networks.

Preferably, the system further comprises a server, the server being adapted to provide the remote client with metadata relating to the delivery pathway to utilise.

According to a further aspect of the present invention there is provided a remote client device (optionally including a receiver/decoder) for providing a user with access to a plurality of media content from a plurality of media content sources, comprising: means for determining a media content item selected by the user; means for determining at least one delivery pathway for said media content in dependence on at least one characteristic of a plurality of available delivery pathways.

According to a further aspect of the present invention there is provided, a remote client device adapted to communicate with a system as aforementioned.

According to a further aspect of the present invention there is provided a server adapted to communicate with a system as aforementioned.

The system as herein described may be in the form of an apparatus or server, connectable to a plurality of user client devices.

In one preferred embodiment, the electronic programme guide as herein described is implemented in hardware or software.

In one preferred embodiment, the graphical user interface as herein described is implemented in hardware or software.

It is envisaged that the system as herein described may be implemented wholly on a central server, or a set interconnected servers, which is/are connectable to a plurality of remote client devices. Alternatively, aspects of the system may be implemented, at least in part, on the or each remote client device.

It is envisaged that aspects of the system, client device, method, guide, user interface and/or media player described herein may be implemented in software running on a computer such as a personal computer or a receiver/decoder (which may be connected directly to a monitor or to a television or other display means), and it is to be appreciated that inventive aspects may therefore reside in the software running on such devices.

Other aspects of this system, client device, method, guide, user interface, and/or media player may be implemented in software running on various interconnected servers, and it is to be appreciated that inventive aspects may therefore reside in the software running on such servers.

According to another aspect of the invention, there is provided a computer programme product for implementing the electronic programme guide, user interface and/or media player as herein described.

The invention also extends to a server or a plurality of interconnected servers running software adapted to implement the system or method as herein described.

The invention extends to any novel aspects or features described and/or illustrated herein.

Further features of the invention include:

- a system that can amalgamate content from a plurality of content providers or sources and may provide a single space (such as an electronic programme guide or EPG) which a user can easily navigate to find the desired content without having to move between different user interfaces
- a clear indication to the user of content that the user already owns or has available (for example as part of a subscription) from any and all content providers so that it is apparent to the user which content they are already subscribed to, and can play instantly at no extra cost, against which content is only available to them by their first having to sign-up to a new subscription package, or to purchase on a one-off-basis.

- a modular approach to updating consumer devices, so that the behaviour of a device can be influenced by any number of parties, enabling functionality that is completely user-customised depending on what services or features the user requires, and wherein updates to the device may be demanded by the various parties as opposed to being user-defined
- location-based services (such as news and weather, on-demand content or targeted advertising) which may determine what content should be displayed and accessible to the user in dependence on the location of the media client
- a data receiving and data displaying device adapted to receive and display data (such as audio/video content and related data and metadata) from a multitude of sources in a federated manner and which may be customised by attributes such as Internet Service Provider (ISP), location, data entitlement or data availability
- a media client device in two-way communication with a data aggregating server (CCO) which is itself in two way communication with a multitude of content providing sources, the CCO receiving data and metadata relating to the content and passes this onto the device.
- apparatus for generating an electronic program guide comprising elements from a multitude of sources (e.g. DTT, IPTV, VOD and PVR or Personal Video Recordings) integrated onto a single display to enable a user to choose past, present or future events from a multitude of sources using a single user interface display , the interface being generated in a seamless manner so that all content may appear in the same fashion, and displaying related content to that being played currently, or that is recommended to the user based on their current or past viewing history, or based on other information.
- a user interface, which includes an Electronic Programme Guide (EPG) showing content from a multitude of sources which may be categorised using data from content providers or other sources and integrated onto a single display (for example presenting similar, linked or other related content to the user) and which may afford the user a 'channel hopping' experience across integrated sources, preferably, displaying information to the user in a number of formats, for example as an on-screen 'mini-guide'.
- a search function provided in said EPG which may search in a seamless manner, potentially simultaneously, over all content that is available to the user, the user optionally also finding specific content via the device categorising the content in dependence on metadata about the content provided by the content provider and which may be aggregated from a multitude of sources.
- a customisable EPG preferably dependent on at least one variable e.g. user location, subscriptions or user group, which may be generated and displayed in a manner seamless to the user, and via which content displayed on the EPG has assigned to it labels indicating to the user in what capacity they can access them (e.g. now, soon, or can be available after a payment etc).
- a 'universal space' for the playback of media content, wherein the content may be played using different players, but it has similar controls and appears identical to the user, preferably such that the content can be presented to the user in a seamless manner, regardless of the source, and in which the content providers may present their content using their own technology, or alternatively the technology in-built into the system, and with user controls such as play, pause, rewind, fast-forward, for content presentation.
- a multi-level client device architecture or software stack wherein one or more levels of the architecture remotely may be configured or updated (altering the behaviour and/or properties of the client device) remotely by a plurality of external agents such as data or content providers, intermediate data-handling entities such as ISPs, device hardware manufacturers, system or network administrators or other privileged entities, the actions occurring seamlessly to the user, irrespective of the agent.
- means for determining content entitlement information (preferably relating to media content, more preferably across multiple commercial and non-commercial providers and in dependence on user credentials submitted to the content provider) and indicating the results to the user, preferably adapted to distinguish different types of content from one another thereby allowing the user to see, for example, what video content they are entitled to watch immediately, what subscription packages are subscribed to, and to which content access may be acquired.
- means for determining a provider of media access services such as the hosting internet service provider or ISP that a client device is connected to, by means of an IP address being allocated a parameter specific to an ISP, an autonomous system number database to match IP addresses to ISPs
- means for configuring a media client device in dependence on the determined service provider
- means for determining the geographical location of a media usage device
- means for associating media services or content with a geographical region and preferably delivering regionally-targeted data or other wise modifying the media provided to a client device in dependence on information associated with the IP address or geographical location of the device
- means for defining user groups and subsequently granting or restricting access to sets of data for specific groups, such as only granting access to users that present an appropriate token or possess a certain characteristic, or restricting browsing and searching of content and services to members of defined user groups.
- a device adapted to participate in a data delivery system wherein a data delivery route from a data provider to the device is managed, preferably by allocating data delivery to the most effective delivery route, preferably such that a particular data delivery rate can be assured (for example, the route being selected in dependence on delivery latency not exceeding a predetermined value). The device may be presented with a list of assured delivery rate delivery routes and/or the media content items associated with a delivery rate, thereby allowing the device to present an indication that a data item can be delivered at a specific rate, or otherwise an estimate of a delivery delay.

- a method of determining a delivery route for media content such that the delivery of the media content at a specific rate is assured, for example by providing a client device with a list of delivery routes determined to deliver at the specified rate.

Further features of the invention are characterised by the independent and dependent claims.

The invention extends to methods and/or apparatus substantially as herein described with reference to the accompanying drawings.

The invention also provides a computer program and a computer program product for carrying out any of the methods described herein and/or for embodying any of the apparatus features described herein, and a computer readable medium having stored thereon a program for carrying out any of the methods described herein and/or for embodying any of the apparatus features described herein.

The invention also provides a signal embodying a computer program for carrying out any of the methods described herein and/or for embodying any of the apparatus features described herein, a method of transmitting such a signal, and a computer product having an operating system which supports a computer program for carrying out any of the methods described herein and/or for embodying any of the apparatus features described herein.

Any apparatus feature as described herein may also be provided as a method feature, and vice versa. As used herein, means plus function features may be expressed alternatively in terms of their corresponding structure, such as a suitably programmed processor and associated memory.

Any feature in one aspect of the invention may be applied to other aspects of the invention, in any appropriate combination. In particular, method aspects may be applied to apparatus aspects, and vice versa. Furthermore, any, some and/or all features in one aspect can be applied to any, some and/or all features in any other aspect, in any appropriate combination.

It should also be appreciated that particular combinations of the various features described and defined in any aspects of the invention can be implemented and/or supplied and/or used independently.

Furthermore, features implemented in hardware may generally be implemented in software, and vice versa. Any reference to software and hardware features herein should be construed accordingly.

Further information may be found in the following documents, which are herein incorporated by reference: (N.B. IETF RFC, ETSI and ISO docs are industry standards)

- [DTG DBook] - The DTG 'D-Book' - Version 6.2.1 May 2010
- [DVB-IPTV FCC] - Digital Video Broadcasting (DVB); Server-Based Fast Channel Change for DVB-IPTV Systems, DVB Document A152 - August 2010
- [RFC 5652] - Cryptographic Message Syntax (CMS) - Sept 2009
- [IETF RFC 4287] - The Atom Syndication Format - December 2005
- [IETF RFC 2616] - Hypertext Transfer Protocol -- HTTP/1.1 - June 1999
- [ETSI TS 102 034 v1.4.1] - Digital Video Broadcasting (DVB); Transport of MPEG-2 TS Based DVB Services over IP Based Networks - 2009-08
- [ETSI TS 102 822-3-1, TS 102 822-3-2 TS 102 822-3-3] - Broadcast and On-line Services: Search, select, and rightful use of content on personal storage systems - February 2005
- [ETSI TS 102 727] - Digital Video Broadcasting (DVB); Multimedia Home Platform (MHP) Specification 1.2.2 - July 2007
- [ISO/IEC 15938-5] - Multimedia content description interface -- Part 5: Multimedia description schemes - September 2008
- [ISO/IEC 15938-1 Clause 5] - Multimedia content description interface -- Part 1: Systems - January 2008
- [ISO 8601 Clause 5.4.1 a, 5.3.3, 5.5.3.2] - Data elements and interchange formatsInformation interchange -- Representation of dates and times - March 2008
- [ISO 639-1] - Codes for the representation of names of languages -- Part 1: Alpha-2 code - February 2008
- [ISO 639-2] - Codes for the representation of names of languages -- Part 2: Alpha-3 code - July 2010
- ISO 639-3] - Codes for the representation of names of languages -- Part 3: Alpha-3 code for comprehensive coverage of languages - July 2010
- [RFC 1738] - Uniform Resource Locators (URL) - December 1994
- [RFC 2396] - Uniform Resource Identifiers (URI): Generic Syntax - August 1998
- [IETF RFC 2616] - Hypertext Transfer Protocol -- HTTP/1.1 - June 1999

∘ [IETF RFC 2617 Section 2] - HTTP Authentication: Basic and Digest Access Authentication - June 1999

∘ [RFC 2818] - HTTP Over TLS - May 2000

∘ [RFC 5280] - Internet X.509 Public Key Infrastructure Certificate and Certificate Revocation List (CRL) Profile - May 2008

∘ [IETF STD 66, RFC 3986] - Uniform Resource Identifier (URI): Generic Syntax - January 2005

∘ [IETF RFC 4078] - The TV-Anytime Content Reference Identifier (CRID) - May 2005

∘ [IETF RFC 4151] - The 'tag' URI Scheme - October 2005

∘ [IETF RFC 5322] - Internet Message Format - October 2008

∘ [IETF RFC 5321] - Simple Mail Transfer Protocol - October 2008

∘ [IETF STD 66, RFC 3986] - Uniform Resource Identifier (URI): Generic Syntax - January 2005

∘ [IETF RFC 4287] - The Atom Syndication Format - December 2005

These and other aspects of the present invention will become apparent from the following exemplary embodiments that are described with reference to the following figures in which:

Figure 1 shows a system for providing media content and related media content metadata from a plurality of media content providers to a media client device;

Figure 2 shows an example Electronic Programme Guide (EPG);

Figure 3 shows an example of how the EPG is generated;

Figure 4 shows the Content Rights Entitlement Display System (CREDS);

Figure 5 shows the CREDS process in further detail;

Figure 6 shows the processes involved when a user selects an item of media content for playback;

Figure 7 shows a schematic showing the software architecture of the media client device;

Figures 8 and 9 show the ISP Discovery process;

Figure 10 shows the Geo-location process;

Figure 11 shows the 'Closed User Groups' concept;

Figure 12 shows the Assured Delivery process;

Figure 13 shows an overview of the IP Channels architecture;

Figure 14 shows the ingest of the linear broadcast metadata;

Figure 15 shows the 'STAGIS quick win solution' EPG generating system;

Figure 16 shows in overview the system data flow for content;

Figure 17 shows an example of the display of a 'Virtual IP' channel on the EPG;

Figure 18 shows tfurther aspects of the data flow in the system ;

Figure 19 shows example screen shots of the EPG;

Figure 20 shows an additional example of the EPG user interface;

Figure 21 shows four other views the EPG may produce;

Figure 22 shows the different sources for On Demand content;

Figure 23 shows the different elements of the playback process;

Figure 24 shows the sequence of events associated with playback;

Figure 25 shows the scenarios leading to an interrupted exit;

Figure 26 shows a possible layout of the Main Menu;

Figure 27 shows possible subcategories of the 'On Demand' category;

Figure 28 shows possible subcategories of the 'Music' category;

Figure 29 shows possible subcategories of the 'Films' category;

Figure 30 shows an indicative representation of the 'Players' section available to the user;

Figure 31 shows an indicative representation of the 'Highlights' section;

Figure 32 shows possible subcategories of the 'TV OD' category;

Figure 33 shows possible subcategories of the 'Children's' category;

Figure 34 shows possible subcategories of the 'Comedy' category;

Figure 35 shows possible subcategories of the 'Drama and Soaps' category;

Figure 36 shows possible subcategories of the 'Entertainment' category;

Figure 37 shows possible subcategories of the 'Factual' category;

Figure 38 shows possible subcategories of the 'Lifestyle' category;

Figure 39 shows possible subcategories of the 'News & Weather' category;

Figure 40 shows possible subcategories of the 'Sport' category;

Figure 41 shows possible subcategories of the 'Audio Description' category;

Figure 42 shows possible subcategories of the 'Signed' category;

Figure 43 shows possible subcategories of the 'Radio' category;

Figure 44 shows possible subcategories of the 'Music' category in Radio;

Figure 45 shows possible subcategories of the 'Talk Radio' category in Radio;

Figure 46 shows possible subcategories of the 'Sport' category in Radio;

Figure 47 shows the sequence of actions the user may take during a search;

Figure 48 shows the basic design frame;

Figure 49 shows the design grid system;

Figure 50 shows an outline of the Consumer Device Software Architecture;

Figure 51 shows the relationship between tiers of APIs and the implementation thereof;

Figure 52 shows the relationship between the updatable software and configuration components;

Figure 53 shows the architecture of the configuration components;

Figure 54 shows the integration of the core device software and the platform software;

Figure 55 shows how various sources of configuration information are managed and the order in which they are processed;

Figure 56 shows an example of the architecture used for updates;

Figure 57 shows possible settings mergers;

Figure 58 shows a possible settings user interface;

Figure 59 shows components of an offer;

Figure 60 shows an overview of a system with offer/entitlement features;

Figure 61 shows a scenario where the content is free;

Figure 62 shows the display presented to the user in the scenario of Figure 61;

Figure 63 shows a scenario where the content is pay-per-view, with a static price;

Figure 64 shows the display presented to the user in the scenario of Figure 63;

Figure 65 shows the process of a purchase transaction;

Figure 66 shows a scenario where the content is pay-per-view, with a dynamic price;

Figure 67 shows the display presented to the user in the scenario of Figure 66;

Figure 68 shows a scenario where the content is pay-per-view, with and without advertisements;

Figure 69 shows the display presented to the user in the scenario of Figure 68;

Figure 70 shows a scenario where the content belongs to a single subscription package, to which the viewer is already subscribed;

Figure 71 shows the display presented to the user in the scenario of Figure 70;

Figure 72 illustrates a scenario where the content belongs to a single subscription package, to which the viewer is not subscribed;

Figure 73 shows the display presented to the user in the scenario of Figure 72;

Figure 74 illustrates the process of a subscription transaction;

Figure 75 shows an example of a display presented to the user in a scenario where the content belongs to multiple subscription packages;

Figure 76 shows an example of a display presented to the user in a scenario where there are multiple offers (transactional and subscription) for the content;

Figure 77 shows a sequence diagram of a system with offer/entitlement features;

Figure 78 shows the data flow of ISP configuration parameters;

Figure 79 shows the ISP Discovery Service process;

Figure 80 shows the structural overview of TV-Anytime profile;

Figure 81 shows the metadata origination party concept;

Figure 82 shows an example of an asynchronous fragment update transaction;

Figure 83 shows an example of a synchronous fragment update transaction;

Figure 84 shows a transaction life-cycle represented as a state transition diagram;

Figure 85 shows examples of valid and invalid transaction shapes;

Figure 86 shows an example XML schema for Transaction Status Report;

Figure 87 shows an example XML schema for <TVAMain> instance document showing permitted tables and Fragment types;

Figure 88 shows example content description metadata archetypes for programmes;

Figure 89 shows an example 'full stack' pattern of contact transactions;

Figure 90 shows an example 'atomic' pattern of content transactions;

Figure 91 shows a modelling of a single music video, one on-demand publication of it and the associated on-demand service;

Figure 92 shows a modelling of a cinema film/movie;

Figure 93 shows an example sample with the minimum amount of metadata;

Figure 94 shows the data flow for pricing with CREDS; and

Figure 95 shows Product Membership and Package Fragments in CREDS.

**Overview**

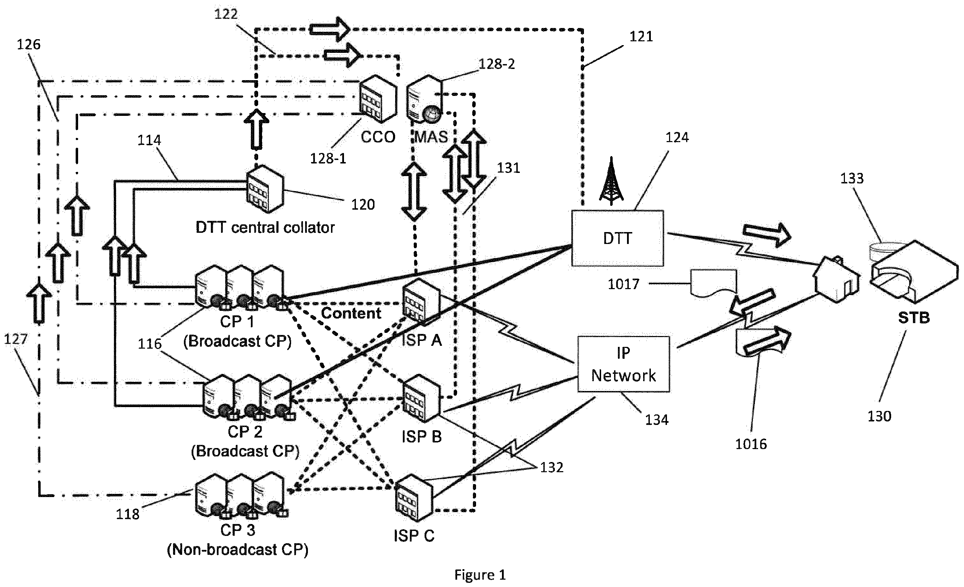

Figure 1 shows a system for providing media content and related media content metadata (or information about the media content) from a plurality of media content providers to a media client device.

Media client device 130 comprises electronic circuitry for receiving signals broadcast over a digital terrestrial television (DTT) network 124 (e.g. over-the-air by means of a digital television aerial) and also electronic circuitry for connecting to a data communications network such as an IP network 134, for example the internet (e.g. via a router to a suitable internet service provider or ISP 132).

Media client device 130 can therefore receive data such as media content (typically audio-visual data) directly broadcast from media content providers (CP) 116 via the DTT network 124 and/or multicast from media content providers 116, 118 (through ISP 132) via the IP network 134. The media client device 130 can also upload data to other entities connected to the IP network 134 via the ISP 132.

Whether a particular item of media content is provided to the client device 130 over the DTT network 124 and/or the IP network 134 is determined by commercial and/or technological considerations. For example, 'IP Channels' content may also be disseminated over DTT 124, directly by the broadcast content providers. Conversely, premium or on-demand content may be disseminated via the IP networks 134 of partner ISPs 132.

Typically, media client device 130 is located at the residence of a user as part of a home entertainment system and is referred to as a consumer device or 'set-top' box (STB) - the terms are used here interchangeably. Some examples of media client device 130 have access to local storage (for example a hard drive or flash memory) either in-built and/or means for connection thereto. In some alternatives the functionality of media client device 130 is built-in as part of another device, for example a television or embodied as a computer program on a personal computer.

The user interacts (typically with a push-button remote control handset) with the STB 130 to select which media content to consume by means of a user interface or Electronic Programme Guide (EPG) on-screen menu system generated by the STB 130 and typically rendered on a television screen.

The EPG is determined from metadata 114, 126 relating to the supplied media content provided by the media content providers (CP) 116, 118. This metadata contains information relating to the media content such as, for example, subject matter, running time, information on access (such as media content location information, typically a uniform location indicator or Uniform Resource Identifier (URI) so that the client device can locate the media content on the network) and access rights.

The media content itself may be stored on - and received by the media client device directly from - a content provider (which may be the original source or distributor of the content) but more typically content delivered over an IP network is stored at an intermediary and located within a content delivery network (CDN) comprising a distributed network of content servers.

A number of DTT broadcast content providers 116 participate in a broadcast group and have their media content metadata 114 aggregated by a DTT central collator (DTT CC) 120 for transmission to the STB 130. That is, metadata 114 from the partner broadcast Content Providers (CP) 116 is passed directly to the DTT Central Collator (DTT CC) 120, the DTT CC 120 then aggregates this data into a 'Fat CSI' feed 121 which is then disseminated to users and subscribers via DTT 124. This allows the STB 130 to generate an EPG which provides information relating to (and potentially allows the user access to) a more comprehensive range of media content than would be available from a single media content provider.

Data/metadata aggregation server (termed a CCO/MAS) 128 - connected to the IP network 134 - acts as a central resource for providing STB 130 with metadata relating to both media content broadcast over DTT and to media content multicast over IP networks (optionally, STB 130 may receive metadata relating to media content broadcast over DTT directly, or via DTT CC 120). CCO/MAS 128 may be configured as separate interconnected units CCO 128-1 and MAS 128-2.

CCO/MAS server 128 effectively serves as a media content access platform and is controlled by a platform operator to provide a data / metadata aggregation service.

In particular, CCO/MAS server 128 accepts the following input metadata feeds:

- metadata feed 122 for the broadcast group from the DTT CC 120
- metadata feeds 126 from broadcast content providers CP 116 individually - this allows for broadcast content providers CP 116 to supply an enhanced metadata feed providing additional information relating to their media content over and above that typically supported by the DTT CC 120
- metadata feeds 127 from non-broadcast content providers CP 118 - this allows non-broadcast content providers 118 which are not included in the broadcast group to supply metadata in a similar way to broadcast content providers 116 despite not being connected to the DTT CC 120

These feeds are combined in an aggregated output metadata feed 131 from the CCO/MAS server 128 to the STB 130.

The CCO/MAS 128 may additionally process or filter the input metadata feeds 122, 126, 127 or the output metadata feed 131.

For example, the CCO/MAS 128 can determine which media content is to be made available to the STB 130 and consequently displayed to the user via the EPG. This is done in dependence on a content access profile 1016 which is passed to the STB 130 on start-up (for example, as part of an ISP configuration file that is initially sent to each individual STB 130 during its boot up procedure and then updated, for example regularly say on a daily basis). STB 130 may also pass data 1017 (for example relating to the output metadata feed 131) to the CCO/MAS 128.

In the present example, the CCO/MAS server 128 merely processes metadata rather than the media content itself (which is not routed via the CCO/MAS server 128); in alternative examples, media content is routed via the CCO/MAS server 128 which may process the media content (for example, buffering or optimising) before forwarding it to the STB 130.

In some alternatives, some or all of the processing of the metadata performed at the CCO/MAS server 128 is performed at the STB 130.

The system described in the examples relates to the provision of media data to a media device client. It will be appreciated that aspects are also applicable to the provision of other forms of data to a correspondingly suitable client device.

**Electronic Programme Guide (EPG)**

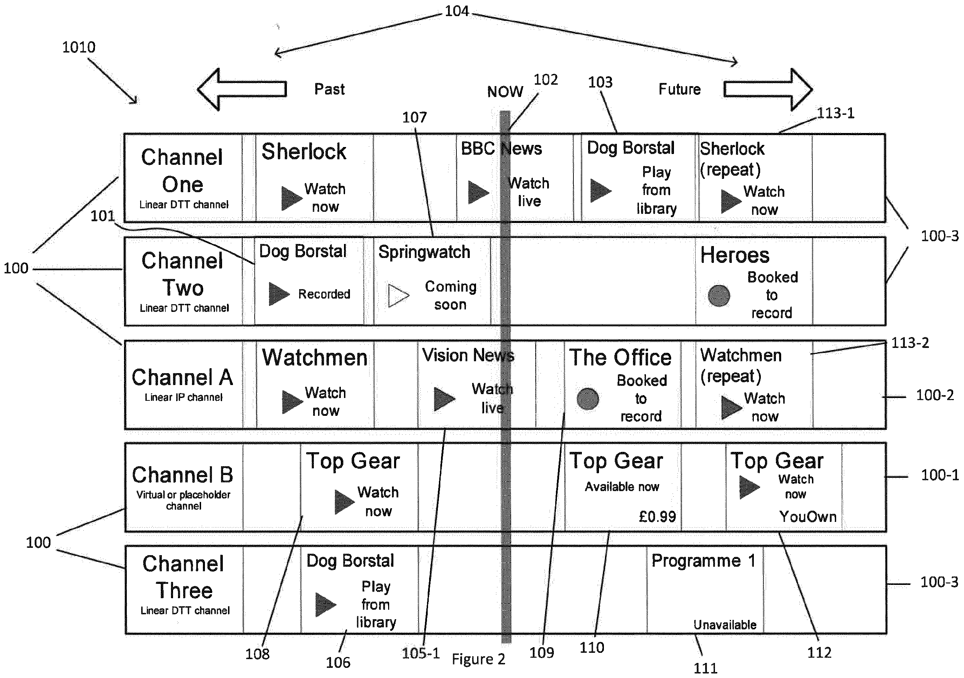

Figure 2 shows an example Electronic Programme Guide (EPG).

EPG 1010 is generated by the STB 130 on the basis of metadata supplied from the CCO/MAS server 128 and/or received over DTT and enables the user to navigate available media content.

EPG 1010 comprises a series of vertically stacked horizontal bars 100 representing a programme listing of media content arranged by transmission order according to 'channel', the position along the major axis of each channel bar indicating the transmission time and sequence of particular media content.

Channels 100 may be 'linear' in that what is shown is the specific order of media content transmission from a particular media content provider (a media content provider CP 116, 118 may provide one or more such 'channels'), or 'virtual' in showing media content in an alternative arrangement, for example one that is specific to a particular user or group of users, such as:

- a filtered subset of a particular channel output
- an assembly of content from multiple content providers
- selected from on-demand media content provided by the ISP or content provider and arranged, for example, to correspond in suitability according to the time-of-day
- pre-recorded content stored locally at the STB 130 (or on a connected storage device)

A vertical (red) timeline 102 intersects the bars to indicate the current time; transmission times to the right of timeline 102 are in the future, those to the left are in the past. As time progresses, timeline 102 remains central as the channel bars advance leftwards to indicate the media content currently being transmitted, the visible extent of the EPG 1010 therefore representing a window of media content potentially available at, before and after approximately the current time. In alternative embodiments, timeline 102 may move with respect to the programme listing - combination movements of timeline 102 and programme listing are also possible.

Navigation arrows 104 above the stacked channel bars indicate to the user the option to advance the display of the EPG 1010 right/left to show media content further in the future/past and thereby browse the EPG to access media content at times not immediately around the current time. The user may also switch or 'hop' between channels to change focus and in some examples advance the corresponding channel bar 100 separately and scroll the channel display to show further channels.

The items of media content are labelled to indicate in what capacity they are available, for example as in the following table:

| | | |
|---|---|---|
| Watch now | Indicates an item is available in the OnDemand catalogue and can be played immediately - i.e. clicking on the item will cause playback to begin. Items in this class include free content, ad-funded content and content that you have an entitlement to ('YouOwn'). | |
| Available now | Indicates an item that is available, but which the user would need to perform an action - e.g. going through a signup process - before being able to play. | |

(continued)

| Watch live | Indicates that the item is currently 'live' on this linear service. |
|---|---|
| Coming soon | Indicates the item is expected to be available in the OnDemand catalogue soon. |
| Play from library | The item is available from the Local Media Library. |
| Booked to record | This item is scheduled for acquisition by the Linear Acquisition component |

Channels One, Two, and Three 100-3 are examples of linear digital terrestrial television (DTT) channels. Here media content with the following characteristics is shown:

- "recorded" - media content item 101 has been recorded and can be watched from the recording
- "play from library" - certain media content items that have already been shown 106 or not yet been shown 103 are indicated as being available from the Local Media Library
- "coming soon" - media content item 107 has been shown and is expected to be available in the OnDemand catalogue in the near future
- "watch now" - media content items which are free (potentially through being funded by advertisements). Item 113-1 is shown as occurring in the future but is available to watch now as it is a repeat of an item that was shown in the past
- "watch live" - media content item is currently 'live' (as a broadcast or stream)
- "Booked to record" - media content item 109 scheduled for recording or acquisition by the Linear Acquisition component
- "unavailable" - media content item 111 which occurs in the future and is not yet available (nor available from a recording or OnDemand).

Channel A 100-2 is an example of a Linear IP channel and shows media content of the following characteristics:

- "watch now" - media content item which is free (or funded by advertisements). Media content items that are repeats of items that have been shown in the past may be shown as "watch now" 113-2.

- "watch live" - media content item 105 is currently 'live'

- "Booked to record" - media content item 109 is scheduled for acquisition by the Linear Acquisition component

When a media content item on a linear DTT or linear IP channel which is currently being broadcast or streamed is selected for playback and a recording of the particular media content item has previously been (or is in the process of being) made, the user is offered the option of playback of the media content item from the recording in preference to the 'live' version. This provides the user an immediate way of effectively 'rewinding' currently 'live' content.

Channel B 100-1 is an example of a virtual channel (or "playlist") and shows media content of the following characteristics:

- "watch now" - media content item 108 is free (or funded by advertisements)
- "available now" - media content item 110 requires payment, signup or confirmation before it can be played
- "watch now - YouOwn" - media content item 112 is playable immediately, even though it may be a purchasable item to other users, as part of a content entitlement that is already owned by the user

When selected for playback, an item of media content on a virtual channel may begin playing from a part-way position as indicated by the timeline 102 or alternatively from the beginning.

EPG 1010 combines content and information from multiple sources, including live broadcasts, 'catch up' content, on demand content, pay-per view, 'virtual' channels and local (personal video recorder or PVR) recordings. Presenting content from different sources together on the EPG 1010 allows the user to 'channel hop' in a way familiar from broadcast terrestrial television.

Furthermore, EPG 1010 presents and plays back the media content to the user without necessarily indicating the media format of its origin; hence, from the user perspective the originating format becomes an irrelevance.

The EPG 1010 is customisable according to customisation parameters, for example:

- Location - e.g. region-specific news and weather. The location may be discoverable by, for example, the DTT signal the device receives or set by the user inputting a postcode or address
- ISP
- User subscriptions - to content in addition to the basic content
- PVR - recordings are linked into the EPG to indicate to the user that a certain item is locally stored on the device and therefore available to play now

These and other customisation parameters are used to generate 'closed user groups', restricting selected content is to certain groups of users.

In most embodiments EPG 1010 only presents information relating to media content which the user has - or potentially could - access. This philosophy extends to a search function, which is likewise self-limiting.

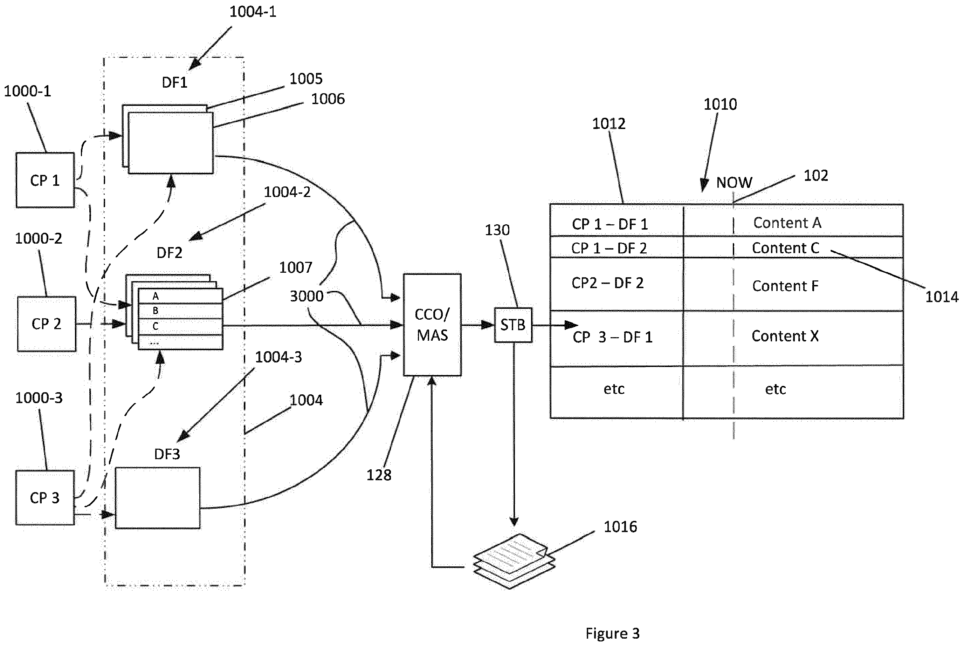

Figure 3 shows an example of how the EPG is generated.

As previously described, media content providers CP 116, 118 provide media content variously over the DTT network 124 and/or the IP network 134 to the media client device STB 130. The content providers 1000 are shown providing content via different delivery formats 1004. For example, CP1 1000-1 delivers content 1005, 1007 using delivery format DF1 1004-1 and DF2 1004-2, content 1007 itself being split up into parts. Content provider 1000 may provide more than one piece of content via each delivery format 1004. The metadata 3000 relating to the media content is sent to the CCO/MAS 128 which processes user data 1016 received from the STB 130 to determine what content metadata 3000 to pass on. The STB 130 receives a metadata feed from the CCO/MAS server 128 and renders a resulting EPG 1010 to present to the user a selection of the available media content arranged, for example, as 'channels' 1012 and according to transmission time and sequence with timeline 102 indicating the current time in respect of the media content 1014. In general, a plurality of content providers CP 1000 may deliver media content over different delivery formats DF 1004. The EPG 1010 is to an extent delivery format agnostic in that it presents the various media content within a single unified menu.

The set of potential delivery formats 1004 includes delivery formats DF1, DF2 and DF3 (for example, DTT, IP and local storage), and each media content provider CP 1000 offers media content in at least one, possibly more than one, delivery format DF. Thus, for each delivery format DF1, DF2, DF3 there is potentially a plurality of media content providers CP1, CP2, CP3 (1000-1, 1000-2, 1000-3) providing media content (1005, 1006, 1007).

Metadata feeds 3000 relating to the various media content are provided by the media content providers 1000 to the CCO/MAS server 128 for processing before a resulting metadata feed is sent to the STB 130.

Processing of the output metadata feed may involve consideration of user media content access rights or entitlement. For example, a particular user may not have access rights to all the media content 1005, 1006, 1007 due to factors such as the user's location, subscriptions, ISP or other factors which are stored in user data file 1016. A copy of the user data file 1016 is regularly sent to the CCO/MAS server 128 which processes its output metadata feed to filter out whichever of media content 1005, 1006, 1007 the user does not have access to, or alternatively adds information to the output metadata feed on how the user could gain access to the media content. The process by which content access rights are applied is described in more detail below.

The processed metadata feed is then sent to the STB 130 which uses it to render the EPG 1010 on-screen.

EPG 1010 lists the different media content providers (and, where appropriate, related channels) in a series of rows 1012 irrespective of the delivery format, with the information regarding the associated media content 1014 adjoining in chronological order and with respect to a current time indicating line 102.

**Content Rights Entitlement System (CREDS)**

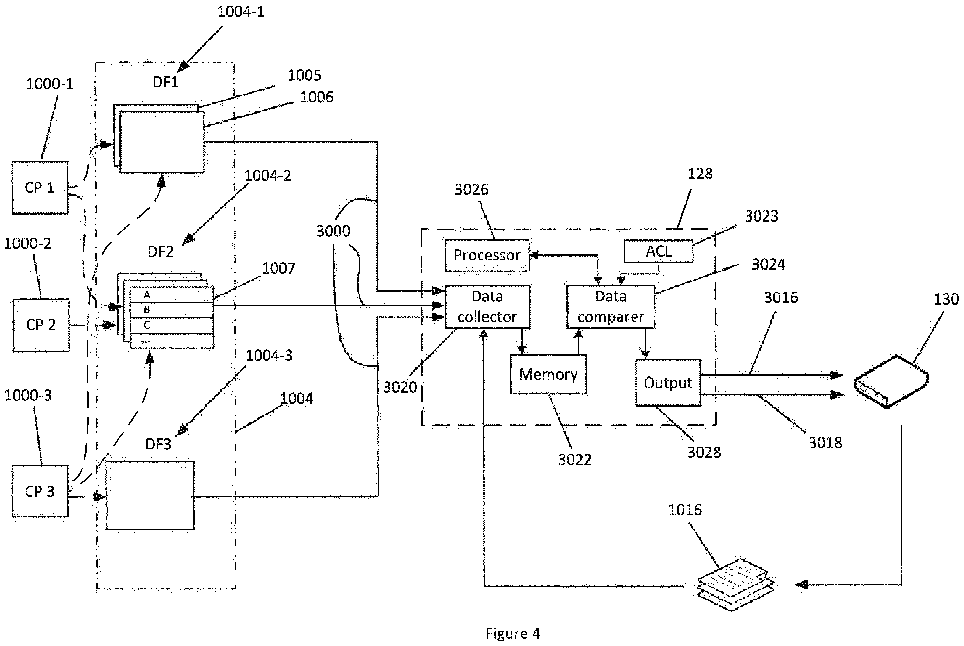

Figure 4 shows the Content Rights Entitlement System (CREDS). This is the process by which user media content access rights are taken into account.

Access rights are also referred to in terms of *entitlement,* or having permission to consume particular content bundled as part of a broader (typically subscription) subscription service. For example, User A subscribes to a broadband internet plan which may include access to a film or movie library. Accordingly, User A is referred to as having an *entitlement* to view a particular movie held by the library and can do this at no additional cost, signup or registration required.

CREDS may therefore be described as a system for indicating entitlement to content in a distributed media content provider environment. In principle, CREDS can also be extended to support providers of goods and services and/or to operate via a central search system.

As previously described, a plurality of media content providers CP1, CP2, CP3 (1000-1, 1000-2, 1000-3) provide media content (1005, 1006, 1007) in various delivery formats DF1, DF2, DF3 to media client device STB 130 with CCO/MAS server 128 providing a corresponding metadata feed to the STB 130 aggregated from the metadata feeds 3000 supplied by the media content providers 1000 and processed in dependence on user information.

User information is supplied to the CCO/MAS server 128 by means of a user data file 1016 regularly sent from the STB 130 (for example, each time the STB 130 boots and/or the user undergoes a log-in or authentication process).

Upon receipt of the user data file 1016 at the data collector 3020 the CCO/MAS server 128 stores the user data for future use (to be updated on next receipt of a corresponding user data file 1016) in memory 3022.

User access rights are determined by processor 3026 comparing with data comparer 3024 user information derived from the user data file 1016 against an access control list 3023 or database which is updated according to information provided by the media content providers specifying user media access rights, for example whether particular items of media content are part of a particular package or subscription. The comparison ascertains which content - and to what extent - the user has access to, whether immediately or conditionally. Access control list (ACL) 3023 may be further modified in dependence on the input metadata feed 3000 from the content providers.

The CCO/MAS server 128 does not itself control access to specific media content items nor does it know what media content the user owns or has access to (other than general subscription identification information).

CCO/MAS server 128 outputs the resulting output metadata feed 3016, 3018 to the STB 130 via output component 3028. The output metadata feed comprises two components: one 3016 relating to content which is available, the other 3018 to content that could be made available dependent on further actions or events, such as:

- the user making a payment
- the user taking a subscription
- the expiration of a time period

Metadata relating to media content intended not to be accessible to the user even conditionally (for example, content deemed unavailable by virtue of the user's geographical region or ISP) is not passed to STB 130.

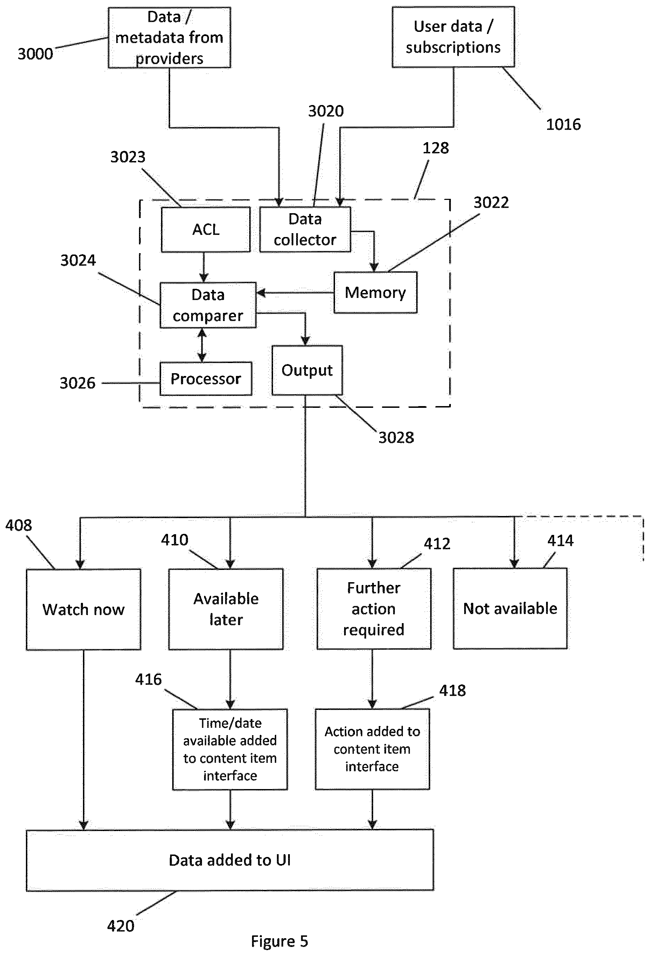

Figure 5 shows the Content Rights Entitlement System (CREDS) process in further detail, with particular focus on the categorisation of available media content in the resulting EPG.

As previously described, metadata feeds 3000 supplied by the media content providers (CP1, CP2, CP3) and user data 1016 (including, for example, subscription data) supplied by the STB 130 are received by the CCO/MAS server 128 and user media content access rights are determined by the CCO/MAS server 128 comparing the user data/subscriptions data with the requirements for entitlement according to an access control list 3023

CCO/MAS server 128 effectively sorts the media content (by means of the associated metadata) into different availability categories and displays the resulting media content information via the EPG 1010, potentially adding further availability category information. Possible availability categories include the following:

- "Watch now" 408 - Media content available immediately with no further action or event required, such as that broadcast live over DTT or available via a free 'catch-up' service such as iPlayer®. Information regarding such media content is passed directly to the user interface UI 420 or EPG 1010 (e.g. Figure 2, items 108, 113).
- "Available later" 410 - Media content not immediately available, for example because the content provider allows access to the media content via a 'catch up' facility only some time after the original broadcast. In this case, the time/date when the content will become available is (optionally) added 416 to the media content information and passed to the UI 420 (e.g. Figure 2, item 107).
- "Further action required" 412 - Media content that cannot be accessed immediately but could potentially be accessed after an action is performed by the user. Examples of such actions are paying a fee or signing up to an additional subscription. The required action is added to the media content information 418 and passed to the UI 420 (e.g. Figure 2, item 110).
- "Not available" 414 - This is content that the user does not - or not yet - have access to. This could be, for example, content available to other geographical regions or other ISP subscribers or because the content has not yet been transmitted. This content may however be added to the UI (e.g. Figure 2, item 111) for the purposes of advertising.

Where applicable, EPG 1010 displays which subscription plan each content item belongs to. This allows the user to determine which content belongs to a plan already subscribed to (hence which content can be played immediately at no further cost) without the user being separately aware of a particular entitlement; and which content requires to payment of additional fees in order to access.

This concept is extensible to other content that can either be purchased or consumed, and can further be applied to virtual media, for example the purchase of an e-book, or to show any content the user has entitlement to and to link to other media.

In alternatives, content access rights are determined - to a greater or lesser extent - at the media client device 130. For example, access to the media content (1005, 1006, 1007) provided by a particular content provider CP1, CP2, CP3 (1000-1, 1000-2, 1000-3) may be governed by media client device 130 querying the appropriate content provider 1000 directly and the access rights determined in dependence on media content entitlement information stored locally on the media client device 130. This process may be via an application provided by the content provider 1000 and running on the media client device 130 (utilising an appropriate application program interface or API, as described below).

**Discovery and Playback**

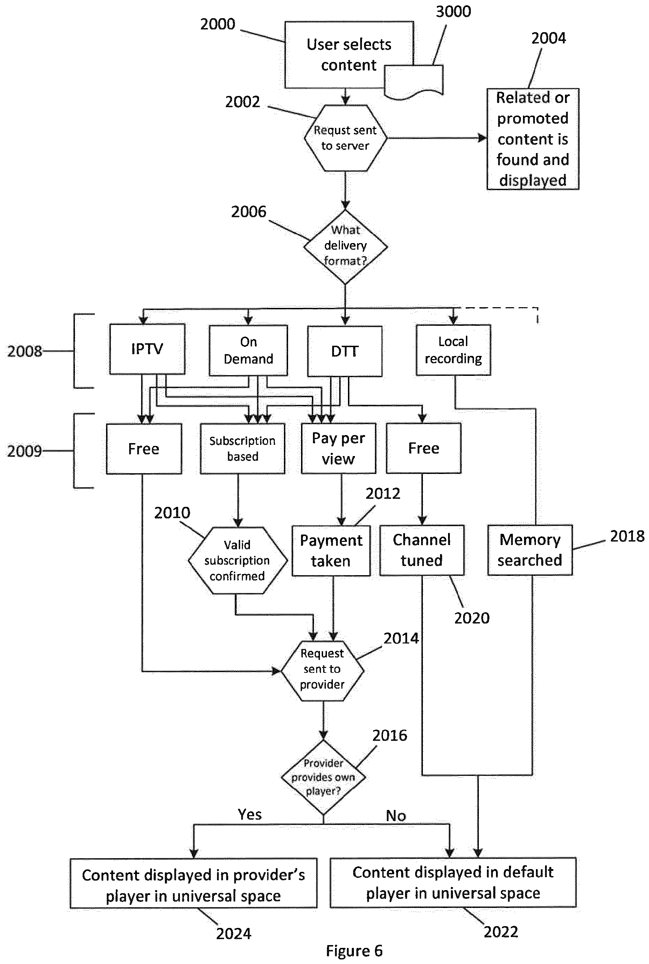

Figure 6 shows the processes involved when a user selects an item of media content for playback.

Upon the user selecting an item of media content 2000, for example by interacting using a remote control handset with the EPG 1010, the user request (comprising media content identification data 3000) is sent 2002 to the CCO/MAS server 128. CCO/MAS server 128 then determines 2006 whether and how the requested media content is to be provided to the user. The determination comprises two underlying considerations:

- the media formats in which the content is available 2007 - for example, whether the content is available over IPTV. 'On Demand' or over DTT
- the access rights pertaining to the media content 2009 - for example, whether user access to the content is 'free', 'subscription-based' or 'pay-per-view'

- and the resulting content acquisition and playback procedure depends on this determination. Various permutations of media format and access rights are possible, but general considerations are as follows:

- IPTV content - A request sent 2014 to the content provider for the media content results (subject to confirmation of subscription-based or pay-per-view access rights) in the requested media content being streamed to the device over an IP network
- Local recordings - If a search 2018 of local storage accessible by the client device - 130 finds a local copy of the requested media content is available, this copy may be accessed in preference to accessing remote media content. This content is typically 'free' although may have a time-date expiration.
- DTT content -media content accessed via a (digital) television broadcast is received at the client device subject to appropriate tuning 2020 of the receiving circuitry to the corresponding channel (and subject to confirmation of subscription-based or pay-per-view access rights)
- Free content - is playable without payment, although may first require expiry of a prescribed time period (and/or a time period not to have been exceeded)
- Subscription-based content - A certificate or token is checked 2010 before (or alternatively after) a request is sent to the provider 2014 in order to determine, for example, whether the user has the requisite access right to the requested channel or has not exceeded certain usage limits (some content providers may allow only a certain number of media content accesses in a certain time period)
- Pay-per-view content - A payment is taken 2012 before (or alternatively after) the request for the content is sent to the provider 2014.

In order to address the problem of discovery and playback of media content form numerous different media content providers, media content playback occurs within a main playback area - termed a 'universal space' (generic, default or universal player) and designed based on a web model to allow for easy changes to the look and feel in order to offer the user consistent functionality and aesthetics - where the output of all players from all content providers is displayed.

For example, if a suitable media player 2024 is provided by a particular media content provider, this player is shown nested within the 'universal space'; if a particular content provider does not provide a media player of its own, a default player 2022 is provided by the STB 130 (or, in some alternatives, by the CCO/MAS server 128) also inside the 'universal space' and providing at least three playback controls: play/pause, fast-forward and rewind.

The 'universal space' therefore provides a 'single click' experience for the user rather than relying on each different content provider having a separate player, each with its own characteristics. Selecting media content for playback does not therefore for example require the user to visit a website of the media content provider, rather the media content is arranged to be streamed or otherwise presented to the user from within the 'universal space'. Upon completion, the user is returned to the EPG.

By default, all players are specified to have certain common features, such as the following information indicators which display on the universal screen:

- seek or progress bar - appearing whenever the user starts, stops, pauses, fast-forwards, rewinds or otherwise interrupts playback, to indicate the relative position within the current media content item
- info screen - triggered by the user pressing an 'info' button (or similar), to display information about the current item of media content (optionally including links to related content)

Some features, such as navigation indicators for page up/down and channel up/down, change according to context, for example according to the media content source, such as when page up/down are configured to skip forward/backward a predefined time when viewing on-demand or PVR content. An indication of the media content source may be provided to the user to indicate the functionality available.

The universal space is also configured to provide links for the user's 'onward journey' such as related media content (whether from the media content provider of the current player or otherwise). The content provider can define specific details of the onward journey, such as whether the user is recommended media content outside their present subscription which would consequently require further payment or whether the user is permitted to access further content under the remit of the subscription without having to return to the particular subscribed-to content provider's portal.

Typically, a search function is provided, which allows the user to search for further content - this may be simply related to previously consumed content ('More like this') or a display of popular content. Navigation options are provided for returning to the main menu or to where the current content originated form.

To facilitate the latter the client device 130 passes to each new content provider accessed a reference indicating the previous media content item source and/or additional context. Alternatively, this information is stored at the client device 130.

In some examples, CCO/MAS server 128 searches the metadata from the content providers for further media content 2004 related to the media identified by the user in the media content identification data 3000. Such further or media content may also be displayed in the EPG as a recommendation.

Further aspects of media content playback are described, for example, in the sections below, particularly in respect of the assured delivery aspect.

**Software Stack**

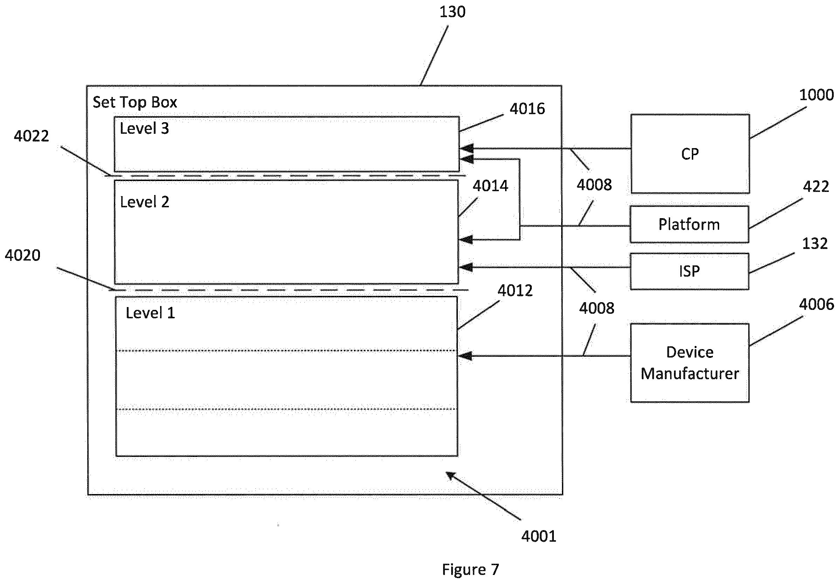

Figure 7 is a schematic showing the software architecture of the media client device.

The software architecture is modular and may be described as a stack comprising a series of levels - for example, lowest 'Level 1' 4012, middle 'Level 2' 4014 and upper 'Level 3' 4016 (and so on) - each of increasingly higher device functionality, with successively higher levels being dependent on the functionality provided by lower levels and in turn providing functionality to higher levels. Communication between each level is handled by appropriate application program interfaces (APIs).

The top-down order of levels of the software stack is typically as follows:

- Platform applications and configuration parameters
- {developer APIs}
- Application players
- {system APIs}
- system services
- operating system kernel

User interaction with the device is handled by the higher levels in the software stack (commonly described as at an application or user interface level) than for example network communications or basic device operation (at a network or operating system / kernel level, respectively).

This arrangement also allows for seamless presentation of third party applications from a plurality of content / goods / services providers on a client device or STB 130 without the providers needing to be aware of the specific device characteristics and the system API 4020, only of the common developer API 4022 for the particular application player. This also provides the user with a consistent interaction experience; the effective 'sandboxing' of separate applications within platform-designated application players also improves stability and security.

The client device software is usually packaged into two images:

- Core device software (installed by the manufacturer or OEM 4006) - including the operating system, system services and application players (as specified by the platform operator)
- Platform software (supplied by the platform operator) - including the user interface and other applications in the form of non-natively executable, architecture-independent code

The client device 130 also accepts device configuration parameters - which can be set independently of both the core and platform software by any of the manufacturer, platform operator, ISP or user.

In effect, client device 130 is designed so that a basic level of client functionality (by way of certain application players) is incorporated by the manufacturer (or OEM) as part of the on-board system software (which allows for the client device to be tested for platform compliance by the OEM before shipping); further functionality is provided at the platform software level and configurable as required initially by the platform operator - and subsequently at the application level potentially also by content provider or ISP.

In order for the media client device 130 to be adaptable and to maintain compatibility with developing standards and offer the user improved functionality, updates to the software stack may be required. Ideally these updates are instigated remotely - for example, by the device manufacturer, the content providers, the ISP or a system administrator - and without requiring user intervention (their origin and security having been established by digital signature confirmation and encryption). Updates can be delivered broadcast over DTT or via the IP network.

Traditionally, only the device manufacturer would be expected to provide software updates to the software of a media client device such as a set-top box 130. However, such an arrangement may be problematic, not least because of conflicting interests between the various parties needing to interact with the media client device. For example, a software update made by the manufacturer may not be in the best interest of an ISP.

The compartmentalisation provided by the software stack allows for an alternative software update scheme, where multiple levels of the software stack may be accessed and updated independently - and transparently to other parties - without requiring the update to be implemented by the client device manufacturer or the manufacturer having to implement specific APIs to facilitate updates provided by the various parties.

In the example of a client device 130 with a three-level software stack, the device manufacturer 4006 and a content provider CP 1000 can provide updates 4008 to respective levels 4012, 4016 of the stack without the risk of conflicting settings applied from different update sources resulting a critical update from one source being overwritten by the update from another. In practice, client device 130 stores a local copy of known working configuration to allow for roll-back in the event of update errors.

The functionality of the device may also be tailored to the user, depending, for example on the ISP or location. A media client device bought over the counter can therefore have vastly different functionality depending where it is in operation. This flexibility also means that individual manufactures do not need to envisage all possible functionality a content provider may need when building a device.

Generally, in order to mitigate conflicting configuration and software updates and to prevent accidental parameter overwrites, settings from multiple sources are combined according to a merging process whereby items such as configuration parameters are replaced, deleted or merged in accordance with defined permissions and processed in a predefined order (for example, platform operator.

**ISP Discovery**

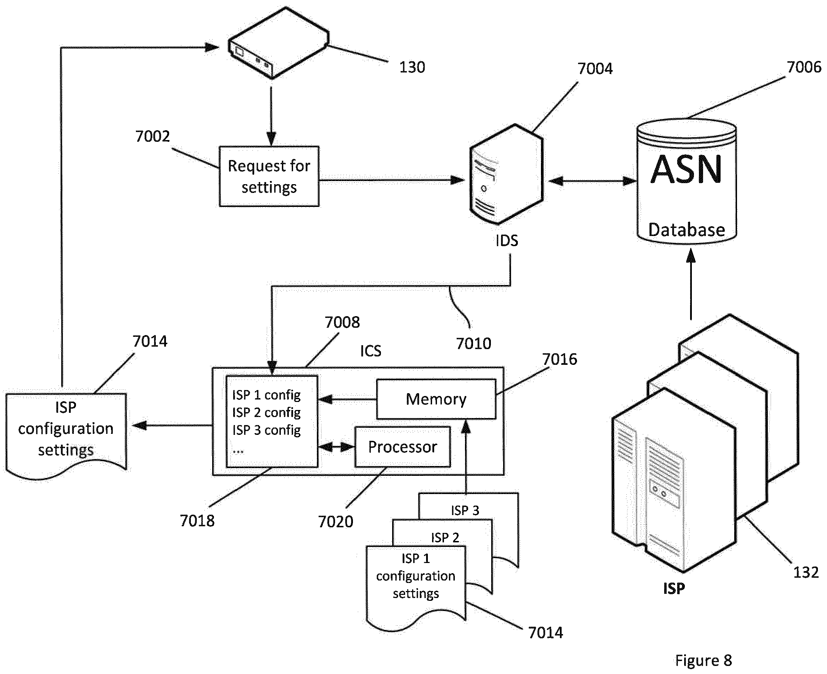

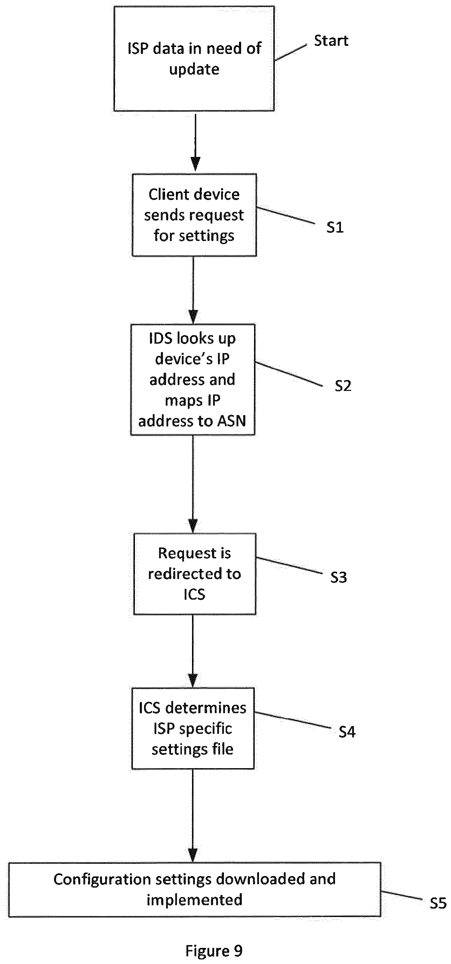

Figures 8 and 9 show the ISP discovery process.

This process enables remote configuration and tailoring of media client device 130 properties according to the host ISP by means of the media client device 130 downloading an appropriate ISP-specific configuration or settings file 7014 corresponding to its host ISP 132 from an ISP configuration service ICS 7008. Settings file 7014 is used to provide, for example, ISP-specific features for the user interface or EPG and/or code for an ISP-specific media content player. A generic media client device 130 can therefore be customised as required, essentially decoupling the media content from the media format and client device hardware.

Media client device 130 runs this process at start-up and at intervals thereafter to check for software and configuration updates. The update intervals may be pre-set to occur regularly or triggered by specific events, for example expiry of a time period to allow for temporary configuration settings to be applied.

The ISP delivery process proceeds as follows:

S1. Media client device 130 sends a configuration request 7002 to the ISP Discovery Service (IDS) 7004 requesting ISP-specific device configuration settings (the address of the IDS is pre-loaded onto the media client device)
S2. IDS 7004 determines the IP address of media client device 130 and performs a database lookup against an Autonomous System Number (ASN) database 7006 to identify the corresponding ISP 132. ASN database 7006 receives regular identity updates from ISPs 132.
S3. IDS 7004 redirects the configuration request 7002 to ICS server 7008, optionally with an ISP identifier
S4. ICS server 7008 uses processor 7020 to consult ISP configuration lookup table 7018 in order to determine the corresponding settings file 7014 for use with the identified ISP and retrieve it from memory 7016
S5. The appropriate settings file 7014 is downloaded to media client device 130

The IDS 7004 and ICS server 7008 may be managed by the same party and/or comprise a single unit. In alternatives, the ISP-specific configuration file 7014 may be provided to the client device 130 by other means, for example directly from the IDS. The IDS and/or ICS services may in some embodiments be hosted by the data/metadata aggregation server CCO/MAS server 128.

In another alternative, an ICS server 7008 is associated with - and may be operated by - a particular ISP 132 and provide configuration settings files 7014 to connected media client devices 130 that are specific to that ISP 132. Multiple configuration settings files 7014 may be used to allow for configuration of media client devices 130 individually or as groups.

Where the geographical location of the media client device 130 can be established, settings file 7014 may be used to apply location-specific settings to the media client device 130. For example, certain DTT content, such as local weather forecasts, can be made available only in particular areas; configuration file 7014 can be used to specify which of a plurality of similar media content (all weather forecasts) is to be made preferentially accessible to the user of the media client device 130 at a particular location (the weather forecast for that particular location). This can be achieved, for example, by suitably modifying the EPG so that the provided link to a generically-labelled media content item ("weather") is to local weather media content item.

Similar tailoring to location may be achieved for on-demand media content. Regional and international customisations to the EPG interface may also be applied by this method. The ability to provide location-specific media content also allows for more nuanced subscription and pay-per-view monetisation. Further location-specific aspects are discussed below.

ISP discovery also allows for the generation of 'closed user groups', in which access to particular media content can be limited to a particular group of users. This is discussed in more detail below.

**Geo-location**

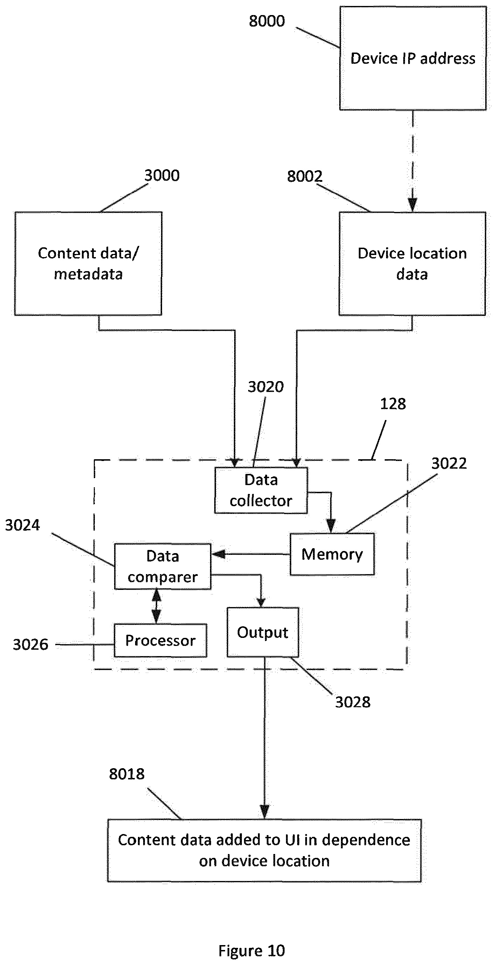

Figure 10 shows the geo-location process.

Geo-location refers to the determination of the geographical location of media client device 130, which can subsequently be used to apply location-specific settings and/or supply media client device 130 with location-specific (location-targeted) media content. The application of location-specific settings to the media client device 130 was discussed above in terms of the ISP discovery process and the downloading to and use by media client device 130 of an ISP-specific configuration file. This section discusses applying location-specific settings at the data/metadata aggregation server (CCO/MAS server 128).

The geo-location process proceeds as follows:

S1. The IP address of media client device 130 is determined. This may be achieved by use of an ISP Discovery Service (IDS), as previously described.

S2. The location of the media client device 130 is determined, for example via a database lookup against an Autonomous System Number (ASN) database as previously described in combination with location data provided by the identified ISP.

S3. Media client device location data 8002 is forwarded to data/metadata aggregation server (CCO/MAS server 128) which also receives media content metadata 3000 (including location-target identifiers) from media content providers. Both sets of data are stored in memory 3022.

S4. CCO/MAS server 128 uses a processor 3026 to compare in data comparer 3024 the media client device location data 8002 with the location-target identifiers of the media content metadata 3000 to determine which location-specific media content the media client device 130 is to be permitted to access.

S5. Metadata relating to the location-specific media content is output 3028 to the media client device 130 and displayed on the EPG.

In alternative examples, the location of the client device 130 may be determined from one or more DTT signals received at the client device 130, for example according to the strongest received signal or by a process of triangulation. This process may be performed at the client device 130 and/or at CCO/MAS server 128.

Geo-location aspects may be incorporated into other aspects of the media platform, for example the CREDS aspect.

**Closed User Groups**

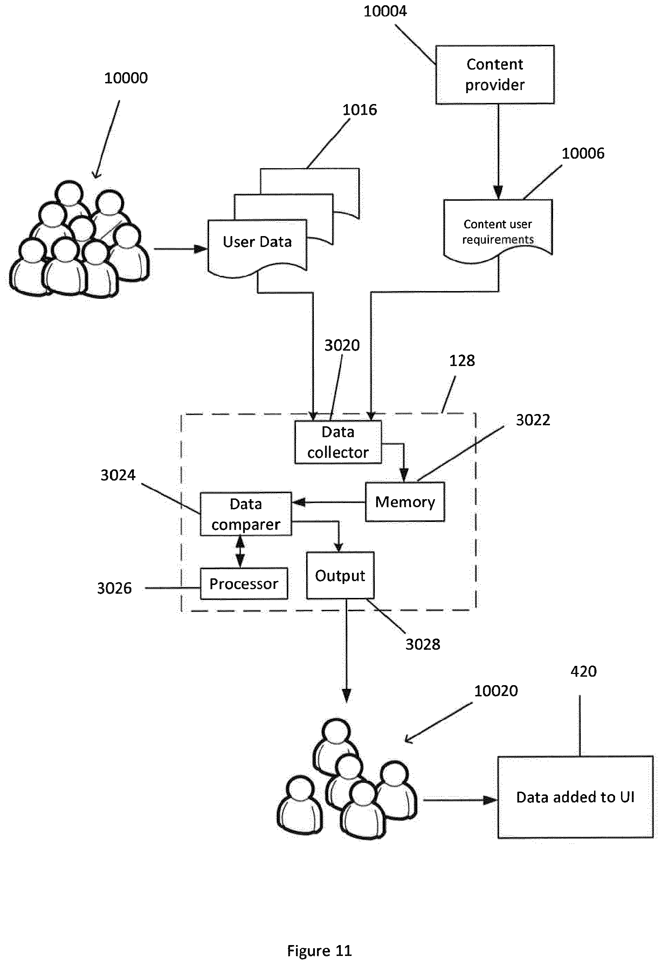

Figure 11 shows the 'closed user groups' concept in more detail.

'Closed user groups' allow for access to particular media content to be restricted to specific groups of users based on access parameters provided in the media content metadata supplied by the media content providers.

Access may be granted to members of a particular closed user group, for example by allowing members of the group to search for the particular media content via an associated application or widget presented via the EPG. Members of a 'British Library' user group would therefore have access via a British Library application to British Library media content and/or have British Library media content generally accessible via the EPG. Alternatively, or in addition, access may be denied to non-members of the group.

As previously described, each media client device 130 has associated with it a user data file 1016 which contains information such as user media content subscriptions, (optionally) the location and other user or media client device aspects. Content provider 10004 can specify a set of user requirements 10006 that users 10000 (via their associated media client devices) have to meet in order to access a particular item of media content.

Data/metadata aggregation server (termed a CCO/MAS) 128 receives requirements 10006 and user data file 1016 at data collector 3020 and stores them in memory 3022 for comparison in data comparer 3024 with the use of a processor 3026 to determine which users have access to that particular item of media content 10020.

Permitted user list 10020 is output via the output component 3028 and metadata regarding the means of accessing the restricted media content is forwarded to the media client device 130 for adding to the UI or EPG 420 of the users.

'Closed user groups' aspects may be incorporated into other aspects of the media platform, for example the CREDS aspect.

**Assured Delivery**

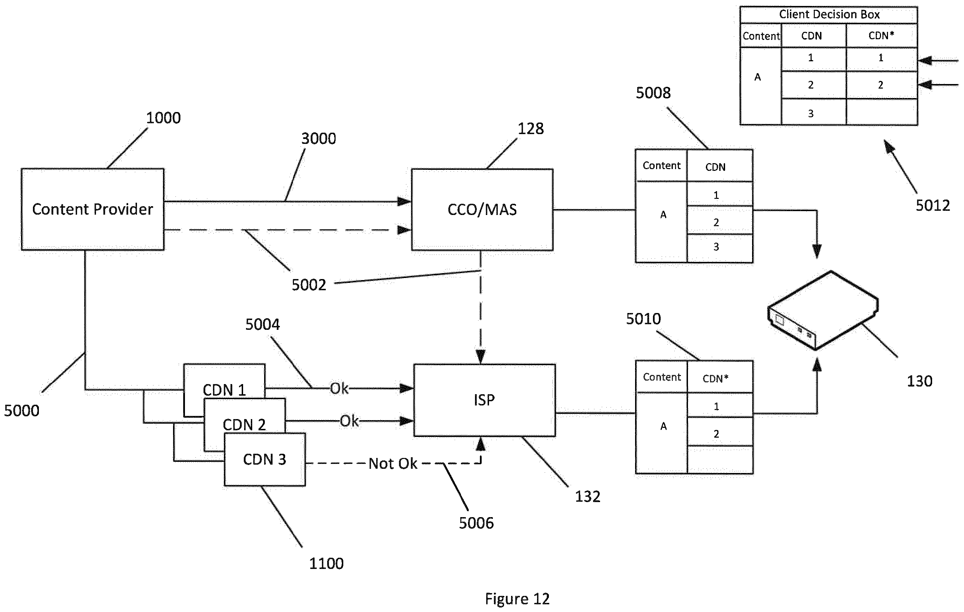

Figure 12 shows the assured delivery process.

Media content delivered from a media content provider 1000 to a media client device 130 over an IP network may be subject to network latency or other packet delivery issues. This can become troublesome when attempting to deliver data-intensive media content, such as high-definition television (HDTV).

Typically, media content providers providing media content over IP networks make use of Content Delivery Networks (CDNs) 1100, third party distributed computer systems that cache copies of the media content at a plurality of points in the network so that a media content client can access a relatively local copy in preference to one directly from the media content provider.

An ISP 132 may offer (within service level agreements) to provide content from one or more CDNs at an assured rate of delivery or bitrate. Assured delivery selection is a means of choosing the optimal CDN when several options are available.

CDN selection may be chosen according to bitrate limitations or restrictions due to the physical connection of the media client device 130 to the IP network or according to a policy of the hosting ISP 132. For example, the media client 130 (or a specific media player) may be configured to use a particular CDN 1100 when connected to a particular ISP 132, but when connected to a different ISP 132 a different CDN 1100 may be required or may give better performance.

Detailed aspects of the assured delivery process include the following:

- Content provider CP 1000 distributes media content 5000 to a plurality of CDN 1100 and sends corresponding metadata 3000 to CCO/MAS server 128. The metadata 3000 also specifies a preferred, target or minimum required bitrate for the media content.
- ISP 132 determines the set of CDN 1100 for which the ISP 132 offers assured delivery and includes this information 5010 as a list of CDNs 1100 and assured bitrates in the ISP configuration file 7014 set to the client device 130.
- Client device 130 receives metadata 5008 relating to available media content from the CCO/MAS server 128 in the usual way
- The media client device 130 (or media player application) determines 5012 from the ISP configuration file 1016 and from any bitrate requirement in the media content metadata 5008 received from the CCO/MAS server 128 which if any CDN 1100 is suitable for accessing the media content 5000 at the required bitrate with assured delivery
- Upon the user selecting a particular item of media content for playback over IP media client 130 requests the requested item of media content 5000from the suitable CDN 1100
- If there is no suitable CDN 1100 for assured delivery, the media client device 130 requests the requested item of media content 5000 from a CDN 1100 that is reachable but which does not offer assured delivery
- Optionally, the media client 130 displays delivery rate information to the user via the EPG, for example, when assured delivery is available and whenever performance is adversely affected.

In some embodiments, the media client device 130 monitors the bitrate at which the CDN 1100 provides the media content and determine whether to report performance to the ISP 132 and/or whether to switch another possible CDN 1100 if required.

Alternatively, the list of suitable CDNs 1100 is provided by the ISP 132 to the CCO/MAS server 128 which then relays the information as metadata to the client device 130. In this case, a reference to the information is included in the ISP configuration file 1016.

In a further alternative, the CCO/MAS server 128 itself determines which of the CDN 1100 is to be used to supply the particular media content to the client device 130 using knowledge of the ISP passed to it by the media client device 130.

**Further Aspects**

The following 'Further Aspects' sections are preferably to be read in conjunction with the similarly-named previous sections.

**Further EPG Aspects**

The tables below summarise the sources of the metadata as required to satisfy the requirements mentioned above. In this presently described example, the client device (STB) 130 includes:

- a mechanism for caching Digital Terrestrial Television (DTT) Signal Intensity (SI) information (namely the EventRepository component); and
- a mechanism for caching metadata provided by the Metadata Aggregation Server (MAS)

***For Linear DTT Channels:***

| | | Device configured for DTT only | Device configured for DTT and IP | | |
|---|---|---|---|---|---|
| **Applicatio n process** | **Required information** | | **Temporary loss of IP connectivity** | **Normal operatio n** | **Temporary loss of DTT connectivity** |
| Rendering grid | List of DTT channels (inc. LCN) | DTT SI cache | DTT SI cache | DTT SI cache | DTT SI cache |
| | Service (channel) information | DTT SI cache | Cached MAS metadata (see note) | MAS | MAS |
| | Event Start time and duration | DTT SI cache | DTT SI cache | DTT SI cache | DTT SI cache or fallback on MAS |
| Decorating grid items | Event Title(s) and Description | DTT SI cache | Cached MAS metadata or fallback on DTT SI | MAS | MAS |
| | Thumbnail image | Unavailable | Cached MAS metadata | MAS | MAS |
| | OnDemand availability | N/A | Cached MAS metadata | MAS | MAS |
| | Available from local library? | LocalMediaL ibrary | LocalMediaLibra ry | LocalMed iaLibrary | LocalMediaLibrar y |
| | Has this event been booked to record? | LinearAcquis ition | LinearAcquisition | LinearAcq uisition | LinearAcquisition |
| Note: It is possible that a new channel is discovered whilst the box has no Internet Protocol (IP) connection. In this case there would be no metadata for that service cached in the MAS and the UI would need to use DTT SI service information instead. | | | | | |

***For Linear IP & Virtual Channels:***

| Application process | Required information | Device configured for DTT and IP | | | Device configured for IP only |
|---|---|---|---|---|---|
| | | Temporary loss of IP connectivity | Normal operation | Temporary loss of DTT connectivity | |
| Rending grid | List of linear IP channels (inc. LCN) | IP channel list* | IP channel list* | IP channel list* | IP channel list* |
| | Service (channel) information | Cached MAS metadata | MAS | MAS | MAS |
| | Event Start time and duration | Cached MAS metadata | MAS | MAS | MAS |
| Decorating grid items | Event Title(s) and Description | Cached MAS metadata | MAS | MAS | MAS |
| | Thumbnail image | Cached MAS metadata | MAS | MAS | MAS |
| | OnDemand availability | Cached MAS metadata | MAS | MAS | MAS |
| | Available from local library? | LocalMediaLibrary | LocalMediaLibrary | LocalMediaLibrary | LocalMediaLibrary |
| | Has this event been booked to record?** | LinearAcquisition | Linear Acquisition | Linear Acquisition | Linear Acquisition |
| * see IP channels specification outline below. ** Linear IP channels only as events on virtual channels cannot be recorded | | | | | |

### IP Channels overview

The following description gives a high level overview of the IP Channels architecture. It describes the key components involved in IP channels and also how these components interact with each other. It explains how Metadata and content gets from the Content provider to the Set-top-box (STB). It also describes the stages a new Content provider would go though in order to be able to disseminate their content to consumers.

### The key components involved in IP Channels

The IP Channels architecture has five major components. The Content Provider (CP), the Internet Service Provider (ISP), the DTT Central collator (DTT CC), the Data Aggregation Server (CCO) Metadata Aggregation Server (MAS) and the Set Top Box (STB).
The Content provider (CP) - The CP acquires content from content producers, the CP takes responsibility for encoding, encrypting and ensuring Digital Rights Management (DRM) compliance (where applicable) and transporting the content to its partner ISP(s) when appropriate. There exist two types of CP (Broadcast CP and Non-Broadcast CP). Broadcast CP(s) typically provide free or 'non-premium' content via DTT; premium (paid-for) content is passed to partner ISP(s) for dissemination over an IP network. Non-Broadcast CP(s) pass content to partner ISP(s) for dissemination over the IP network - although some also align with DTT partners for dissemination over DTT.
The ISP - The ISP(s) takes 'premium' content from the CP(s) and disseminates it over its IP network. CP(s) and ISP(s) make independent deals for the acquisition and delivery of content. The data aggregator (e.g. YouView) does not play any part in these arrangements and stores no content itself. Each ISP is assigned a range of channel numbers it can use by the content handler. The ISP regulates which channels different subscribers have access to effectively creating a walled-garden offering. The ISP sends each STB a subscriber-profile specific config file when it boots up and thereafter on a daily basis.

The DTT Central Collator (DTT CC) - As its name suggests the DTT CC takes the broadcast metadata from the broadcast content providers and amalgamates it into the 'Freesat Channel Sate Information' (Fat CSI) feed for dissemination over DTT.

The CCO Metadata Aggregation Server (CCO MAS) - The CCO MAS accepts enhanced metadata feeds from all the broadcast and non-broadcast CP partners, it aggregates this data and provides it to the STB Metadata broker, this may be done via IP.

The STB - The STB has the ability to concurrently receive 'free' TV channels over DTT and 'premium' content over the ISP's IP network. Giving the ability, for example, of recording one piece of content while watching another. The STB may house several components such as the Metadata broker, Service repository, Event repository, Config manager, media broker etc. The STB receives two 'IP Channel config' files on boot up from the CCO and the ISP, the STB combines the channel data in these two files to produce the EPG. These files can be updated daily after initial boot up.

### The process a new content provider undergoes to get content to consumers

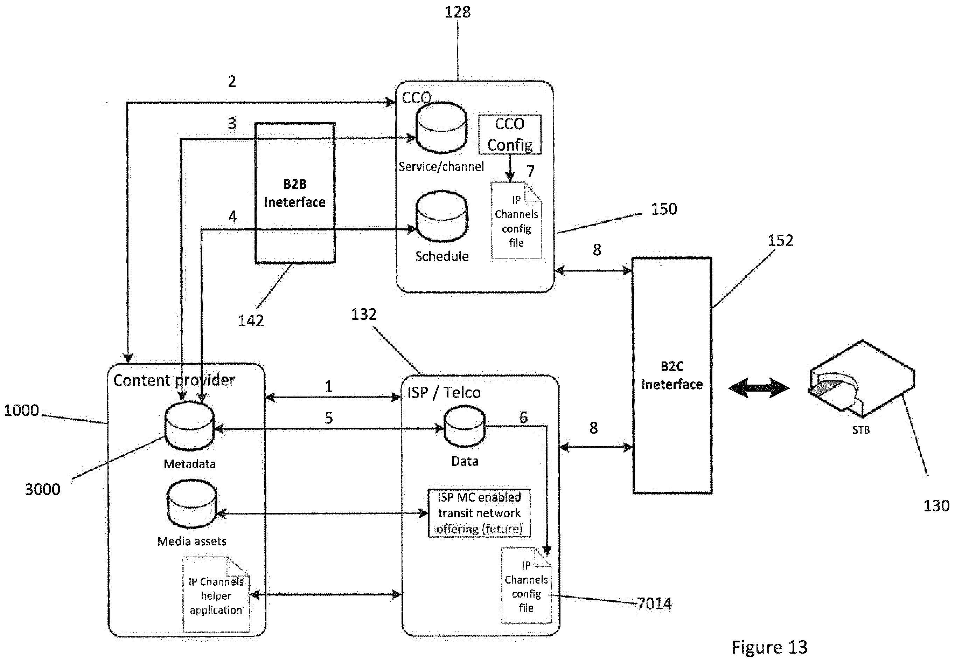

One example of a process that a new Content Provider (CP) 1000 follows when they want to get their content to consumers is broken into several stages, shown in Figure 13.

> 1. The CP 1000 agrees an ISP transit agreement with an existing ISP partner 132.
> 2. The CP 1000 applies to the CCO 128 for an allocation of unique Channel numbers to be used for their content.
> 3. Once these Channel numbers have been allocated, the CP 1000 then uses a Business to Business (B2B) 142 interface to provide enhanced metadata 3000 for their services and channels to the CCO MAS 128. The B2B interface is the interface between content providers and the platform, or between ISPs and the platform. Further details relating to the B2B are provided below.
> 4. The CP 1000 also sends schedule enhanced metadata (events) 3000 to CCO 128 via the B2B interface 142.
> 5. The CP 1000 provides metadata 3000 relating to events to the ISP 132.
> 6. The ISP 132 creates or updates an "ISP IP Channels" config file 7014 from the metadata 3000 supplied by the CP 1000.
> 7. CCO 128 creates or updates a "CCO IP Channels" config file 150 from metadata 3000 supplied by the CP 1000.
> 8. The ISP and CCO config files 7014, 150 are sent to the STP 130 via a Business to Consumer (B2C) interface 152. The B2C interface is the interface between the platform and the client device 130. Further details relating to the B2C are provided below.

Once a day the STB 130 is sent both an updated CCO IP Channels configuration file 150 and an updated ISP IP Channels configuration file 7014. Once these configuration files are received, the STB 130 amalgamates the files and renders the EPG displaying the range of channels that has been purchased. When a channel is selected the default player or proprietary CP player is launched and the viewer watches the content.

### Schedule ingest and on-demand linking

### High-level architecture

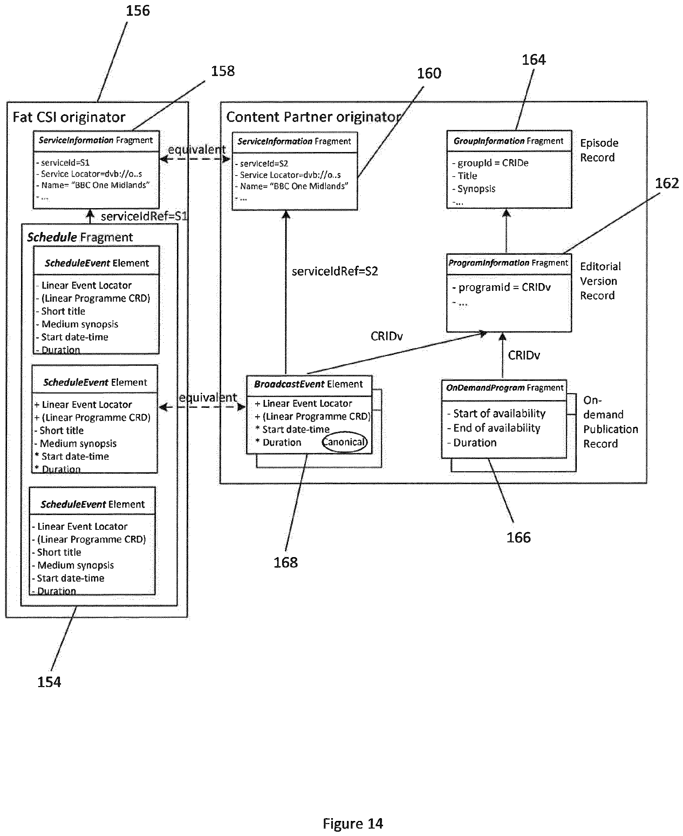

Ingest of 'master' schedule. This is shown schematically in Figure 14 and described below.

> 1. The *Schedule* Fragments 154 are sourced from the Fat CSI feed 156.
> 2. Each of these *Schedule* Fragments 154 reference a *ServiceInformation* Fragment 158, also sourced from the Fat CSI 156. This automatically keeps the CCO reference metadata up-to-date with the latest service line-up as new services are added, renamed or removed.
> 3. There is one *ServiceInformation* Fragment 158 per regional variant of a service in the Fat CSI feed 156. The Digital Video Broadcasting (DVB) service locator ('DVB triplet') is conveyed in the ServiceInformation/ServiceURL element and is different for each regional variant of a linear broadcast channel.
> 4. The linear Programme Content Reference Identifier (CRID) is specified in <Program crid="...">.
> 5. The DVB Event Locator is carried in <ProgramURL>.
> 6. The linear Programme CRID, Series CRID(s) and Recommendation CRID(s) are carried in <OtherIdentifier>.
> 7. Title and synopsis (medium) are carried in <InstanceDescription>.
> 8. The airing attributes are carried in <InstanceDescription> and <AVAttributes>.

*Schedule linkage metadata*

The main use cases for this are:

1. Decorating the linear EPG with 'catch-up' on-demand availability. A user can go from an event in the EPG to an on-demand playback experience.
2. Displaying the canonical linear slot details in the on-demand catalogue. When the user displays 'more info' for an item in the on-demand catalogue, the original broadcast channel name and broadcast time are displayed.

The following is provided by Content Partners who are broadcasters:

1. A separate set of *ServiceInformation* Fragments 160 are published by Content Partners as part of their B2B metadata contribution feeds. These are at the same level of granularity as those derived from the Fat CSI feed 156.

• The value of ServiceInformation/ServiceURL can be used to establish equivalence between *ServiceInformation* Fragments 160 received from different parties.

2. Content Partners continue to publish their *ProgramInformation* 162, *GroupInformation* 164 Fragments with enhanced metadata (as per revision 1.0 of the specification).
3. Content Partners continue to publish *OnDemandProgram* Fragments 166, but the canonical broadcast is not signalled in this Fragment.
4. Content Partners provide a new *BroadcastEvent* Fragment 168 to link On-demand Publications to events in the master schedule derived from the Fat CSI feed 156.

   ◦ The *BroadcastEvent* Fragment 168 is minimally specified. It does contain instance description metadata such as title and synopsis. The definitive source of schedule billing metadata is the 'master' schedule.
   ◦ It is recommended that a separate *BroadcastEvent* Fragment 168 is published per regional variant of a linear channel. This ensures that all regional variants are linked.
   ◦ Separate *BroadcastEvent* Fragments 168 are published for each repeat showing of the programme in the linear schedule.
   ◦ The programId CRID of the enhanced metadata ProgramInformation Fragment 162 shall be conveyed in the crid attribute of the BroadcastEvent/Program element.
   ◦ The instance metadata identifier conveyed in InstanceMetadataId shall comply with the specification below.
   ◦ The DVB Event Locator carried in Fat CSI shall be conveyed in BroadcastEvent/ProgramURL.
   ◦ Where available, the linear Programme CRID is conveyed in ((BroadcastEvent/InstanceDescription/OtherIdentifier}} with the authority value pcrid.dmol.co.uk for Freeview or pcrid.freesat.co.uk for Freeview. Only one such Programme CRID may be conveyed in any given *BroadcastEvent* Fragment.

5. One of the *BroadcastEvent* Fragments 168 may declare itself as being 'canonical'. If no *BroadcastEvent* Fragment 168 declares itself as 'canonical', the Mater Integrated Program Schedule (MIPS) picks the one with a time slot in the most recent past irrespective of which linear service it is related to.
6. If more than one *BroadcastEvent* Fragment 168 declares itself as 'canonical', MIPS picks the one with a time slot in the most recent past irrespective of which linear service it is related to.
7. The MIPS ingest attempts to match a *BroadcastEvent* 168 to a <ScheduleEvent> in the master schedule ingested from the Fat CSI feed using the following ordered sequence of strategies:

   ◦ If there is a Program CRID and an Event Locator present in the *BroadcastEvent* Fragment 168, both of these must match the event in the master schedule.
   ◦ If there is only an Event Locator present in the *BroadcastEvent* Fragment 168, this identifier only is used and the scope of the search is limited to seven days into the future and fourteen days into the past. (This is because the DVB event_id is reused periodically.) This caters for linear broadcast services that do not transmit a Program CRID in the DVB Event Information Table.
   ◦ If there is a start time and duration present in the *BroadcastEvent* Fragment 168, the serviceIdRef linkage is followed to the *ServiceInformation* Fragment to determine the DVB Service Locator (ServiceInformation/ServiceURL) and this is cross-referenced with the DVB Service Locator of the service derived from Fat CSI to limit the scope the matching to a particular DVB service. The start time and duration is then used to narrow down the match to a particular event in the 'master' schedule.
   ◦ If there is still no match, or if no *BroadcastEvent* Fragment 168 has been supplied by the Content Partner, there is a future option for MIPS to look at the titling information in the enhanced metadata supplied and do 'fuzzy' match with the 'master' schedule. This is quite hard to do in practice, however, because of the risk of false matches.

***Practical ingest of 'master' schedule from STAGIS (an automated EPG data aggregation system from eventIS®)***

It is proposed that Fat CSI schedule metadata be plumbed into an eventIS® STAGIS system and published by this into CCO MIPS. This can be achieved in at least one of the two following ways:

**a) *STAGIS 'quick win' solution***

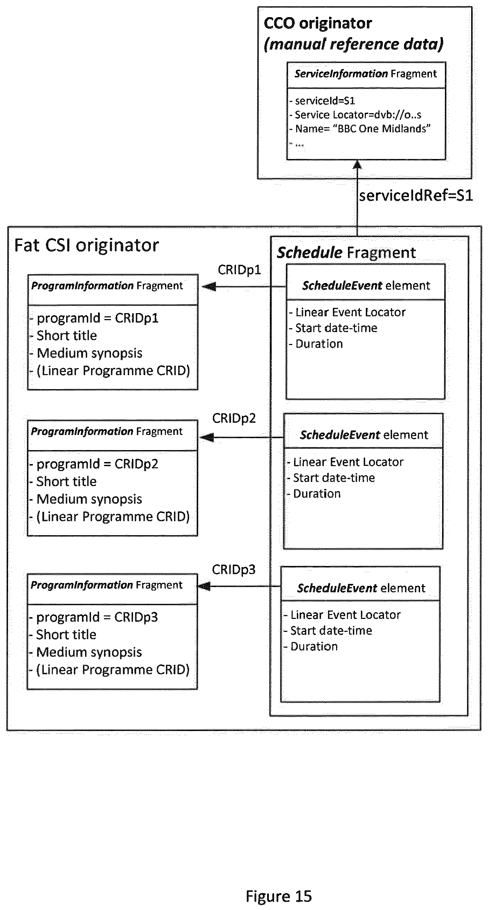

This system is shown schematically in Figure 15. The existing implementation of this system has a number of shortcomings:

1. STAGIS does not support the Business to Business (B2B) web service interface. It drops off *Schedule* Fragment files in a local directory or remote FTP drop-off account.
2. STAGIS does not support a protocol of fixed *Schedule* Fragment blocks. Each schedule file contains a 'sliding window' snapshot of events on one DVB service for a configurable period of time ($x$ minutes into the past, $y$ minutes into the future). One *Schedule* Fragment file is dropped every $z$ minutes.

   ◦ This means that MIPS cannot use the start/end time of the schedule block as the proxy fragment identifier. Instead, the event locator and (optional) Programme CRID could be used to track the life-cycle of individual DVB events and their mapping to Broadcast Publication Records. One simple approach to ingest would be to inspect the sliding window stated in each new *Schedule* Fragment and replace all Broadcast Publication Records in that window with the events shown in the new *Schedule* Fragment.

3. The TV-Anytime profile supported by STAGIS is different from that specified in the revision 1.0 B2B metadata contribution specification.

   ◦ The descriptive metadata is provided in *ProgramInformation* Fragments rather than the <ScheduleEvent> element. STAGIS is really designed for scenarios where all the enhanced metadata is provided in normalised *ProgramInformation* Fragments. It does not currently accommodate the possibility of events having an instance-specific title and/or synopsis in the linear EPG, something that is a characteristic of the Fat CSI feed. This is a problem that eventIS is prepared to fix.
   ◦ In the current deployment of STAGIS, every <ScheduleEvent> has a corresponding <ProgramInformation> Fragment (one-to-one mapping).
   ◦ MIPS need to 'sew' these two entities together to form a Broadcast Publication Record.

4. STAGIS is not currently able to publish TV-Anytime *ServiceInformation* Fragments at all, so this reference data needs to be managed manually by MIPS in the short term.

**b) *STAGIS 'longer term' solution***

A custom STAGIS output plug-in for the system overcomes the above shortcomings and brings the STAGIS solution into line with the B2B metadata contribution specification.
Schedule ingest for IP channels:

• The solution for IP channels is slightly different in that the Content Partner submits Schedule Fragments alongside all the other fragment types.
• These schedules can be supplied according to the protocol already defined in the revision 1.0 B2B contribution specification.
• The fixed schedule block protocol can be implemented.

The TV-Anytime profile for Schedule Fragment is adhered to.

**IP channels - Solution overview**

This section provides an overview of how the consumer device discovers any IP channels that are available to it and present them to the viewer.

*Context*

*IP Channel Availability*

The availability of an IP channel may be classified as follows:

*Universal availability*

The channel is published by the channel provider with the intention that it can be accessed by any device on any ISP network. This does not require a commercial arrangement between the channel provider and any ISP.

Note: In the short-term there may be technical limitations in a particular ISP network that prevent such a service being accessible by devices in that network, e.g. multicast not enabled.

*Limited availability*

The channel is published by the channel provider such that is can only be accessed by devices on a specific ISP network. This is assumed to be achieved through a commercial arrangement between the channel provider and the ISP.

*IP Channel Delivery*

The delivery of an IP channel may be classified as follows:

*Linear IP channel*

This is a live stream which the viewer should find indistinguishable from a standard linear broadcast channel. It may be delivered to the device via multicast or unicast delivery.

*Virtual IP channel*

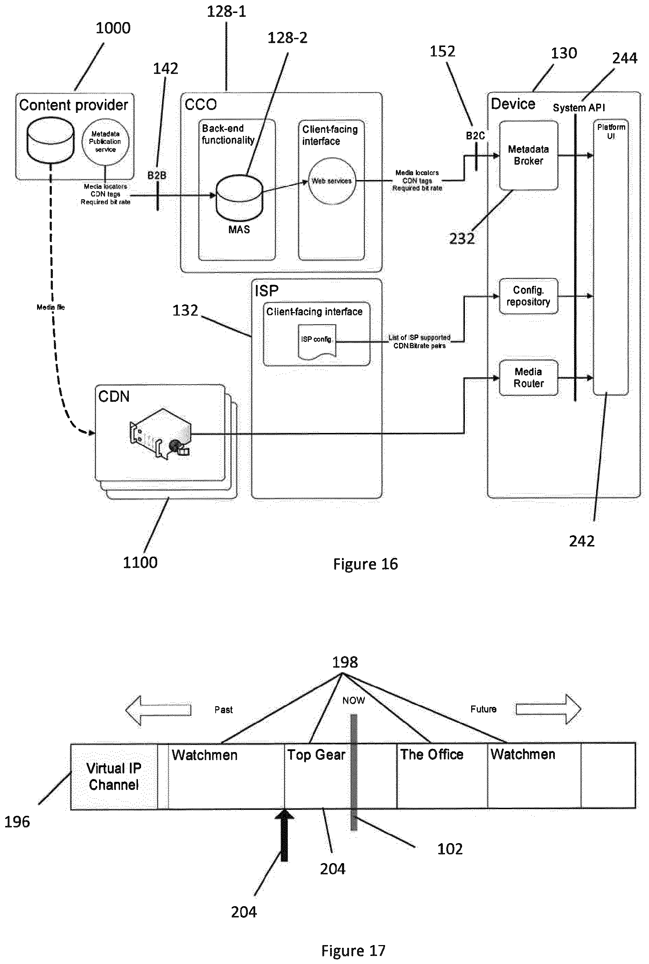

This is essentially a playlist of on-demand programmes, presented to the viewer as if they were programmes in a linear channel schedule. However, when a virtual IP channel is selected to view the notionally 'present' programme will commence playback from the start, rather than from the apparent intersection of the current time with the schedule. This is shown in Figure 17. The 'Virtual IP Channel' 196 has been populated with programmes 198 as if a linear channel. The 'Now' line 102 intersects the programme 'Top Gear' 202 part of the way through, but playback will commence from the start, as shown by arrow 204.

*System Overview*

*IP Channel registration with the platform*

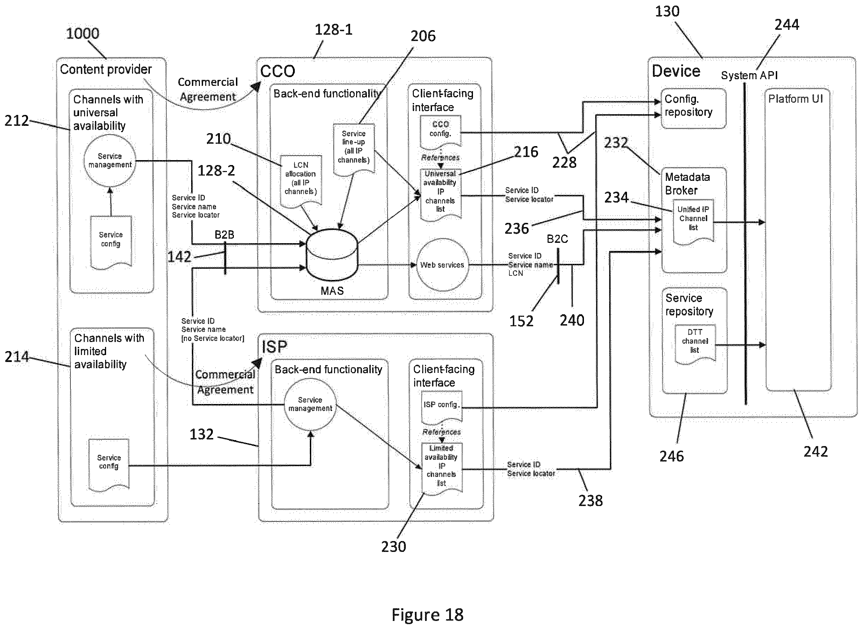

A content provider wishing to make an IP channel of any kind accessible needs to register this channel with the platform. This is shown in Figure 18. This results in:

1. An entry to be added to the Service Line-up 206 within the CCO 128-1.
2. A Logical Channel Number (LCN) to be assigned for the channel and stored in the LCN Allocation 210 within the CCO 128-1.

As part of this the content provider 1000 needs to indicate if the IP channel has universal 212 or limited 214 availability.

If the channel has universal availability 212 it is added to the Universal Availability IP Channels List 218.

If the content provider 1000 has a carriage agreement with an ISP 132 for a given channel, that channel is non-universally available. Figure 18 shows an example where the content provider 1000 must supply service location metadata for the channel to the ISP 132. In order to be listed as an IP channel, service description metadata must be sent to the CCO 128-1 and this is typically sent on behalf of the content provider 1000 by the ISP 132 using the B2B metadata contribution interface 142.

If the content provider 1000 wants to provide a universally available channel 212 it needs to provide service description metadata and service location metadata to the CCO 128-1 via the B2B metadata contribution interface 142.

### Logical Channel Number assignment

As described above, the LCN for an IP channel is assigned by the platform.

To allow IP channels to exist in a unified channel list with linear broadcast channels, LCN assignment come from a managed range.

For IP channels with universal availability 212 the assigned LCN needs to be unique within the scope of the platform.

For IP channels with limited availability 214, the assigned LCN needs to be unique within the scope of the relevant ISP 132, i.e. the same LCN could be allocated to different IP channels associated with different ISPs.

### Publication of service and schedule metadata for an IP channel

Service and schedule metadata for the IP channel are aggregated by the CCO 128-1 via the B2B metadata contribution interface 142 and published to devices 130 via the B2C metadata interface 152.

For universal availability IP channels 212, the channel provider 1000 (or appointed agent) makes schedule metadata directly available to the MAS 128-2.

For limited availability IP channels 214, either the ISP 132 makes schedule metadata available to the MAS 128-2 on behalf of the channel provider 1000, or direct publishing by the channel provider 1000 occurs.

### IP channel discovery by the consumer device

As part of normal operation the consumer device 130 periodically (typically daily) retrieves both the generic platform and relevant ISP configurations (lines 228 in Figure 18).

The platform configuration identifies the location of the Universal Availability IP Channels List 216, hosted by the platform.

The ISP configuration identifies the location of the Limited Availability IP Channels List 230, hosted by the ISP 132.

These files include the location for each IP channel listed. This means that the ISP 132 retains direct control over the location of limited availability IP channels 214.

The Metadata Broker component 232 retrieves both of these channel lists and merges them to generate a unified IP channel list 234 on the device 130.

At this point the combined list only contains a service ID and service locator 236 for each channel. The Metadata Broker 232 then queries the MAS 128-2 via the B2C interface 152 to retrieve service description metadata for each channel which includes the name of the IP channel, logo, Uniform Resource Locators (URLs) and its LCN (shown by line 240). The service ID is used as the basis for this look-up.

### Listing IP channels in the platform UI

The Metadata Broker 232 exposes the unified IP channel list 236 and associated metadata to higher-level applications - such as the platform UI 242 - over the System API 244 (Figure 18).

It is the responsibility of the platform UI 242 to present information about IP channels in an appropriate manner (e.g. as an EPG grid) including interleaving with information about linear broadcast channels (obtained from the Service Repository 246).

### Viewing an IP channel

### Linear IP channel

To ensure consistency and to minimise channel change times when channel surfing, linear IP channels are presented for viewing by the platform UI application.

The service locator for a linear IP channel is made available to the Metadata Broker as part of the relevant IP channel list (from platform or ISP). This service locator could be a direct reference to the location of an IP channel. But preferably it provides the location of a Service Description Protocol (SDP) file. Regardless, the service locator can be passed directly by the platform UI application into the Media Router component to commence presentation of the linear IP channel.

Encrypted IP channels may need the assistance of a content-provider-specific application to manage subscription details and obtain content licences when the channel is first viewed. When an encrypted channel cannot be played, the platform UI application launches such a 'helper' application provided by the channel provider. The helper application can assist the viewer and aid them in accessing the channel, e.g. obtaining a subscription. The location of the helper application is provided as part of the service metadata.

### Virtual IP channel

The service locator is not relevant for a virtual IP channel. Instead the behaviour on selection of a virtual IP channel is governed by the platform UI application.

The behaviour is as described above, with the programme in the schedule intersected by the current time being played from the start in an on-demand manner using any of the techniques defined in the IP Delivery specification.

### Linear IP channel delivery

### Retransmission

Clients are required to support the use of a retransmission server for Reliable Transport Protocol (RTP) delivery as defined in [ETSI TS 102 034 v1.4.1]. Use of this mechanism is optional for channel providers.

### Fast Channel Change (FCC)

A solution for fast channel change based on the use of a retransmission server is defined in DVB-IPTV handbook [DVB-IPTV FCC].

### Trick modes

When watching IP multicast channels and watching recordings made from them, the same trick mode functionality as is available for broadcast channels is provided.

### Fallback to unicast

A mechanism for fall back to unicast delivery is provided to support the use of multicast for universally-available IP channels. This is preferably done by referencing the unicast stream from within the SDP file and defining requirements for the media player component of the device.

### Unicast delivery

Not all ISP networks are fully multicast enabled and even where they are access to multicast capability may require a commercial agreement to be in place. Hence, some linear IP channels may need to rely on unicast delivery to reach some or all of their audience.

Unicast delivery uses the existing mechanisms described herein. Hypertext Transfer Protocol (HTTP) adaptive streaming is preferable.

### Content protection

Content protection for multicast IP channels can use both 'Marlin Broadband' and 'Marlin MS3', or any other type of DRM procedure.

Prioritisation between these options and the need for enhancements to MS3 is driven by a commitment to exploit by channel providers.

### Marlin Broadband

IP linear channels are normally presented directly by the main UI. Associated with an IP channel or a set of IP channels is a 'helper application' whose purpose is to handle cases where the device does not have a licence to decrypt the channel's content.

The first time a user visits a DRM-protected IP channel, the helper application is invoked. The helper application may immediately initiate a licence acquisition for the channel if it has sufficient information to do so, for example from the ISP configuration. If not, it may prompt for an account number or user name and/or a PIN, for example if the user has additional charges to pay. Assuming the licence acquisition is successful, the content will then play.

The application can pass any number of messages to the DRM system and can make use of action tokens which themselves perform a number of tasks. This allows the application to set up complex node topologies within the Marlin system and to acquire licences for a number of IP channels at the same time.

The helper application will not be invoked on subsequent visits to the channel provided the licence remains valid.

In order to support rolling subscriptions, a mechanism is provided for the helper application to register a licence update server for a set of IP channels so that licences can be refreshed and subscriptions renewed automatically. This mechanism can also be used to allow the top level content keys to be changed periodically.

When registering the update server, the server URL can include any tokens that the channel provider needs in order to validate the licence renewal requests. The tokens can contain private encrypted information identifying the user if necessary. The device assumes that the response from the URL is a Marlin action token and processes it accordingly.

Content IDs in Broadband Transport Stream (BBTS)-encrypted streams can be changed periodically.

### Marlin simple secure streaming (MS3)

By referencing an IP channel's content using an MS3 compound Uniform Resource Identifier (URI), MS3-protected channels can be used without needing any major architectural changes in the client. However, the device is only able to present the channel for the period during which the content key (or keys) used in the stream is one that was present in the initial Secure Stream Access Statement (SAS) received from the server. If a channel provider needs to change the top level content key on a regular basis, this places a limit on the period for which uninterrupted play is possible. However, it is possible to include multiple keys in the SAS thus extending the period.

A new MS3 SAS could be obtained during playback. This involves choosing a random time within the expected initial key lifetime at which to request a new SAS.

When using MS3, a fresh Stream Access Statement (the MS3 equivalent of a licence) must be acquired each time a new streaming session begins. If the 'authenticator' feature of MS3 is not required, the MS3 SAS acquisition can proceed in parallel with a multicast join or content buffering operation and so does not add significantly to the channel change time. Note: the MS3 authenticator feature is intended primarily for obtaining CDN access tokens and would not apply for multicast channels.

The device makes a request to the MS3 server quoting a static channel identifier. The channel provider's MS3 server needs to return an SAS for the channel covering the content identifiers appropriate for the channel for a suitable period.

A mechanism is provided to allow a user identifier to be substituted into the MS3 URL in order for the MS3 server to validate SAS requests. If the device does not already have such an identifier, the IP channel's 'helper application' will be invoked to perform the necessary registration and provide it. The helper application is also invoked in the event that the MS3 SAS request fails, or the content identifier in the stream does not match one of the content identifiers in the SAS.

An option could be added to allow the user identifier to be provided through the ISP configuration.

### Recording and clash management

The device is capable of recording programmes from a linear IP channel, extending the existing mechanism for recording linear broadcast channels. The viewer is able to record programmes from a service without being aware of the distribution mechanism for that service.

### Clash management

This means that a booking-time conflict arises if at the time of making a Booking the device predicts that it will have insufficient system resource available to record the requested programme.

For the resolution of recording time conflicts, an in-progress recording of equal or higher priority will not be abandoned to allow a new recording to begin.

Bookings for recording an IP channel are event based i.e. a schedule event ID is passed to the acquisition component. Recordings from an IP channel are timer triggered, with a start and stop time derived from the channel's schedule.

More accurate recordings could be attained by triggering acquisition using Event Information Table present / following (EIT p/f) information (as with linear broadcast recordings). EIT p/f signalling could be embedded within the IP channel stream or equivalent signalling could be conveyed in a separate stream, with the latter being more suited to allowing the device to receive the signalling for one or more channels before starting to stream the content itself.

### Concurrency of acquisition

The device supports concurrent acquisitions from two separate channels regardless of the delivery mechanism used for those channels.

In reality, IP capacity constraints may make it difficult to support multiple concurrent IP channel acquisitions. The ISP configuration states the maximum number of channels that can be simultaneously delivered. In the case where a programme cannot be recorded due to the IP capacity constraints the main UI will display appropriate messaging to inform the viewer.

### Content protection for recorded content

When a recording is made from an IP channel, the stored data is the original encrypted stream. To play back such a stream therefore requires help from the DRM system and the way this works depends on whether Marlin Broadband or MS3 is used.

### Marlin Broadband

As described above, in an example where Marlin Broadband is used, there is a licence update mechanism which ensures that there is a valid licence available on the box at the time of a recording, provided that:

- the user has previously visited the channel, and

- their subscription remains valid.

When making a recording from an IP channel, the device checks the content ID referenced in the recorded content and associates the recorded content with any previously stored licence so that the licence remains on the device until the content is deleted. The device only observes the content ID present at the start and end of the recording so any recording long enough to span more than one content ID change may include content for which a licence is not retained on the device.

At the time of playback, a recording made in this manner will play straight away even if the device is not connected to the Internet, provided that the licence conditions (including any dependencies on subscriptions) are met at the time of playback.

There are circumstances in which the device does have a content licence at the time the recording is made. It is also possible for a stored licence to expire (or to be dependent on a subscription which has itself expired). In such cases, attempting to play back the recording will result in an error which is handled by invoking the IP channel's helper application. The helper application may be able to obtain a new licence to allow the recording to play.

### Marlin MS3

In one example, when Marlin MS3 is used, an MS3 SAS must be acquired at the point a recording is played back. If the 'authenticator' facility is used in the MS3 compound Uniform Resource Identifier (URI) for the channel, an SAS is also required at the time of recording. If not, the recording can be acquired using the content URL directly.

In one example, channel providers must not set the 'do not store' bit in the SAS for IP channels from which recordings are permitted. Devices are not able to successfully record content for which an SAS is required at record time and the 'do not store' bit is set.

When playing back a recording, the device uses the same mechanism for obtaining the SAS as is defined for viewing the IP channel directly with the addition that the time and date of the recording is included in the request to the MS3 server. The channel provider is required to implement an MS3 server that can return an SAS containing the content key or keys appropriate to the time the recording was made.

If the request to the MS3 server fails, the helper application is invoked. Some possible causes of failure include a lapsed subscription, server error and deliberate denial by the channel provider.

### Usage logging

The consumer device provides a usage capture and backhaul capability for IP Channels equivalent to that provided for linear broadcast channels.

*Diagnostics*

The consumer device provides a local diagnostics capability for IP Channels that is equivalent to that provided for linear broadcast channels.

If a consumer device supports Remote Diagnostics it provides a capability for IP Channels equivalent to that provided for linear broadcast channels.

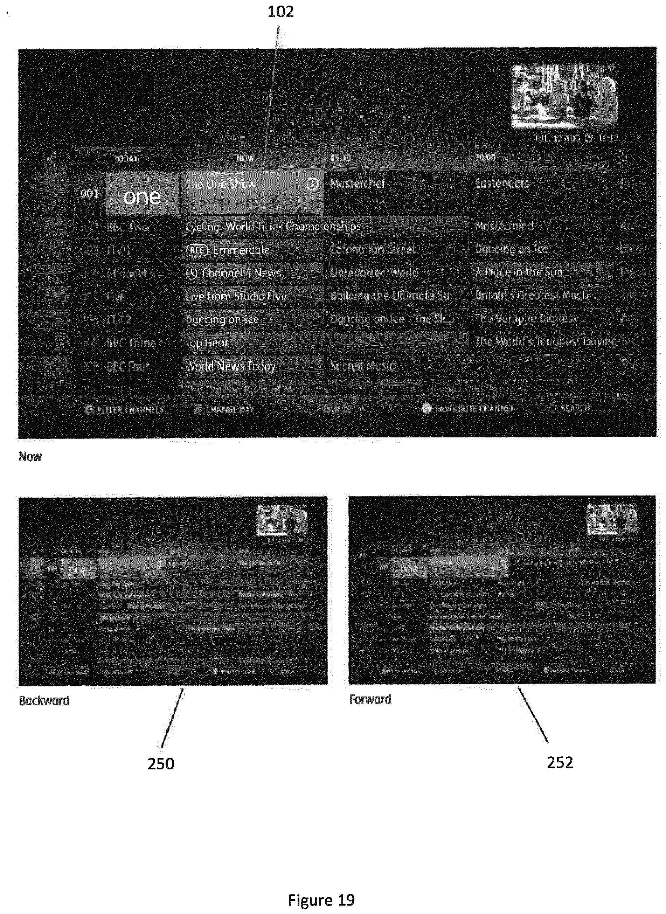

Figure 19 is an example screen shot of what the EPG would present to the user. The current time is shown by a line 102, and the programmes currently being broadcast are those that intersect this line. The user can browse backwards (bottom left) 250 and forwards (bottom right) 252 in time to browse and select programmes that are not live.

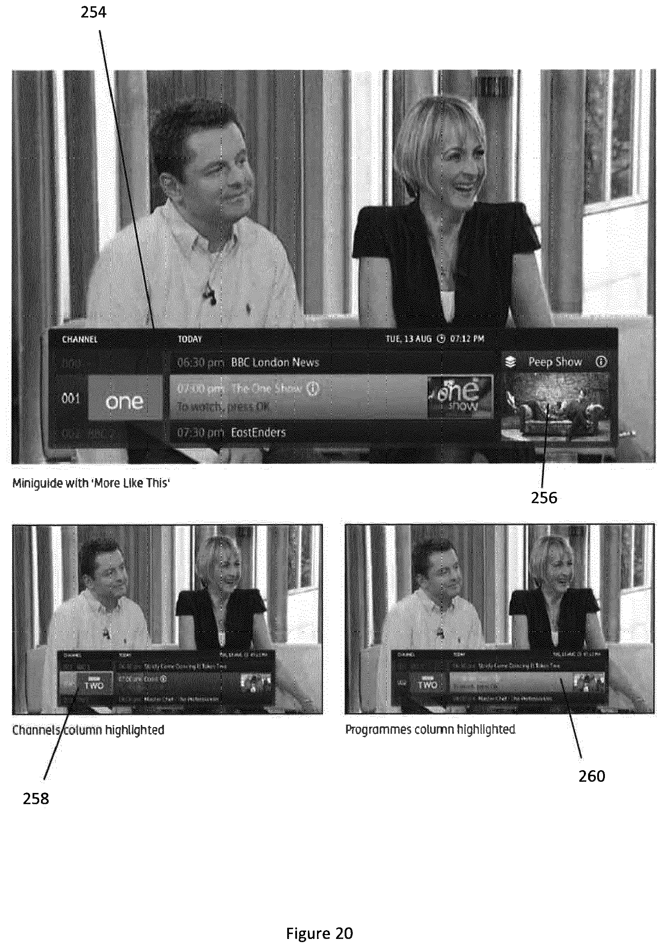

Figure 20 shows a 'Miniguide' 254. This is a smaller version of the EPG shown in Figure 19; so the user can view the EPG without disrupting their viewing experience. Included in this view, or any other, may be recommendations 256 for the user based on the currently playing or selected content. The screen shots at the bottom of this figure show how the user can browse through channels 258 and over different time periods 260.

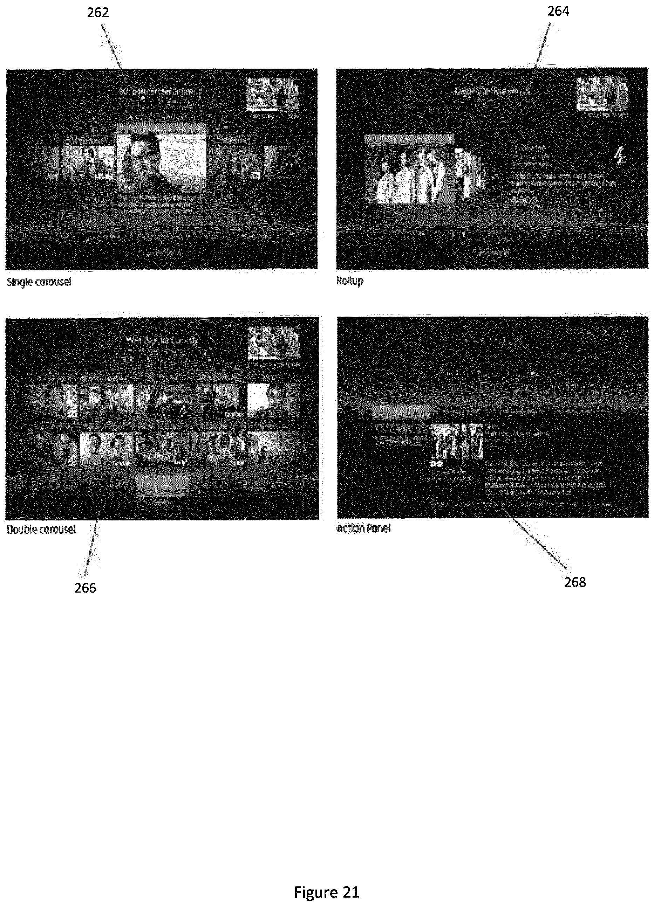

Figure 21 shows several other views the EPG may use to display information to the user. The top left view is a 'single carousel' 262; this would mainly be used for showcasing smaller amounts of content, for example, the recommendations from content providers. The bottom left view is a 'double carousel' 266; this would mainly be used to browse the depth and breadth of content in On Demand categories and sub-categories. The top right view is a 'rollup' 264; this would mainly be used to show a group of linked content, such as a television show series. The bottom right view is an 'Action panel' 268. The Action Panel 268 is primarily used to display more information to the user about the piece of content they have selected or are currently watching. In addition it is a bridge to related content across the interface, allowing the user to see programmes that are 'More Like This' (related), and 'More Episodes' of the selected piece of content.

**Further Discovery and Playback Aspects**

*Scope*

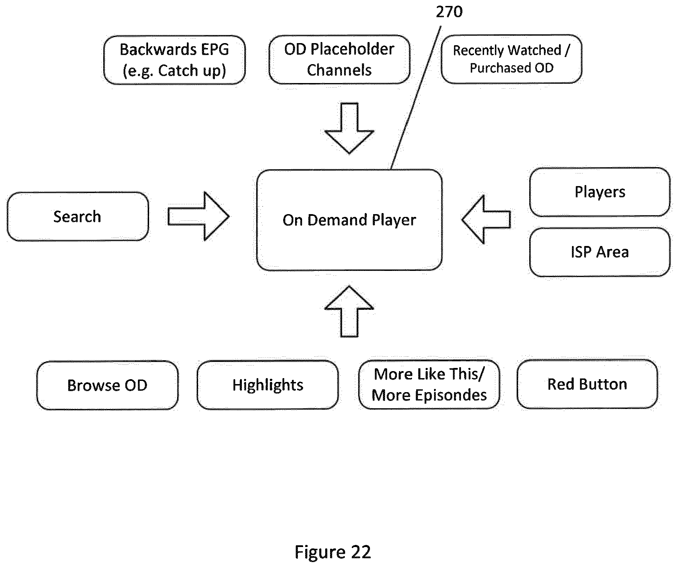

The system provides On Demand content offered from multiple Content Providers. Playback of this On Demand content requires the usage of an On Demand player 270. Figure 22 shows where On Demand content could be accessed or referenced from within the core system user interface and the touch-points for On Demand players.

In the following section, aspects of the content provider players are described. These aspects create an enhanced customer experience of playback and management of on demand content (e.g. downloads).

In certain examples, the device and system provide the following functionality:

- Universality -The system is able to support many Content Provider content providers and their player applications.

- Scalability - scale of the platform is enhanced by allowing a number of Content Providers, ISPs and manufacturers to support and facilitate the system. An open environment for content and service providers is provided, including a fair and non discriminatory policies and low barriers to entry that increases the number of content providers, ISPs and manufacturers that support and facilitate the system.

- Quality - A customer experience that is simple and competitive with other TV platforms is provided. A quality customer experience, through TV-quality standards, principles of usability, and availability of core accessibility features is also provided.

- Flexibility -A framework that is flexible enough to respond to competitive and technological developments is provided.

- Innovation - A range of content and service business models, including free and pay are enabled.

Detail of the means of how it provides this functionality is given below.

*Key Principles*

As a result, the Content Provider On Demand players provide the following:

*Principle 1 - Safety*

As the system is intended for the wide market including the family home, creating a safe environment for young and old alike is an important part of the system. Content that is inappropriate to some or involves a purchase to be made is clearly demarcated and steps are in place to protect certain viewers from these cases.

### Principle 2 - Accessibility

A focus is to provide an accessible TV experience. To ensure this is the case the system is adapted to ensuring disabled audiences are able to access content and services easily and as they want to, rather than offering one-size-fits-all solutions.

### Principle 3 - Reflect the viewer's previous experience

Most viewers will already have some form of experience that has influenced or describes how they expect content players to work. This may come from real world experiences/examples such as DVD players, similar computer related services or existing set-top boxes. Deviating too far from viewers expectations may result in a difficult and unpleasant experience.

### Principle 4 - Familiarity and Consistency

In line with viewer's previous experiences, the system should feel familiar throughout the platform. Terminology, core interface components and navigation all follow a familiar model, allowing standard usability and functionality. Consistency in the interface allows viewers to transfer their knowledge and skills from one player or application to another.

### Principle 5 - Simplicity

Viewers expect to be able to perform tasks in a streamlined way with the fundamental components needed to complete them clearly apparent and obvious. Key functions that are expected by viewers are clearly available and not hidden in sub menus or informational prompts that may be not be apparent to a viewer. Although there may be further optional details (e.g. buttons or calls to action) associated with a given task, the basic components do not have to compete with these additional details for the viewer's attention to enable the viewer to complete their task easily and without confusion or complication.

### Principle 6 - Coherent

Key functions and interactions exhibit behaviour similar and coherent to that which the viewer would expect and do not cause unexpected results, mislead or misdirect them. The viewer ideally feels in control and able to navigate to and away from desired content quickly and confidently, they are not taken down journeys or paths where they become lost and frustrated.

### Principle 7 - Feedback

Feedback is seen as more than messages and alerts that appear when something bad happens. Instead, it involves keeping viewers informed and involved in what's happening with the application. When a viewer initiates an action some form of feedback informs the viewer that the action has been received and the application is reacting appropriately.

### Principle 8 - Communication

Viewers are always presented with enough information to make an informed decision enabling them to be confident and active in exploring menus and content, without being surprised by unexpected purchase prompts or otherwise.

### Principle 9 - Differentiation

The system respects the right for content providers to create their own brand experiences.

### Principle 10 - Security and Stability

Viewers are able to use the Content Provider player without having to worry about their security and the players deliver a stable and reliable experience.

### Principle 11 - Quality

The players are of a sufficient standard/level of quality and not engage in excessive spamming or cross-selling which may negatively impact the viewer experience.

In summary, a small and core set of rules are required to protect viewers but there must be flexibility within this, providing options for content providers to differentiate their experiences. Furthermore, to ensure the right level of user experience consistency there are strong guidelines in place to complement the mandated rules.

### Key Constraints

Content Provider On Demand players are constrained by factors covering both technical and functional aspects.

The following constrain how closely the Content Provider player can reflect a viewer's preferences:

- The sharing of viewer device settings and preferences

The following constrain some options for user interface design and content display:

- The technical capabilities of devices and the resources which Content Provider players can use.

The following constrain the interaction and integration of the Content Provider player with the system platform:

- The level of functionality and data accessible via the system APIs.

### Overview of Content Provider Player Structure

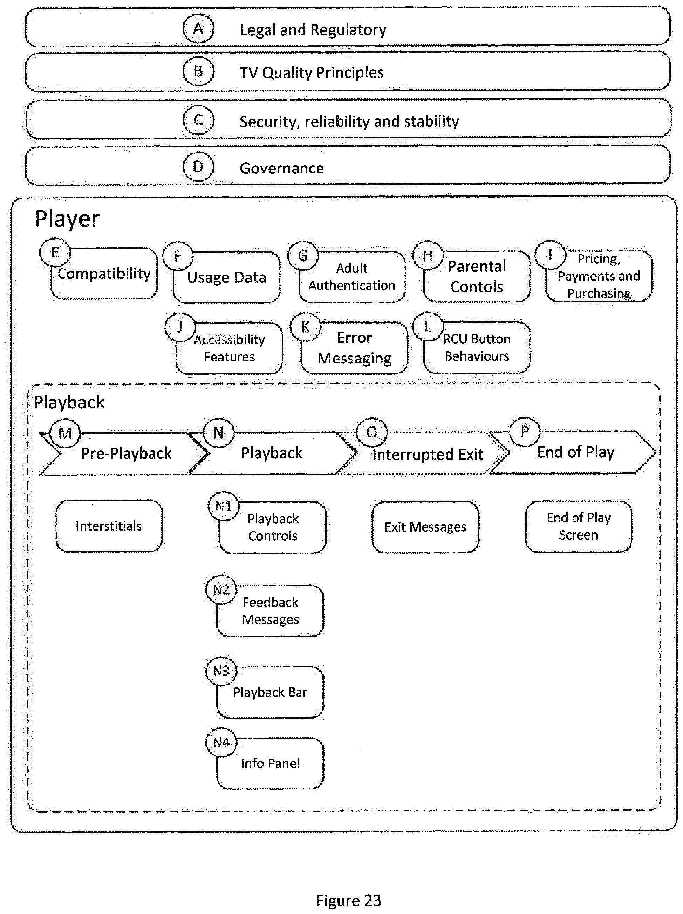

The Content Provider player experience consists of a number of distinct functionality, process and design elements as shown in Figure 23. These elements and their associated business rules are addressed individually below. Each section refers to the corresponding label on Figure 23.

### A. Legal and Regulatory

The system adheres to all regulatory and legal requirements. Content Provider players also must be aware of the regulatory bodies, comply with their rules and follow their guidelines, for example in the following areas:

- Player compliance with the Office of Communications (OFCOM) and the Association for Television On Demand (ATVOD).
- Content Provider players not containing false, fraudulent or misleading information.
- All viewer data is stored and managed securely and in agreement with Data Protection Guidelines
- Documentation required for use of protected Content Provider material (trademarks, copyrights or otherwise proprietary content).

### B. TV Quality Principles

The system ensures customer expectations of a Play Now quality experience are met for On Demand content when Play Now messaging is displayed.

> ➤ B1 - Content Providers must meet Play Now requirements in order to qualify for Play Now iconography to be displayed on their content.

Note: As per the Schedule, all long form professionally produced On Demand content presented within a player must be compliant with the TV quality principles.

### C. Security, reliability and stability

The security and reliability of the platform is essential due to the associated privacy risks and also the negative user experience should the system crash because of unstable Content Provider players.

➤ C1 - Content Providers must not jeopardise the technical integrity and security of the platform and must only use published APIs that they have permission to access.

The system maintains the privacy and the security of viewer's information at all times. Although the Content Provider player is responsible for all communications and data connections when a viewer is within that experience, the same precautions and protection of viewer data apply.

### D. Compliance & Governance

To ensure adherence with business rules and guidelines, the system governor requires all Content Provider players to be assessed and approved prior to inclusion on the platform.

➤ D1 - Content Providers must submit their players for approval and are required to be tested for technical compliance and stability on the platform.

Content Providers may choose to update their Content Provider players post this initial approval. The system governor operates a post-approval governance process to ensure continued adherence to the business rules and guidelines.

➤ D2 - Content Providers must adhere to the system Content Provider Player Update Guidelines which covers scenarios when CPs change their Players significantly. (see Appendix 1)

### E. Compatibility

The User Interface (UI) is used on all devices and any piece of On Demand content presented in the UI is played back in a Content Provider Content Provider player. In addition Content Provider Content Provider players are accessed independently via the "Players" area of main UI.

➤ E1 - On Demand Players used to play any assets presented in the UI must work on all devices.

Devices are compatible and may be used with different television sets including those which have a traditional (4:3) aspect ratio rather than the newer widescreen (16:9) aspect ratio and Content Providers should tailor their Content Provider player to enhance the experience across display devices.

### F.

### G. Adult Content

In one example, when a viewer initially sets up their box they set a PIN which will be used to protect access to certain content when parental controls are enabled, however it is important that there is an extra additional layer of security to protect children from Adult content and that the Content Providers are responsible for this authentication.

➤ G1 - The PIN must not be used as an authorisation mechanism for financial transactions or to access Adult content.

### H. Parental Controls

The system offers parental controls functionality and when enabled, any attempted access to relevant content within the system will require the presentation of parental control challenges prior to playback of the content in order to honour and satisfy these controls.

### I. Pricing, Payment and Purchasing

In one example, the system enables content providers to offer paid content (e.g. via subscriptions or on a pay per view basis) and the UI may mix free with paid content in its content discovery journeys, however actual payment transactions take place within the Content Provider player. Due to this mixture of paid content with free content within the UI it is important that upon selecting content and entering the player (or selecting content within the Content Provider player) viewers understand where payment is required for content, what this payment amount will be and furthermore, that they are required to confirm and provide their permission for all purchases and payments.

> I1 - Content Providers must ensure accurate pricing is displayed for all pay content.

> I2 - For all purchases a confirmation must be presented requiring the viewer to confirm the desire to purchase content, as a safe-guard to prevent customers from accidentally purchasing content or making unintended payments.

**J.**

### K. Error Messaging

The UI displays error messages to the viewer for connectivity issues, booking failures (PVR), acquisition failures (PVR), accessibility issues and parental guidance. There are, however, player-specific issues including: problems accessing the pay Content Provider platform, account and billing issues, Content Provider errors and geographic blocking of access to content.

> K1 - Content Providers must provide error messaging for errors related to content or player issues

> K2 - Error message styles follow the general styleguide and all error messages include a specific error code and content providers use their unique error message prefix with the error code.

- Where possible Content Providers use the system Error API with their error messages.
- If multiple error messages are surfaced by the player these are presented in order of priority, criticality and importance.
- Content Providers provide basic troubleshooting in their error messages or through Content Provider help functionality. Content Providers also provide contact details in error messages or contextual help if desired.

For the avoidance of doubt, non-player errors are handled by the Main UI.
Content Providers are provided with their unique error message prefix as part of the Onboarding process.

### L. Universal Remote Control Unit (RCU) Button Behaviour

There are a number of RCU buttons which need to have consistent and mandated behaviour/actions throughout the system and which Content Provider players will not be able to change as they have protected functions, these comprise of the Power, Main Menu, Guide, Volume Up, Volume Down and Mute remote control buttons.
In addition to these protected functions there are a number of other non-playback specific universal RCU button behaviours, particularly the Close button which viewers will expect to trigger an exit from the Content Provider player.

> L1 - The Close remote control button must always close (exit) the player except when the viewer may lose an entitlement as a result of exiting, whereby a single exit warning/confirmation message must be shown to the viewer before exiting the player but if the viewer confirms must then close (exit) the player

A viewer may launch a piece of On Demand content or the player itself from within the UI and subsequently decide that they want to return to the UI. Similarly if they are at a deep level of the player hierarchy they may want to move backwards throughout the player screens to the top level in an effort to exit from the player.

> L2 - The Back remote control button must always take the viewer back one step in the history of the player or exit from the player if there is no player history. Exceptions to this include Payment and PIN flows, where the whole flow is skipped as a single step.

Note: This rule assumes that the Back button behaves as 'Close' when it reaches the end of the history in a Content Provider player.
Within the main UI, the help information is accessed either via the help category on the main menu or by pressing the help button on the remote control. Viewers will therefore become accustomed to using this button to access help from wherever they are when using the system.

> L3 - The Help remote control button must always link to help functionality. The type of help presented when the Help button is pressed within the player is at the discretion of the Content Provider and may be the system help or Content provider help.

Since the Content Provider can choose to direct the help button to display their custom help when the viewer is within their player then this may be a different experience than the viewer would expect.

- Any Content Provider player help includes signposting and a link back to the main help e.g. "If you were not able to find an answer to your question please try the YouView general help accessed via...(link button)."

Within the main UI the viewer are able to zoom in and out of the menus by pressing the zoom button on the remote control. Viewers will therefore become accustomed to using this button to access zoom functionality from wherever they are when using the system.

➤ L4 - The Zoom button must always toggle on/off zoom functionality (if zoom functionality is available).

➤ If zoom functionality is not available then the 'not available' feedback message icon is displayed when the viewer presses the zoom button.

The info (action) panel is a key component of the experience which viewers regularly interact with. It is accessed by pressing the i (info) button on the remote control and viewers will therefore come to expect that pressing this button will bring up an action panel containing further information relating to the selected content or item.

➤ L5 - The i (info) button must toggle on/off the appearance of an action panel showing more information related to the selected content or item. If any action panel related overlays have been launched then these are also closed when the viewer toggles off the action panel.

Where technically possible, pressing the blue button brings up Search functionality within the UI and it would be beneficial if this behaviour extended to Content Provider players.

- The blue button is used to launch search functionality to search within the Content Provider player (and/or if possible the ecosystem)

The Channel Up and Channel Down buttons are used to change channels within the system however this behaviour may not be relevant to Content Provider players. Conversely, some providers may wish to provide paging functionality but are limited in this because Page Up and Page Down buttons are not part of the mandatory set of RCU buttons.

- In one example, to maintain consistency of behaviours across Content Provider players, the Channel Up and Channel Down buttons are used to act as Page Up and Page Down buttons where applicable.

Devices are offered by a range of manufacturers and ISPs on a vertical and horizontal basis. Whilst there are a set of mandatory RCU buttons which need to be included as standard for any device, there are also a number of optional/additional buttons which partners may choose to include on their remote controls to provide advanced functionality e.g. Page Up/Down.

- Some devices have remote controls with Page Up/Down and Skip buttons and the other optional RCU buttons. All Content Provider players therefore provide a response (e.g. "Not available" feedback message) to button presses of these optional remote control buttons.

### *Playback*

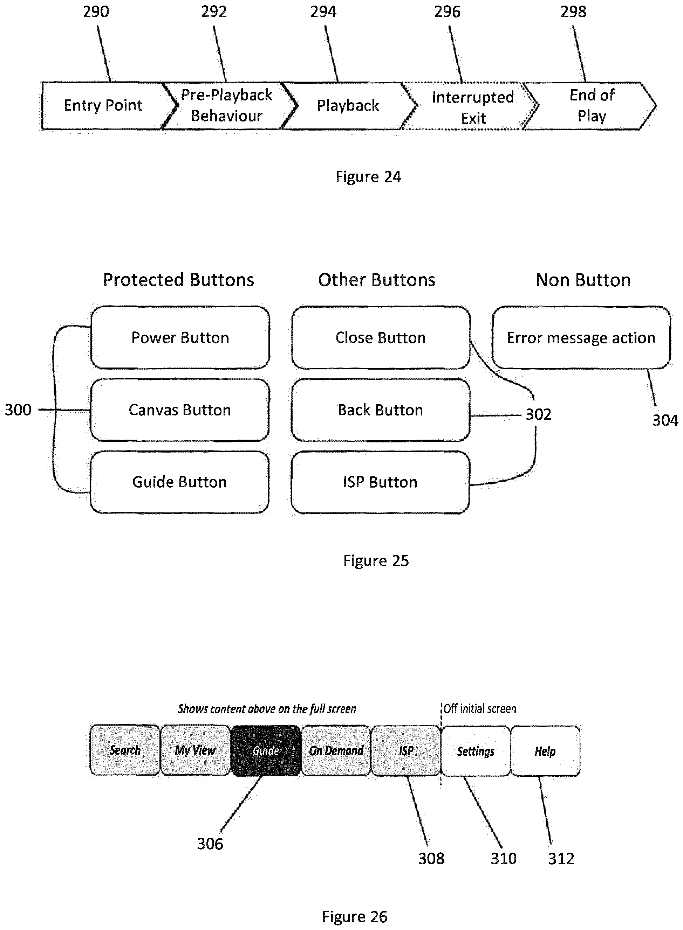

The main focus of a Content Provider player is around playback of On Demand content. Playback of On Demand content can be launched from a number of points within the UI, as illustrated in Figure 22. Playback of On Demand content can also be launched from within the Content Provider Player and follows a playback flow as illustrated in Figure 24 and parts M-P in Figure 23. This comprises of 'Entry Point' 290, 'Pre-Playback Behaviour' 292, 'Playback' 294, 'Interrupted Exit' 296 and 'End of Play' 298. 'The dotted line around 'Interrupted Exit' 296 indicates that this stage may not occur.

The following sections define the main aspects of each of the playback stages/behaviours and an overview of how these form the end to end journey.

As specified above and in Figure 22, there are a number of Entry points to On Demand players within the UI:

| Entry Point | Description |
|---|---|
| 1. Backwards EPG & Backwards Miniguide (e.g. Catch up) | The viewer navigates backwards in the Guide / Miniguide and selects an available OD piece of content. |
| 2. OD Placeholder Channels | The viewer navigates to the placeholder channel either via the Guide / Miniguide, direct channel number entry or the channel up/ down buttons, and selects a piece / list of content. |
| 3. Browse OD | The viewer selects a piece of content from an aggregated browse list within the OD area. |
| 4. Search | The viewer carries out a search and selects a piece / list of content from the search results. |
| 5. Players Area | The viewer selects a Content Provider player from the "Players" area, transitions to that player and selects a piece / list of content from within that player. |
| 6. ISP Area | The viewer selects the ISP area via the main menu or by pressing the ISP button on the remote control, and then selects a piece of content or playlist within the ISP area/player. |
| 7. More Like This / More Episodes | The viewer selects a piece of content within the More Like This or More Episodes area of the Action Panel. |
| 8. Highlights | The viewer selects a piece of content within any Highlights section. |
| 9. Recently Watched / Purchased OD | The viewer selects a piece of OD content from the list of recently watched / purchased items, this is located in the OD area, but may also be in the 'My Stuff' area |
| 10. Red Button | The viewer selects a piece of OD content via the Red Button. |

Each of the UI areas for these entry points may have different styles, or interactions and therefore the Content Providers may choose to tailor the subsequent player experience based on the entry point.

Content Provider applications are provided with information on where the player was launched from within the main UI to allow their player to be tailored accordingly.

### M. Pre-playback Behaviour

Entry behaviour concerns the stage prior to content playback, consisting of the interstitials or other elements which can be presented to the viewer following selection of content (or a player) in one of the entry points.

Whilst it is preferable for there to be a seamless and immediate journey from the selection of the piece of content to full screen playback (particularly when content is launched from the Backwards EPG) the launching of content may require additional elements to be included between selection and playback e.g. for the purposes of parental controls, to provide additional information, cross promotion (add to a playlist, bookmark related content) or user interaction (e.g. PIN entry, Payment confirmation).

In fact, each content item may have associated relevant interstitial requirements due to the nature of the asset and the context in which it is launched as Content Providers need to fulfil any obligations related to parental guidance, payments, CA or otherwise. As a principle, the system requires that there is a smooth journey as directly as possible from the viewer selecting an item to playback and the viewer watching the content.

Although the presentation of interstitial elements is allowed, whenever content is selected there must be a clearly visible route to the play experience and the viewer must never feel that they have, or are deviated/prevented from this playback path.

➢ M1 - With the exception of mandatory steps such as PIN protection or payment, when the viewer selects to play an item of content then playback starts without requiring any further action by the viewer.

➢ M2 - With any interactive interstitials (e.g. promotional screen functionality similar to a DVD menu) the viewer must be able to press the Play or OK buttons once and go straight to the playback path of the content item they have just previously selected in the Core UI. In addition it must be clear the viewer is still on the way to their selected content and that the selected content will start automatically if no action is taken.

➢ M3 - During interactive calls to action, video or other movement on screen (e.g. a countdown) must be shown to reassure the viewer that the experience has not stalled or crashed.

➢ M4 - For any interactive call to action, the viewer must be able to exit and back out of the call to action or interactive experience and be returned to theplaybackpath.

### *Playback Behaviour*

Playback is concerned both with the content playback experience and also the wider user experience of the Content Provider player.
In one example, the playback experience is made up of 4 components:

- Playback Controls
- Feedback Messaging
- Playback Bar
- Action Panel

### *M.1 Playback Controls (RCU Buttons)*

Since playback controls are used for and apply to playback of PVR recordings then viewers will become familiar with and expect specific actions/behaviours in relation to the playback control buttons. Similar interactions as the system playback controls therefore need to apply for Content Provider players.

➢ N1.1 - The Content Provider player must adhere to the system playback control guidelines (see Appendix 1 for full guidelines)

An overview of one example of the system's playback control guidelines can be seen in the table below. The full playback control guidelines can be found in Appendix 1 section A.1.

| | **Content Playing** | **Content Paused** | **Content FFwding** | **Content Rwding** |
|---|---|---|---|---|
| **Play** | None (Continue Playback) | Resume content playback | Resume content playback | Resume content playback |
| **Pause** | Pause content playback | Resume content playback | Pause | Pause |
| **Stop** | Pause content playback and display exit confirmation message ("Press Stop again to exit or press Play to resume playback") If the viewer confirms then exit from the player back to the entry point. | Continue to pause content playback and display exit confirmation message ("Press Stop again to exit or press Play to resume playback") If the viewer confirms then exit from the player back to the entry point. | Resume content playback | Resume content playback |
| **Fast Forward** | Fast forward content | Fast forward content | Step through (Increase) content fast forward speeds. Once at maximum fast forward speed then continue to fast forward at maximum speed. | Fast forward content |

(continued)

|  | Content Playing | Content Paused | Content FFwding | Content Rwding |
|---|---|---|---|---|
| **Rewind** | Rewind content | Rewind content | Rewind content | Step through (Increase) content rewind speeds. Once at maximum rewinding speed then continue to rewind at maximum speed. |
| **Skip** | Skip (to next/previous item in a playlist or a specified amount of time) and resume content playback | Skip (to next/previous item in a playlist or a specified amount of time) and resume content playback | Skip (to next/previous item in a playlist or a specified amount of time) and resume content playback | Skip (to next/previous item in a playlist or a specified amount of time) and resume content playback |

■ The system enables resume functionality and CPs are strongly encouraged to support and implement it also. However, since all players may not provide resume functionality it is important that when pressing the Stop button during playback the viewer is required to confirm that they want to exit from the content as they may lose their position within it.

Whilst the Record button is one of the standard playback controls, it is not commonly used with On Demand content. However, as the integration of linear and On Demand content progresses viewers may begin to expect integrated behaviour and functionality.

■ The Record button allows the viewer to save the on demand content in their recordings or to set a recording for the related linear programme or series.

There are some additional non-standard playback controls which are included in the system for accessibility purposes, to allow viewers to turn the accessibility features of the content on and off as required.

➢ N1.2 - If Subtitles are available for the content, the Subtitles button must always toggle subtitles on and off for the content

➢ N1.3 - If Audio Description is available for the content then the Audio Description button must always either:

　◦ Toggle audio description on and off for the content OR
　◦ Direct the viewer to and from the audio described version of any content

■ If Subtitles or Audio Description are not available for the content then a message explaining that they are not available is provided to the viewer when they press the relevant buttons.

### M.2 Feedback Messaging

Within the system, remote control actions and playback behaviours are displayed as feedback messages (icons). This is to ensure the viewer is provided with confirmation of the interaction and that they understand the playback state/current action of the content.

➢ N2.1 - In one example, feedback messages/icons must be displayed for the following scenarios:

　◦ Play
　◦ Pause
　◦ Rewind
　◦ Fast forward
　◦ Skip
　◦ Stop
　◦ Loading (Initial and mid-stream content loading)

➢ N2.2 - Feedback messages/icons must appear immediately when a viewer presses a relevant button on the remote control, must be presented in the position stated in the Style Guidelines and as the top layer over any other onscreen content in order to provide the viewer with visible positive confirmation of their action.

➢ N2.3 - A "Not Available" feedback message/icon must be displayed when the viewer presses a Fast Forward or Skip button and advert forwarding/skipping is being prevented, in order to ensure the viewer knows the signal has been sent from the remote but that the function is currently unavailable.

▪ To maintain consistency with the UI, Content Provider players use the same feedback messages (and the associated iconography) as the system reference, that all feedback messages fade out or disappear after being on screen for 2 seconds to maintain a full screen experience and that the playback bar appears in tandem with the feedback messages.

▪ For button presses which do not have an associated action a "Not Available" feedback message is displayed so the viewer knows the button press has been registered. A further message to explain the reason could be displayed (e.g. "Digital text is not available during playback" for the Text button).

### M.3 Playback Bar

The playback bar provides the viewer with the key playback information relating to the content being watched.

### Elements

➢ N3.1 - In one example, all playback bars must contain the following elements:

◦ A progress bar with clear visual differentiation between:

▪ The amount of content which has elapsed
▪ The amount of content which is remaining

◦ A playhead or clear visual representation which shows at which point along the progress bar timeline the viewer is currently
◦ One of the following combinations of time fields:

▪ Total Duration and Elapsed Time
▪ Total Duration and Remaining Time
▪ Elapsed Time and Remaining Time
▪ Total Duration, Elapsed Time and Remaining Time

For the avoidance of doubt, the progress bar and time fields can relate to only the main asset being played (e.g. not include the time for advertisements) or to all of the assets in the playlist (including advertisements).

◦ If the content contains adverts or non skippable items then the progress bar indicates with clear visual representation where these will be displayed.

### Positioning

➢ N3.2 - In one example, the playback bar must always be positioned in a horizontal orientation in the bottom third of the screen.

➢ N3.3 - In one example, the viewer must always be able to see the majority of the underlying content when the playback bar and feedback messages are on screen.

▪ The playback bar is centred justified and positioned as much as possible to avoid obscuring subtitles, although it is recognised that completely avoiding obstruction may be impossible.

*Appearance*

➢ N3.4 - If skip buttons/skip functionality is being used to skip an amount of time within an asset then the playback bar must appear immediately when the viewer presses a Skip button or is using the skip functionality.

◦ To maintain consistency with the main UI, in one example the playback bar always appears when the viewer presses the Play, Pause, Fast Forward or Rewind button and remain on screen whilst the viewer is Fast Forwarding or Rewinding.
◦ In one example, the playback bar fades out 4 seconds after playback of content resumes or content is paused in order to maintain the full screen experience. When playing trailers, informational or other short form content, this does not apply.
◦ If skip buttons/functionality is being used to skip between assets in a playlist there is an immediate visual indication that a new asset has begun playing and the playback bar appears immediately when the viewer presses the Skip button or is using the skip functionality.

*M.4 Action Panel*

Central to the viewing experience is the use of an action (info) panel which is used to provide additional information regarding the selected content in addition to further onward journeys. The action panel can be called from any content within the main user interface e.g. Search, EPG etc. via pressing the i (info) button, it is therefore a core part of the platform, acting as a hub which can direct and enhance access to content and players.

As this is so prominent and ubiquitous throughout the UI then viewers will come to expect certain standard features and interactions to apply to all action panels and a level of standardisation and consistency is required so viewers are not deterred from using the i (info) button and accessing action panels.

*Interaction*

➢ N4.1 - Interstitials must not be displayed prior to the action panel appearing nor upon closure of the action panel.

◦ For consistency with the UI experience, the play and pause buttons continue to control the underlying content when the action panel is on screen.

*Elements*

➢ N4.2 - One example of the information concerning the current playback content that must be shown within the action panel is:

◦ Title
◦ Duration (Time)
◦ Synopsis

➢ N4.3 - For rated content, Guidance ratings/text and BBFC rating must be shown as part of the action panel information.

➢ N4.4 - If the content is HD, Audio Described or includes Subtitles or Sign Language then these content attributes or related iconography (e.g. S in a circle for Subtitles) must be shown as part of the action panel information.

◦ If the content availability is limited (e.g. Content expired) then the availability window (expiry date or rental length) is also displayed within the action panel information.
◦ If the action panel contains additional content links which have associated positive incremental cost then this incremental cost for the browsed content is displayed.

*Positioning*

> N4.5 - During playback the viewer must still be able to see the playback content when the action panel is onscreen. In one example, the action panel must therefore either:

    ◦ Take up no more than 60% of the screen area
    OR
    ◦ Take up the full screen and contain a mini playback window (of a similar size to the mini playback window in the Guide area within the main UI).

*N. Interrupted Exit (inc. Exit Messages)*

An interrupted exit will occur either because the viewer has decided to change their focus on the content by pressing a remote control button or because an error message has been presented and acted upon.

These interrupted exit scenarios are shown in Figure 25. Interrupted exits may be caused by 'Protected Buttons' 300 which force an action on the Content Provider player, by 'Other Buttons' 302 which have associated player exit functionality or by 'Error message actions' 304 whereby the viewer chooses to execute an action included in an error message which takes the viewer into the main UI and may exit from the player.

Note: When a viewer exits the player via pressing the Power button then when they subsequently turn the device back on they are taken to the last linear channel watched not back into the Content Provider Player.

A viewer may accidentally exit from a player via one of the interrupted exits (or otherwise) which could cause the viewer to lose access to their content (e.g. single play paid content).

> O1 - A warning message must be shown to viewers before exiting the player if the viewer will lose an entitlement (e.g. access to purchased content) as a result.
> Note: If this is not the case then the Content Provider may choose to display a single message to warn the customer that they are exiting the player and require the viewer to confirm that they want to exit, however this is not required.

It is important that a viewer is always able to close a Content Provider player and that when the Content Provider player receives an exit command (e.g. RCU button press) it does so with minimal delay, as otherwise the viewer may assume that the device is not sufficiently responsive.

> O2 - To ensure a smooth user experience for exiting from Content Provider players then the player must close within a maximum of 3 seconds after it has received the closing command (e.g. if no warning/confirmation message is displayed or the viewer confirms that they want to exit).

If the player has not closed after 3 seconds, the system may shut down the application to cover the possibility of the Content Provider player hanging or otherwise not closing properly

For the avoidance of doubt, if the viewer confirms via the warning/confirmation message that they do not want to exit then the player does not close for that instance.

With linear TV or recorded content, when a viewer presses the Guide or Main Menu button, the content being played back is minimised into a 'mini TV window/Picture in Picture' to ensure that the viewer's content viewing is not interrupted when investigating other content discovery journeys.

Similarly, within the main menu, if a viewer is watching linear TV and a TV advertisement is being played then when the viewer presses the Guide or 'Main Menu' button this playback continues uninterrupted within the TV window.

> O3 - When a viewer selects to bring up the main menu or Guide then playback of the content item/advertisement must continue and a Content Provider cannot interrupt (e.g. pause) or adjust (e.g. insert additional advertisements) this playback experience in any way as a consequence.

*O. End of Play*

End of play is the state which occurs once the viewer gets to the end of a piece of content (or the subsequent end of the post-content ads, idents and stings).

At the end of play it is important that the system enables onward journeys for content in order to assist the viewer to continue their viewing session and avoid a disjointed user experience.

Content Provider players may present an end of play screen to viewers at the end of playback for On Demand content in order to enable onward journeys and a smooth transition from end of playback of content either back into the main UI, onto the Content Provider player homepage or on to further content playback.

➤ P1 - When playback of an asset or playlist comes to an end either:

◦ An End of Play screen must be displayed and this must not be a black, blank or completely inactive screen and, in one example must take the form of one of the following

- A full-screen overlay
- A partial screen overlay
- Display of the Action panel

Or
◦ The viewer must be taken back to the point where the content was launched from within the Player or main UI.

For the avoidance of doubt, Content providers may choose the background image (e.g. first frame, last frame, programme image etc.) which remains in the player window during this End of Play screen display. Content providers may develop any number of customised End of Play displays for their content (e.g. to show sponsorship brand or sponsorship graphics). Partial-screen overlays may be displayed as 'credit push' or 'credit squeeze' during end credits or outtakes of a show or film, or similar. Content providers may include additional functions e.g. ratings.

➤ P2 - An End of Play screen must include at minimum:

◦ Options to:

- "Return to where the content was launched from" (or similar)
- Play again

- In one example, the End of Play screen also includes:

◦ Title of the content which was just watched
◦ If applicable, Series and Episode numbers of the content which was just watched
◦ Details on the Expiry window/Rental length/Remaining time
◦ Options to:

- Watch next episode
- Select onward journey to more CP content (e.g. More Like This)

◦ To smooth the user experience particularly for any viewers who are confused by the end of play options, 5 minutes after end of play the viewer is automatically returned to the point where the content was launched from within the Player or Main UI.

➤ P3 - The "Return to where the content was launched from" option must be the first and selected by default call to action within an End of Play screen.

◦ For the avoidance of doubt, if the viewer has launched the content from a Content Provider Player page (e.g. homepage, a category page or most popular page) then they are taken back to that page when choosing the "Return to where the content was launched from" option.

➤ P4 - Only End of Play visuals is shown at End of Play (the complete end of asset playback plus any post-roll ads, channel idents or stings). With the exception of a playlist which the viewer chose or selected to play, other content must not be auto-played at or after End of Play and similarly there must not be any auto-entry to other interactive content at or after End of Play.

### P. Overview of Related Product Features

The table below defines examples of Product Features (PFs) that underpin the implementation of Content Provider On Demand players:

| PF# | Feature Description |
|---|---|
| PF042 | If a viewer exits a piece of recorded / streamed / downloaded content, they are able to return to it at a later time and resume viewing from their last position. |
| PF057 | The platform excludes adult content from search results. |
| PF058 | Retrieve the pricing for a given item when a user 'hovers' over it for 2 seconds, and display the price to the user. As this pricing is retrieved from the Content Provider, it accurately reflects the active subscription. (Requires the viewer to visit the CP player once before pricing becomes active) |
| PF062 | Displays Freeview+ Green Button prompts from broadcasters, to enable booking of DVR recordings directly from trailers. |
| PF091 | The viewer is able to pause, play, and skip through On Demand content. |
| PF092 | Support Adaptive Bitrate to allow changing down to lower bitrates when content playback is going to be interrupted by bandwidth by reduced |
| PF093 | Supports distribution of On-Demand audio content, e.g. Radio - audio content can be enhanced with flash content by CPs |
| PF094 | Content Providers can prevent playback control usage during playback, should they choose to, in order to prevent ad-skipping |
| PF095 | Supports "Play Later" content, where sufficient content is downloaded prior to playback to support delivery in Over The Top environments |
| PF096 | Play content with minimal buffering before starting, where the device/Content Provider have determined that the content is being delivered |
| PF098 | When a user is watching content and an error is encountered, the device identifies the cause of the error and display an appropriate error message to the user |
| PF119 | The device must always surface system alerts over any other item being displayed on screen, including both the UI and Content Provider applications (e.g. VOD players). |
| PF127 | Viewer attributes and preferences, and some device configuration settings are stored in a local repository. This captures information in accordance with relevant data protection guidelines and be implemented in a way that supports tiered levels of access. |
| PF134 | Users with a Standard definition TV is allowed to choose when viewing content how they would like to format the picture |
| PF137 | Supports the use of parental controls on the platform to prevent minors accessing content that is not suitable for them. |
| PF144 | The device surfaces standard error codes in response to identified problems; |
| PF157 | It is possible to enter text into fields on screen using multi-tap on the remote control |
| PF168 | The system supports standard accessibility services for On Demand content and make them easily available for users that require them |
| PF173 | Using the Zoom button on the remote control, users are able to Zoom portions of the interface to make navigation easier |
| PF174 | The device supports different colour schemes and background opacities to improve accessibility |
| PF182 | Each device has a unique identifier to identify usage patterns and data. |
| PF185 | Applications can be granted various levels of access to the system, based on their type. |
| PF194 | Collects usage data for On-Demand content with per-box control over collection and submission |
| PF201 | Allows Content Providers to develop and operate applications that use a range of monetisation models (e.g. payments charged to an existing account, eWallets, credit cards, existing billing relationships), within design guidelines to help consistency of experience across applications on the platform. |

(continued)

| PF# | Feature Description |
|---|---|
| PF230 | Content Providers can own the playback experience from a stand-alone player, i.e. A separate Flash Player |
| PF312 | Content Provider players support an API to provide usage data for content being watched on their players back to device. |
| PF313 | Applications have the ability through an API to claim the use of remote keys and request changes to their key set. |
| PF314 | Applications have the ability to listen for changes to the main UI settings |

### Details relating to the Structure and Ordering of Content across the User Interface Clear and Logical

- The UI provides a simple and easy to use interface for searching, browsing and finding content.

- The UI facilitates users to get to content that interests them quickly, in order to reduce frustration / boredom.

- Users get what they expect to see and where they expect to find it - this may mean content is duplicated over different views / genre categories.

### Exciting and Fresh

The system provides users a surprising interface where they are not only shown the same popular items every time they browse. Different views provide different content wherever possible.

### Quick and Simple

- Content presentation is structured so that there is minimal impact on device responsiveness e.g. content is not duplicated too often across the platform.
- Wherever possible, presentation and ordering of content minimises the number of key presses required by a user to find valuable content.
- Users are not shown content that would necessitate migrating their ISP in order to watch that content - this is to reduce dead-end browse journeys for users. If ISPs wish to offer services to people that do not have their broadband services, then this can be shown to all customers.
- The user interface uses the best in class Accessibility methods ongoing.

### Appropriate

- In one example, content display of Adult content must reflect Adult security settings set by the user.

### The Main Menu

The Main Menu is accessed when the user presses the Main Menu button on the remote control.

### Description of Main Menu Items

One possible order of items in the main menu is shown in Figure 26. The items in grey (Settings 310 and Help 312) are initially off-screen. The initial landing point is 'Guide' 306 as indicated by being highlighted.

In one example, the UI design means that only five items are visible on screen initially, but this seven item menu carousels around a fixed focus in the centre of the screen, so all items will be surfaced rapidly. The landing point of the Main Menu is 'Guide' 306 for launch, to get users straight to linear content if they wish. The order of main menu items is fully configurable by the Platform.

There is an ISP item 308 on the initial main menu screen if the device is connected to an affiliated Internet Service Provider. If the device is not connected to an affiliate ISP then the ISP item 308 on the Main Menu shall not be available, and 'Settings' 310 (for example) will instead be visible on the initial screen.

This horizontal menu on the lower third of the screen overlays underlying content e.g. linear, OD. There is also a transparent header on the screen, in which branding and the time is displayed.

- Search: This provides customers with a universal search function, so that they can access content from across the entire platform from one place. This area is discussed below.
- My View: This section is predominantly storage and management of content that is stored locally on the device e.g. Recordings.
- Guide (landing point): In one example, this area allows the customer to see at least 7 days of future linear content by Channel, and 7 days of Catch-up by Channel in an EPG grid format. This area does not include Catch-Up older than 7 days, or future content >7 days in the future.
- On Demand: This area contains the OD Player list and also OD content (including "Catch-Up" content) across all OD providers that meet the system's TV Quality requirements and provide aggregated metadata. This OD content is only streamed to the device. OD providers are subject to Governance Rules as outlined in [SHA], and OD portals / OD players abide by the OD Player Style Reference Guide and OD Player Business Rules.
- ISP: This area provides information on the internet services provided by the customer's own ISP, if that ISP is affiliated to the system - non-affiliated ISPs do not have an ISP item on the Main Menu. In one example, the logo displayed is the ISP parent brand (e.g. BT) not the content brand (e.g. BT Vision).
- Settings: This area displays actionable and "for customer information" settings that are owned by the system governor and the device manufacturer.
- Help: This area contains some help videos and local diagnostics. Help videos are streamed to the device.

### Ordering of Content in My View

My View contains recordings, scheduled recordings/ reminders and recently played items.

### Recordings

Recordings with the same title (as listed in the EPG as the primary title) or broadcast Content Reference Identifier (CRID) (if no enhanced metadata is available) are rolled up within a stack. In one example, these stacks do not include content from more than one channel.

In one example, individual and stacked recordings are ordered by the exact time stamp of acquisition (of the most recent item in the roll-up in the case of stacked items) in reverse chronological order. This ordering is actioned by the device. Newest recordings (and any recordings that are currently being acquired) are shown at the top of the list.

This area displays customer-initiated recordings in a carousel, so if the user moves upwards from the most recent recordings they can easily access older content to watch or delete as required.

### Scheduled Recordings and Reminders

Scheduled recordings and reminders with the same title on the same channel (e.g. series recordings or multiple reminders) are rolled up within a stack.

Individual and series recordings and reminders are ordered by the exact time stamp of the future booking (of the most imminent future booking in the roll-up in the case of series recordings / reminders) in chronological order. This ordering is actioned by the device. The next recordings / reminders are shown at the top of the list, and this list carousels.

### Recently Played

"Recently Played" is, for example, the last 20 OD content items (either individual or roll-ups) that the user selected within the core UI and/or 3rd party players.

The customer can then play back the OD content items from the beginning. It is recommended that CPs also offer customers the ability to be able to play the content from the point of last playback or from any prescribed position (e.g. 10 mins in). The Recently Played list persists, even if the device is put on standby or switched off. Items are able to be deleted from this list by the user. Adult content is excluded from this list. Recently played assets are listed in reverse chronological order by time of last playback.

When recently played assets have expired in the Recently Played area, they are shown but will not be playable.

The Action Panel for these expired assets are shown to the user if available, so that users can access 'More Like This' (MLT) and 'More Episodes' (ME) recommendations.

### Ordering of Channels in the Guide Section

This area allows the customer to see at least 7 days of future linear content by Channel, and 7 days of Catch-up by Channel in an EPG grid format. This area does not include Catch-Up older than 7 days, or future content >7 days in the future. The EPG channels are listed in the Digital television Multiplexing Operators Limited (DMOL) order for Freeview or Freesat devices.

### Areas in the On Demand Section

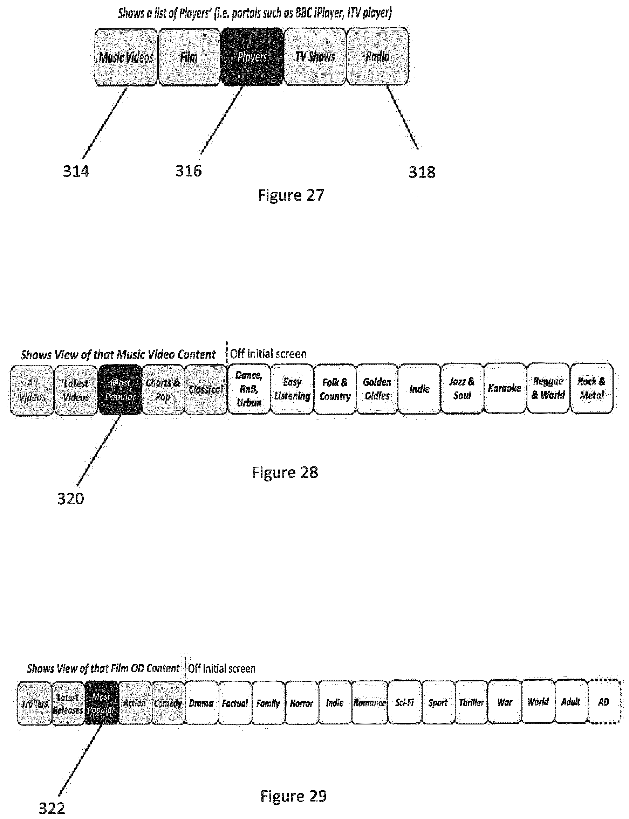

In one example, the On Demand area is as shown in Figure 27, with "Players" 316 as the landing point. The ordering of items in the OD menu is fully configurable by the platform.

### Music Videos

Hovering on this item displays to the user a number of highlighted Radio OD content selected from all of the Music Video OD content across the platform. This is a valuable view of the most important content that CPs want to promote to their customers - beyond being "Most Popular", in a preferred example, this is content that has not yet gained popularity / warrants promotion.

Highlights are listed in a randomised order, to ensure that this area abides by Fair, Reasonable and Non-Discriminatory (FRND) guidelines.

In one example, when the user clicks on "Music Videos" 314 (Figure 27) the order of items in the Music Video OD menu is as follows with "Most Popular" 320 as the landing point as shown in Figure 28.

The views and genres in Figure 28 are described in detail below:

- All Videos: Unlike Film genre categories, Music Video categories may not be as familiar to users. As such, an "All Videos" menu item is included in this section. By default, this section is ordered by A to Z - the field(s) used for this alphabetical ordering may be by Artist Name or by song title.
- Latest Videos: This view shows the 50 Latest Music Videos ordered by Latest by default and on hover the user sees a selection of the very latest content i.e. based on original UK release date. It is valuable to have a "Latest" category for this content type, because generally Music Videos are not associated with a linear schedule, so fresh new videos cannot surface in this way. The user can toggle to show the content viewed by A to Z or by Popularity. This list carousels.
- Most Popular (landing point): This view shows, for example, the 50 Most Popular Music Videos ordered by Popularity by default and on hover the user sees a selection of the most popular content. The user can toggle to show the content viewed by A to Z or by Latest. This list carousels.

Beyond these views of content, there is also Music Video OD Genre Categories. All genre categories order content by Popularity by default. The user can toggle to show the content in sub-categories by A to Z or by Latest. All lists of content carousel, and because of the large volume of content in each category the double carousel is used within each genre category.

### Film

Hovering on this item displays to the user a number of highlighted Film OD content selected from all Film OD content across the platform (including films that were originally broadcast). This is a view of the most important content that CPs want to promote to users.

Highlights are listed in a randomised order, to ensure that this area abides by FRND guidelines.

In one example, when the user clicks on "Film" the order of items in the Film OD menu is as shown in Figure 29, with "Most Popular" 322 as the landing point:

The views and genres are described in detail below:

- Latest Releases: This view shows, for example, the 50 Latest films ordered by Latest (i.e. most recently created) by default. The user can toggle to show the content viewed by A to Z or by Popularity. This list carousels.
- Most Popular (landing point): This view shows, for example, the 50 Most Popular films ordered by Popularity by default and on hover the user sees a selection of the most popular content. The user can toggle to show the content viewed by A to Z or by Latest. This list carousels.

## Genres

Beyond these views of content, in one example, there is also Film OD Genre Categories. All genre categories order content by Popularity by default, and the user can toggle the view to A to Z or Latest. All lists of content carousel, and because of the large volume of content in each category the double carousel shall be used. The Audio Description area is only visible if this is requested in Settings or if the user presses the "AD" or "ST" RCU button (NB: it makes the sections visible, but cannot then be "toggled off" with another button press - the user may have to go to Settings to hide these sections again).

## Players (i.e. portals)

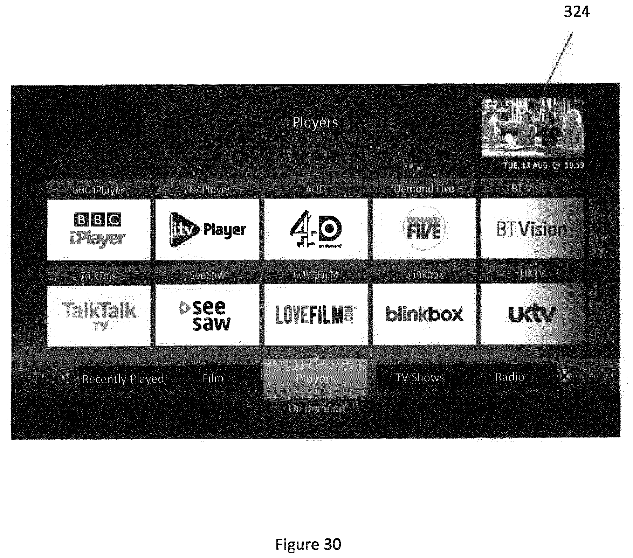

This area displays Players (i.e. portals) in the order described in the UI schedule for EPG Business Rules of the Shareholders' Agreement.
The number of portals that one CP can have and the ordering of these portals are also outlined in the Shareholder Agreement documentation.
An indicative representation of Players is shown in Figure 30. Note that the current content that is being viewed is in a small box 324 in the corner.
In one example, when the user presses the RCU "Arrow Up" button from being on the Players item, the cursor moves to the first Portal in the list. The cursor also moves to the first Portal in the list when the user presses the RCU "OK" button when on the Players item,

## TV

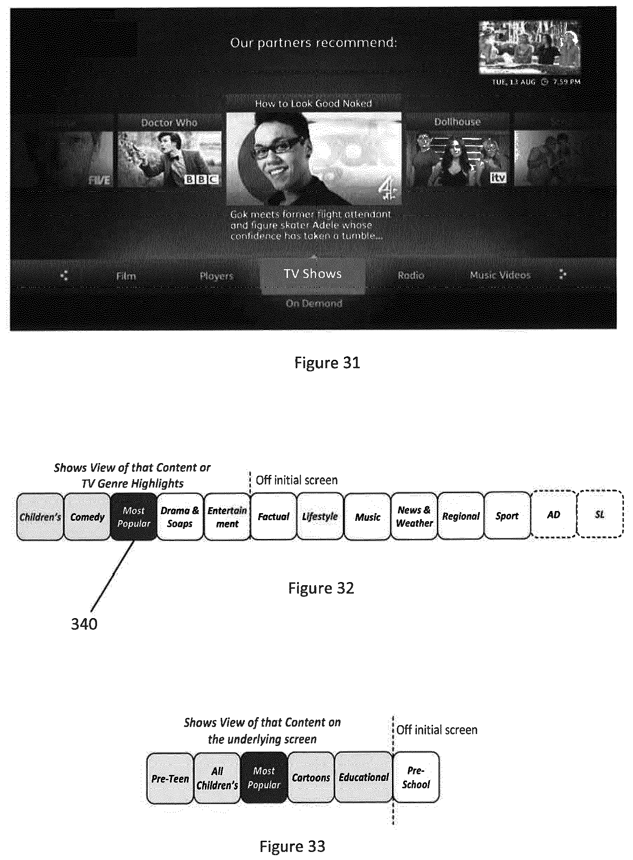

Hovering on this item displays to the user a number of highlighted TV OD content selected from all of the TV OD content across the platform. This is a view of the most important content that CPs want to promote to users. Business rules do not mandate that this content has to be different from Most Popular - this remains the editorial choice of the content provider.
Highlights are listed in a randomised order, to ensure that this area abides by FRND guidelines.
An indicative representation of Highlights is shown in Figure 31.
In one example, when the user clicks on "TV" the order of items in the TV OD menu is as shown in Figure 32, with "Most Popular" 340 as the landing point:

The views and genres are described in detail below.

- Most Popular (landing point): This view shows, for example, the 50 Most Popular programmes ordered by Popularity by default and on hover the user sees a selection of the most popular content. The user can toggle to show the content viewed by A to Z or by Latest. This list carousels. Most popular may just be an ordering reference rather than a menu item in itself.

## Genres

Beyond these views of content, there is also TV OD Genre Categories as described below. In one example, all genre categories order content by Popularity by default (except the "All" category e.g. "All Comedy", which is A to Z by default). The user can toggle to show the content in sub-categories by A to Z or by Latest. All lists of content carousel, and because of the large volume of content in each category the double carousel may be used. The ordering of sub-categories is largely alphabetical, but varies by exception to give sub-categories that are likely to be most popular with the entire audience more prominence. The Audio Description and Sign Language areas are only visible if this is requested in Settings as indicated by the dotted lines.
Examples of the breakdowns of the categories shown in Figure 32 are shown in Figures 33-42 as described below.

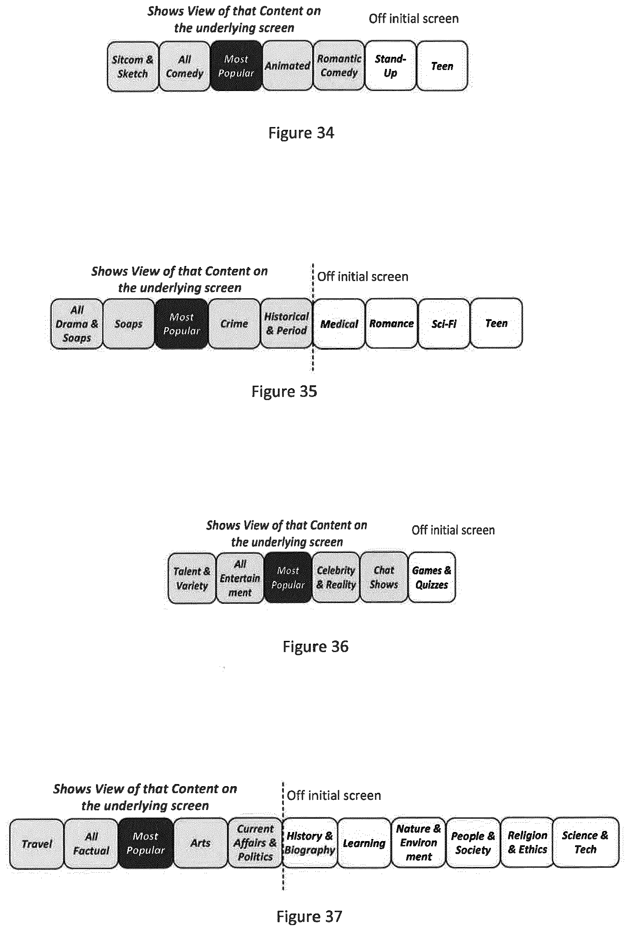

- Children's: This category breaks down into the categories shown in Figure 33.
- Comedy: This category breaks down into the categories shown in Figure 34.
- Drama & Soaps: This category breaks down into the categories shown in Figure 35.
- Entertainment: This category breaks down into the categories shown in Figure 36.

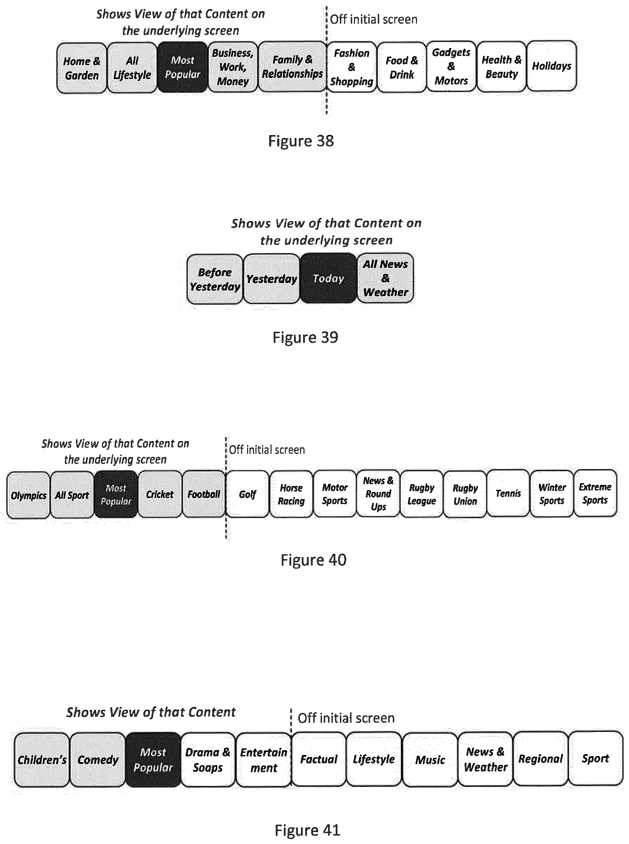

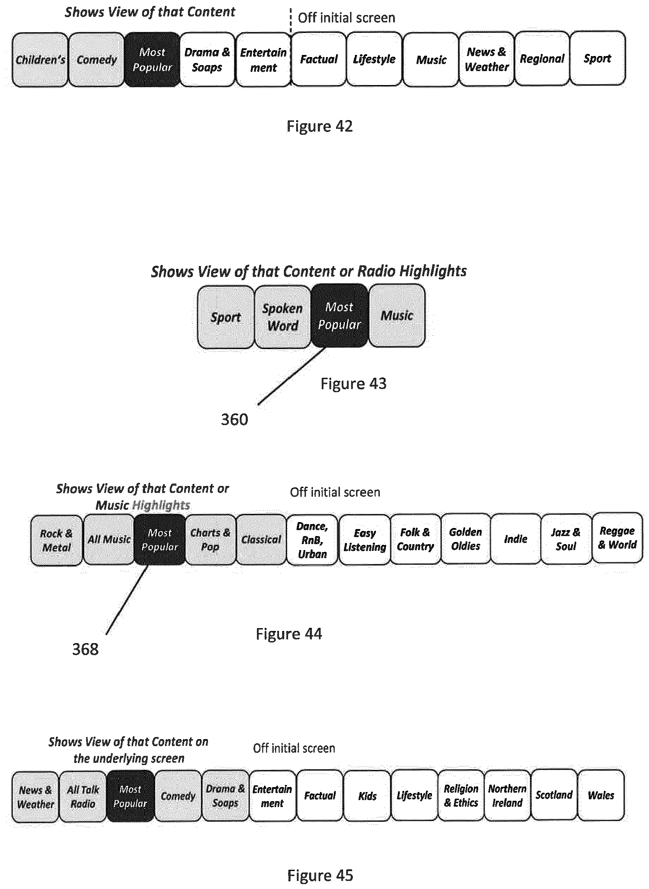

- Factual: This category breaks down into the categories shown in Figure 37.
- Lifestyle: This category breaks down into the categories as shown in Figure 38.
- Music: This category does not break down further currently - NB: these are TV programmes concerning music, not music videos.
- News & Weather: This category breaks down into time-based sub-categories as shown in Figure 39, and is listed in reverse chronological order.
- Regional: This category does not break down further NB: radio does break down into Northern Ireland, Scotland and Wales, but there is not sufficient OD TV content to justify doing this.
- Sport: This category breaks down into the categories shown in Figure 40, but may well require changing categories (e.g. different seasons have different sports, and the categories accommodate this).
- Audio Description: This category breaks down into the categories shown in Figure 41, which essentially replicate the categories as sub-categories here (there is no need to have another level of categorisation here, as the relevant volume of AD content does not warrant this).
- Signed: This category breaks down into the categories shown in Figure 42, which essentially replicate the categories as sub-categories here (there is no need to have another level of categorisation here, as the relevant volume of BSL content does not warrant this).

### *Radio*

Hovering on this item displays to the user a number of highlighted Radio OD content selected from all of the Radio OD content across the platform. This section could also include Digital Audio Broadcasting (DAB) services. This is a valuable view of the most important content that CPs want to promote to their customers - beyond being "Most Popular", it is ideally content that has not yet gained popularity / warrants promotion.

Highlights are listed in a randomised order, to ensure that this area abides by FRND guidelines.

In one example, when the user clicks on "Radio" 318 (Figure 27) the order of items in the Radio OD menu is as shown in Figure 43, with "Most Popular" 360 as the landing point.

The views and genres are described in detail below:

- Most Popular 360 (landing point): This view shows, for example, the 50 Most Popular Shows ordered by Popularity by default and on hover the user sees a selection of the most popular content. The user can toggle to show the content viewed by A to Z or by Latest. This list carousels.

Beyond these views of content, there is also Radio OD Genre Categories under Music / Talk Radio / Sport as shown in Figures 44-46 and described below.

In one example, all genre categories order content by Popularity by default (except the "All" category). The user can toggle to show the content in sub-categories by A to Z or by Latest. All lists of content carousel, and because of the large volume of content in each category the double carousel may be used.

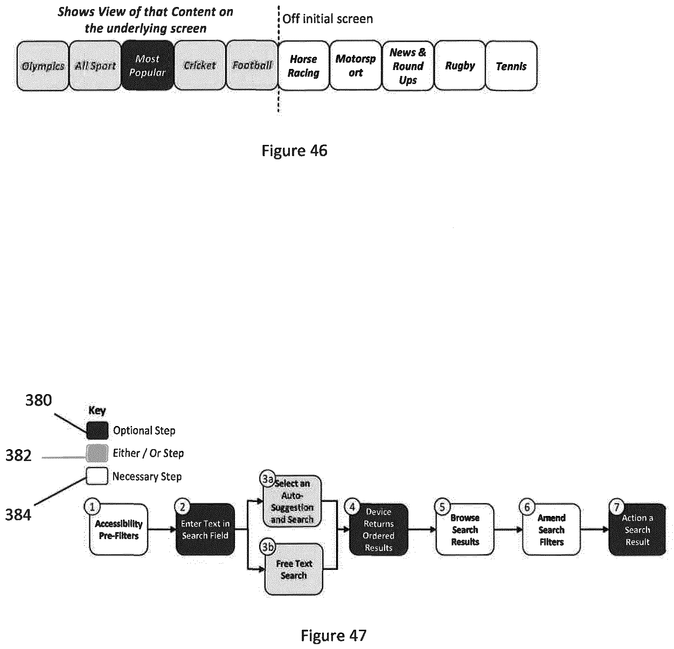

- Music: This category breaks down into the categories shown in Figure 44 with 'Most Popular 368 being the landing point.
- Talk Radio: This category breaks down into the sub-categories shown in Figure 45.
- Sport: This category breaks down into the sub-categories shown in Figure 46.

### *Description of Different Types of Ordering*

For flexibility, users are able to reorder content by different sort orders as they see fit using a toggle mechanism.

Examples of possible orderings are described below:

### *Popularity*

Popularity is based on the number of On Demand "play events" (e.g. watching or listening to an asset for more than 30 seconds) of that asset from only the platform and 3rd party VOD portals on the platform. In one example, linear views do not count towards this metric of popularity. IP channel views do not count towards usage data for popularity, as they are linear viewing. Views initiated from the OD placeholder channels will count, as they are OD viewing.

For all OD content (including films, TV, radio on demand, catch-up TV etc.) popularity is based on the number of "play events" for that asset over the past day or any other time period. This approach enables recent content to surface rapidly, and then its ranking in popularity lists to degrade fairly swiftly once its popularity has declined. One option for this is that initially there is a very simple decay function that decays the total popularity score nightly by a fixed factor.

This gives a quick drop-off in popularity in the first few days and then a slower and slower decay as the number drops. This means that particularly popular programs will decay rapidly at first and not overwhelm all other content; and "slower burning" items like old films or archive episodes will retain some amount of popularity without going to zero in a few days. The platform ensures that it is possible to adjust the decay factor as needed to either speed it up or slow it down and deliver an enhanced user experience of search.

### A to Z

Alphabetical ordering starts with A, through to Z, with numbers listed at the beginning of the list.

### Content Provider Guidelines for Submission of Alphabetised Metadata

The system has provided a metadata field to specify sort order by title alphabetically. Preferably, where the programme or web app begins with 'The' or 'A', the content supplier provides the Sort Title with a following comma and the word appended to the end e.g. 'The One Show' should be supplied as 'One Show, The' in the Sort Title field. This process is not done by the platform, as the CP has full editorial control to decide if the programme is listed under "T" or "O". The programme cannot be listed under both in the alphabetical list.

### Latest

This ordering lists content by the time stamp of the item's Production Date:

* For TV OD, this production date is equivalent to the first broadcast date.
* For Film OD (including films that have been broadcast at some point), this production date is equivalent to the UK release date where available. If there is no UK release date, then the date is the release date in the country in which it was produced. If there is no specific date or time available (only a release year), then the date is 00.00am on the 1$^{st}$ of January of that year. Where no date is available, content is then ordered by popularity.

If two assets have the exact same time stamp (to the millisecond), then their ordering may be assigned on a randomised basis.

### Soon to Expire

This ordering lists content by the time stamp of the end of the content's availability window in chronological order (against each separate channel i.e. not one combined list showing content from all channels). The user will therefore be able to navigate a list of content that will not be available to them for very much longer i.e. for <48 hours. Also, any content that is going to expire in <4 hours is not included in this list so that users generally do not find that their content expires part-way through playback. If the user pauses the content, and this goes beyond the end of the 4 hour window before expiry then this asset will not be available to complete viewing.

### Time of EPG Listing

This ordering lists content by the time that the asset was broadcast, delivered by IP, or the time that the OD asset was listed in the EPG (for OD placeholder channels). This ordering is used in the Channels area.

### Time of Last Playback of that Asset

This ordering lists content by the time that the asset was last played in either the plaform player or in any 3$^{rd}$ party player i.e. the timestamp of when playback was initiated. If the 3$^{rd}$ party player cannot capture and communicate this time of playback, then their assets cannot be listed in the Recently Played area. This ordering is used in the Recently Played area.

### Further Possible UI Features

Examples of further possible Main Menu Items are as follows.

* Oringinal Equipment Manufacture (OEM): This area provides information on the customer's device and / or accessories that may complement that device. After some interstitial pages (incurring the same number of clicks as to other OD content) there can be content behind that item.

- Web Apps: This area contains lists of applications that the user can access. In general the apps are not stored locally, however some OEMs may have certain 'Favourite' applications pre-loaded onto their devices. These web apps are not subject to the system's TV Quality Requirements, but are subject to Web App Governance Rules and limited Web App Style Reference Guides. There is a security model to determine the level of privileged APIs that web apps can access e.g. have the ability to change the channel.

### Description of the User's Search Journey

In one example, the search function is available:

- Behind a top level menu item labelled as "Search"
- By the user pressing the blue button on the RCU

Due to the large amount of content on the platform a feature called "search from here" is provided. This feature provides a contextual search from the position that search was called from e.g. if a user navigates through browsing down to Categories>Drama and then selects "Search from here" they are redirected to the main search screen where it indicates that the user is searching within a specific category for search results.

In one example, the user goes through the main steps shown in Figure 47 as they perform a search - a detailed description of these steps is given below. The steps are split into three categories, Optional 380 - the user may or may not perform them; Either / Or 382 - the user has a choice to make and Necessary 384 - the user has to follow this step. The numbers on each step correspond to the order in which they are performed in.

### Amend Search Filters

Users are not required to filter their search results - the user may always search all content if they require. However, the user may opt to filter their potential search results upfront through pre-filters, or cut-down the number of search results they have through post-filters.

The user is able to select one or more filters which will be used in conjunction to return the search results.

Accessibility pre-filters persist from the last search as this enables users to only deal with filters on an exceptional basis, when they want to deviate from their existing search filtering choices. Locating pre-filters in the search area, rather than solely burying them in Settings, make it easier for users to switch between the different filtering needs and preferences of the entire household.

Users can also search for <filtered> content by entering the filter in the search term text itself. For example entering "Life HD" would return all programmes that matched "Life" in high definition in addition to programmes that had both Life and HD in the metadata.

| # | Filter Name | Filter Type | Rationale |
|---|---|---|---|
| 1 | AD Only | Audio Description - Pre and Post Filter | To enable the user to find content that has accessibility versions quickly. These filters are only visible if indicated within the Settings Area (not shown as the factory default setting). |
| 2 | SL Only | Sign-Language - Pre and Post Filter | |
| 3 | ST Only | Subtitles - Pre and Post Filter | |
| 4 | HD Only | Post Filter | To enable the user to find quickly High Definition content - to promote this service as a key selling point for the platform. |
| 5 | Free to Me Only | Post Filter | To enable the user to hide all content that is not Free to Air or part of the user's existing subscriptions NB: Dependent on the delivery of CREDS. |
| NB: Beyond the filters above, Adult content is excluded from search results - this is a hidden filter. | | | |

### Enter Text in the Search Field

There are a number of potential methods for a user to enter the search term:

- The core method for text entry is multi tap on the remote
- The use of an onscreen keyboard.
- The use of a standard keyboard as an accessory.

Previously entered search terms are 'saved', so when a user goes back to the search function their previously searched items are shown and can be selected. The saved searches only show successful searches. This list is clearable so that previous search terms can be deleted.

### Choose a *Free Text Search or Search by an Auto-Suggestion*

The user can enter word(s) to be searched, and as the letters are entered, auto-suggestions are surfaced to the user. The user can either select an auto-suggestion (which will narrow the search to a single brand or even asset if there is no associated brand) or conduct a free text search (which is likely to include multiple brands).

### Auto-Suggestion Search

In one example, to make it easier and quicker for users to enter a line of text, they are provided with a list of 'auto-suggestions' from which they can make their choice of search term, after an appropriate number of letters has been typed. This number is 1 as a minimum and 3 as a maximum. The user is only given 7 suggestions i.e. this list of suggestions does not carousel.

This suggestion list shows matches from the highest-level title (most importantly), keywords and 'cast and crew' metadata fields.

If the user types in an OD genre category as the searched item (e.g. comedy), then the user is offered to be directed to that OD browse, as well as being shown titles that include Comedy.

Auto-suggestions are listed by relevance (a significant part of which being popularity of this as a search term across all users), rather than just in alphabetical order. For example, if a user typed in "COR", they would be presented with "Coronation Street" as the top auto-suggestion, rather than "Coral Reef Adventures" (or other less popular assets), even though coral is alphabetically first. The search term, in this case "COR", may be the first 3 letters of any word in a title e.g. "The Wonders of the *Cor*nish Coastline".

### Device Returns Structured and Ordered Search Results

### Structuring "Rolled Up" Content

Especially within the OD area, it is likely that the volume of content returned in search results will necessitate that the platform presents content from the same CP rolled up by brand or series. For example, roll ups may be "Top Gear from BBC", "Top Gear from Dave", "Top Gear from Seesaw".

These roll-ups would need to extract all relevant results from that brand or series, not just include entire brands or series e.g. searching for "Top Gear" and "Ferraris" will have roll ups of a subset of Top Gear episodes that include Ferrari in their metadata.

To reduce needless clicking, content is not rolled up if there is only a single entity underneath the roll-up. This means that:

- If there is only one series, then there is no need for the series to roll up underneath the brand, and users would go straight from clicking the brand thumbnail to being presented with the list of episodes
- If there is only one episode / asset available, then it is presented on the top level.

### Ordering Content

Results are ordered by a calculation of their "Relevance" according to an algorithm that takes into account:

- Word match (by titles, keywords and synopses in that order)
- Age (by production date i.e. when it was created for OD search results, or by recent broadcast date for linear search results)

◦ Popularity (i.e. VOD views on the platform).

In the case of roll-ups, the ordering is based on the SINGLE most relevant asset within that roll-up. The following weightings are used for search relevancy, but these are flexible to alter over time:

| Metadata Field (weightings in decreasing order) |
| --- |
| brandTitle (or highest available title if brand title not available) |
| seriesTitle |
| programmeTitle |
| programmeSynopsisLong |
| category |
| keywords |
| brandSynopsis |
| seriesSynopsis |
| popularity |
| Date (either broadcast date' for linear content, or 'UK release date' / 'original broadcast date' for OD content) |

### *Definition of Popularity*

Popularity of an asset (generally a VOD asset) relates to how many times that asset has been viewed as a VOD asset on this platform alone (i.e. this does not include how many times it has been viewed as a linear programme, nor how many times it has been viewed on other platforms). The system does not distinguish between Catch-Up and OD content to determine the popularity rating, as this will distort search results and browse list ordering which is contrary to user expectation.

For all OD content (including films, TV, radio on demand, catch-up TV etc.) popularity is based on the number of "play events" (e.g. watching or listening to an asset for more than 15 seconds) for that asset over the past day on a rolling basis.

### *User Browses Search Results*

Search results are presented to the user by separate content type, with a count of the number of relevant individual assets / episodes in each area e.g.

◦ TV (3) *[i.e. current& future linear]*
◦ Available Now (99) *[i.e. episodes On Demand or later phase Recordings]*
◦ Apps (2)

A general principle is that if there is not relevant content in a particular Content Type, then that section is not shown and more content from a different section is shown. Search results could also be returned up to a maximum number of pages - having a limit may make browsing more manageable, as the list of results could carousel allowing the user to easily return back to the beginning of their list from near the bottom of the list.

If results are returned that relate to keywords / synopsis in particular, the extract that the search algorithm has referenced is displayed and the word is highlighted, for example in bold.

### *Action a Search Item*

The table below outlines examples of the search results that are returned and the functionality that is possible from each of these items.

| Search Result Type (item) | Ok Action | Other Button Presses | Action Menu Item (AMI) display |
|---|---|---|---|
| Recording s. NB: recording s are more likely to be filtered by first letter than actually searched. | Treat as user trying to play content. | From search results, users are able to protect their content (to save it from auto-deletion) - the iconography to display this may have to be on a lower level, so as not to crowd the visual design of the UI. | Enhanced metadata for recordings are held on the device, so More Information is always be available to the User. For other action menu items, the device shall access MAS or linear metadata to see if there is still metadata available for: - More Episodes (only displayed if there are assets still available to watch - NB: does not display expired OD content) - More Like This (if these assets are still available to watch - NB: does not display expired OD content) - Related content / apps (max 3) - Make Favourite |
| Linear, current programm e | Switch to channel and watch | Record Remote control button initiates a recording - then user asked if this is an individual recording, or whether they would like to set a series recording (if metadata available). | As expected by the user, enhanced metadata is available for each search result: - More Info - More Episodes - More Like This - Related content / apps (max 3) - Make Favourite |
| Linear, future programm e | Set reminder for future linear content | Record Remote control button initiates a recording - then user asked if this is an individual recording, or whether they would like to set a series recording (if metadata available). | As expected by the user, enhanced metadata is available for each search result: - More Info - More Episodes - More Like This - Related content / apps (max 3) - Make Favourite |

(continued)

| Search Result Type (item) | Ok Action | Other Button Presses | Action Menu Item (AMI) display |
|---|---|---|---|
| On demand programm e | Treat as user trying to play or select content.<br><br>The is able to user select the particular version type that they want to playback only if they access the More Info page - by default the version played back would be in line with thefollowing: 1) the user filtering e.g. the accessible version if they had filtered by AD / ST / SL, or the HD version if they had filtered by HD. 2) settings the user had previously selected, e.g. AD or Subtitles on as default. | No record functionality available.<br><br>There is an option to download the OD asset. | Against individual OD assets, there are the following action menu items (NB: users are not able to access these at a series or brand level)<br>- More Info<br>- More Episodes<br>- More Like This<br>- Related content / apps (max 3)<br>- Make Favourite |
| Web App | Take user into web app. | No record functionality available. | Against web apps, there are the following Action Menu Items, if available:<br>- More Info<br>- More Like This<br>- Related content / apps (max 3)<br>- Later Phase: Make Favourite |

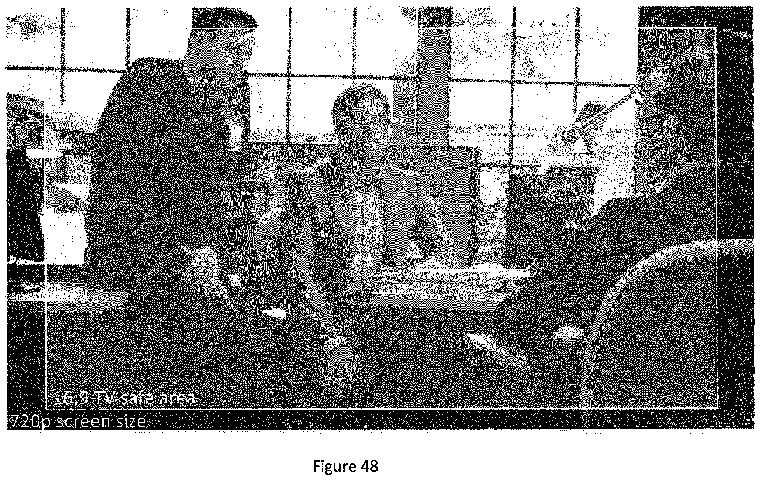

Regarding formatting and presentation, Figure 48 shows the basic design frame. Elements are sized for 720 pixel screen resolution (1280x720 pixels). Only the 16:9 TV safe area is included.

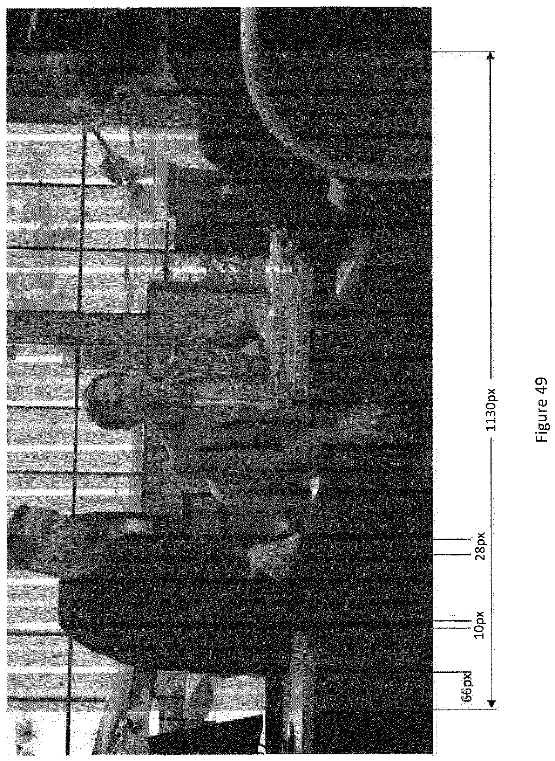

Figure 49 shows the design grid system. The grid is a quick, simple way to create consistency. Using the grid in designs creates screens that have a sense of order and encourage intuitive behaviour from users. The design grid consists of 15 columns, each 66 pixels in width with a 10 pixel gutter spacing between them. This gives a total content area of 1130 pixels. There are also sub columns of 28 pixels for greater flexibility. The grid is an aid to designing the UI, but the UI should not be constrained by the grid. The grid sets the bounds for content only.

**Further Software Stack Aspects**

The architecture of the software stack affords at least the following advantages:

- It enables broadcast and Internet protocol (IP) delivery technologies to be brought together so as to ensure effective coexistence.
- It supports multiple application frameworks and presentation technologies.
- It supports multiple concurrent applications.
- It integrates components from third party suppliers.
- It enables hardware graphics acceleration, and making it easily accessible so as to ensure the best possible viewer experience.
- It surfaces the configuration for key elements of the software stack to allow for performance tuning.
- It reduces fragmentation of technology in the connected television ecosystem, to improve availability of content, and reduce content distribution costs.
- It improves device compliance so as to reduce authoring costs for content providers.

Traditional monolithic middleware solutions do not provide a suitable foundation on which to build a solution with these requirements in mind. Software designs with a single main executable and tight coupling between functional areas often exhibit problems in areas such as memory management, security, resource management, and make it difficult to integrate newer technologies, so a more modular approach is needed. However, the extent of the investment made by device manufacturers and middleware vendors in existing technology is acknowledged and the principle of re-using existing software is central to this architecture.

The proposed architecture defines key technology foundations, a set of interfaces and a component framework that reduces the risk of developing and deploying compliant devices. By adopting a solution that includes the Linux operating system, a multi-process model, a message bus for interprocess communication and a set of common open source libraries, this framework allows device manufacturers and software vendors to integrate and test components easily.

### Architecture Overview

### Logical architecture

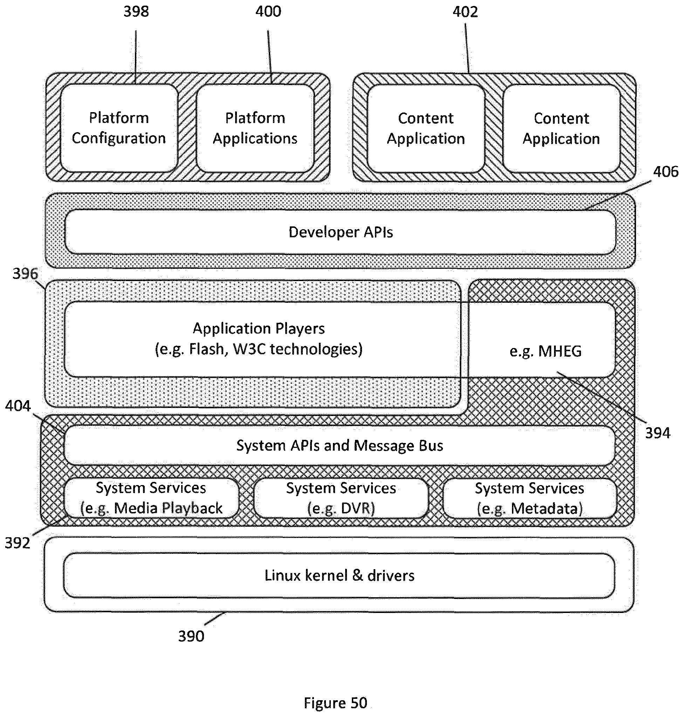

Figure 50 outlines the Consumer Device Software Architecture, showing an example of the levels of software.
Notes:

- The Linux kernel and drivers 390 are typically provided by the silicon vendor.
- The System Services 392 are implemented by manufacturers or middleware vendors.
- The MHEG engine 394 is often closely integrated with the other software components, and the architecture supports implementations that provide the MHEG engine 394 as an integral part of the device middleware or as a separate component.
- Application Player 396 executables and libraries are provided by 3rd party software vendors.
- Platform Configuration 398 and Platform Applications 400 including the Top-Level User Interface (UI)) are managed as part of the Platform Software, and independently from the Core Device Software.
- Content Applications 402 can be delivered over IP and broadcast networks.

### Design functionality

The architecture has been designed to achieve the following functionality:

- Align with industry trends.
- Run on silicon products that are available in the market now.
- Use open source software where appropriate.
- Provide suitable Application Program Interfaces (APIs) to abstract from underlying software implementation.
- Allow manufacturers to differentiate their products.

The architecture has the following benefits over a monolithic approach:

- It allows components and Applications to be developed in isolation and tested before final integration.
- It allows for the re-use of existing software components and simplifies the integration of third party software.
- It provides clearly defined responsibilities and interfaces for all components.
- It supports models where Platform Operators wish to manage and upgrade Platform Applications and Platform Configurations independently.

### Device Operating System

In one example, Linux is used as the Operating System for the Device. Linux has been ported to run on a large number of silicon products, and is currently supported by the vast majority of hardware and software vendors in the connected television ecosystem. Porting to new hardware is relatively simple due to the architecture of the kernel and the features that it supports. The Linux environment provides the following functionality as a basis for the development and operation of the Device software:

- Multi-processing.
- Real-time constraints and priority-based scheduling.
- Dynamic memory management.
- A robust security model.
- A mature and full-featured IP stack.

Linux is deployed on millions of PCs and consumer electronics devices, and the skills to develop and optimise for it are common in the industry. In addition, a wide range of open source products have been developed for, or ported to Linux.

## Multi process overview

The Device is required to support multiple application frameworks and presentation technologies, and content from multiple sources.

The architecture enables Applications and System Services to run in separate operating system processes with appropriate permissions to control access to APIs and system resources. This is essential for enabling a wide range of content from trusted and un-trusted sources. It also allows Applications that provide the Device user interface to be developed and maintained independently without requiring an upgrade to manufacturer software.

## Managed components

To support in-field evolution of Device functionality, and in particular to the tuning of system performance, components that provide System Services can exploit the presence of an embedded scripting engine by implementing some of their functionality as a script. These scripts can be upgraded as part of an update to the Platform Software.

Examples of components that use this approach are the User Interface and Management Engine, the Metadata Broker and the Content Acquisition Manager.

## Open source components

A number of software components provided by open source projects have been chosen to support the architecture.

| A full list of required open source libraries and versions can be found in the Consumer Device Platform Specification for Connected Television. | |
|---|---|
| D-Bus - message bus | http://dbus.freedesktop.org/ |
| DirectFB - 2D graphics | http://www.directfb.org/ |
| SaWMan - window management | http://www.directfb.org/ |
| Boost - C++ libraries for thread and memory management | http://www.boost.org/ |
| Curl - HTTP networking | http://curl.haxx.se/ |
| OpenSSL - HTTPS and PKI | http://www.openssl.org/ |
| SQLite - persistent storage of structured data | http://www.sqlite.org/ |

## Device Application Programming Interfaces (APIs)

The architecture has been designed with two API tiers:

- System APIs 404 (Figure 50) - A set of interfaces that allow components within the Device to provide services via the message bus.
- Developer APIs 406 (Figure 50) - A set of interfaces that are made available by Application Players 396 (Figure 50) and used by application developers and content authors.

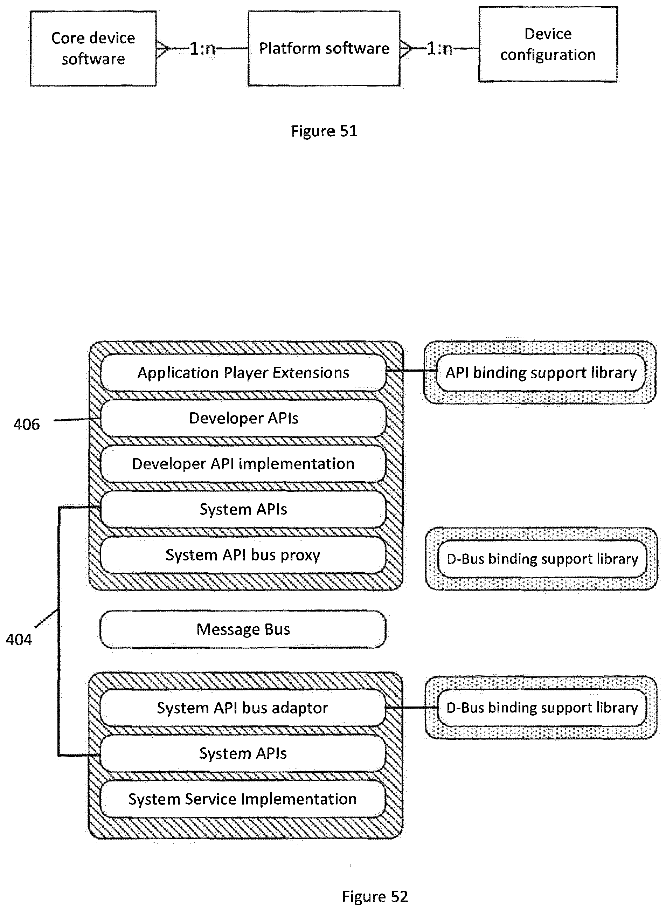

The relationship between these tiers and the implementation in-between is shown in Figure 51.

### Message bus for inter-process communication

The Device inter-process communication (IPC) system is based on D-Bus, an open source project from freedesktop.org that provides transport for synchronous and asynchronous method calls, asynchronous events, and error messages.

D-Bus has gained widespread support in Linux based systems, and is used in the majority of desktop and embedded Linux distributions. It was chosen as the IPC mechanism as it supports a suitable range of data types and usage models, and offers low latency data transfers without the unnecessary complexity and overhead of other messaging technologies such as CORBA.

### Supported Message Buses

Devices are configured with the following message buses:

- System Bus - the default bus for Linux D-Bus enabled processes.
- Session Bus - used for all Platform-specific messages, and configured with specific access controls for applications.

Devices may be configured with alternative buses to support Service Provider or Manufacturer specific features.

### Bus names

All components that are required for the correct operation of the Device must register System Services with Bus names within a namespace specified by the Platform Operator. Manufacturers may provide other System Services using Bus names within a private namespace.

### Introspection

System Services on the Bus support an Introspection API that provides metadata about the APIs they provide. This information is useful during the development, integration, testing phases of the Device software, and is available to diagnostics systems running on the Device.

### Message types

The following message types are supported by the message bus and associated libraries.

- Method calls on interfaces provided by an object on the Bus
- Return values from method calls.

    ◦ Behaviour can be blocking or asynchronous via call-backs.

- Error codes and structures.

### Error handing

Errors generated by System Services are reported using a specific error message type and are propagated to clients as exceptions or error codes.

### D-Bus security

The D-Bus libraries provide security features including policies and access control lists that are applied to objects, interfaces and methods on the Bus and are used to allow or deny messages, and access to System Services. This is managed by assigning permissions to each Application Player instance. For 3rd party applications, the assigned permissions depend on the origin of the application, and are configured using information from the Domain Name System (DNS) domain and/or signing certificate.

### Message bus implementation

The API for each System Service is defined in the Extensible Markup Language (XML) format described in the D-Bus specification, and used by code generation tools to create bindings to the Message Bus runtime support libraries. Defining each interface in this manner allows for the implementation to be changed without affecting applications or other dependant services.

The Message Bus is used to access System Services and for low bandwidth data transfers but is not used for the transfer of audio and video streams or other high bandwidth data such as broadcast carousel data. A separate mechanism is required for high bandwidth transfers - this is outside the scope of this description.

### System Services

### AN Media

Audio & Video Media processing is provided by a unified component that supports multiple source and sink types. Sources include DVB, local and remote IP unicast, IP multicast, and local storage. Multiple sources can be active at once. The component is responsible for de-multiplexing, routing, decoding, controlling and rendering A/V streams.

### Broadcast and platform metadata

Metadata from broadcast networks is processed and cached by DVB software components, according to the requirements specified in [DTG DBook]. The System API interfaces for broadcast linear metadata present *Event Information, Service Information,* and *Related Content* from broadcast data.
Enhanced platform metadata is delivered via IP networks and the Metadata Broker component is responsible for requesting, parsing, and caching this data.

### Content acquisition - DVR and IP download

This group of components is responsible for the two content acquisition mechanisms available to the Device; these are recording from a linear channel (DVR) and downloading over the IP network. In addition to this, the Content Acquisition Manager ensures that the acquisition mechanisms available are utilised in the most efficient manner to deliver any content that the user requests. The Content Acquisition Manager also contains the logic required to process record lists that are used as part of the mitigation strategy for IP bandwidth usage.

### User Interface Management Engine

The User Interface Management Engine is a configurable software component which manages the graphics display systems, user interaction, and the lifecycle of Applications. It also provides control APIs for launching and terminating Applications, to System Services and other Applications.

### Applications

Applications can potentially be authored in any language supported by Application Players e.g. MHEG, HTML/JavaScript, ActionScript. They are distributed in a processor independent form (e.g. script or byte code). Once downloaded or installed onto the Device, Applications are executed by the appropriate Application Player and their graphical output is rendered into a window to enable composition by the Window Manager. Device-specific services are made available to Applications using extension mechanisms, but Applications can be built without using these additional services; many Applications do not require APIs beyond those documented in existing specifications, and run on the Device with no changes.

### Core UI Applications

The Core UI Applications provide display logic and rendering of information to the viewer.
Functionality such as handling metadata from multiple sources is provided by System Services, in order to reduce the complexity and responsibilities of Applications and improve reliability of the Device.

### Application Players

Each supported application framework and presentation language has an Application Player associated with it. Multiple Application Player instances can - within the capabilities of the underlying hardware - execute simultaneously, allowing multiple Applications to run. For example, the Top-Level UI Application may be running while an MHEG 'red button' Application is active. These instances are managed independently, and execute in a separate Linux process, with their own security sandbox and privileges.

In one example, application Players must use standard libraries to provide functionality such as networking, and graphics operations. This is to ensure consistent behaviour and to reduce some of the complexity and overhead of managing Device compliance.

### Data caching

Application Players use a common data cache to reduce bandwidth usage and latency for frequently accessed documents and images delivered via the IP network. Prefetching of data and images is also used to reduce rendering delays in the user interface.

### Application management

The lifecycle of the Application Player instances is controlled by the Application Manager with configuration and policies supplied as part of the Platform Configuration. Each Application Player process is configured with resource limits and priorities, and instances can be started in advance of applications, to reduce delays when applications are launched.

The Application Manager is responsible for stopping processes when there is insufficient available memory to start new applications, and prioritises Applications that it launches to ensure that Application Players or Applications that attempt to allocate large amounts of memory or use more memory than is currently available do not affect the stability of the Device.

The Application Manager terminates Applications and Application Players instances if they exceed configured limits. Instances are also terminated after ach Application has exited, to release allocated memory and reduce memory fragmentation associated with long running processes.

### Input event handling

In one example, all user input to the Device is processed by Direct Frame Buffer (DirectFB) and raw input events are converted to window events by the Window Manager and then filtered and routed to the correct component to ensure that the associated function is handled with minimum latency. This also simplifies the creation of content applications by removing the requirement to handle input events associated with power management and volume. The focused Application receives a subset of available keys.

### IP Network Manager

The IP Network Manager provides information about the IP network, and events relating to network interfaces and connections.

### Data and Configuration Repository

The Data and Configuration Repository provides persistent storage of keys and values that are used by the Platform Configuration components, and for setting and retrieving user preferences and Application data. Clients can be notified of changes for a set of keys. Storage limits prevent Applications from using large amounts of disk space, and an access control mechanism ensures that data can only be accessed by authorised System Services and Applications.

### Developer APIs

The Developer APIs exist to allow Applications to access System Services from languages that are supported by Application Players. Ideally a single set of Developer APIs related to connected television functionality would be common to all Application Players - albeit cast into a language specific form - as this would make the task of developing for multiple application environments easier. However, the Device supports environments, such as MHEG, where APIs for developers are already defined, requiring adaptation of the System APIs to these. In addition, for environments such as W3C there may be benefit from the re-use that would be possible by aligning the Developer APIs for this particular Application Player with other emerging connected television solutions, such as being developed by the OIPF.

The implementation of the Developer APIs includes:

- Providing features that are needed by existing or new applications.

- API adaptation to the System APIs where functionality maps directly to System Services.
- Aggregating functionality provided by multiple System Services.

### Language bindings

In order to expose functionality to each Application Player, bindings for appropriate language (e.g. for Action-Script or JavaScript) must be made to the Developer APIs via an extension (or plug-in) mechanism provided by the Application Player.

Common support libraries are used by all Application Players for data serialising, data type conversion, event queuing and dispatch, and garbage collection.

### Object memory management

The features for dealing with dynamic memory management and object garbage collection vary with each Application Player but implementations typically expose references to objects used within an application via an extension mechanism, and notify the extension bindings when objects provided by System Services are no longer required. This functionality is essential for managing memory usage and enabling garbage collection across the API tiers.

### Device Operation

### Software updates

The Device software is packaged and distributed in the following upgradable software images:

- Core Device Software Image, including: Operating system, shared libraries, & executables, including System Services and Application Players.
- Platform Software Image, including: Platform Applications, Platform Configuration, scripts, images and resource bundles.

Where software images are delivered over IP, a Downloader service provides APIs to initiate and monitor the progress of data transfers.

The device is also required to support software images that are delivered over broadcast networks.

Software images must be secured in delivery, and on the Device.

Further information is given below.

### System start-up

In one example, devices must use a secure boot process to ensure that only authorised system software runs on the device.

Start-up operation is as follows:

- Bootloaders are executed.
- The integrity and signatures of the kernel and root file system are verified.
- Linux kernel is uncompressed and executed.
- Kernel drivers are loaded.
- Init process is started.
- System Service processes are started.
- Application Manager starts instances of required Application Players.
- Platform Applications (including the Top-Level UI) are started.

### Process and System memory management

Most System Services are started from Linux start-up scripts, but some can be started on demand when first needed. System Services that are required for correct operation of the Device are not stopped under normal circumstances.

Application Player processes that are started for running Applications are managed by the Application Manager, and are terminated when no longer needed. Core UI Applications are only terminated when inactive, if memory is required by System Services.

Devices must use a memory allocation policy that ensures predictable behaviour in low memory situations.

### Scheduling and performance

The Linux kernel's process scheduler must be configured to ensure that System Services execute with higher priority than Applications.

### Introduction

The connected television device (Set Top Box) is made up of two software components and some corresponding configuration:

- The Core Device Software is the software image that is installed and managed by the manufacturer.
- The Platform Software is a software image that contains the top level UI application and can be updated by the platform operator independently of manufacturers and without upgrading the Core Device Software.
- The device configuration contains specific configuration parameters to be applied to a specific release of Platform Software and can be updated without needing to update either the Core Device Software or the Platform Software.

Figure 52 shows the relationship between these updatable components. Platform Software images can only be installed on a Core Device Software image that implements a specific Platform API Version.

Device configuration can only be applied to a specific version of Platform Software.

### Device Software Upgrade

### Upgradeable modules

The device software is divided into two parts: the Platform Software managed and updated by the platform operator and the Core Device Software managed and updated by the device manufacturer.

The Core Device Software consists of:

- bootloader(s);
- the Linux kernel;
- the Linux root filesystem containing libraries and the core device software;
- middleware required to support the operation of the device;
- presentation engine software including API bindings and data marshalling;
- an interpreter for platform scripts;
- manufacturer-supplied data;
- optionally, a default version of the Platform Software;
- user interface components and associated assets required for the manufacturer-specific setup and configuration of the device;
- the manufacturer's default configuration parameters (see section below); and
- public key certificates.

The Platform Software consists of:

- the default platform configuration;
- the top level UI application (including all images and data needed for off-line use);
- platform scripts providing soft logic for device components performing background functions and plug-in functionality for system services; and
- static data files supporting these elements.

The Platform Software is architecture independent and contains no native compiled executable code.

The device includes a default version of the Platform Software 426 so that when the device starts for the first time the top-level UI is available.

The device may include a default version of the Platform Software 426 within the Core Device Software 428.

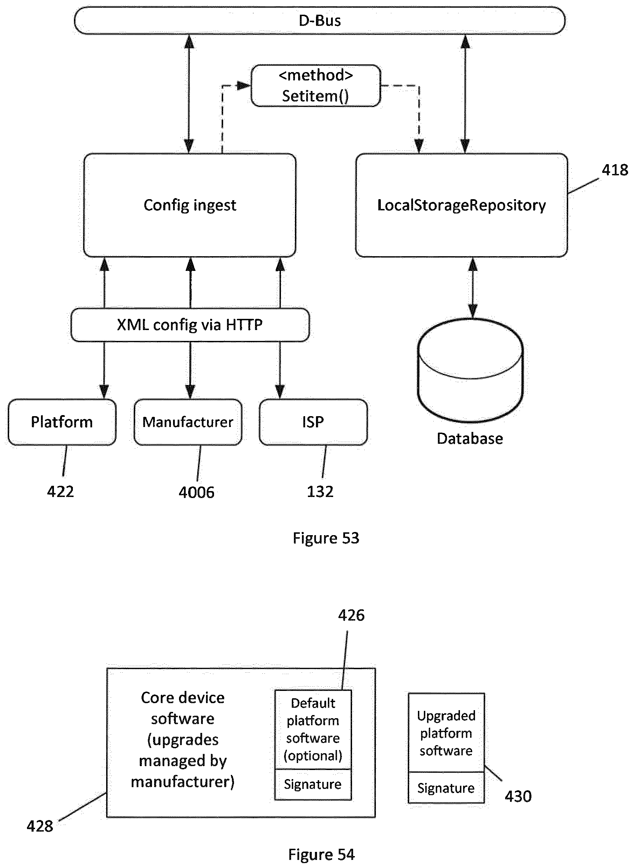

If the Core Device Software 428 does not include a default version of the Platform Software the device includes the default Platform Software 426 separately, as illustrated in Figure 54. Upgraded platform software 430 is outside the Core Device software.

*Core Device Software upgrade*

Devices support Core Device Software upgrades over broadcast using the DVB-SSU Firmware Update Method described in *D-Book* 6.2.1, section 23.6. They also support software upgrades of the software over the IP connection. Manufacturers are responsible for implementing a mechanism for secure and reliable upgrade.

Software images are encrypted in delivery over broadcast and IP and on any servers on which they are hosted.

After a successful installation of the Core Device Software the Local Storage Repository (LSR) contains

- the manufacturer's name
- the manufacturer's OUI
- model number
- Platform API version number
- Core Device Software version number

**[0579]** The manufacturer's software may be divided into separate parts for the purposes of upgrading.

After upgrading the Core Device Software the device checks for a newer version of the Platform Software as defined below.

*Platform Software update*

Devices support the updating of Platform Software using both the broadcast and broadband update mechanisms described in this section.

Devices download a new Platform Software image using either the IP Platform Software download method described below, or the DVB-SSU Platform Software download method also described below.

When a new Platform Software image has been successfully downloaded and is available locally, the device saves a local copy of the new Platform Software image.

The Platform Software image is in the format described below.

Once a new Platform Software image is available locally the device verifies that the image is signed by the platform operator, then decrypt and install it using the process described in below.

Devices store at least two versions of the Platform Software - one default version and at least one downloaded from the update server. Devices use the updated copy in preference, provided that it has been verified and successfully installed.

The device only installs Platform Software if the Core Device Software implements the Platform API Version specified in the header of the Platform Software.

The Platform Software is provided by the platform operator as a single signed and encrypted image.

Devices may need to consider splitting the software after downloading if other requirements dictate that some parts are held in flash memory and others on hard disk storage.

The user is not to be notified or asked to confirm software and configuration updates. However, the device setup may include an option through which the user can explicitly disable automatic software updates.

The device does not inform the user when a software update or configuration update fails.

*IP Platform Software download method*

The device may be configured to only perform configuration and software update checks during a predefined download window.

The device checks for a new Platform Software image at the regular update interval configured in the Local Storage Repository.

If the device has not successfully checked for new Platform Software for seven or more days the device ignores the download window and starts a check immediately.

If the download window is defined then the device schedules a Platform Software update check at a random time within the daily download window.

The device checks for a new Platform Software image and download it using the following method:

- The device checks for a new platform image using a HTTP/1.1 GET request with an If-Modified-Since header, quoting the modification date and time of the currently installed Platform Software image. If an Etag header was provided with a previous response, the device also uses an If-None-Match header quoting the Etag.
- The device checks for a new Platform Software image and download it using the following constructed URI:

http://[baseuri]/[manufacturer]/[model]/[platform_api_ver]/[image_name].bin, where the values are retrieved from the Local Storage Repository using these names:

- baseuri = platform.software.update.baseuri
- manufacturer = hardware.manufacturer
- model = hardware.model
- platform_api_ver = core.software.platformapi.version
- image_name = platform.software.update.imagename

- If a new Platform Software image is available the response is a HTTP/1.1 200 OK response with a Content-Type of application/octet-stream. The body of the HTTP response is the Platform Software image in the format described below. The device then saves a local copy of the new Platform Software image and updates the platform.software.update.lastchecked item in the LSR.
- If a new Platform Software image is not available the response is a HTTP/1.1 304 Not Modified. The device then updates the platform.software.update.lastchecked in the LSR.
- If a new Platform Software image is downloaded the device also downloads the Platform Software digital envelope (defined below) using the following URI:

http://[baseuri]/[manufacturer]/[model]/[platform_api_ver]/[platform_software_ver].env

where: platform_software_ver is the Platform Software version number extracted from the Platform Software Image Descriptor (PSID) of the downloaded Platform Software. The PSID is defined below.

The base URIs of the software update service and Platform Software update interval can be changed by the configuration. However, in the event that a software update service responds with an error on five consecutive occasions, the device reverts to the previous location for the next attempt.

Platform Software downloads occur at a randomly selected time within the download window.

Standard back-off mechanisms for HTTP requests are implemented by the device in the event of download errors, as defined elsewhere in this document.

Once the device has successfully downloaded a Platform Software image it shall install the image using the procedure described below.

### DVB-SSU Platform Software download method

Devices support the upgrade of the Platform Software using the DVB-SSU Firmware Update Method described in *D-Book* 6.2.1 section 23.6 except for the following difference:

- The DSI in the data carousel contain the platform operator's OUI rather than the manufacturer's OUI.

Given the expected time for a device to complete the download, the device must be able to perform the download as a background operation while the user is watching TV or making a recording. If the user's actions force all available tuners to retune to multiplexes which are not carrying the download then the download will be interrupted. The device is able to resume partially completed downloads rather than having to re-start from the beginning.

### Platform Software packaging format

The Platform Software image is a signed, encrypted *cramfs* filesystem image.

The Platform Software packaging format describes the format of the files used to upgrade the Platform Software.

The Platform Software update package contains a Platform Software digital envelope and a Platform Software image.

### Platform Software digital envelope

The Platform Software digital envelope is of type CMS Enveloped-Data with detached content, as described in [RFC 5652] section 6.

*Platform Software image*

The Platform Software image is of type CMS Signed-data, as described in [RFC 5652] section 5, with a pre-pended Platform Software Image Descriptor (PSID). It is encrypted as described below.

The Platform Software image is of the form:

| Item | Offset (bytes) | Size (bytes) |
|---|---|---|
| Platform Software Image Descriptor (PSID) | 0x00 | 0x20 |
| { CMS Signed-data }CEK (AES-256-CBC) (as described below and [RFC 5652] section 5) | 0x20 | variable |

*Platform Software Image Descriptor (PSID)*

The Platform Software Image Descriptor (PSID) is of the form:

| Item | Contents | Size (bytes) |
|---|---|---|
| Magic cookie | 0xCA, 0xA5 | 0x02 |
| Platform Software packaging format version identifier | 0x00, 0x00, 0x00, 0x01 | 0x04 |
| Unused | < unused > | 0x0A |
| Required Platform API major version | API major version (e.g. 0x02) | 0x01 |

| Item | Contents | Size (bytes) |
|---|---|---|
| Required Platform API minor version | API minor version (e.g. 0x01) | 0x01 |
| Required Platform API revision | API revision (e.g. 0x00, 0x00) | 0x02 |
| Platform Software image major version | Platform Software major version (e.g. 0x02) | 0x01 |
| Platform Software image minor version | Platform Software minor version (e.g. 0x01) | 0x01 |
| Platform Software image revision | Platform Software revision (e.g. 0x00, 0x00) | 0x02 |
| Capabilities | 0x00 (all 8 bytes) | 0x08 |

The Platform Software packaging format version identifier is used to indicate the version of the packaging format used by the Platform Software image.

Versions of the Platform Software are identified by major, minor and revision numbers, and define the Platform API version that it is required.

The device only installs Platform Software that matches the Platform API version of the Core Device Software. The Platform Software image version number increment with each new release.

The Capabilities item is a reserved section of the Platform Software Image Descriptor (PSID) that will be used at a later date to indicate which device capabilities are compatible with a specific version of a Platform Software image.

*Encapsulated Content*

The eContent section of the CMS Signed-data section, as defined in [RFC 5652] section 5.2, is of the form:

| Item | Offset (bytes) | Size (bytes) |
|---|---|---|
| Platform Software Image Descriptor (PSID) | 0x00 | 0x20 |
| CramFS image | 0x20 | Variable |

The PSID is duplicated in the encapsulated content section since this part of the message is verifiable.

*Signing*

The platform operator provides a Platform Software signing X.509 certificate, as defined in [RFC 5280], containing an RSA 2048 bit public key in the SignerInfo section of Platform Software image.

The content section of the Platform Software image is signed using the private key paired with this public key.

*Encryption*

Manufacturers provide the platform operator with either a single Key Encryption Key (KEK), or a number of KEKs. Each KEK is a 2048 bit RSA public key.

The platform operator generates a new Content Encryption Key (CEK) for each distribution of the Platform Software image. The CEK is a 256 bit key.

The CEK is encrypted by the platform operator once for each KEK provided to the platform operator. Each encrypted key (i.e. {CEK}KEK) is stored in a KeyTransRecipientInfo structure of the Platform Software digital envelope.

The Platform Software image is encrypted using the CEK. The encryption algorithm used is AES-256-CBC.

*Platform Software installation process*

The Platform Software installation process is shown below. Further details are provided in the following sections.

1. Download the new Platform Software image and Platform Software digital envelope as described above.
2. Check the preconditions on the plaintext PSID in the Platform Software image (as described below).
3. If preconditions are met then decrypt (as described below) and verify the Platform Software image using the signature provided (as described below).
4. Check the preconditions on the verified PSID (as described below).
5. If the preconditions are met on the verified PSID then:

   a. Copy the Platform Software image to a place it can be mounted from.
   b. Take a copy of the signature and certificate chain to use when verifying the Platform Software image.

The next time the device leaves standby mode it shall switch to the latest locally installed version of the Platform Software image.

Under normal operation the device successfully verifies the Platform Software image using the signature provided before mounting it as a cramfs1 1 cramfs is a Linux filesystem designed to be simple, small, and to compress things well. It is used on a number of embedded systems and small devices. (http://sourceforge.net/projects/cramfs/) filesystem.

*Installation notes*

The Platform Software does not contain any native executable code. For added security, it is therefore recommended that the filesystem image be mounted without execute permission.

Once the image has been verified, it can be mounted into the Linux filesystem of the device, either directly, or using the loopback driver as appropriate.

If the user has disabled automatic standby on idle, the device will still alert the user that the device will enter standby and the software update will take place when no recording or other activity is taking place. The user may be presented with an option to defer the standby/upgrade procedure but not to cancel it.

If the signature verification fails, the device falls back to the last known good version of the Platform Software.

*Preconditions*

The device asserts the following preconditions on the PSID and the verified PSID before installing a Platform Software image and making it available for use:

1. Assert the magic cookie is 0xCA, 0xA5.
2. Assert the Platform Software packaging format version identifier is 0x00, 0x00, 0x00, 0x01.
3. Assert the required Platform API version is equal to the version of the Platform API implemented by the Core Device Software.
4. Assert the Platform Software image version is greater than the installed Platform Software image version.

5. Assert all 8 bytes of the capabilities section are 0x00.

### Decryption

The Content Encryption Key (CEK) is decrypted using KEKprivate; i.e., the private key paired with KEK.
The Platform Software image is decrypted using the CEK. The algorithm used is AES-256-CBC.
KEKprivate is stored as a device secret.

### Verification

Devices calculate a message digest of the signed content and verify the digital signature as described in [RFC 5652] section 5.6.
Devices assert that the Signed-data section, as described in [RFC 5652] section 5 has been signed by the platform operator according to an overarching trust model.

### Certificate revocation

Manufacturers assert that no certificate in the signer's certificate chain has been revoked using the certificate revocation list (CRL) installed in the Core Device Software.

### Device Configuration

The components that are involved in configuration and software updates are shown in Figure 53 and described below. The Local Storage Repository (LSR) 418 is the repository containing the device configuration and is also queried to get information about the state of the device.
For the efficient operation of the platform, a number of configuration parameters are required. A configuration mechanism is specified below that allows for configuration parameters to be adjusted by a number of configuration sources. The configuration sources are the device manufacturer 4006, the platform operator 422, the user's Internet Service Provider (ISP) 132 and the user themselves (not shown).

### Introduction

For the efficient operation of the platform, a number of configuration parameters are required. A configuration mechanism is specified that allows for configuration parameters to be adjusted by a number of configuration sources. The configuration sources are the device manufacturer, the platform operator, the user's Internet Service Provider (ISP) and the user themselves. To enable this, the device configuration contains a set of defined URI prefixes from which configuration data must periodically be gathered. To these prefixes, the device appends information about its manufacturer, model, current configuration version and current Platform Software version to arrive at a complete URI to use for the configuration request. Configuration data retrieved from these URIs is signed.
A set of named configuration parameters and the configuration sources that have permission to set each of these parameters is defined by the platform operator.
The various sources of configuration data are processed in a specific order to arrive at a merged database of configuration values. The parameters that a configuration source can set are listed in the configuration signing certificate issued to the configuration source. The order the configuration sources are applied in and the parameters listed in each signing certificate determine which configuration sources are able to set and overwrite specific parameters. When manufacturer and ISP configuration files are processed, the valid parameters listed in the signing certificate are used to ensure manufacturers and ISPs only set or overwrite parameters they have permission for. This merging operation is repeated when any one of the configuration sources has changed.

### Acquisition of configuration information

Configuration information is obtained from a number of configuration sources and applied in a specific order. The order that configuration sources are applied in and the set of configuration permissions are used to control which of the configuration sources is able to set specific groups of parameters.

### Local configuration sources

The device contains two local sources of configuration: the manufacturer's default configuration and the platform operator's default configuration.

The manufacturer applies its default configuration to the Local Storage Repository before applying any other local or remote configuration.

The platform operator's default configuration is contained in the Platform Provisioning File provided as part of the Platform Software.

### Remote configuration sources

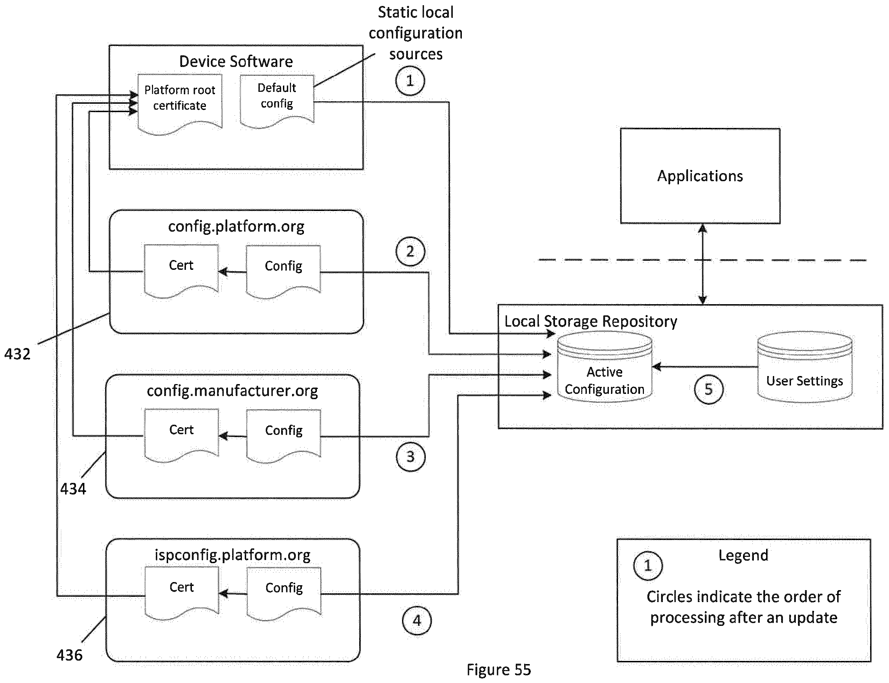

The remote configuration sources used to configure the device are as follows and are applied in the order defined here, shown in Figure 55.

1. The Platform Configuration File 432 is provided on the network by the platform operator at a predefined location. This location defines the URI the device uses to check for updates to the platform configuration and download the new configuration file if one exists.

2. The Manufacturer Configuration File is 434 provided on the network by the manufacturer at a predefined location. This location defines the URI the device uses to check for updates to the manufacturer configuration and download the new configuration file if one exists.

3. The ISP Configuration File 7014 can be optionally provided on the network by the user's ISP if the ISP is an affiliated ISP. The device uses a single pre-defined URI to check for updates to the ISP configuration and download the new configuration file if one exists. Redirection or other means allow the file to be served by the ISP themselves.

Figure 55 illustrates how the various sources of configuration information are managed.

### File format

The configuration sources listed above shall use the same file format.

Configuration files are provided as a simple XML document. The configuration file is signed using the method described below.

### Authentication

The platform operator manages a configuration signing CA certificate.
Each configuration file downloaded to the device is signed by the organisation that created it using their configuration signing key and packaged with their corresponding certificate signed by the platform operator.

Devices successfully verify the signature before applying the configuration parameters. If verification of the signature fails or verification of the certificate chain fails, as defined in the overarching trust model, the configuration parameters are not applied to the device.

The signature method is CMS, as defined in [RFC 5652] with an unencrypted data section and using RSA.

The configuration signing certificate is identified as the SignerIdentifier, as described in [RFC 5652] section 5.3.

This configuration signing CA certificate is provided in the CMS Certificates section.

### Certificate revocation

Manufacturers assert that no certificate in the configuration signer's certificate chain has been revoked using the certificate revocation list (CRL) installed in the Core Device Software.

### Access control

The list of parameters that a configuration source is allowed to set is defined in an X.509v3 Arbitrary Extension in each configuration signing certificate. The extension allows a set of parameter names and wildcards to be specified; for example, net.delivery.* to allow an ISP to set any parameters matching that name.

The X.509v3 extension is named 'configurationPermissions' and have an Object Identifier (OID) provided by the platform operator.
The 'configuration Permissions' extension shall be of ASN.1 type SET OF < UTF8String >.

### Download

Devices download new configuration data at regular intervals by using an HTTP/1.1 GET request with an If-Modified-Since header, quoting the date and time at which the last successful download of the relevant configuration file was achieved. If an Etag header was provided with a previous response, the device also uses an If-None-Match header quoting the Etag.

Devices follow HTTP redirections.

The device checks for a new configuration update and, if necessary, apply the changes each day as specified by the update interval defined in the local storage repository. The default setting for this is provided in the platform provisioning file. Configuration updates can alter the configuration update interval for the platform operator, manufacturer and ISP. Configuration update requests only occur at a randomly selected time within the configuration and update download window. Standard back-off mechanisms are used in the event of download errors. Refer to the *IP Content Delivery for Connected Television* specification for more details.

If a device has not successfully checked for a new configuration update for seven or more days it shall perform a configuration update.

Configuration updates can change the URI of the configuration update service. If a configuration update service URI fails five times the device uses the URI provided as part of the default platform configuration.

### Location

The device does not proceed with a configuration update until it has successfully downloaded a Platform Configuration File.

The device appends information about its manufacturer, model, current configuration version and current Platform Software version to the base URI to arrive at a complete URI to use for the configuration request:

http://[baseu ri]/[manufacturer]/[model]/[platform_software_ver]/[config_name] .xml where:

- [platform_software_ver] is the Platform Software version number extracted from the Platform
- Software Image Descriptor (PSID) of the downloaded Platform Software. The PSID is defined above.
- [config_name] is the name of the configuration to be applied retrieved from the Local Storage Repository.

The base URI of the configuration files can be changed by the configuration. However, in the event that a configuration file cannot be obtained from the modified location on five consecutive occasions, the device reverts to the default base URI for the next attempt.

The device is configured with a secondary base URI for configuration updates, and if configuration updates fail using the first base URI the device attempts the update using the secondary base URI.

Devices process manufacturer or ISP configuration files in the following way:

- If the download fails due to an authoritative response that the domain name (or a domain name referenced in an HTTP redirect) does not exist, the device treats that source as providing an empty configuration file and continue with the configuration update.
- If the download fails for any other reason (including but not limited to any non-authoritative DNS error, TCP/IP connection error, HTTP 4xx or 5xx response), devices treats this as a transient failure and continue to use the most recent successfully-merged configuration file for that configuration source, if one is available.

The URI to be used for the ISP configuration update is determined using a separate ISP discovery mechanism.

### Configuration update process

When the device determines that a configuration source has changed and has downloaded the new configuration using the method described above, the device updates the configuration database using a process equivalent to that described below:

1. Start a transaction so that configuration updates can be applied atomically.
2. Initialise the configuration database with the default configuration taken from the platform provisioning file that forms part of the Core Device Software.
3. For each of the last downloaded configuration files for platform, manufacturer and ISP configuration, in that order:

a) Verify that the signature of the configuration file is valid, and the certificate is issued by the configuration certificate and has not been revoked. If successful, for each parameter:

i. Check that the parameter name matches an element in the configurationPermissions X.509 certificate extension.

ii. If the source has the permission to set this parameter or the configurationPermissions extension does not exist and the parameter has changed then update the configuration value in the database with the value from the configuration file.

4. If all configuration updates were successful then commit the configuration update transaction, otherwise return the configuration database to its previous state.

5. Activate the newly updated configuration database.

6. For all parameters that have changed, create a notification of the change.

### Settings architecture

### Introduction

Within the Consumer Settings User Interface (CSUI), the Settings application must display a blended view of data aggregator provided Settings as well as Original Equipment Manufacturer (OEM) specific settings.

### Constraints

The system software is made up of a generic software image and a hardware specific software image. In simple terms: The generic piece contains the user interface and software logic parts, and is common to all devices. The manufacturer produces the hardware specific piece. The settings application is part of the generic software image; however it is extendible from the manufacturer software image to permit customisation of device model specific features. The two software images can be developed and deployed independently, thus the blending of settings has to be done at runtime on the device.

It is preferable that the Consumer Settings User Interface Look and Feel (CSUI LAF) is able to change over time, so the implementation should reduce dependencies on specific UI implementation.

There is a low barrier to entry for articulating settings, but there is also support for more fanciful set-ups.

Manufacturers can override generic Settings with their specific implementations.

### Architecture

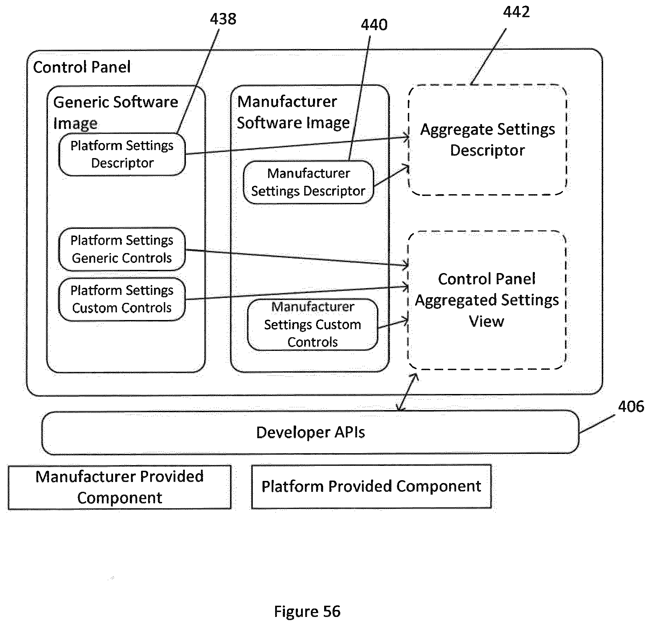

An example of the architecture is shown in Figure 56. The idea is that there is an XML schema (Settings Descriptor) 442 that describes a collection of settings in terms of a hierarchical structure (that can map to various User Experience (UX) navigation paradigms such as tree views, cascade list views, tabs) and logically refer to visual controls with defined parameters. The platform produces one Settings Descriptor 438 and the manufacturer produces one Settings Descriptor 440, the Settings Application shall default to the platform Descriptor 438 and merge the manufacturer one 440 in. An example fragment of XML is given in Appendix 2.

In one example there are no locale specific resource strings within the Descriptor, just references to the XML Localisation Interchange File Format (XLIFF) resource file.

The IDs are used for the merge step, to logically identify settings elements to be overridden. In one example, three merge operations are supported:

- Merge 444 - no clash. add setting
- Replace 446 - replace Aggregated Setting with Manufacturer version
- Delete 448 - remove Aggregated Setting

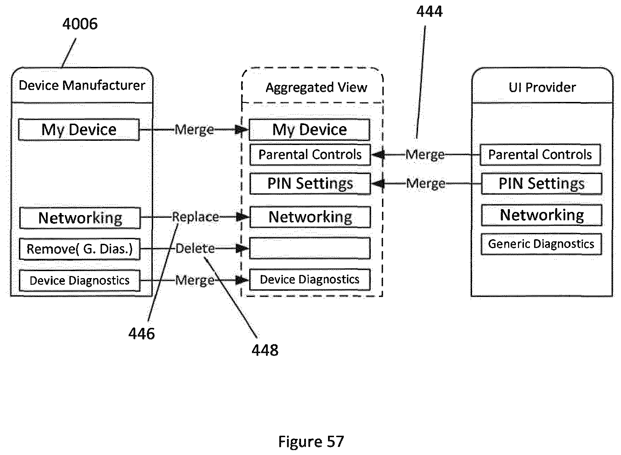

These merge options are shown schematically in Figure 57.

The class denotes by XML schema must comply with a standard interface thus all controls (whether GenericSettings or CustomSettings - it is merely a semantic difference, they are all treated equally).

### Implementation details

The setting nodes support the concept of multiple settings being stored in a single library Shockwave Flash (SWF) in addition to simpler one settings per SWF scheme. The rational is that certain 'stock' settings controls may share code for simplicity of development; by storing everything in one SWF can remove the need for external dependencies.

An example of how this could be implemented is that the Settings application will load the 'libraryFile' using Loader or a similar construct and then use 'getDefinitionByName' to resolve 'class' attribute. Example code for how this could be implemented is given in Appendix 3.

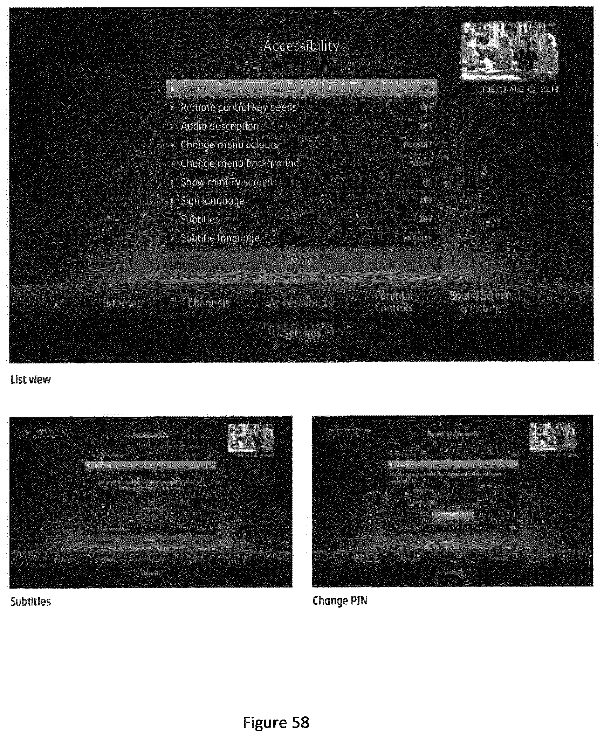

Figure 58 shows an example screen shot of the settings user interface. It should be noted that the range of settings accessible for the user to change is different to those that remote entities, such as manufacture and content providers, can change.

**Further CREDS (Content Rights and Entitlement Display System) Aspects**

CREDS is a system for indicating entitlement to content in a distributed merchant environment. The system is operated through a central search system. Even without the user being aware of his particular entitlement, the content that is available without additional cost to the user can be identified to him. To achieve this, each merchant (or provider) specifies for their content items whether the items are part of a package of subscription. Each time a user logs in, the system asks the provider whether the user has entitlement to content. The system does not however know directly what the user owns. Each merchant provides the information on the content that can be provided to a user. This concept is extensible to content that can either be purchased or consumed, and can further be applied to virtual media. For instance the purchase of an e-book can be handled by the same system. The system can be designed to show any content the user has entitlement to. It is possible to link the system to other media.

Assuming that some content providers make content available on a subscription basis, the UI ought to display which subscription plan each content item belongs to. This allows the user to determine which content belongs to a plan the user has already subscribe to (hence which content can be played immediately at no further cost); and which content the user needs to pay additional fees to view.

An exemplary display might list the following four content items with subscription information:

| Gone With The Wind | £0.99 / BT Gold subscription |
|---|---|
| 9MM | Lovefilm® Premier subscription |
| Top Gear | £0.99 / BBC WorldWide subscription |
| 39 Steps | Netflix® Movie Deals subscription |

The user has information that may not be helpful, and cannot immediately discern whether when any of these titles is selected it will play or it will request signup, registration, or payment first. The process of accessing content is laborious and inconvenient, and the user may not be inclined to consume any commercial content.

It would be very helpful for the user if it were clearly indicated which the content the user already owns (or, put formally, has an *entitlement* to) and is able to play instantly at no cost; and which content the user needs to sign up to or purchase first.

Continuing with the example from above, we will assume a scenario where the user is actually a subscriber to the BT Gold and Netflix® Movie Deals packages. A much more helpful display distinguishes content the user has entitlement to:

| Gone With The Wind | ✔ BT Gold |
|---|---|
| 39 Steps | ✔ Netflix® Movie Deals |
| *Also available* | |
| Top Gear | £ 0.99 / BBC WorldWide subscription |
| 9MM | £ Lovefilm® Premier subscription |

As can be seen, content that the user is able to play immediately at no additional cost - including free, ad supported and subscription content - is clearly shown in the UI, allowing users to seamlessly roam all available content rather than being presented with endless signup pages or having to remember which packages they own, when those packages expire, etc.

The user is additionally presented with content that they do not *yet* have an entitlement for, and can then make clear purchase decisions which could include signing up to that package or buying that individual video as needed.

The system for indicating entitlement to content in a distributed merchant environment is operated through a central search system. The content that is available without additional cost to the user can be shown, and the user does not need to keep track of subscription details for casual content consumption. On the basis of a set-top box platform, the user may have access to content as part of Internet Service Provider (ISP) subscription. Additional content is available free to air. Certain content may be available against payment, and other content may be available on subscription (e.g. Lovefilm® Netflix®, etc.). The freely available content may often be sufficient for the user's demands, and only occasionally does the need to buy additional content arise. Instead of showing all content regardless of entitlement, it is useful to distinguish content that is free and content that requires extra payment.

The CCO platform does not sell content to viewers. However, because it wishes to enable Content Providers to build business models on top of the platform, the metadata systems must be capable of modelling the pricing information for display to the users.

The premises for CREDS are:

- The CCO does not store user identifying information, or track user entitlement data. This key design principle has significant implications on the feature set that can be supported by this design. For example, it makes it impossible to implement a server-side "free to me" filter when browsing or searching content.
- User privacy is important. The design does therefore not call for the client to send large amounts of identifying information to CCO, such as a complete entitlements cache. This reinforces the impossibility of server-side "free to me" filtering.
- User interface performance is important. This does not specifically rule out or dictate any individual features, but is of great importance when considering overall scope of the pricing feature.
- The main user interface browses content, not products. The metadata structures and user experience have been based around hierarchies of content, and this suits free providers well. It would not be feasible to re-structure this to base browsing around a product-based paradigm, and that would also not suit all partners. However, it may be possible to introduce additional product-led browsing, such as a 'Special Offers' section of the user interface.
- The presented solution is only of a limited scope; however the pricing feature may be a significant feature.

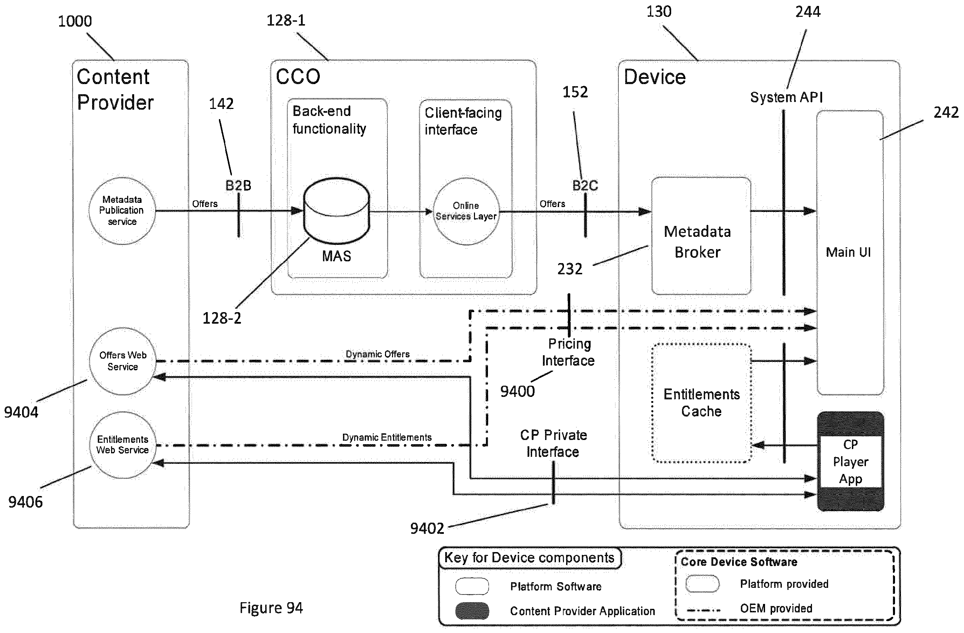

In Figure 94 the Content Providers 1000 submit information about their content and its pricing to the server 128 via the Business-to-Business interface 142. The client device 130 may then query this data using the Business-to-Consumer interface 152. The client UI app may additionally query dynamic pricing and entitlement information direct from a CP using the Pricing Interface 9400. Finally, the CP client app may communicate with the CP's own backend systems in whatever way they choose 9402.

A 'product' is a purchasable 'unit'. A Product is a collection of content entities to which a user may purchase an Entitlement. A product may be defined in terms of specific titles - one or more. A product may be defined in terms of a rule or set of rules to group a set of titles. Ultimately products are defined in terms of logic applied to content metadata, for instance:

- WHERE id = 00001122
- WHERE provider = 'Channel4' AND classifier = 'Comedy'

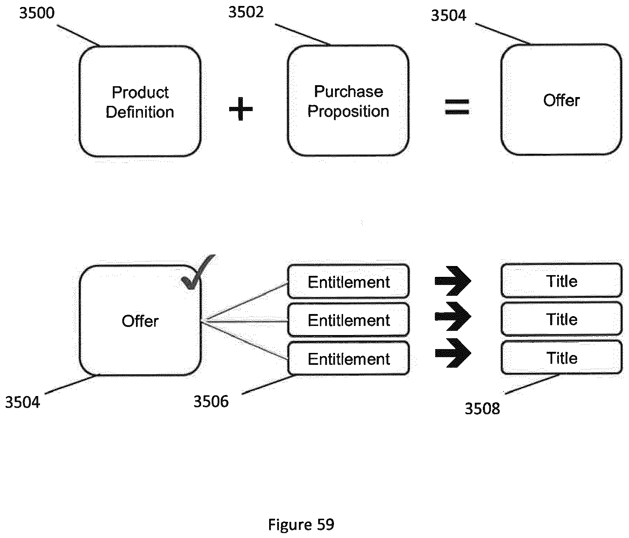

An Offer 3504 (Figure 59) is a purchase proposition for a specific Product. An offer is a *time-boxed* combination of a product definition 3500 and purchase proposition 3502, where:

- The product definition 3500 sets out the rules for capturing the titles being offered
- The purchase proposition 3502 sets out the terms under which the product is being offered

An 'entitlement' 3506 is a right to view/consume a title 3508, based on uptake of an offer. The user has entitlement to any piece of content that the user 'owns' as part of a subscription or other service.

A Product is a linking record, used to group content entities for the purposes of presenting an Offer for that group. It includes:

- An identifier, which is used to reference the Product throughout the platform
- A description of each Offer for that Product
- The URL on a Content Provider Pricing Web Service where the client may query the user's entitlement to the Product
- Optionally, the URL on a Content Provider Pricing Web Service where the client may dynamically query the available offers for the Product

An offer must include certain information:

- An identifier for the offer, which is opaque to the systems, and is passed through the Business to Business (B2B) and Business to Consumer (B2C) interfaces, to be interpreted by the Content Provider's application

- A title for the offer (required for subscriptions, optional for other offer types)
- A short title, which may be used as custom text for a "purchase" action button in certain user interfaces
- The price of the offer, if no dynamic pricing URL is provided for the Product.
- A synopsis (description) for the offer, which may be a description of the offer's terms, for example
- Images associated with the offer (currently only used for subscriptions)
- A set of classifiers. The important classifier here is one describing the type of the offer, as outlined in more detail below. Additionally, genre-type classifiers may be used to place the offer into a category, in a possible future scenario where an offer-browsing section of the UI may be added

As an On-demand Publication is the basic playable entity, the simplest Product is a Product containing a single On-demand Publication, which may be played by a user who is entitled to the Product. Additionally, more complex Products are supported by this design:

- A Product containing multiple On-demand Publications, any of which may be played by a user who is entitled to the Product.
- As well as On-demand Publication(s), a Product may contain one or more Series or Brands. These are not playable assets, and so do not entitle a user to play any content; rather they may be included in a Product for convenience. In such a case, these entities are indicated in the UI as free to a user who is entitled to the Product.

Editorial Versions and Episodes may not be included in a Product.

Eligible content entities may be placed into an arbitrary number of Products. However, if an entity is placed into multiple Products with the same type of Offer, the UI may display only the one with the lowest.

An Offer is a purchase proposition for a given Product. Products are made available according to one or more of the following purchase paradigms: Transactional, Subscription, Free, or Ad-Funded. The types of Offer supported in the embodiment presented here are:

- Free. This is the default proposition where no other Offers or Products are defined. To offer something for free, the Content Provider need not define an Offer or Product.
- Rental. This offers the entitlement to watch an item(s) for a defined, non-recurring period (e.g. 24 hours).
- Subscription. This offers the entitlement to watch an item(s) for a longer period of time, (e.g. 30 days) usually on a continual basis through recurring payments.
- Ownership. This offers the entitlement to watch an item forever (subject to it still being available from the content provider).

Rental, Subscription and Ownership offers may be defined as with or without advertisements. This allows a CP to submit two packages with the same Product contents and the same basic type of offer but with a full-price and a lower, advertising-supported price.

The basic format for an Offer is one whereby a price and some terms are defined as a purchase proposition for a Product. If the user purchases that offer, they become entitled to the contents of the Product. This is a Per-Product Offer, which leads to a Per-Product entitlement.

For convenience, an additional format of Offer is defined, the Per-entity Offer. In this case, the purchase proposition is for a single item. For example, a CP may wish to offer a large number of their content items, each for a 99p rental. They may group these into a single logical Product, because the purchase proposition for each item is the same. However, if a user purchases the offer for one of these items, the entitlement shall only apply to that item, not all items in the Product. This is a Per-entity Offer. In other words, a Per-Product Offer means "buy all these things for this price", whereas a Per-entity Offer means "buy any of these things for this price".

Content Providers can make content only available to certain users, through features such as Closed User Groups (CUGs) and Geographical targeting metadata. It should be noted that such restrictions may not be applied to Packages, so it is not possible to offer different prices for the same content to users in different locales or CUGs. However, the availability of the content within a Product dictates the visibility of an Offer; if none of the content within a Product is available to a particular user because of his location for example, then the Offer is not available to him either.

The following user interfaces may be used to display pricing and entitlements information.

**Programmes in the carousel:**

The carousel is a simple browse view, in which content entities are represented as images in a horizontally-scrolling list. The amount of data displayed about an entity is kept to a minimum, because otherwise the display may be confusing to users. Therefore, the pricing data displayed in this view is simple.

The following illustrates which data may be included. A Programme may be badged with:

- A simple play icon for free content (where one or more Publications of the Programme are free)
- A simple play icon for content to which the user is already entitled (where the user is entitled to one or more Publications of the Programme)
- A simple "pay content" icon for content for which the user will have to pay
- One rental price (the lowest price with or without adverts)
- One subscription price (the lowest price with or without adverts) or a subscription icon
- One purchase price (the lowest price with or without adverts)
- Some combination of the above prices

*Roll-up*

In the carousel view, rolled-up Series and Brands representing a multitude of individual Programmes may also be displayed alongside Programmes. No pricing or entitlements data from the child Programmes is rolled-up to the Series or Brand. However, the Series or Brand itself may be a member of one or more Product(s), in which case pricing or entitlement information for the Series or Brand itself may be displayed. A Series or Brand may be badged with:

- Nothing for a Series/Brand which is not a member of any Products
- Nothing for a Series/Brand which is a member of a Product to which the user is already entitled
- A simple "pay content" icon for a Series/Brand which the user may purchase an entitlement to
- One rental price for the Series/Brand (the lowest price with or without adverts)
- One subscription price for the Series/Brand (the lowest price with or without adverts) (or a subscription icon)
- One purchase price for the Series/Brand (the lowest price with or without adverts)
- Some combination of the above prices

For example, a Series is offered for £9.99 for rental, and each Programme in that series has a Publication which is available for a 99p rental. Depending on the user's entitlements, they may see a price or a play icon (or no icon for the Series, as this is not a playable entity) against each item when it appears. The same treatment could apply to a Brand as well as a series.

*Action Panel*

The Action Panel is a display where more information about a particular entity is presented. For Programmes, this panel is where Offers are presented. Here, there is more screen real-estate, and so more detailed information can be displayed. Options of what can be shown here include:

- A button for each available Offer (limited to one per Offer type)
- A button for each Offer, further limited, perhaps to the cheapest transactional price and the cheapest subscription price
- A description of each of the Offers, plus a single "buy" button, which passes the user to the CP player to select an Offer

Additional Offers may or may not be shown on a "more offers" tab of the action panel.

There are many ways of implementing the CREDS function. In the following section one possible approach is described.

The system is composed of three parts:

1. At the point that content providers push their content metadata into the metadata aggregation system (MAS), they include not just the price point (for pay-per-download content) but also the name of any subscription packages that the content is available as part of.
2. When the UI has a list of programmes to display in the UI, instead of just listing all the price points and subscription names, it first makes a call to each of the content providers associated with the subscription that each result belongs to, to determine if the user is a member of that subscription.
3. The UI then sorts and filters the results based on content that the user has an entitlement to vs. content that the user needs to purchase.

In further detail:

1. Ingesting content into the MAS: In a conventional system, when a content provider sends programme metadata to the MAS, the provider is able to include an optional price point, plus a URL where the user device is able to do a real-time lookup of that price point at the point the programme is displayed as a search result, e.g.:

TopGear Episode 12
£0.99
https://bbc.com/packagecheck.aspx

The data that the content provider is able to specify additionally includes a set of optional subscription package names, along with a user-friendly description for each of those packages, e.g.

TopGear Episode 12
£0.99
bbcww_premium / BBC WorldWide Premium Subscription
https://bbc.com/packagecheck.aspx

This tells the MAS that TopGear Episode 12 is available either for individual file purchase for £0.99, or is available as part of the bbcww_premium package.

2. Determining if the user has a package entitlement: In order to fulfil the real-time lookup of whether a given user is a member of any of their subscription packages, each participating content provider who wishes their content to be flagged as part of the CRED system would need to implement a web service that takes as input a package name and user credentials, and returns as a response:

- a flag indicating whether the user is a current subscriber to that package or not
- if yes, the date and time that the user's subscription to this package expires

The UI can then make a call to the content provider for each listed package, to check whether the user is a member of that package. The procedure here is not dissimilar to that already envisaged as part of the dynamic price lookup plan. In the example above, the user device would make a call to

https://bbc.com/packagecheck.aspx

passing it the package name ("bbcww_premium") along with any user credentials stored in the user cookie associated with that domain.

3. Presenting the results in the UI: Now, anytime that the UI displays file search results, on-demand category lists, etc., instead of listing all the programme titles and price points, the UI sorts and filters the results based on content that the user has an entitlement to vs. content that the user needs to purchase.

In the above described implementation, each provider determines if a particular content item is part of a user's package of subscription content. When a user logs in, the system goes to the provider to ask whether the user is entitled to the content. There is no need for an ownership list, or for the system to compile information on each content item the user has entitlement to.

The same concept is applicable to other content that can either be purchased or directly consumed, for instance virtual media such as e-books.

### CCO metadata interfaces and processing

As illustrated in Figure 94, the Content Providers 1000 may submit pricing metadata to the CCO 128-1 via the Business-to-business interface 142, and this data (often in a denormalised form) is made available to client devices 130 via the Business-to-consumer interface 152. The form this process takes is described in more detail here.

### Business-to-business interface

The Content Providers may submit Product-Offer Records as a Package Fragment in the TV-Antyime Business-to-business interface. These fragments describe both a Product and its associated Offer(s), and are identified by a unique identifier (a CRID). It should be noted that packages themselves do not have availability dates. It is up to the Content Provider to manage the availability of their offers, amending or deleting them as necessary using the B2B interface.

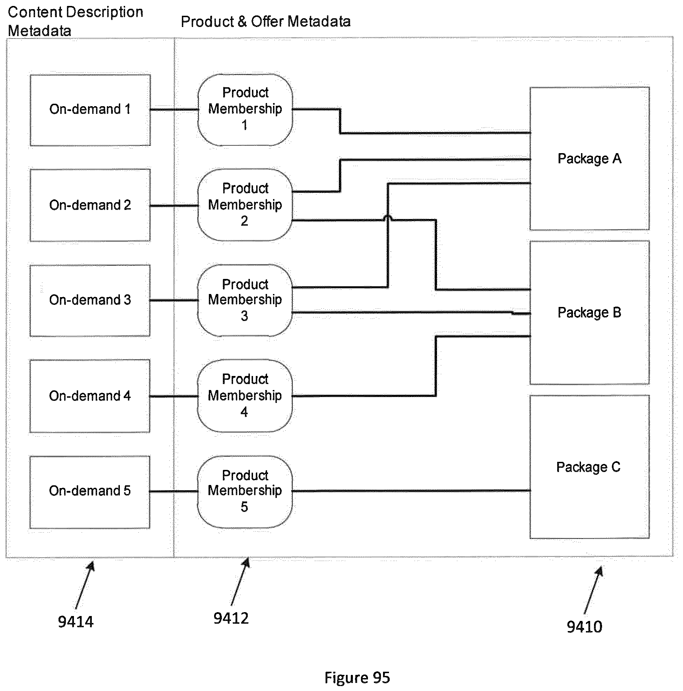

The Package fragments (9410 Figure 95) do not directly list the content entities which are included in the Product being represented. This is because the list of entities could become very large, for example with large subscription products. If updating the product definition involved re-submitting the entire list this would be technically onerous for both the CP and CCO. Instead, Product Membership Fragments 9412 are supplied in addition to the Package fragments 9410 and the content description fragments 9414 themselves. These Product Membership Fragments 9412 are the "glue" which joins content entities and Products. Each one contains the CRID of one content entity, limited to On-demand Publications and Group Records (Collection, Series or Brand), and the CRID(s) of the Package(s) to which that entity belongs.

Figure 95 illustrates how the Product Membership Fragments 9412 may be used to place multiple On-demand Publications 4914 into multiple Packages 9410 in different combinations.

The Package fragment contains inline information about each Offer which is available for the Product. The offer information represented is as described above. The Offer may include a private identifier, which may be of any format chosen by the Metadata Originating Party. The Package also includes information as to whether it contains Per-Product Offer(s) or Per-entity Offer(s).

### Denormalisation and processing

CCO is required to do some processing on pricing information internally. The pricing information supplied in a highly normalised form at the B2B must be denormalised so that it may be exposed on the B2C against the content entities to which the prices are attached.

The first processing to be done is some ingest business logic and validation. The number of Products to which any entity can belong is limited, and Product Membership Fragments containing too many Product IDs are rejected. Additionally, a Package Fragment may only contain one of each type of Offer, and any duplication causes the Package to be rejected.

Denormalisation is performed so that simplified pricing information is presented at the Programme level, based upon the pricing information provided for its child On-demand Publications. However, no denormalisation takes place upwards from the Programme level. In other words, Publication pricing is not indicated at Series or Brand level in the B2C.

No inheritance is performed on pricing information. If a Series or Brand is included in a Product, this membership is indicated against that entity in the B2C but not inherited by child entities. Entitlements to these group entities do not enable the viewer to play any assets. Instead, the inclusion of a Series or Brand in a Product simply causes it to be indicated as purchased to a viewer who has purchased the Product.

### Business-to-consumer interface

The B2C interface utilises a dedicated endpoint to expose pricing information. Additionally, some summarised information is provided against content entities. This allows the client device to offer a way to browse the contents of a Product (e.g. when "buy series" is presented, the user could click to see what episodes that includes).

The B2C interface offers a dedicated endpoint for retrieving Offers. It returns offers for a Brand, Series, On-demand Publication or a Programme. In the latter case, the list of Offers returned is the union of all Offers for all currently available Publications of that Programme.

The Offers endpoint returns an Atom document in the same way as all other B2C XML endpoints. Each entry in the feed describes an offer, including some information about the Product to which it applies, using the following format:

```
<entry>
        <yv: entityType>offer</yv: entityType>
        <id>{the CP-supplied ID of the Offer}</id>
        <title>{the Offer title}</title>
        <yv:shortTitle>{an optional short title, used to populate an action button in the
UI}</yv:shortTitle>
        <summary>{an optional brief description of the Offer, such as its
terms}</summary>
        <yv:publicationId>{where the endpoint is called with a Programme ID, each
Offer includes this element, containing the CRID and IMI of the child Publication
(concatenated, separated with a #) to which the Offer applies}</yv:publicationId>
        <yv:productId>{the CCO ID of the Product to which this Offer
applies}</yv:productId>
        <yv:productCRID>{the CP-supplied CRID of the Product to which this Offer
applies}</yv: productCRID>
        <yv:offerType>{the type of this Offer (rental, subscription, ownership, with or
```

```
without adverts}</yv:offerType>
        <yv:price>{the price of this Offer}</yv:price>
        <yv:currency>{the currency of this Offer's price}</yv:currency>
        <yv:offersURL>{the URL on a CP Pricing Web Service where the current
Offers for the Product may be queried}</yv:offersURL>
        <yv:entitlementsURL>{the URL on a CP Pricing Web Service where the
user's entitlement to the Product may be queried}</yv:entitlementsURL>
</entry>
```

### Programme

The B2C interface presents two views of the Programme entity, a full representation and a summary. The Programme Summary is used to populate the Carousel view in the user interface. Only basic information is required in order to badge the Programme with pricing information, and that information is based on Offers made for any of the child On-demand Publications. Up to three elements are included, one for each type of Offer (rental, subscription, ownership). The element text is the price of the lowest available offer of that type, from any available On-demand Publication of the Programme. If no Offers of a particular type are available, the relevant XML element is excluded from the feed.

For example, a Programme with an SD rental available for 99p, an HD rental available for £1.99, a subscription package available for £9.99 and an SD ownership offer would have the following elements:

```
<yv:rentalOffer>0.99</yv:rentalOffer>
<yv:subscriptionOffer>9.99</yv:subscriptionOffer>
<yv:ownershipOffer>1.99</yv:ownershipOffer>
```

In addition, the client device calculates if the user is already entitled to one or more Publications of the Programme. To do this, it uses the CRIDs and IMIs of each On-demand Publication and the Product CRIDs for each Offer which includes any of those Publications. These are indicated with zero or more <yv:ondemandId> and zero or more <yv:productCRID> elements.

Under circumstances a currency can be included for each Offer. If Offers are available in multiple currencies, a mechanism is included to convert currencies and determine the lowest price.

The full Programme need not include any pricing information, as the client device is expected to query the Offers endpoint in order to retrieve all offers when displaying full Programme information.

When a Series or Brand is displayed in the user interface, pricing and entitlement information may be displayed for the Series or Brand itself. The information required is similar to the Programme summary, being a simplified form of all the available offers.

Up to three elements are included, one for each type of Offer (rental, subscription, ownership). The element text is the price of the lowest available offer of that type. If no Offers of a particular type are available, the relevant XML element is excluded from the feed.

For example, a Series with an SD ownership Offer available for £9.99, an HD ownership Offer available for £14.99, a subscription package available for £12.99 and no rental Offers would include the following:

```
<yv:ownershipOffer>9.99</yv:ownershipOffer>
<yv:subscriptionOffer>12.99</yv:subscriptionOffer>
```

In addition, the client device needs to calculate if the user is already entitled to the Series or Brand. To do this, it needs the CCO Product ID for each Per-Product Offer to which the Series/Brand belongs. These is indicated with zero or more <yv:productCRID> elements.

### Client metadata handling

As CCO does not store identifying user information, it is necessary for the client device to ascertain whether the user is entitled to each Product. In order to be able to calculate which content is free to the client, the client device needs to keep a cache of the user's entitlements.

In order to cache Per-Product entitlements, the cache must contain:

- The CRID of the Product to which the entitlement applies
- An (optional) expiry time for the entitlement

For Per-entity entitlements, the cache instead needs to cache:

- The CRID and IMI of the On-demand Publication to which the entitlement applies
- An (optional) expiry time for the entitlement

For each Programme in a browse or search view, it is then possible for the client device to compare the Product CRIDs and the CRIDs and IMIs of Publications to those stored in the entitlements cache. Where a match is found, the user is entitled to a Publication, and thus the parent Programme is marked as free-to-me. The same comparison may be done for Series and Brands, using only Product CRIDs; if any CRIDs stored against the Series or Brand match those stored in the entitlements cache, then the entity is marked as free-to-me.

In order to allow entitlements management locally to the device, and to enable a Content Provider to manage entitlements without requiring a Pricing Web Service, an Application Programming Interface (API) is exposed on the device which allows client applications to add, remove and query entitlements from the cache. The basic methods are getEntitlement(), setEntitlement(), removeEntitlement(), though variants for each may be required in order to manage entitlements based on both Product CRIDs and Publication CRIDs/IMIs.

- The getEntitlement() method accepts a CRID (or CRID/IMI) and return the expiry of the entitlement, or a response indicating that no entitlement exists.
- The setEntitlement() method accepts a CRID (or CRID/IMI), a type (rental, subscription, ownership), and an expiry date-time. It need only return a success/failure notification.
- The removeEntitlement() method accepts a CRID (or CRID/IMI) and return a success/failure notification.

Modifying an entitlement is achieved using setEntitlement, whereby if an entitlement already exists with the same type and CRID (or CRID/IMI) then it is simply overwritten. The security model ensures that an app only has access to read/remove entitlements it has set.

There are four possible filtered views of content, which could be made available in a browse or search listing.

- Free: Only content which is cost-free is displayed. This means content which is free to everyone. Programmes with any free Publication are included, as are rolled-up Series or Brands which have any free Programmes.
- Paid: This view shows content which has an associated cost, be it transactional or subscription-based. Programmes with any paid Publication are included, as are rolled-up Series or Brands which have any paid Programmes.
- Free to me: This filter shows only content which is free to a particular user, based upon their entitlements. It may be described as the results of the Free filter, plus any content to which the user already owns an entitlement. Programmes with any free (to the particular user) Publication are included, as are rolled-up Series or Brands which have any free (to the particular user) Programmes.
- Paid to me: Content which is available to the particular user for a cost. It may be described as the results of the Paid filter, minus any content to which the user already owns an entitlement. Programmes with any paid (to the particular user) Publication are included, as are rolled-up Series or Brands which have any paid (to the particular user) Programmes.

Free-to-me and Paid-to-me are supported by a client-side comparison of the content's packages and the entitlements cache. Server-side free-to-me and Paid-to-me can additionally be supported in an alternative embodiment. Sorting by price could be supported if server interaction were enabled.

***Entitlements API***

In one example, to allow entitlements management locally to the receiver device, and to enable a Content Provider to manage entitlements without requiring a compatible Pricing Web Service, an Application Programming Interface (API) is exposed on the device which allows client applications to add, remove and query entitlements from the store.

The basic methods will be getEntitlement(), setEntitlement(), removeEntitlement(). The getEntitlement() method accepts an identifier (i.e. a CRID or a CRID/IMI) and returns the expiry of the entitlement, or a response indicating that no entitlement exists. The setEntitlement() method accepts a CRID (or CRID/IMI), an offer type type (rental, subscription, ownership), an entitlement type (ondemand or product) and an expiry date-time. It need only return a success/failure notification.

The removeEntitlement() method accepts a CRID (or CRID/IMI) and returns a success/failure notification. Modification of an existing entitlement may be achieved using setEntitlement(). If an entitlement already exists with the same type and CRID (or CRID/IMI) then it is simply overwritten.

**Content Provider application hand-off**

When a user plays a Publication, or requests to make a purchase, the existing application hand-off mechanism is used. This employs a key-value pair method for passing data to the CP application. The pricing information which is passed is the CP-supplied ID of the Offer which the user has selected.

**Content Provider Pricing Web Service**

Content Providers may wish to provide a Pricing Web Service (PWS), which enables client devices to dynamically query pricing-related information direct from the CP. Two types of dynamic information may be provided:

- Dynamic Offers - in this scenario, the CP may provide up-to-date Offers, tailored to the particular user and the time of the request. (9404 Figure 94)
- Dynamic Entitlements - in this scenario, the CP provides a means by which a client device can query a user's entitlement to a Product. (9406 Figure 94)

The dynamic Offers service is an XML web service which accepts a URL parameter product, in which the client device may provide a Product CRID, or multiple Product CRIDs separated by pipe characters (|). The PWS returns an XML response in the Atom format, as used by the B2C Offers endpoint. The following B2C elements are however not required and are absent from a PWS response:

- yv:productId (the CP has no knowledge of CCO Product IDs, and so cannot provide this information
- yv:publicationId
- yv:offersEndpoint

Multiple Offers may be returned for each Product, each one being represented as an entry in the Atom feed. It should be noted that Offers are queried from a PWS using a Product CRID. This means that Offers may only be returned for Products which are already defined in CCO. CPs are therefore not able to use a PWS to create new Products outside of CCO. Similarly, because the Offers returned apply to Products and not individual Entities, a PWS may be used to make a new offer for a Per-entity Product, but not for individual entities within it.

The dynamic Entitlements service is an XML web service which accepts a URL parameter product, in which the client device may provide a Product CRID, or multiple Product CRIDs separated by pipe characters (|). The PWS returns an XML response in the Atom format. Each entry in the feed represents a Product, and the <id> element of the entry contains the Product CRID. For each Product queried, there are four possible conditions:

1. If the user is not entitled to that Product, then no entry for that Product appears in the feed. This means that if the user is entitled to none of the Products queried, the response is an empty atom feed.

2. If the Product is offered in a Per-Product manner (i.e. if entitlement to the Product entitles the user to all entities within that Product) and the user is entitled, the Product is included in the response. All that is required is an entry with the Product CRID:

```
<entry>
        <id>crid://... </id>
</entry>
```

3. If the Product is offered in a Per-entity manner (i.e. if the user purchases entitlement to a single Publication within the Product, not the whole Product) then the response includes the CRID and IMI (separated by a #) of each Publication to which the user is entitled:

```
<entry>
        <id>crid://...</id>
        <yv:publicationId>crid://...#imi</publicationId>
        <yv:publicationId>crid://...#imi</publicationId>
        <yv:publicationId>crid://...#imi</publicationId>
</entry>
```

Based upon the response, the client device can then update its entitlements cache with the entitlements provided.

*User identification*

A possible mechanism for the PWS to identify a device is via a CP Portal that must be launched once, whereby a negotiation can take place with CP backend, resulting in a user ID (unique to the user and specific to the CP) which may be stored on the device. This CP-specific user ID may be stored on the device as a cookie, an LSR value, or an additional table in the entitlements cache.

*Security*

The PWS need not apply any security or encryption. This is because the requests and responses never actually entitle a user to play any content; rather they simply affect the display of items in the user interface. Should a user or another malicious party intercept and alter the responses from a PWS, the user would not be able to play any content to which they are not entitled, as final entitlement checks are carried out privately by a CP's application and media or DRM servers at playback time.

**CREDS: Entitlements and Offers** - **Examples**

Following examples illustrate viewer scenarios relating to entitlement:

- The viewer understands which content can be played immediately at no further cost.
- The viewer understands which content can be played immediately as a result of CP packages to which the user has subscribed.
- The viewer understands which content cannot be played immediately without incurring further cost.
- The viewer understands the offers available for purchasing content.
- The viewer can select from the offers available for purchasing content, quickly accept the offer and then view the content.

Following examples illustrate content provider scenarios relating to entitlement:

- The content partner can offer products on a free-to-all basis.
- The content partner can offer products on a transactional (e.g. pay-per-view) basis.
- The content partner can offer products on a subscription basis.
- The content partner can offer products on an explicitly ad-funded basis.
- The content partner can offer products on a time-limited discounted basis, clearly indicating this to the viewer.
- The content partner can construct products containing a single title, and present these products as purchasable items in an appropriate part of the listings.
- The content partner can construct products containing many titles, and present these products as purchasable items in an appropriate part of the listings.
- The content partner can quickly update pricing for specific products.
- The content partner can dynamically price content on a per-user, per-title basis.
- The content partner can clearly define and present price promotions for products.
- The content partner can clearly signpost a title's membership of a purchased or available subscription, so as to reinforce the value of the content partner's subscription packages.

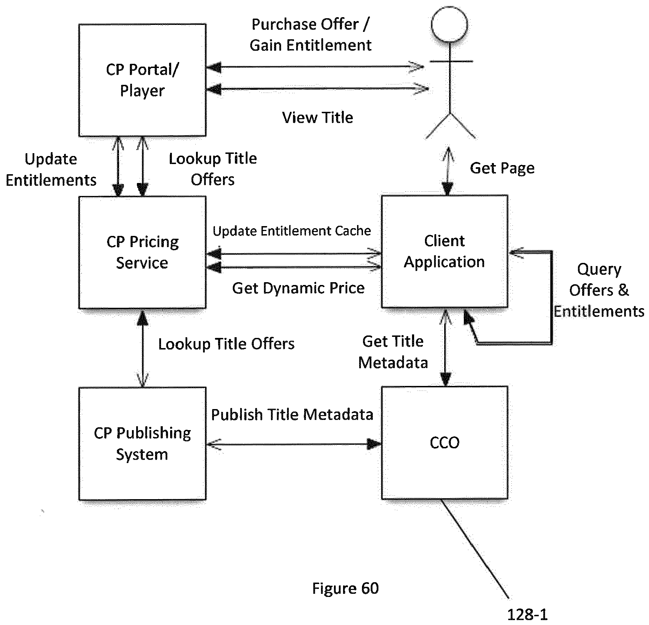

Figure 60 illustrates an overview of a system with offer/entitlement features.

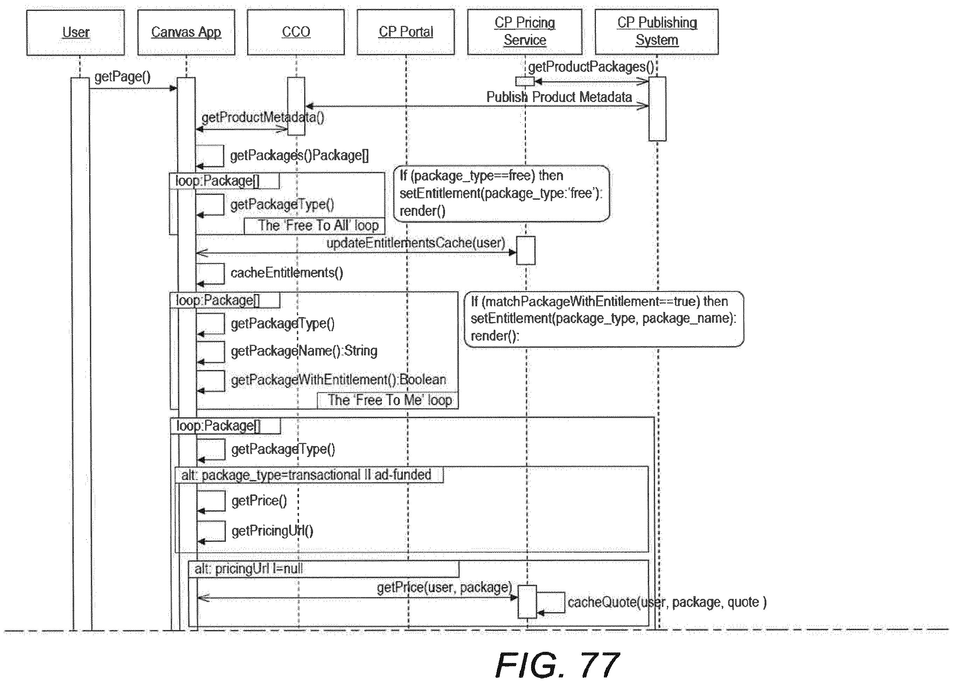

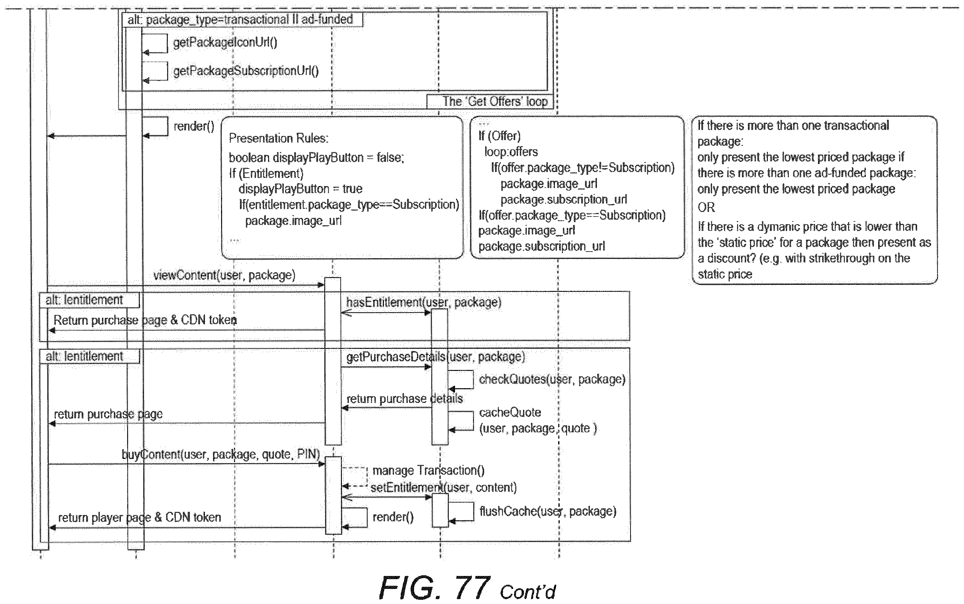

Figure 77 shows a sequence diagram of a system with offer/entitlement features. A generic example of pricing/packaging logic may include the following steps:

```
Get list of packages
For each package in list: check package types
if (package_type "free" is not found) then
   Update & Query entitlements cache
   if (entitlement does not exist) then
     Where (package type == 'transactional' ‖ 'ad funded') then
         For each package in list: get price for package
               if (price != null) then
                     'store' [package, static price]
         For each package in list: get price url for package
```

```
if (price URL != null) then
        lookup price on CP pricing server (or could just pass the URL
        back, and call out from the client)
        'store' [package, dynamic price]
        Where (package type == 'subscription') then
For each package in list: store subscription details
'store' [package, image url, subscription url]
Present page -> play button is disabled;
Subscription packages -> image is presented for each subscription package
Transactional & Ad funded packages :
    if one price exists then present this price
    if two prices exist (i.e. static & dynamic)
        if dynamic price = static price then present this price
        if dynamic price < static price then 'special offer' (present both, with
        static price struck through)
        if dynamic price > static price then ERROR
        if (package_type "free" is found ‖ existing entitlement is found) then
present page -> play button is enabled; no further pricing information is presented.
```

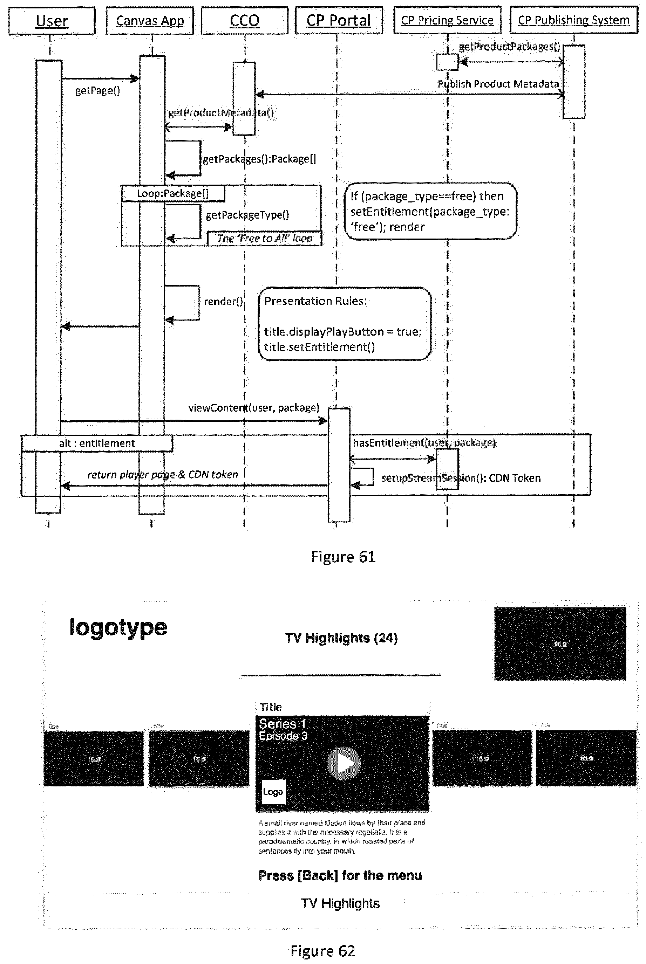

Figure 61 illustrates a scenario where the content is free. This may be implemented via content metadata, for instance:

```
<Product id="456">
        <Title>Fish Called Wanda</Title>
        <Packages>
                <Package package_type="free" />
        </Packages>
</Product>
```

Figure 62 shows an example of a display presented to the user in the scenario where the content is free. Because content is free the play button is rendered. Because content is free there is no further pricing information presented.

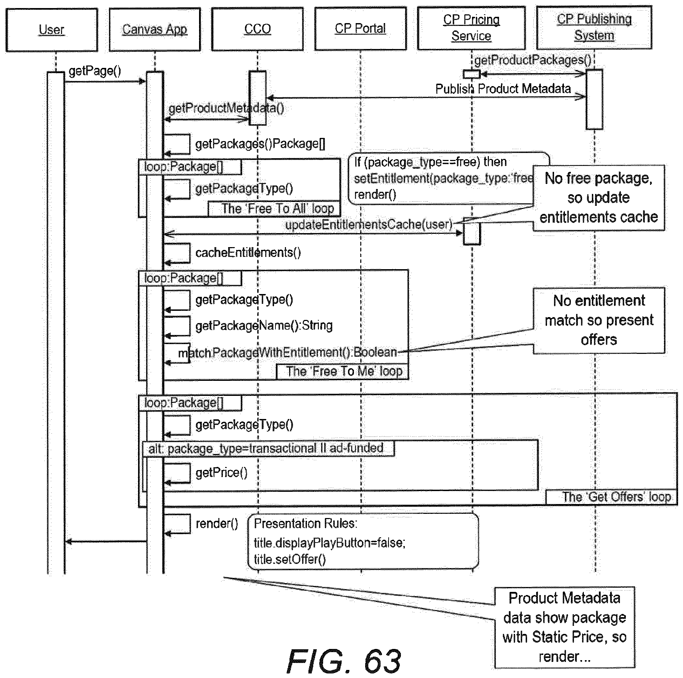

Figure 63 illustrates a scenario where the content is pay-per-view, with a static price. In this case the content metadata would reflect this, for instance:

```
<Product id="456">
        <Title>Fish Called Wanda</Title>
        <Packages>
                <Package package_type="transactional">
                        <Name>FishCalledWanda_T_0299</Name>
                        <Price>2.99</Price>
                </Package>
        </Packages>
</Product>
```

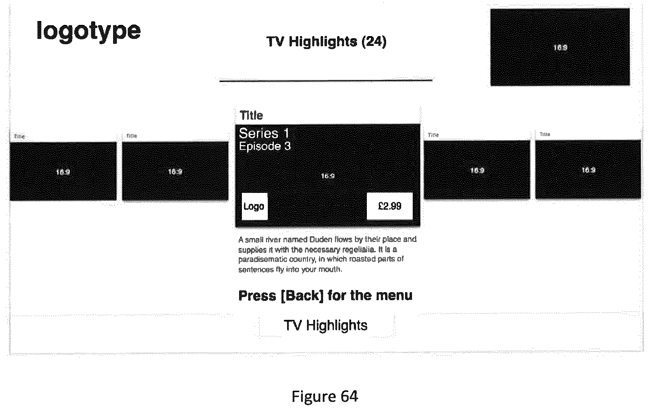

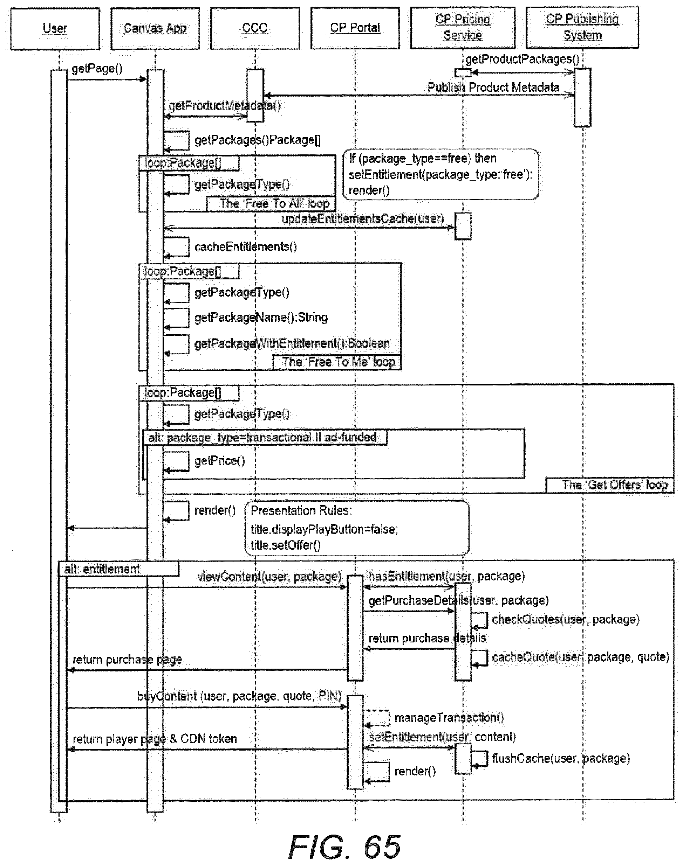

Figure 64 shows an example of a display presented to the user in the scenario where the content is pay-per-view, with a static price. Because the viewer does not own an entitlement the play button does not appear. Because the content is available on a transactional basis, with a static price, that price is presented. Figure 65 illustrates the process of a purchase transaction. On 'Select' the viewer is taken to the relevant supplier's portal to complete the transaction, and thereon to view the content. Thereafter, if the entitlement persists (for 24 hours, for example), when the viewer returns to the listing within the application they are presented with the screen shown in Figure 63 (i.e. no price is presented, and the play button is presented). Once the entitlement expires the viewer is presented with the original screen (Figure 64).

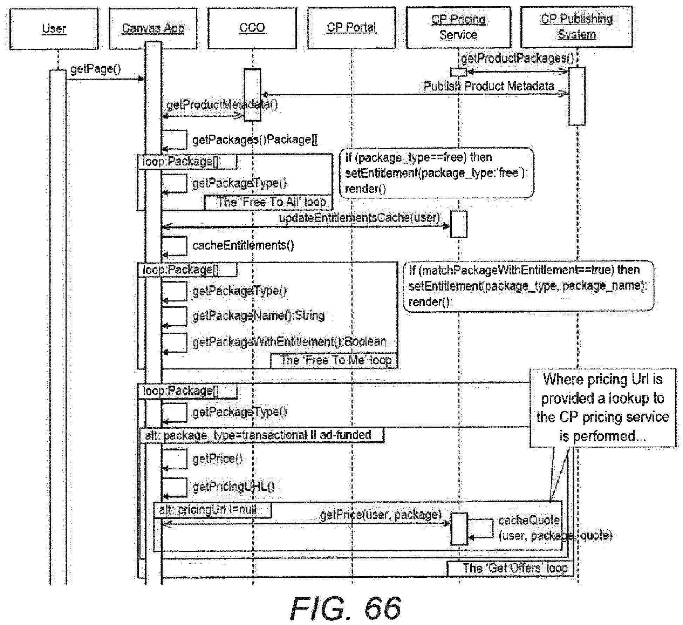

Figure 66 illustrates a scenario where the content is pay-per-view, with a dynamic price. In this case the content metadata would reflect this, for instance:

```
<Product id="456">
        <Title>Fish Called Wanda</Title>
        ...
        <Packages>
                <Package package_type="transactional">
                        <Name>FishCalledWanda_T</Name>
                        <Pricing_URL>
        http://creds.lovefilm.co.uk/price?user_id=123&product_id=456
                        </Pricing_URL>
                </Package>
        </Packages>
</Product>
```

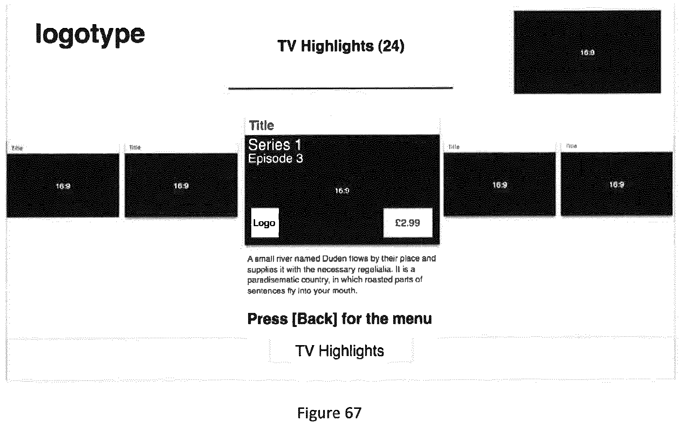

Figure 67 shows an example of a display presented to the user in the scenario where the content is pay-per-view, with a dynamic price. The viewer is unaware as to the dynamic nature of the pricing - it appears exactly as it did in the previous (static) scenario. The process of a purchase transaction is same as in the previous (static) scenario.

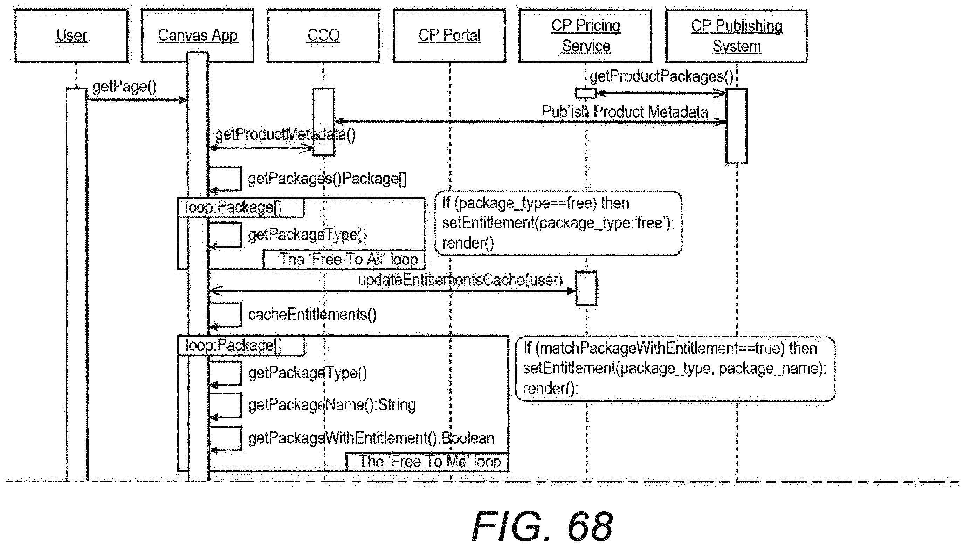

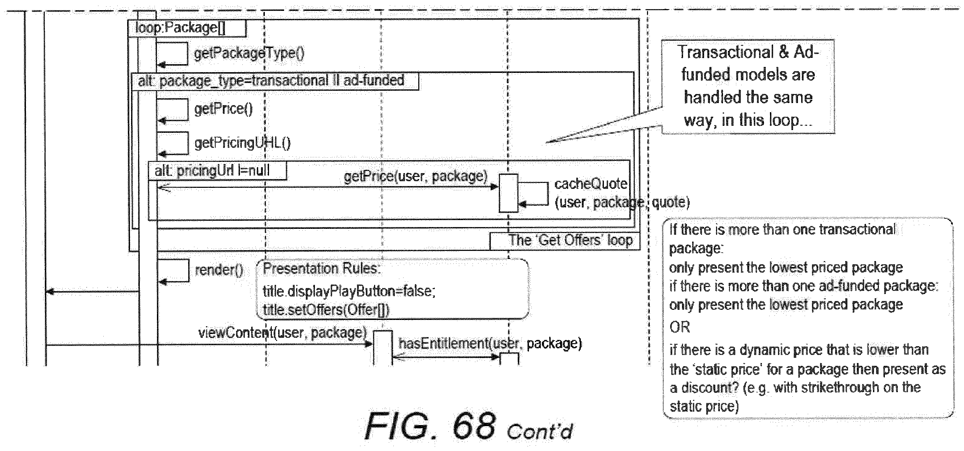

Figure 68 illustrates a scenario where the content is pay-per-view, with and without advertisements. In this case the content metadata would reflect this, for instance:

```
<Product id="456">

        <Title>Fish Called Wanda</Title>
        ...
        <Packages>
                <Package package_type="ad-funded">
                        <Name>FishCalledWanda_A</Name>
                        <Pricing_URL>
        http://creds.lovefilm.co.uk/price?user_id=123&product_id=456
                        </Pricing_URL>
                </Package>
                <Package package_type="transactional">
                        <Name>FishCalledWanda_T</Name>
                        <Pricing_URL>
        http://creds.lovefilm.co.uk/price?user_id=123&product_id=456
                        </Pricing_URL>
                </Package>
        </Packages>
</Product>
```

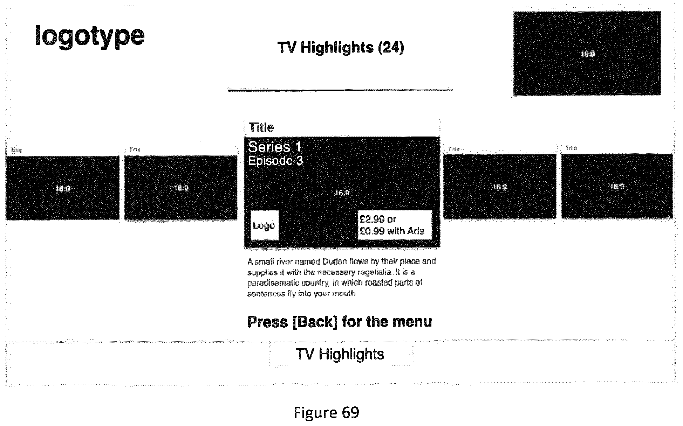

Figure 69 shows an example of a display presented to the user in the scenario where the content is pay-per-view, with and without advertisements. The process of a purchase transaction is same as in the previous scenarios (static and dynamic price).

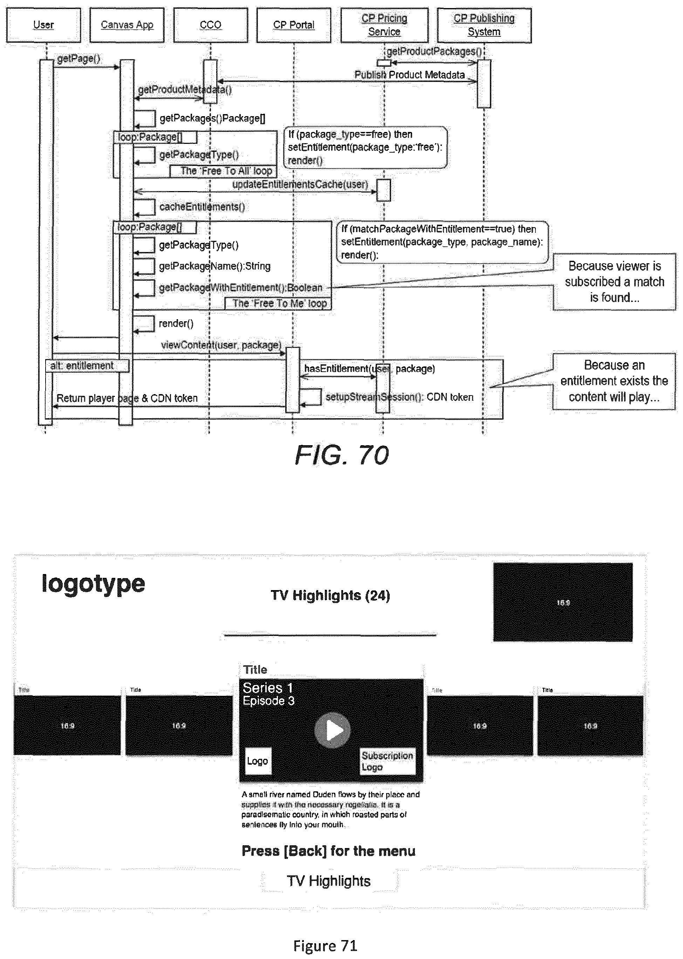

Figure 70 illustrates a scenario where the content belongs to a single subscription package, to which the viewer is already subscribed. In this case the content metadata would reflect that it belongs to a subscription package, for instance:

```
<Product id="456">
        <Title>Fish Called Wanda</Title>
        <Packages>
                <Package package_type="subscription">
                        <Name>Love Film Gold</Package_Name>
                </Package>
        </Packages>
```

```
        </Product>
```

Figure 71 shows an example of a display presented to the user in the scenario where the content belongs to a single subscription package, to which the viewer is already subscribed. As the entitlement exists the play button is presented. As the entitlement exists because of an existing subscription, the logo for that subscription is presented.

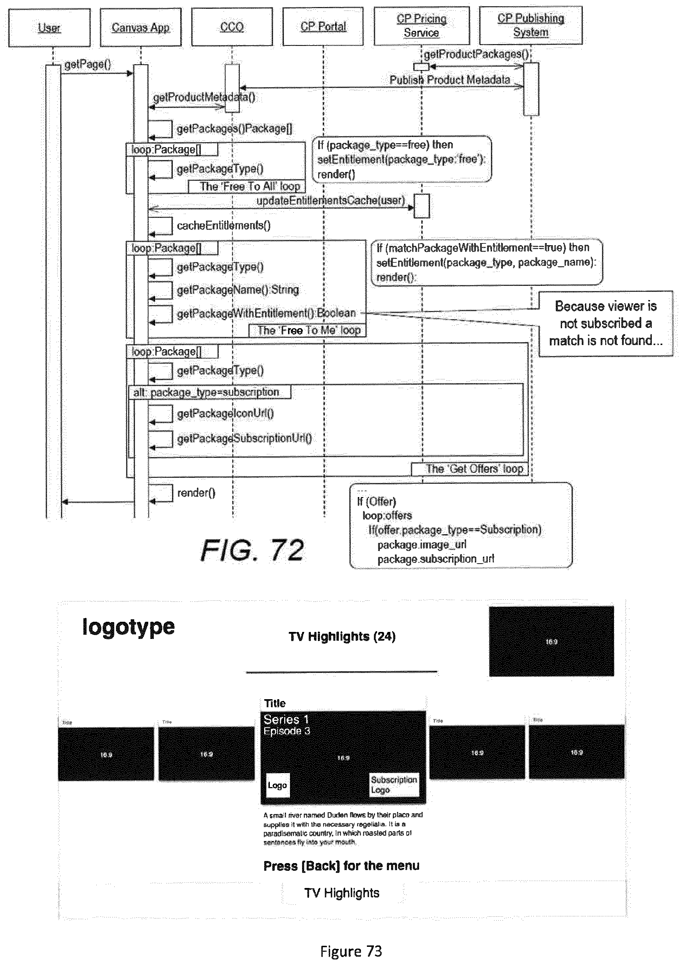

Figure 72 illustrates a scenario where the content belongs to a single subscription package, to which the viewer is not subscribed. In this case the content metadata reflects that it belongs to a subscription package, for instance:

```
<Product id="456">
        <Title>Fish Called Wanda</Title>
        <Packages>
                <Package package _type="subscription">
                        <Name>Love Film Gold</Package_Name>
                </Package>
        </Packages>
</Product>
```

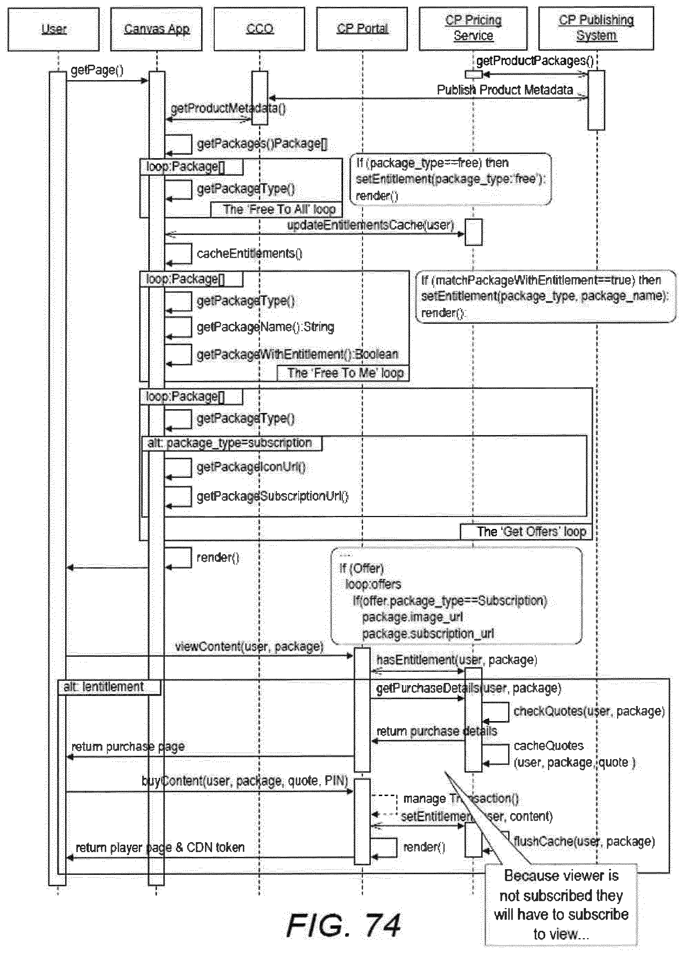

Figure 73 shows an example of a display presented to the user in the scenario where the content belongs to a single subscription package, to which the viewer is not subscribed. As the entitlement does not exist the play button is not presented. The logo for that subscription is presented, which when selected takes the viewer to the portal page where they can subscribe. Figure 74 illustrates the process of a subscription transaction, similar to the purchase transactions described above.

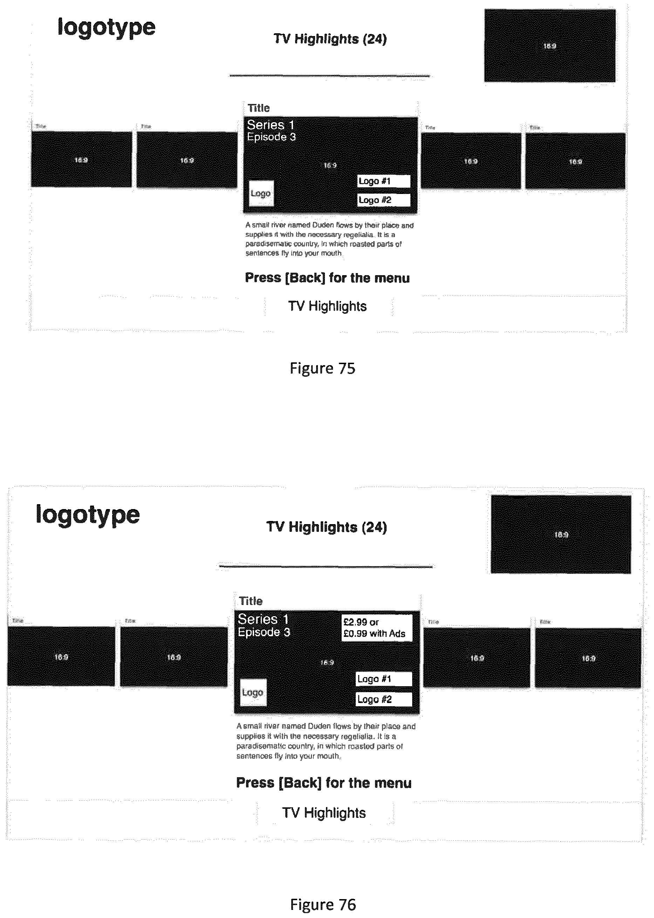

Figure 75 shows an example of a display presented to the user in a scenario where the content belongs to multiple subscription packages. In this case the content metadata reflects this, for instance:

```
<Product id="456">
        <Title>Fish Called Wanda</Title>
        <Packages>
                <Package package_type="subscription">
                        <Name>Love Film Silver</Package_Name>
                </Package>
                <Package package _type="subscription">
                        <Name>Love Film Gold</Package_Name>
                </Package>
        </Packages>
</Product>
```

Figure 76 shows an example of a display presented to the user in a scenario where there are multiple offers (transactional and subscription) for the content. In this case the content metadata reflects this, for instance:

```
<Product id="456">
        <Title>Fish Called Wanda</Title>
        <Packages>
                <Package package _type="subscription">
                        <Name>Love Film Silver</Package_Name>
                </Package>
                <Package package _type="subscription">
                        <Name>Love Film Gold</Package_Name>
                </Package>
                <Package package_type="transactional">
                        <Name>FishCalledWanda_T_0299</Name>
                        <Price>2.99</Price>
                </Package>
                <Package package_type="ad funded">
                        <Name>FishCalledWanda_A_0099</Name>
                        <Price>0.99</Price>
                </Package>
        </Packages>
</Product>
```

Mechanisms are provided for cases where there is no user ID for the content provider. In the user interface, the screens that need to deal with offer/entitlement information are defined. Under circumstances, the amount of information that is presented to the user is reduced, to improve ease of use. Further purchasing or upsell options (e.g. title is part of a 'box set') may be presented. Special provisions may be included for purchasable series, or other collections within the brand/series/episode hierarchy.

**Further ISP Discovery Aspects**

Devices support remote configuration by the platform operator, Internet Service Providers (ISPs) and OEMs. The device discovers which ISP network it is connected to and downloads the ISP configuration using the following process. First, the device reads the location of the ISP Discovery Service (IDS) from the local configuration on the device. The device then makes a call to the IDS requesting the device configuration. The IDS uses the IP address of the request to determine the ISP and redirects the device to a URL that was provided to the device by the IDS. The URL provided to the device is the location of the ISP Configuration Service (ICS) that the ISP hosts to return XML configuration to the device. Next, the device receives the ISP configuration and applies the configuration parameters to the configuration and data store on the device. The ISP Discovery Service (IDS) is hosted by the platform operator and is called every time the device checks for new ISP configuration.

*ISP Configuration*

An ISP that enables the features described here operates an ISP Configuration Service (ICS) to enable it to configure devices on their network. This section describes the ICS, the features it enables on the device and the web service interface to be implemented by an ISP wanting to enable such functionality.

*Configurable Features*

The list of features that the ISP can enable by providing configuration via the ICS is as follows:

- The location of the ISP VOD portal application
- Customise the help text so that the viewer knows how they can contact the ISP to get support
- Configure the location of the ISP post-setup welcome video that when configured shall play at the end of the device setup process
- Configure identifiers that represent the viewer or specific ISP content sets that are available to the viewer. These identifiers are sent to the Metadata Aggregation Service (MAS) and the search service so that ISP content sets available to the viewer appear in search results and other on-demand content lists returned by the Metadata Aggregation Service (MAS).
- Enable and configure the remote diagnostics of the device by the ISP
- Enable and configure the end-point URLs for other ISP provided services. e.g. IP Channels or MQT URLs.
- (optionally) Other ISP configuration information

The ICS and web service mechanism described may be used to authenticate the device to provide authoritative information that is relied upon to authenticate other ISP services.

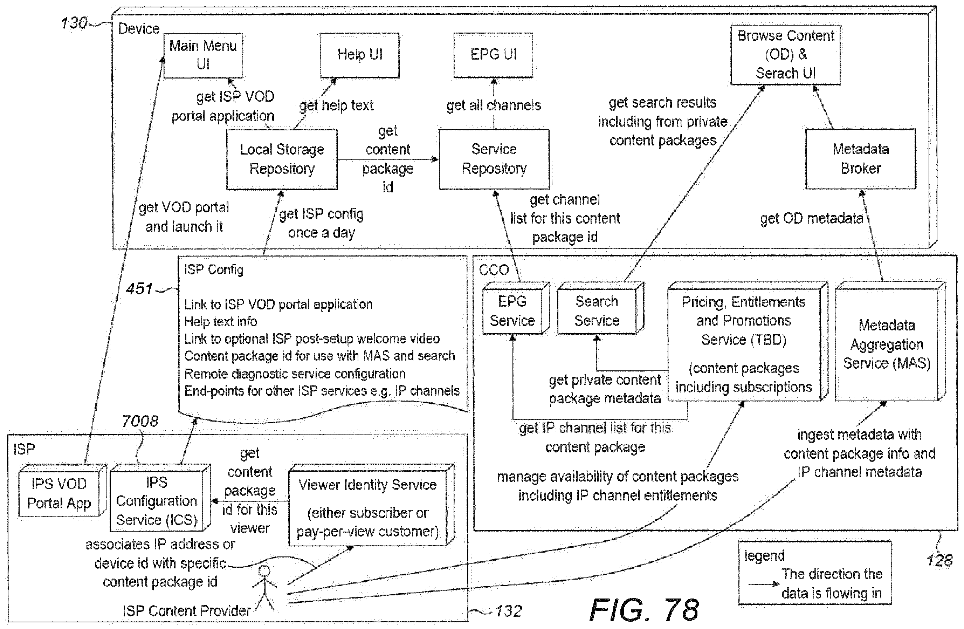

Figure 78 shows the data flow of ISP configuration parameters 451 and the components on the device 130 that use the configuration parameters provided by the ICS 7008.

*ISP Configuration Service (ICS)*

The ICS can be as simple as a web server that hosts an XML configuration file where the configuration is the same for every device or it can be a web service that automatically generates a unique configuration for every device.

*The ICS Web Service API*

The ICS web service API is the interface that the device uses to download ISP configuration from a web service. The device stores the ETag for the latest ISP configuration update and sends that with every request. If the ISP configuration for the device has not changed, the ICS responds with a HTTP 304 Not Modified status code and an empty body. If the ICS does not want to provide ISP configuration to a specific device, it responds with a HTTP 204 No Content status code and an empty body. If the ICS configuration download fails due to an authoritative response that the domain name (or a domain name referenced in an HTTP redirect) does not exist, the device treats the ISP configuration as providing no ISP configuration. If the ICS configuration download fails for any other reason (including but not limited to any non-authoritative Domain Name Server (DNS) error, Transmission Control Protocol / Internet Protocol (TCP/IP) connection error, HTTP 4xx or 5xx response), devices treat this as a transient failure and continue to use the most recent successfully-merged configuration from the ISP.

## ISP Configuration Location

The device checks for new configuration when it boots and again after a configurable update interval has expired. The platform operator and ISP can also configure a software update window. All software and configuration updates except for the configuration update that happens at boot occur within the software update window. By default the software update window is configured to be the whole day.

If the configuration for the device has changed, it downloads the new configuration and applies it to the device. The URI that is used to check and download the configuration is created by appending information about the device and the configuration name to the base URI. The resultant URI is as follows:

```
[baseuri]/[manufacturer]/[model]/[device_id]/[core_sw_ver]/[platform_software_ver]/[config_
name]
```

Where:

[baseuri] is obtained from the isp.config.update.baseuri parameter in the LSR. The baseuri can be configured to point to testing, staging or live environments as required.

○ [manufacturer] is the manufacturer's name, URL encoded and obtained from the "oem.name" item in the Local Storage Repository.
○ [device_id] is the unique device ID. This ID is tied to the device and shall remain the same after a factory reset or software upgrade.
○ [core_ sw _ver] is the manufacturer's Core Device Software version number. i.e. the version of the manufacturer's software/firmware image.
○ [platform_software_ver] is the Platform Software version number extracted from the Platform Software Image Descriptor (PSID) of the downloaded Platform Software in the format [major_version].[minor_version].[revision] which are fields of the PSID as defined in 'Consumer Device software Management' above.
○ [config_name] is the name of the configuration to be applied. This value is retrieved from the Local Storage Repository item named "isp.config.update.configname" e.g. latest.xml.cms

## Configuration Format

The body of the HTTP response returned by the ICS shall be the same format as all other configuration sources for the device so that the same software on the device can be used to update the data aggregation system, ISP and OEM configuration.

The XML schema for the ISP configuration format is seen below:

```xml
<?xml version="1.0" encoding="UTF-8"?>
<xsd:schema xmlns:xsd="http://www.w3.org/2001/XMLSchema"
xmlns="http://refdata.youview.com/schemas/youview-config/2010-05-05"
targetNamespace="http://refdata.projectYouView.info/schemas/youview-
config/2010-05-05">
<xsd:annotation>
<xsd:documentation xml:lang="en">
</xsd:documentation>
</xsd:annotation>
<xsd:element name="config" type="Config"></xsd:element>
<xsd:complexType name="Config">
<xsd:sequence>
<xsd:element name="item" maxOccurs="unbounded">
<xsd:complexType>
<xsd:simpleContent>
<xsd:extension base="xsd:string">
<xsd:attribute name="name" type="xsd:string"></xsd:attribute>
</xsd:extension>
</xsd:simpleContent>
</xsd:complexType>
</xsd:element>
</xsd:sequence>
<xsd:attribute name="version" type="xsd:int"></xsd:attribute>
</xsd:complexType>
</xsd:schema>
```

The Local Storage Repository (LSR) is a simple key/value store that stores all parameters as strings. Also, these values are represented as strings when they are encoded in the XML of the ISP configuration. It is therefore necessary to describe the format of each of the parameter types so that when creating and reading these values the format of the string can be used.

The data formats for the configuration parameters are described in the table below.

| Data Format Name | Data Format | Description |
|---|---|---|
| string | any string | |
| int | 32bit integer | |
| uint | 16bit integer | |
| double | 64bit | |
| boolean | boolean = "0" \| "1" | 1 for true or 0 for false. Any other value is invalid and not true or false |
| enum | Enum = [ enum_value ] enum_value = string that must be one of a set pre-defined valid strings for each enum parameter | e.g. the hardware.display.analogue.shape parameter must contain either the string "WIDE" or "SQUARE" |
| uri | any URL | time_t 64bit integer Seconds since '00:00:00 1970-01-01 UTC', i.e. date +%s, e.g. 1281543694 |
| time_of_day | hh:mm:ss | The time of day using the 24hr clock and 2 digits for hours, minutes and seconds i.e. date +%T e.g. 17:22:08 |
| version_ number | version_number = major [ "." minor ] ["." revision ] major = uint minor = uint revision = int | e.g. 3 or 3.1 or 3.1.13 |

An example of the XML schema for the ISP configuration is seen below:

```
<?xml version="1.0" encoding="UTF-8"?>
<!DOCTYPE c:config SYSTEM "youview-config.dtd">
<c:config      xmlns:xsi="http://www.w3.org/2001/XMLSchema-instance"
xmlns:c="http://refdata.youview.com  /schemas/youview-config/2010-05-
05" xsi:schemaLocation="http://refdata. youview.com /schemas/youview-
config/2010-05-05 ../../cantec.config/schema/youview-config.xsd">
<item name="platform.ui.mainmenu.ispmenuitem.label">ISP Name</item>
<item
name="platform.ui.mainmenu.ispmenuitem.applicationurl">http://www.isp
.com/youview/application.swf</item>
<item
name="platform.ui.mainmenu.ispmenuitem.overcolour">0xCC0000</item>
<item
name="platform.ui.mainmenu.ispmenuitem.imageurl">http://www.isp.com/y
ouview/images/ispLogo.png</item>
<item
name="platform.ui.mainmenu.ispmenuitem.overimageurl">http://www.isp.c
om/youview/images/ispLogoOver.png</item>
</c:config>
```

*Authentication*

The configuration XML returned by the ICS may be signed or encrypted.

*Access Control*

The device only applies ISP configuration parameters that have a name matching one following namespaces:

- isp.*
- platform.software.update.window.*
- platform.ui.mainmenu.ispmenuitem.*

Where the * indicates any configuration parameters at that level in the hierarchy and any child parameters.

*ISP Discovery Service (IDS)*

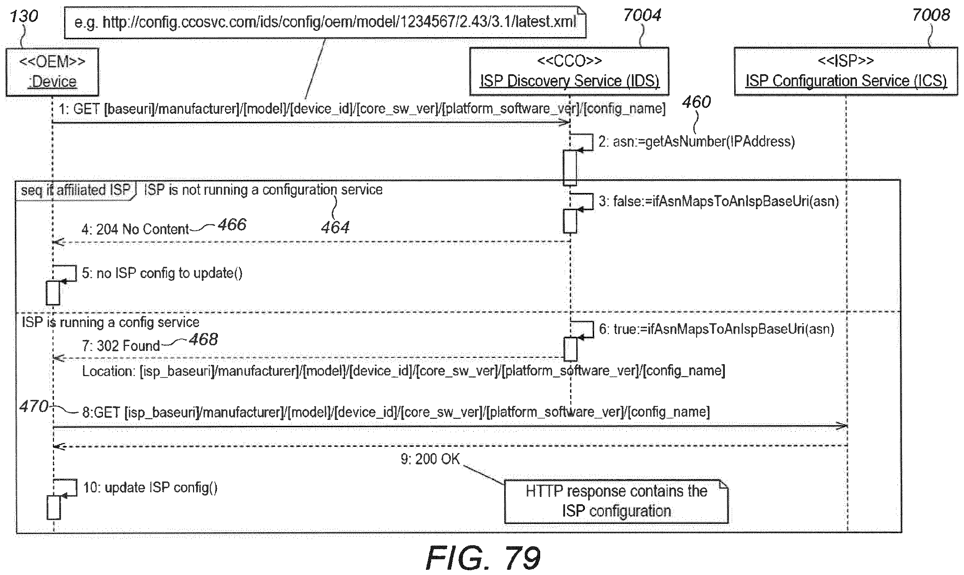

The ISP Discovery Service process is illustrated in Figure 79. The ISP Discovery Service (IDS) 7004 is used by the device 130 to determine the ISP network that the device 130 is connected to and redirects the device to the ISP Configuration Service (ICS) 7008 for that ISP. The base URI is configured by the Platform Operator and contains the location of the ISP Discovery Service 7004. The device 130 has no knowledge of the ISP discovery service 7004 and simply makes a HTTP request for the ISP configuration and follows a redirect. The URI used by the device to download ISP configuration is described later in further detail.

The IDS 7004 looks up the device's IP address, based on the HTTP request and maps it to an Autonomous System (AS) number 460. It then sends an HTTP 302 redirect response 468, redirecting the client to a new URI 470. The IDS redirects to a URI where the base URI of the HTTP request is replaced by the base URI that was provided by the ISP. For example:

http://config.yourviewer.com/ids/config/manufacturer/model/deviceid/2.43/3.1.1/latest.xml is redirected to:

http://config.isp.com/isp-config-service/manufacturer/model/deviceid/2.43/3.1.1/latest.xml

Note: everything after and including the /manufacturer is the same in both URIs. The base URI provided by the ISP is http://config.isp.com/isp-config-service/

A mapping database from IP addresses to AS numbers is collected automatically from Border Gateway Control (BGP) information and the database is updated automatically weekly. The ISP provides the CCO with AS numbers and the Base URI of the web service that shall serve requests to each of those AS numbers. The CCO configures the IDS 7004 with the new ISP's registered AS numbers and the base URI of the corresponding configuration service. The default location for the ISP Discovery Service base URI is configured in the device Platform Provisioning File (PPF). This provisioning file contains all of the default configuration parameters that the device needs when it starts for the first time.

The IDS is configured with a white list of AS numbers that are registered by ISPs running an ISP Configuration Service. This or other methods may be used for example to prevent DNS NXDOMAIN hijacking from redirecting a request for ISP configuration on ISP networks that do not operate an ICS. If a device 130 calls the IDS 7004 from a IP address that is not allocated to one of the AS numbers that the IDS is configured with 464, then the IDS returns a HTTP 204 No Content response 466 and the device 130 is not redirected to any ICS.

### IP -> ASN database override mechanism (optional)

The data aggregation server/system (CCO) does not necessarily provide ISPs an interface and override mechanism for fixing problems in the IP -> ASN database. Instead the provider of the database may optionally provide fixes for the database - for example, within a certain time period. The process that is followed is outlined below.

### Operational scenarios and processes

The following is a list of possible operational scenarios and the process that is followed in each of these scenarios. This section is indicative only and included only to paint a picture of the operational procedures required to run the ISP discovery service.

A new ISP becomes affiliated:

1. The ISP provides the operations team with all AS numbers they have registered that include IP addresses that may be allocated to a device or home gateway. This ISP also provides the [baseuri] of the ICS that serves the device configuration.
2. The operations team configures the IDS to add the specific mappings and therefore redirection from AS number to ICS baseuri.
3. The platform operator test team and ISP test end-to-end configuration of devices connected to the ISP network.

An ISP is removed from the affiliated list:

1. The operations team removes the specific mappings for all AS numbers belonging to that ISP from the configuration of the IDS.
2. The platform operator test team tests that devices on that ISP network receive a "no content" response from the IDS

An IP address does not map to the correct ASN:

1. ISP raises a ticket with the operations team to correct the IP -> ASN mapping with details of the specific IP addresses and the AS number they should belong to.
2. The operations team checks the ASN database against the appropriate region internet registry records to confirm the error.
3. The operations team contacts the IP -> ASN database provider to request that they fix their database and supply CCO with a new database.
4. If the time that it takes for the database provider to create this fix is outside of an acceptable threshold the operations team modifies the supplied IP -> ASN database and reconfigure the IDS to use the new database.
5. When the new IP -> ASN database arrives the operations team verifies that the fix has been added to the database and reconfigures the IDS to use the provided database.

ISP wants to see the current IP->ASN database to help resolve a problem:

1. When an ISP wants to verify the contents of the IP -> ASN database they can request a copy of the provided database by raising a ticket with the platform operations team.

The ICS baseuri changes and OEM implementation does not change:

There are two types of changes that could occur in this case.

A. The host or domain name part of the ICS baseuri changes.

- The ISP may configure their DNS to forward requests to the baseuri, or
- The ISP may ask the operations team to change the configuration of the IDS to use the new URL.

B. The part of the ICS baseuri that is not part of the hostname or domain name changes, i.e. the part after the first "/".

- The ISP configures its infrastructure to perform a redirect to the new location.
- The ISP may also optionally tell the operations team to change the configuration of the IDS to use the new URL.

**Further Geographical content targeting aspects**

A Service may be targeted at a number of geographical areas. Geographical targeting metadata may indicate that the Service is available exclusively to end users in a specific area, or it may simply indicate that the Service carries content that is editorially relevant to that area. Only end users in the specified area(s) are able to discover content that is part of an exclusively targeted Service. Non-exclusively-targeted Services may be given increased prominence in a particular end user's content guide.

- Geographical targeting metadata may be present in Editorial Version Records (*ProgramInformation* Fragment).
- A Service may be targeted at zero or more geographical places.
- Each geographical place is specified using a separate <TargetPlace> element within an overall <TargetingInformation> parent element.
- The href attribute of the <TargetPlace> element is a controlled term from YouViewTargetRegionCS.
- If the exclusive attribute of the <TargetPlace> element has the value true then the Service is available only to clients located in the target place specified in the element.
  If the exclusive attribute is omitted or has the value false then the Service is editorially targeted at the target place specified in the element.
- If no geographical targeting metadata is provided, the Service is assumed to be applicable to clients in all places.

Geographical content targeting metadata is not inherited from any parent Fragment. Geographical targeting metadata may be supplied for any type of *ServiceInformation* Fragment:

- For Linear Services, geographical targeting metadata determines which results from the linear schedule are returned by the search engine.
- For On-demand Portal Services, geographical targeting metadata determines whether the Service is listed in the content guide as seen by an end user based in a particular geographical location.
- For Content-owning Services, geographical targeting metadata determines whether the Service is listed in the content guide as seen by an end user based in a particular geographical location.

**High-level requirements: Use Cases**

Two Use Cases have been identified:

1. Target a content item (or set of items) exclusively at a particular geographical region (or set of regions). This is useful for indicating that the Content Provider only holds content rights in a limited geographical territory (or territories).
2. Target a content item (or set of items) generally at a particular geographical region (or set of regions). This is useful for indicating that the content item is most relevant to a limited geographical territory (or territories) and the user experience may use this to promote content most relevant to the end user's current location at the expense of less relevant content.

In addition it is useful to be able to signal geographical availability at a less granular level: entire Series, Brands and even Services.

Other possible domains with regional relevancy include:

- retail catchment
- traffic & travel
- weather
- local news (print)

***High-level requirements: Examples***

1. Linear Service "ITV1 (Granada)" has a formal rights restriction to the UK (exclusive), but is editorially targeted at North West England, the Southern Lake District and the Isle of Man (non-exclusive).
2. IP Channel (Linear Service) "BBC Radio Humberside" is editorially targeted at listeners in East Yorkshire and North Lincolnshire.
3. On-demand Portal Service "ITV Player" is exclusively targeted at users in England, Wales and the Scottish Borders.

***High-level requirements: Required granularity***

The granularity of geographical regions to be supported is:

1. Universal (available to all countries in the world).
2. Countrywide (all nations within a particular country), e.g. United Kingdom.
3. Nation (one particular nation or autonomous region), e.g. Wales.

***High-level requirements: Additional characteristics***

- The system of labelling is hierarchical such that content can be targeted at a fine-grained region or at a more coarse-grained parent region depending on circumstances.
- A client located in a fine-grained region can discover content targeted at a more coarse-grained parent region.
- It is possible to extend the regional hierarchy to arbitrary depths of finer-grained subregions as required.

The ISP discovery services described above may be used to determine the geolocation of a user. Alternatively, when an antenna is connected, the country can be determined from the Freeview broadcast signalling.

***High-level design: Geographical reference data set***

Geographical regions are identified using a term from a private Controlled Vocabulary. The absence of any regional targeting metadata indicates that an item is available universally to the entire world. The region code GB indicates that content is targeted at all users in the United Kingdom. The region codes GB-ENG, GB-NIR, GB-SCT and GB-WLS indicate that content is targeted at all users within a particular nation. Region codes GB-???-* are used to indicate that content is targeted at all users within a particular United Kingdom television transmission region.

***High-level design: Inheritance***

Exclusive Geographical targeting metadata and non-exclusive Geographical targeting metadata and Closed User Group targeting metadata are dealt with independently of one another. Targeting metadata is inherited from Content-owning Service to Brands, to Series, to Episode and to Editorial Version. In cases of multiple inheritance, targeting metadata is inherited from the most specific Service. For example, if a Brand Record points to Service X and a Series Record overrides this by pointing to Service Y, the Series Record and all its children inherit their targeting metadata from Service Y. Targeting metadata is inherited by Broadcast Publication Records from the immediate parent Linear Service Record. Targeting metadata is not relevant to On-demand Publication Records. Any targeting metadata declared on an On-demand Portal Service is implicitly inherited by On-demand Publication Records, but cannot be overridden. If any other Record declares its own targeting metadata, these values completely replace anything stated higher up the hierarchy. Regional sub-division (based on television transmission regions), e.g. Border, Grampian, can be implemented.

***High-level design: TV-Anytime representation***

1. The TV-Anytime Extended Metadata Description provides a type called TargetingInformationType which enables a content item to be targeted at users with particular terminal capabilities, network capabilities, accessibility preferences, and so on. This schema type may be extended to include zero or more <TargetPlace> elements.

2. Each <TargetPlace> element specifies one target region. The content of this element is a controlled term from the vocabulary YVTargetRegionCS. The <TargetPlace> element specifies that the content is exclusively available to the regions listed by setting the exclusive attribute to true. If the exclusive attribute is absent or set to false, then the set of regions listed is interpreted as an indication of the preferred geographical region only.

3. The TargetingInformationType can be applied to an Extended Basic Content Description in *ProgramInformation* and *GroupInformation* Fragments. The InstanceDescriptionType may be extended to include a <TargetingInformation> element so that individual Publication Records can provide targeting metadata. Similarly, the ServiceInformationType may be extended to include a <TargetingInformation> element so that individual *ServiceInformation* Fragments can provide targeting metadata.

Possible schemes for Geolocation include:

- Postcode-based, possibly to Post-town level
- DTT regions, e.g. (each a separate scheme)

    - BBC UK TV regions
    - BBC UK radio regions
    - ITV regions
    - <other DTT licence-holder> regions

- Postal:UK/England/RH2
- ISO:CODE
- Geog:UK/England/Surrey/Richmond
- TV:UK/Digital/Anglian
- Radio:UK/Digital/other

### Normative guidelines with inheritance rule

The implementation may under some circumstances not support inheritance of any kind.

Content may optionally be targeted at a number of geographical areas. Geographical targeting metadata may indicate that the content is available exclusively to end users in a specific area, or it may simply indicate that the content carries content that is editorially relevant to that area.

Only end users in the specified area(s) are able to discover content that is exclusively targeted. Non-exclusively-targeted content may be given increased prominence in a particular end user's content guide.

- Geographical targeting metadata may be present in Brand Group, Series Group, Episode Group or Editorial Version Records (GroupInformation Fragments or ProgramInformation Fragment).
- Each Fragment may be targeted at zero or more geographical places.
- Each geographical place is specified using a separate <TargetPlace> element within an overall <TargetingInformation> parent element.
- The href attribute of the <TargetPlace> element is a controlled term from YouViewTargetRegionCS.
- If the exclusive attribute of the <TargetPlace> element has the value true then the content is available only to clients located in the target place specified in the element. If the exclusive attribute is omitted or has the value false then the content is editorially targeted at the target place specified in the element.

The following inheritance rules apply to Geographical content targeting metadata:

- If present, the Geographical targeting metadata completely replaces all Geographical targeting metadata declared in any parent Group(s) or Service(s).
- If no Geographical targeting metadata is provided, the Fragment inherits the Geographical targeting metadata of its closest parent Episode, Series, Brand or Service Record recursively up the hierarchy.
- If no Geographical targeting metadata is provided by a Fragment, and none is inherited from any parent Group or Service, the content is assumed to be applicable to clients in all places.
- In cases of "multiple inheritance", Geographical targeting metadata from the closest parent Service overrides that which would otherwise be inherited from any parent Group(s).

Example: If a Series Group Record declares a Content-owning Service that overrides that of its parent Brand Group, then targeting metadata is taken in preference from the overriding Content-owning Service associated with the Series Group. This targeting metadata applies to the Series Group and to all its Episode Group and Editorial Version descendents. If the Content-owning Service associated with the Series declares no targeting metadata, then none is inherited. This is still deemed to override any targeting metadata that would otherwise have been inherited from the parent Brand Group Record.

***Examples***

(1) ITV (Granada) Linear Service targeted generally at viewers in North West England, the South Lakes and the Isle of Man:

```
<ServiceInformation
 serviceId="http://syndication.itv.com/services/ITV1/granada"
xsi:type="yv:ExtendedServiceInformationType">
  <Name>ITV1 Granada</Name>
  <Owner>ITV</Owner>
  <ServiceURL>dvb://233a..204b</ServiceURL>
  <ServiceDescription>[Service synopsis if
 required]</ServiceDescription>
  <!-- (Elements excluded for brevity of example) -->
  <yv:TargetingInformation
xsi:type="yv:ExtendedTargetingInformationType">
          <yv:TargetPlace exclusive="true"
href="http://refdata.youview.com/mpeg7cs/YouViewTargetRegionCS/2010-
09-21#GBR"/>
          <yv:TargetPlace
href="http://refdata.youview.com/mpeg7cs/YouViewTargetRegionCS/2010-
09-21#GBR-ENG-north_west"/>
          <yv:TargetPlace
href="http://refdata.youview.com/mpeg7cs/YouViewTargetRegionCS/2010-
09-21#GBR-ENG-south _lakes"/>
          <yv:TargetPlace
href="http://refdata.youview.com/mpeg7cs/YouViewTargetRegionCS/2010-
09-21#GBR-IOM"/>
  </yv:TargetingInformation>
</ServiceInformation>
```

(2) ITV Player On-demand Service targeted exclusively at viewers outside Scotland and Northern Ireland.

```
<ServiceInformation
 serviceId="http://syndication.itv.com/services/ITVPlayer"
xsi:type="yv:ExtendedServiceInformationType">
  <Name>ITV Player</Name>
  <Owner>ITV</Owner>
  <ServiceURL>crid://itv.com/itvplayer</ServiceURL>
  <ServiceDescription>Catch up on top TV shows for up to 30
days.</ServiceDescription>
  <!-- (Elements excluded for brevity of example) -->
  <!-- This service is exclusively targeted at all ITV regions except
 STV (Central), STV (North) and UTV. -->
  <!-- The target regions must be enumerated individually, either as
whole Nations (e.g. England, Wales) -->
  <!-- or as subregions (e.g. the Scottish Borders which lie within
the Border transmission region). -->
  <yv:TargetingInformation
xsi:type="yv:ExtendedTargetingInformationType">
          <yv:TargetPlace exclusive="true"
href="http://refdata.youview.com/mpeg7cs/YouViewTargetRegionCS/2010-
09-21#GBR-ENG"/> <!-- Whole of England -->
          <yv:TargetPlace exclusive="true"
href="http://refdata.youview.com/mpeg7cs/YouViewTargetRegionCS/2010-
```

```
                09-21#GBR-WLS"/> <!-- Whole of Wales -->
                    <yv:TargetPlace exclusive="true"
        href="http://refdata.youview.com/mpeg7cs/YouViewTargetRegionCS/2010-
         09-21#GBR-CHA"/> <!-- The Channel Islands -->
                    <yv:TargetPlace exclusive="true"
        href="http://refdata.youview.com/mpeg7cs/YouViewTargetRegionCS/2010-
         09-21#GBR-IOM"/> <!-- The Isle of Man -->
                    <!-- GBR-NIR excluded -->
                    <!-- GBR-SCT excluded -->
                    <yv:TargetPlace exclusive="true"
        href="http://refdata.youview.com/mpeg7cs/YouViewTargetRegionCS/2010-
         09-21#GBR-SCT-west_borders"/> <!-- Scottish Borders (West) -->
                    <yv: TargetPlace exclusive="true"
        href="http://refdata.youview.com/mpeg7cs/YouViewTargetRegionCS/2010-
         09-21#GBR-SCT-east_borders"/> <!-- Scottish Borders (East) -->
          </yv:TargetingInformation>
    </ServiceInformation>
```

(3) STV Player On-demand Service targeted exclusively at viewers in Scotland (Central and North)

```
<ServiceInformation
 serviceId="http://syndication.itv.com/services/STVPlayer"
xsi:type="yv:ExtendedServiceInformationType">
  <Name>STV Player</Name>
  <Owner>STV</Owner>
  <ServiceURL>crid://itv.com/stvplayer</ServiceURL>
  <ServiceDescription>Watch your favourite STV programmes on demand -
with free 30 day catch up on STV Player</ServiceDescription>
  <!-- (Elements excluded for brevity of example) -->
  <!-- This service is exclusively targeted at the STV (Central) and
 STV (North) transmission regions. -->
  <yv:TargetingInformation
xsi:type="yv:ExtendedTargetingInformationType">
          <yv:TargetPlace exclusive="true"
    href="http://refdata.youview.com/mpeg7cs/YouViewTargetRegionCS/2010-
     09-21#GBR-SCT-central"/> <!-- Scottish Borders (Central) -->
          <yv:TargetPlace exclusive="true"
    href="http://refdata.youview.com/mpeg7cs/YouViewTargetRegionCS/2010-
     09-21#GBR-SCT-north"/> <!-- Scottish Borders (North) -->
   </yv:TargetingInformation>
</ServiceInformation>
```

## Further Closed User Groups Aspects

### *Closed User Group Service targeting*

A Service may optionally be targeted at a number of Closed User Groups. Only clients that are members of at least one of the declared Closed User Groups are able to see the Service. A Service may be targeted and zero or more Closed User Groups. Each Closed User Group is specified using a separate <TargetUserGroup> element within an overall <TargetingInformation> parent element. The href attribute of the <TargetUserGroup> element is a controlled term from YVInternetServiceProviderCS or a term from a private vocabulary controlled by the Metadata Originating Party. If no Closed User Group targeting metadata is provided, the Service is available to all clients.

Closed User Group targeting metadata may be supplied for any type of *ServiceInformation* Fragment:

- If a Linear Service is targeted at one or more Closed User Groups, the search engine then only returns results from its schedule if the client is a member of one of those groups.
- An On-demand Portal Service that is targeted at one or more Closed User Groups is only listed in the content guide if the client is a member of one of those groups.
- A Content-owning Service that is targeted at one or more Closed User Groups is only listed in the content guide if the client is a member of one of those groups.

*Closed User Group content targeting*

Content may optionally be targeted at a number of Closed User Groups. Only clients that are members of at least one of the declared Closed User Groups are able to discover content that is targeted in this way. Closed User Group targeting metadata may be present in Editorial Version Records (*ProgramInformation* Fragment). Each Fragment may be targeted at zero or more Closed User Groups. Each Closed User Group is specified using a separate <TargetUserGroup> element within an overall <TargetingInformation> parent element. The href attribute of the <TargetUserGroup> element is a controlled term from YVInternetServiceProviderCS or a term from a private vocabulary controlled by the Metadata Originating Party. Closed User Group content targeting metadata is not inherited from any parent Fragment.

*High-level requirements: Use Cases*

1. Content Partners and Internet Service Providers want to be able to restrict browsing and searching of their content and services to their ISP customers only. For example, certain BT Vision on-demand content items are only discoverable by customers connected to BT Broadband.

2. Content Providers want to be able to restrict browsing and searching of their content and services to members of arbitrary user groups defined by them. This Use Case is a generalisation of the first.

Such arrangements may be internal to a single organization, or may be the result of business arrangements between two or more.

*High-level design*

Any Content or Service Record in the Logical Metadata Model can be tagged with one or more Closed User Group labels. The presence of a Closed User Group label indicates that visibility of the Record is limited to those clients that present an appropriate token to the metadata browse/search service. Labelling may not be required on individual Publications.

| Logical Metadata Model Record | Applicability of Closed User Group label |
| --- | --- |
| Service Record | ✓ |
| Brand Record | ✓ |
| Series Record | ✓ |
| Episode Record | ✓ |
| Editorial Version Record | ✓ |
| On-demand Publication Record | Under circumstances |
| Broadcast Publication Record | Under circumstances |

The Metadata Aggregation Service ingests and stores Closed User Group labels against their respective Records in its denormalised model. Ultimately, the objective is to decorate each denormalised Programme with a set of Closed User Group tags.

Closed User Group labels follow an additive inheritance pattern from Service to Brand-Series-Episode-Editorial Version. In other words, the set of Closed User Groups can be expanded as the hierarchy is traversed downwards. It is not possible to restrict the set of applicable Closed User Groups in this direction of traversal. The absence of any Closed User Group label indicates that the Record is discoverable by all.

*High-level design: Client aspects*

The client device is responsible for maintaining a set of Closed User Groups to which it belongs. In cases of multiple inheritance, targeting metadata is inherited from the most specific Service. For example, if a Brand Record points to Service X and a Series Record overrides this by pointing to Service Y, the Series Record and all its children inherit their targeting metadata from Service Y. Targeting metadata is inherited by Broadcast Publication Records from the immediate parent Linear Service Record. Targeting metadata is not relevant to On-demand Publication Records. Any targeting metadata declared on an On-demand Portal Service is implicitly inherited by On-demand Publication Records, but cannot be overridden. If any other Record declares its own targeting metadata, these values completely replace anything stated higher up the hierarchy.

### High-level design: TV-Anytime representation

- Closed User Groups may be signalled against any *Service, GroupInformation* or *ProgramInformation* Fragment.
- The element used to signal membership of a Closed User Group is TargetingInformation/TargetUserGroup and the schema type for this element is specified in ExtendedTargetingInformationType in a platform-specific extended schema.
- The content of the <TargetUserGroup> element is a single, fully-qualified term identifier from an MPEG-7 Classification Scheme.
- No additional attributes are required.
- The <TargetingInformation> element can already be used inside a <BasicDescription> parent, so this covers *GroupInformation* and *ProgramInformation* Fragments. The <TargetingInformation> element is simply instantiated with the appropriate extended schema type using xsi : type.

The standard TV-Anytime *Service* Fragment does not necessarily allow targeting information to be provided. The platform-specific extension schema therefore defines a derivative schema type called ExtendedServiceInformation-Type to add a <TargetingInformation> element to the *Service* Fragment. Each Fragment must be instantiated.

### High-level design: Service aspects

Whenever the client makes a request to the back-end metadata browse/search services it presents a set of Closed User Group tokens in the request. The presence of these Closed User Group tokens in the request causes the metadata browse/search service to return in its response additional items that are restricted to the Closed User Group(s) specified in the request. Closed User Groups are a discoverability convenience designed to avoid listing items in the User Experience that a particular end user will never be able to consume. The inclusion of a restricted item in a particular view is not a guarantee that the content can be consumed, merely an indication that it may be consumable. Additional considerations, such a digital rights management, may mean that the end user is not entitled to consume the content without payment and/or subscription.

### High-level design: Controlled Vocabularies

Every Closed User Group is uniquely identified by a term from a Controlled Vocabulary in the form of an MPEG-7 Classification Scheme. The platform may define a centrally controlled vocabulary for certain Closed User Group domains. Some Content Partners may also be Internet Service Providers. Content Partners are at liberty to define additional Application-specific controlled vocabularies within their own name space.

### Further Assured Delivery Aspects

### Assured delivery

Assured Delivery relates to the hosting of content such that it can be delivered over the Business to Consumer (B2C) interface by means that meet the requirements of the Minimum Quality Threshold (MQT). This mechanism can not reflect the performance of the ISP network, which is assumed to always provide sufficient capacity to carry the delivery of all content.
This following describes the end to end solution for how the platform content guide application can identify if content is available with Assured Delivery. This allows such content to be suitably tagged in the platform content guide, which may be taken into consideration by the viewer when selecting content.
Whether or not a content item is available with Assured Delivery depends on where it is hosted (assumed to be a Content Delivery Network (CDN)) and the way which content hosted in that CDN is carried by the relevant ISP. The dependency on ISP means that the same content item may be available with Assured Delivery for one viewer but not for another, e.g. if they are using different ISPs.

### System overview

Figure 16 shows the data flow overview for a single item of content.

There are two main sources of information that the device uses to establish whether Assured Delivery is available.

The Content Provider 1000 passes descriptive metadata to the Metadata Aggregation Server (MAS) 128-2 across the Business-to-Business (B2B) metadata interface 142. Within this metadata is information describing the Content Delivery Networks CDNs 1100 from which the content item is available and the bit rate required to deliver it. The device retrieves this information from the MAS 128-2 over the Business-to-Consumer (B2C) metadata interface 152 as described below.

Separately the Internet Service Provider (ISP) 132 hosts a configuration file which gives details of the CDNs 1100 from which Assured Delivery is offered to the device, as described below.

The information above can be used by an application running on the consumer device 130 to determine whether Assured Delivery is available for a given content item. The rules for performing this calculation are not baked into the B2C metadata or the ISP configuration which allows the definition of Assured Delivery to evolve over time.

### Metadata

### Controlled vocabulary

To ensure that the device can successfully utilise CDN information provided in the B2C metadata and ISP configuration, the platform defines a controlled vocabulary to uniquely identify every CDN that may be used for assured delivery.

### B2B

In one example, to signal that a content item is available with assured delivery the Content Provider must provide a list of CDNs and the minimum bit rate necessary to present the content item at a quality level consistent with the defined Minimum Quality Threshold (MQT).

CDN availability is signalled in an OnDemandProgram Fragment by using controlled terms from the YouView-ContentDistributionNetworkCS in the <Genre> child element of <InstanceDescription>.

The minimum bit rate (measured in bit/s) is signalled in an OnDemandProgram Fragment in the <BitRate> child element of the <AVAttributes>. The <AVAttributes> element is a child element of the <InstanceDescription> element mentioned above.

If the platform default player is to be used for playback the Content Provider must provide at least one Media locator per entry in the CDN list. Media locators can be included in the <OtherIdentifier> child element of the <InstanceDescription> element of an OnDemandProgramFragment. The authority attribute of the <OtherIdentifier> element must be one of the controlled terms in the YouViewContentDistributionNetworkCS.

If a Content Provider player is to be used for playback the inclusion of Media locators is optional.

The full details can be found in the Business-to-business metadata contribution technical interface specification below.

### B2C

On-demand Publications can contain:

- Multiple yv:cdn elements
  A list of CDNs from which the content item can be obtained
- bitrate attribute of the media:content element
  The minimum bit rate necessary to present the content item at a quality level consistent with the defined MQT
- Multiple yv:mediaURL elements
  A list of Media locators for the content item

For reasons of convenience and/or efficiency, Programme and Programme summaries can contain the following information denormalised from the set of currently available On-demand Publications:

- Multiple yv:cdn elements
  A list of CDNs from which the content item can be obtained

- yv:minimumBitrate element
  The minimum bit rate necessary to present the content item at a quality level consistent with the defined MQT.

Full details can be found in the Business-to-consumer metadata interface specification below.

### CDN Carriage by the ISP

The ISP configuration file may contain zero or more entries that identify CDNs that can offer assured bit rates up to an identified maximum.
Such entries shall be formatted as follows:

| Key | Value |
|---|---|
| assured_delivery | <CDN name from controlled vocabulary>:<maximum assured bit rate in bit/s> |

In scenarios where an ISP has carriage arrangements with specific CDNs, these are explicitly listed. An example value for such an entry might be 'GBR-bt_wcc:1500000'. The maximum assured bitrate may vary for each entry, i.e. on a per CDN basis.

It is also possible that an ISP may carry any upstream CDN up to a given assured bit rate. In this case there is an entry with the value 'GBR-generic:<maximum assured bitrate>'. The presence of such an entry does not preclude entries for specific CDNs where the carriage arrangements allow for a higher maximum assured bitrate.

### Client-side logic

### Tagging Assured Delivery content in the platform content guide

The platform content guide can use the information provided by the B2C feed together with the entries in the ISP configuration file to identify content that is available with Assured Delivery. Such content may then be tagged in the platform content guide, which may be taken into consideration by the viewer when selecting content.

If the simple media locator in the programme structure is populated the content item cannot be played with assured delivery.

If there is no list of CDNs associated with the content item, it cannot be played with assured delivery.

If a CDN associated with the content item in the B2C metadata can be matched with a CDN listed in the ISP configuration file and if the bit rate associated with that CDN's entry in the ISP configuration file exceeds the minimum bit rate required for assured delivery as provided by the B2C metadata for the content item, then the content item is available with Assured Delivery.

Note: It is possible that this condition can be met by more than one of the CDNs associated with the content item in the B2C metadata.

The platform content guide does not pass the result of the CDN matching process to a Content Provider player. However, the Content Provider player may have access to the ISP configuration information and the Programme and Publication structures describing the content.

### Selecting the correct media source in the platform default player

The platform default player always attempts to play a content item with Assured Delivery where possible. If more than one Assured Delivery source is available the one with the highest Assured Delivery bit rate (as signalled in the ISP configuration) will be used.

If more than one Assured Delivery source offers the highest Assured Delivery bit rate then the platform default player makes an arbitrary decision as to which to use.

### Supporting Minimum Quality Threshold (MQT) indication and streaming

A Controlled Vocabulary is defined to uniquely identify every relevant Content Distribution Network (CDN) that may be used for assured delivery.

For the ISP:

- An ISP configuration mechanism exists that allows ISPs to provide periodically updated configuration information to devices on their network. This mechanism can be used by an ISP to deliver different configurations to different customers, if the ISP so wishes, or it can be used to deliver the same configuration to groups of customers.

- Every participating ISP uses the ISP configuration mechanism to provide each device with a list of CDNs from which assured rate delivery is possible to that device. The list consists of the terms from the Controlled Vocabulary and corresponding maximum bitrate values for which delivery is assured. This list may change each time the ISP configuration is refreshed.
- The ISP may also indicate that all content is offered for assured rate delivery up to a specified bitrate value by listing "*" as one of the items in the list.

For the content provider:

- When a media asset is published for the platform by a content provider, it is distributed to a number of CDNs. This list of CDNs, expressed using the same Controlled Vocabulary, is included in the technical metadata published to the Metadata Aggregation Service for the On-demand Publication, along with the bitrate required to stream that item of content in a manner consistent with the MQT criteria: this is carried in the <BitRate> element of the On-demand Publication. For an adaptive bitrate stream, the indicated bitrate is the lowest quality level available that exceeds the MQT quality level. HD assets are described as separate On-demand Publications and generally have a higher target bitrate than SD ones.
- Target bitrate information is carried in the B2C metadata format in the /feed/entry/media:content[@bitrate] field and the CDN list is carried in elements of /feed/entry/ media:category whose scheme attribute begins "http://refdata.projectcanvas.info/mpeg7cs/CanvasContentDistributionNetworkCS".

For the device manufacturer:

- For each streaming session that uses the MediaRouter interface, the device measures the average incoming data rate during periods of streaming where only one stream is being buffered and the device is not itself limiting the incoming data rate, ignoring the first five seconds of any such period.

- If, at the end of the streaming session, a measurement M has been made, the device updates settings Rhist and Mcount in the local storage repository as follows:

    If Mcount does not exist, Mcount = 0
    If Mcount < 10, Mcount = Mcount + 1

$$Rhist = (Mcount\text{-}1)/Mcount * Rhist + (1/Mcount) * M$$

This algorithm has the effect of building up a simple average over the first few measurements whilst continuing to follow long term changes in the bitrate after that. If the measurements were to change abruptly to a new value, Rhist would move two thirds of the way towards the new stable value after 10 measurements had been incorporated.

- The values referred to as Mcount and Rhist are given appropriate names in the local storage repository.

### Indication in UI

When the UI shows information about a particular asset, it compares the list of CDNs through which the asset is available (as provided in the metadata) with the list of CDNs providing assured delivery (as provided through the ISP configuration mechanism. If there is an intersection between the two sets for which the asset bitrate is less than the CDN assured rate, an 'assured delivery' icon is presented in the user interface. If the 'assured delivery' icon is not appropriate, the UI can calculate an estimated buffering time Tb from the asset bitrate Rasset, the asset duration Tasset and the device's historical bitrate Rhist as follows:

    If Rasset < Rhist, Tb = 0
    If Rasset > Rhist, Tb = Tasset * (Rasset/Rhist - 1)

No margin for error is included here since the purpose is solely to provide an estimate to present to the user. If Rhist is not available (for example in a new device), no indication of buffering time is possible.

*Playback*

1. When an item of content is selected, the appropriate content provider player application is launched.
2. The content provider player application is responsible for determining which CDN to use if many are available. The CDN list is not necessarily provided to the application; in this case the application uses its own mechanisms to perform the 'media selection' task, determining the best location from which to stream the content.
3. The content provider player is passed the set of matching CDNs and their assured bitrates when it is launched. Under circumstances an extra launch parameter is added e.g. cdnmatches.projectcanvas.info, "GB/bt-wcc@2000;GB/akamai@1400". This would require constraining the termId so that it cannot contain "@" or ";".
4. With this mechanism, the 'default player' could not by itself do 'play now'. Under circumstances additional information could be conveyed to allow the default player to support 'play now'. This may involve using multiple publications but other options are possible.
5. The player application is responsible for presenting the media in a manner that complies with the MQT requirements, making use of the buffer APIs to determine when to start playback.

*Further considerations:*

- ISP needs to actively participate in maintaining a list of CDNs and exposing this to the receiver device. It is not possible to present the 'assured delivery' icon in the case where a receiver device is connected to a non-participating ISP.
- Content providers need to actively participate in publishing information about which CDNs a particular media asset has been published to, as well as the bitrate of the asset. While this offers a highly granular (per asset) approach that meets the content provider's requirements, it puts a particular onus on the content provider to ensure ongoing accuracy of information. If, for example, a media asset is subsequently withdrawn from a particular CDN, the metadata must be republished to reflect this fact. Otherwise, the consumer may be disappointed by a poorer quality viewing experience than advertised for that asset.

- The accuracy of this system depends to some extent on the latency of two independent distribution chains: the media distribution chain (via the CDN provider) and the metadata distribution chain (via the Metadata Aggregation Service). To prevent false indications, it is necessary to ensure that metadata does not overtake the corresponding media and advertise the availability of an asset with MQT before the CDN has had time to acquire and/or distribute the media to all parts of its network.

**Business-to-consumer (B2C) interface**

The following outlines examples of the specification of the business-to-consumer interface for the TV platform. That is to say, it describes the means by which a receiver device / media client device (such as a set-top box) communicates with certain parts of a data aggregation server/system (CCO). The CCO encompasses a number of services, of which those used for content metadata are described in further detail below.

*Basic architecture*

The Content Guide application is the main user interface by which a user may browse and search content from across different Content Providers. It requires information about the available content, which originates from the Content Providers. Two layers of abstraction are provided to simplify the retrieval of this data.

- The metadata from multiple Content Providers is submitted to CCO so that the receiver device may enquire as to all the content on the platform from a single source.
- The client receiver device includes a managed component called the client Metadata Broker, which handles the retrieval and parsing of metadata on behalf of the Content Guide application (and possibly other third-party applications).

The present description specifies the technical interface between these two components, i.e. the Business-to-Consumer (B2C) metadata distribution interface by which the client Metadata Broker communicates with the back-end CCO metadata services. Content Providers submit metadata to CCO using the Business-to-Business (B2B) metadata contribution interface. The Content Guide application communicates with the Metadata Broker over an internal inter-process communication mechanism called the System API.

### Enhanced metadata services

CCO comprises a number of different services, some of which supply enhanced metadata using the B2C concept. The metadata services may be considered as two functional units: the Metadata Aggregation Service and the Search Service. Here the required functionality is further decomposed into additional logical services, listed below. By specifying these services separately, the CCO provider has more flexibility to implement each service on independent systems or to combine them in any permutation.

The services supplying metadata in the B2C format include:

- Browse service
- Search service
- Search Suggestions service
- Recommendations service
- Linear Event Resolution service
- Linear Service Resolution service
- Schedule service

These services are described in further detail below.

### Interface Design

The B2C interface has been designed in accordance with the following basic principles:

- Reducing client load - Whist being careful to distribute the complexity of the system, it is most often the case that the more complex data processing takes place in the back-end (i.e. in CCO) where possible. This is because the receiver devices may be very resource-constrained. In addition, if the value of a metadata field needs to be recomputed infrequently (e.g. episode count in a series) then it makes sense to perform the calculation on the server side rather than requiring potentially millions of receivers to perform the same computation separately. One example of this is denormalisation; there must be some 'flattening' of the strongly normalised and hierarchical data model used by the B2B interface into a simpler denormalised form for consumption by the application. This denormalisation ought to be done by CCO and the denormalised form cached there, rather than each receiver undertaking the same data manipulation. This leads to a requirement that the B2C interface convey a fairly denormalised representation of the data.
- Client-agnostic - this is particularly difficult to achieve when also attempting to be concise and efficient in the B2C interface. However, as a general rule the B2C interface shall not assume a particular user interface layout. Multiple client devices are supported.
- Server-agnostic - it is important that the system retains flexibility in procurement and operation of back-end services. For example it must be able to change suppliers for the CCO components in future. Similarly, the existing CCO service provider is able to change implementation components whilst still supporting the same B2C interface. This means a number of things:

    - The B2C format is specified such that it may be implemented by any provider.
    - The B2C format does not rely on proprietary technologies, formats, XML namespaces etc.
    - It is simple to transition to a different URL by changing the HTTP endpoint locations to which the receiver device makes requests for metadata.

- Flexible - the design of the request interface in particular aims to provide flexibility around current and future user interface decisions. It does this by specifying filters and sort options for data requests which may be combined in any order, such that it is easy to request different views onto the data in order to populate different user interface elements.

### Denormalised data model

Broadly speaking, content description metadata is published in a hierarchy of entities such as Brands, Series and Episodes. Entities are then grouped into sets of user-facing Aggregations such as Categories.

The basic unit shown in many user interface lists of content is a Programme. This conceptual entity is in fact constructed from data denormalised from two principal metadata fragments in the normalised Logical Metadata Model: an Episode and an Editorial Version. (The two are kept separate in the B2B in order to align with upstream data models.) A single Programme appears on the B2C interface for every Editorial Version fragment, although much of the metadata is, in fact, inherited from its parent Episode fragment and this is duplicated in each Programme derived from that Episode. For example, an Episode-level synopsis will cascade down to each Programme when combined with the data for the Editorial Version. Except where the distinction between Episode and Editorial Version is relevant, the denormalised concept of a Programme is used here.

Each Programme has one or more associated On-demand Publications and/or Schedule Events. Multiple On-Demand Publications of the same Programme might signify alternatives such as Standard Definition (SD), High Definition (HD), Audio Described (AD) or signed. In addition, each Programme may be a member of a Series, and/or a Brand. For example, "Doctor Who, Series 4, Midnight" is a Programme with an Episode title of "Midnight", belonging to a Series called "Series 4", belonging to a Brand called "Doctor Who". It is possible for a denormalised Programme to belong to a Series but have no Brand, or a Brand with no Series. For example, "Eastenders, Thursday 18th March 2010" is an Episode entitled "Thursday, 18th March 2010" belonging to a Brand called "Eastenders". Eastenders has no (user-facing) series; it is simply a Brand with some child Episodes.

Finally, it is possible for a denormalised Programme to have no parents at all. It is envisaged that films would be represented this way. For example, "Slumdog Millionaire" might be listed as a Programme with that title, but with no associated Series or Brand.

### B2C HTTP interface specification

In one example, the Business-to-Consumer interface is provided as a web service that complies with HTTP 1.1 [IETF RFC 2616]. All requests are made using the GET method.

The service fully supports the cache control headers specified by HTTP 1.1.

No security requirements are placed on the interface; it is an open web service.

Most of the services described by this specification return responses in an XML format based upon Atom. This format is described below. The Search Suggestions service uses a different format, described below.

### B2C HTTP interface specification: Request URL format

The client of the B2C interface makes requests to URL endpoints in order to retrieve data. The CCO supplier provides URL templates which allow the client to construct and customise the endpoint URL for each request.

### URL templates:

A template is a string containing placeholders which are replaced by other strings when the template is processed. This processing allows the client device to insert object identifiers and view parameters, which comprise filtering and sorting options, in order to create the required URL. The various URL templates may be retrieved from the local configuration on the client device; each is stored as a key-value pair. In order that the appropriate URL templates can be provided in the configuration service, the CCO provider specifies a URL template for each endpoint, and also one for each view parameter. In some cases, the templates may in fact just be simple strings, as they may have no placeholders in them.

### Placeholders:

Placeholders in URL templates take the following form:

${placeholder-name}

Generally, each placeholder is replaced either with the processed output of another template, or with a piece of data such as the ID of the entity being queried. The placeholder ${view} is a special case, as it is replaced by zero or more processed view parameter templates, separated by ampersands.

An example endpoint template is provided below:

http://browse.youview.com/Programmes?${view}

The placeholder ${view} placeholder is replaced with the zero or more processed templates for any view parameters the client may wish to apply. The resultant URL may look something like this:

http://browse.youview.com/Programmes?byId=abc124&sort=title:asc

The placeholders in some templates may be replaced with multiple terms separated by Boolean operators. The Valid Operators column of the filter tables for each service indicates which operators may be used with each filter.

The OR operator is represented in URLs as a pipe character: |

The AND operator is represented in URLs as a plus symbol: +

For example, the following filter requests both paid and free content, by matching entities with a paid flag of 0 OR 1:

Paid=0|1

### B2C HTTP interface specification: Metadata language selection

The Logical Metadata Model supports the provision of metadata in multiple languages. The Metadata Publishing Party may specify the language of metadata supplied at the B2B contribution interface, both on a fragment (record) level and on a field level. The record-level language is taken to be the default language for that record, and if one is not supplied then the default language is assumed to be English (eng). Although the CCO may be able to store metadata in multiple languages for the same entity, this interface specification is not predicated on such an implementation.

The client device may request metadata from certain services in a given language by applying the appropriate filter. The ${lang} placeholder is replaced with a specific language code from ISO 639-2 ("alpha-3"). The filters for each service are described alongside the specifications for each service.

In general, if metadata is available in the requested language, then that metadata is returned. If metadata is not available in the requested language, then the metadata is returned in the content's default language.

A result set may contain some entities with metadata available in the requested language and some entities without metadata in the requested language. In this case, the most appropriate language is returned for each individual entity, even where this means a single B2C response contains multiple languages of metadata side-by-side. Similarly, if a single entity has some fields available in the requested language and some fields not available in that language, the languages of individual fields may differ; where available, the fields are returned in the requested language, and where not available the default language is returned.

Below it is described how the XML response format supports these multiple language responses.

### B2C HTTP interface specification: Sort Options

Some of the services allow the client to request data in various sort options. Where specified, the sort options correspond to the following list:

| Term | Sort Fields | Notes |
|---|---|---|
| title | Primary sort title Secondary sort title Tertiary sort title | Applies to all entities except ondemand. For descriptions of primary, secondary and tertiary titles, see below. |
| soa | Start of availability | Categories, Services and Schedule Events are returned in an undefined order, as they have no SOA. |
| expiry | End of availability | Categories, Services and Schedule Events are returned in an undefined order, as they have no EOA. |
| broadcast | Schedule slot | Does not apply to Categories, Services, or Applications. Schedule slot is optional on Programme and On-demand, so if not present, items appear at bottom of list |
| index | Series index Episode index | Applies only to Programmes and Series. |
| relevance | Relevance | Applies only to Search Service requests. |
| popularity | Popularity | Applies only to Programmes. |

Where sorting options do not apply to types of entity being requested, the order in which the entities are returned is undefined. In the case where a request is made with a sort option which is only applicable to some of the returned entities, the entities to which the sorting does not apply appear after those to which it does. For example, if the summaries feed were called with no entity filter and a requested sorting of broadcast, any Services in the response would appear after the Programmes and in an undefined order, as Services have no schedule slot.

***Title sorting:***

For the title sort option above, three titles are used: primary, secondary and tertiary. Programmes have multiple titles due to the hierarchy in which they sit. The following table describes the titling assignments for different archetypes of Programme.

|  | One-off Commission | Continuing Brand | Unbranded Series | Branded Series |
|---|---|---|---|---|
| Primary Title | Programme title | **Brand** title | Series title | Brand title |
| Secondary Title | n/a | Programme title | Programme title | Series title |
| Tertiary Title | n/a | n/a | n/a | Programme title |

Other entities - such as Services, Applications and Categories - do not sit in such a hierarchy. In these cases, the primary title is the entity's own title, and secondary and tertiary titles are empty. This is the same as a Programme which is a one-off commission.

***B2C HTTP interface specification: Status codes and error responses***

Appropriate HTTP 1.1 status codes are used to indicate the success or failure of any request made over the interface. Three cases are specified:

- A successful request which results in data to be returned. In this case, the data is provided in the format defined by this specification, and with a status code of 200 (OK) .
- A successful request is made, but matches no data (e.g. an object with a particular identifier is requested, but no such object exists). This results in a 200 (OK) status code, and a valid response document. Depending on the service, this is either an empty response document (Search Suggestions Service) or a valid XML Atom document containing zero <entry> elements (all other services).
- An invalid request is made, for example a parameter is used on an endpoint which does not support it, or an invalid parameter is used. In this case, an HTTP response with a 400 (Bad Request) status code is returned. Optionally, services which supply an Atom response may return an Atom document containing a reason for the error within a <summary> element and zero <entry> elements.

***B2C XML response format specification***

Many of the CCO services return a response in the Atom XML format. For these services, each response is a feed conforming to the Atom specification [IETF RFC 4287].

Each Atom feed contains one or more <entry> elements, and each of these is used to represent an entity from the Logical Metadata Model. The type of entity represented by each <entry> is defined using an entity type element. See below for details.

The Atom specification requires that each <entry> element must have either a <content> child element or a <link rel="alternate" href="...">. Because neither is required in this profile of Atom, an empty <content> element is provided.

Each entry also has an <updated> element, which specifies the last time the corresponding record was altered. The content is a W3C specification date-time.

***B2C XML response: XML instance document structure***

Each feed declares and uses only the namespaces listed in the following table:

| W3C Atom | http://www.w3.org/2005/Atom |
|---|---|
| Yahoo! MediaRSS | http://search.yahoo.com/mrss/ |

(continued)

| Amazon OpenSearch | http://a9.com/-/spec/opensearch/1.1/ |
| --- | --- |
| B2C | http://refdata.youview.com/schemas/ClientMetadata/2010-09-27 |

The B2C namespace is used for all custom elements. The namespace URL is http://refdata.youview.com/schemas/ClientMetadata/{date}, where {date} is the date of the corresponding version of the specification. This allows future revisions to be made without breaking backwards compatibility.

Each feed has a unique identifier, carried in the <id> element, which is the URL of the feed. Each feed has a descriptive title carried in the <title> element, and may optionally provide a <subtitle> in addition. Each feed carries an <updated> element which specifies the generation time of the feed.

The OpenSearch elements <os:totalResults>, <os: startIndex> and <os:itemsPerPage> is used to indicate the scope of the result set.

Finally, for requests to the Search Service only, the additional OpenSearch element <os:Query> (with a role parameter of "request") is used to indicate the search term in the response.

The following XML indicates these required fields.

```
<?xml version="1.0" encoding="UTF-8"?>
<!-- Basic definition of the feed and its namespaces -->
<feed
xmlns="http://www.w3.org/2005/Atom"
xmlns:media="http://search.yahoo.com/mrss/"
xmlns:os="http://a9.com/-/spec/opensearch/1.1/"
xmlns:yv="http://refdata.youview.com/schemas/ClientMetadata/2010-09-
21"
xml:lang="eng">
<!-- The ID, location, author, date and contents of the feed -->
<id>{the url of this feed}</id>
<title>{some descriptive title of this feed}</title>
<subtitle>{optional: additional information about this
 feed}</subtitle>
<updated>{the time the feed was generated}</updated>
<author>
<name>YouView</name>
<uri>{Service Base URL}</uri>
</author> <!-- Pagination information -->
<os:totalResults>{total number of entries in the un-paginated
 feed}</os:totalResults>
<os:startIndex>{index of the first item in this feed (starting at
 1) }</os:startIndex>
<os:itemsPerPage>{number of items in this feed}</os:itemsPerPage>
<!-- Search Query information, for Search Serice requests only -->
<Query role="request" searchTerms="{query term}" />
<!-- The main feed contents go here (one or more <entry> elements) --
>
</feed>
```

Example:

```
<?xml version="1.0" encoding="UTF-8"?>
<feed
xmlns="http://www.w3.org/2005/Atom"
xmlns:media="http://search.yahoo.com/mrss/"
xmlns:os="http://a9.com/-/spec/opensearch/1.1/"
xmlns:yv=" http://refdata.youview.com/schemas/ClientMetadata/2010-09-
21"
xml:lang="eng">
<id>http://browse.youview.com/Programmes?byCategory=1001</id>
```

```
<title>Programmes feed</title>
<subtitle>Category: 1001</subtitle>
<updated>2010-03-26T09:46:33Z</updated>
<author>
<name>YouView</name>
<uri>http://browse.youview.com</uri>
</author>
<os:totalResults>10</os:totalResults>
<os:startIndex>1</os:startIndex>
<os:itemsPerPage>10</os:itemsPerPage>
<entry>
 {entry info here}
</entry>
</feed>
```

### B2C XML response: XML and Data formats

Except where otherwise specified, the following data and formatting conventions apply to all Atom XML format response documents supplied by the B2C interface.

- All Boolean values are represented as 0 or 1 (as opposed to the alternative notation of true or false).
- Date-time values use the W3C date-time format, and all times are specified in the UTC (Zulu) time zone. For example 2010-01-01T00:00:00Z.
- Where no data is available, XML elements are excluded from the feed. For example, for a Programme with no parent Series or Brand, the <yv: seriesId> and <yv:brandid> elements would not appear.

### B2C XML response: Metadata language representation

No distinction is made between each <entry> or field within each <entry> based upon the language of metadata it contains. No signalling is required to indicate which elements contain text in the requested language and which contain text in some other default language.

Example:

Suppose a request is made for the first three programmes in a particular category and the preferred language is specified as Welsh. Two of the programmes have Welsh metadata available, whereas the other one does not (it only has English metadata). In this case, the B2C response contains three <entry> elements, of which one contains English metadata and two contain Welsh metadata.

Further suppose that one of the entities with Welsh metadata has only a Welsh title, and fields such as the synopses are in English. In this case, the title is returned in Welsh and the synopses in English. The total result set then contains an entry with all-English metadata, one with all-Welsh metadata, and one with a mix of Welsh and English fields. This example is shown in the simplified XML extract below.

```
<entry>
<content />
<yv:entityType>programme</yv:entityType>
<updated>2010-03-26T18:07:54Z</updated>
<id>001</id>
<yv:serviceId>123123</yv:serviceId>
<title>Pobol y Cwm</title>
<summary>Mae Indeg yn creu trwbwl yn stiwdio Cwm FM. Indeg causes
mayhem at Cwm FM.</summary>
</entry>
<entry>
<content />
<yv:entityType>programme</yv:entityType>
<updated>2010-03-26T18:07:54Z</updated>
<id>002</id>
<yv:serviceId>123123</yv:serviceId>
<title>Yr Wythnos</title>
```

```
<summary>News from Wales.</summary>
</entry>
<entry>
<content />
<yv:entityType>programme</yv:entityType>
<updated>2010-03-26T18:07:54Z</updated>
<id>003</id>
<yv:serviceId>123123</yv:serviceId>
<title>Eastenders</title>
<summary>As Lucas identifies a body at the morgue, the family fear it
could be the missing Denise. Meanwhile, Peggy persuades Phil not to
 run, and Darren finds a friend in Abi.</summary>
</entry>
```

***B2C XML response: Entities in the XML response format***

The XML format B2C interface exposes Atom feeds with zero or more <entry> elements. Those elements each express a metadata entity. The type of entity which is being represented by an <entry> is specified in an <entityType> element like so: <yv:entityType>...</yv:entityType>

In the above, "yv" is the specific B2C XML namespace, and the text within the element is from a controlled vocabulary, listed in the following table. The table also illustrates how the entity types map into client System API structures.

| B2C Entity Type | System API Structure | Notes |
| --- | --- | --- |
| application | Metadata::Application | An Application. Exposed as a summary only. |
| brand | Metadata::Summary (of type Brand) | An editorial Brand. |
| scheduleevent | Metadata::Publication Metadata::ScheduleEvent | A linear Schedule Event, which is a Broadcast Publication of a Programme. |
| category | Metadata::Summary (of type Category) | A Category. |
| editorialcollection | Not mapped | Included to allow future addition of this entity. Not currently specified, nor mapped into the System API. |
| ondemand | Metadata::Publication | An On-demand Publication of a Programme. |
| programme | Metadata::Programme Metadata::Summary (of type Programme) | A Programme, compiled from an Editorial Version and an Episode. |
| series | Metadata::Summary (of type Series) | A Series of Programmes. |
| service | Metadata::Service | A linear, on-demand or owning Service. Exposed as a summary only. |

Each entity has an identifier element, which contains the CCO record identifier for the entity. The composition of this ID is an implementation decision of the CCO provider, but it is composed only of valid URL characters, such that it may be used subsequently to query the same entity.

```
<id>12345</id>
```

That identifier is regarded as internal to the platform. However, in order to allow flexibility for the CCO provider, who may wish for example to include a prefix which defines the scope of the ID to make it globally unique, they may supply a template which specifies the segment of this string which contains the internal record identifier.

| Template Name | Description | Placeholders in Template |
|---|---|---|
| record-id | Defines the format of the contents of <id> elements in the XML B2C interface. | ${id} |

The following sections provide more detail on the representation of individual entity types.

*Application*

This entity describes a player, portal, or other application. It is used to populate an Application structure in the System API, has an entityType of application.

Fields:

| LMM Field Ref. | B2C XML Element | Content | Cardinality | Notes |
|---|---|---|---|---|
| Record. identifier | id | string | 1 | The CCO record identifier of this Application. |
| Description. fullTitle | title | string | 1 | The Application's title. |
| Description. shortSynopsis | summary | string | 1 | A brief description of the Application. |
| Description. mediumSynopsis | yv:description | string | 0..1 | A medium-length description of the Application. |
| Description. longSynopsis | yv: longDescription | string | 0..1 | A longer description of the Application. |
| Guidance. codes | media:rating | string | 0..1 | Denton or BBFC codes. Subject to the controlled vocabulary provided with the B2B specification. The CS term shall be the element's content, while the CS name space is the scheme attribute. |
| Guidance. longExplanation | yv:guidanceText | string | 0..1 | Description of why guidance has been applied. |
| Group. owningService | yv:serviceId | string | 1 | The CCO record identifier of the Content-owning Service to which this Application belongs. |
| Content. identifiers | yv:identifierType1 yv: identifierValue1 etc | string | 0..* | Private identifiers including the launch URL of the Application. |
| Group. availability. start | yv:availabilityStart | datetime | 1 | This element shall indicate the start of the availability window of the Application. |
| Group. availability. end | yv:availabilityEnd | datetime | 1 | This element shall indicate the start of the availability window of the Application. |

Example XML:

```
<entry>
<content />
<yv:entityType>application</yv:entityType>
<updated>2010-01-01T00:00:00Z</updated>
<id>123456</id>
<title>BBC iPlayer</title>
```

```
<summary>Making the unmissable unmissable.</summary>
<yv:description>BBC iPlayer. Making the unmissable unmissable.</yv:description>
<yv:longDescription>BBC iPlayer brings you the last 7 days of BBC programming. Making
the unmissable unmissable.</yv:longDescription>
<media:rating
scheme="http://bbc.co.uk/refdata/mpeg7cs/DentonContentWarningCS/2010/04/19">G</medi
a:rating>
<yv:guidanceText>Some programmes may be unsuitable for children.</yv:guidanceText>
<yv:serviceId>123123</yv:serviceId>
<yv:identifierType1>http://refdata.youview.com/mpeg7cs/YouViewIdentifierTypeCS/2010-05-
24#resourceLocator</yv:identifierType1>
<yv:identifierValue1>http://www.bbc.co.uk/iplayer/youview.swf</yv:identifierValue1>
<yv:availabilityStart>2010-01-01T16:00Z</yv:availabilityStart>
<yv:availabilityEnd>2010-01-08T16:00Z</yv:availabilityEnd>
</entry>
```

### Brand

This entity describes a Programme Brand, and is used to populate a Summary structure (of type Brand) in the System API. It has an entityType of brand.

Fields:

| LMM Field Ref. | B2C XML Element | Content | Cardinality | Notes |
|---|---|---|---|---|
| Record .identifier | id | string | 1 | The CCO record identifier of this Brand Group. |
| Description.fullTitle | title | string | 1 | The title of this Brand. |
| Description. shortSynopsis | summary | string | 1 | A short editorial description of this Brand. |
| Group.owningService | yv:serviceId | string | 1 | The CCO record identifier of the Content-owning Service which owns this Brand. |
| Group.childCount | yv: childCount | integer | 1 | The Brand's total number of descendent Programmes with available On-demand Publications. |

Example XML

```
<entry>
<content /> <yv:entityType>brand</yv:entityType>
<updated>2010-01-01T00:00:00Z</updated>
<id>456789</id>
<yv:serviceId>123123</yv:serviceId>
<title>Doctor Who</title>
<summary>The Doctor, the last of the Time Lords, has adventures in space and
time.</summary>
<yv:childCount>2</yv:childCount>
</entry>
```

### Category

This entity provides basic information about a category itself. It is used to populate a Summary structure (of type Category) in the System API, and has an entityType of category.

Fields:

| LMM Field Ref. | B2C XML Element | Content | Cardinality | Notes |
|---|---|---|---|---|
| Record .identifier | id | string | 1 | The CCO identifier for this Category. |
| Description. fullTitle | title | string | 1 | The title of this Category. |
| Category. hasSubCategories | yv: hasSubCategories | Boolean | 1 | Indicates to the client that there are subcategories of this category, to enable arbitrary depths of category browsing. |
| Category.adult | yv:adult | Boolean | 1 | Indicates that the contents of this category contain adult material. |

Example XML:

```
<entry>
<content />
<yv:entityType>category</yv:entityType>
<updated>2010-01-01T00:00:00Z</updated>
<id>789789</id>
<title>Drama</title>
<yv:hasSubCategores>1</yv:hasSubCategories>
<yv:adult>0</yv:adult>
</entry>
```

***On-demand Publication***

This entity type describes an On-demand Publication of a Programme. It populates a Publication structure in the System API, and has an entityType of ondemand.

Fields:

| LMM Field Ref. | B2C XML Element | Content | Cardinality | Notes |
|---|---|---|---|---|
| Record.identifi er | id | string | 1 | The CCO record identifier of this Publication. |
| AVAttributes. bitRate.target | media:content [@bitrate] | integer | 1 | Target bitrate (in bits/second) of this Publication's associated asset(s). |
| AVAttributes. bitRate.minimu m | media:content/ yv: minBitra te | integer | 0..1 | Minimum bitrate (in bits/second) of this Publication's associated asset(s). |
| Publication. serviceRef | yv:serviceI d | string | 1 | The CCO record identifier of the On-demand Service to which this Publication belongs. |
| Publication. publishedDurat ion | media:content [@duration] | integer | 1 | The duration of this Publication measured in seconds. |
| AVAttributes. mediaType | media:content [@medium] | string | 1 | The media type of the Publication, according to the controlled vocabulary specified in the Yahoo Media RSS specification version 1.5.0. |

(continued)

| LMM Field Ref. | B2C XML Element | Content | Cardin ality | Notes |
|---|---|---|---|---|
| AVAttributes. audio.mixType | media:cont ent [@channel s] | integer | 1 | The number of audio channels used, i.e. 1 (mono), 2 (stereo) or 6 (5.1 surround). |
| AVAttributes.a udio.dubbingLa nguage | media:cont ent/ yv: audioDubbi ng Language | string | 0..1 | Indicates the language in which this Publication has been dubbed. The absence of this element indicates that there is no dubbing. |
| AVAttributes.a udio.audioDesc ription Language | media:cont ent/ yv: audioDescr iption Language | string | 0..1 | The language of the embedded audio description. The absence of this element indicates that no audio description is present. |
| AVAttributes.vi deo. aspectRatio | media:cont ent/ yv: aspectR atio | string | 1 | The aspect ratio of the content, which shall be either "16: 9" or "4:3". |
| AVAttributes.vi deo. highDefinition | media:cont ent/ yv:hd | Boolean | 1 | A Boolean flag to indicate whether this Publication is in High Definition or not. |
| AVAttributes.vi deo. colour | media:cont ent/ yv: colour | Boolean | 1 | A Boolean flag to indicate whether this Publication is colour or not. |
| AVAttributes. subtitles.langu age | media:cont ent/ yv: subtitles Language | string | 0..1 | Indicates the language of any associated subtitles. The absence of this element indicates the absence of subtitles. |
| AVAttributes. signing.language | media:cont ent/yv: signing Language | string | 0..1 | Indicates the language of any signing provided in this Publication. The absence of this element indicates that no signing is present. |
| Broadcast.start | yv:schedul eSlot | datetime | 0..1 | The start time of the canonical Schedule Event (if one is specified). |
| OnDemand. canonical Broad cast.serviceRef | yv: linearServi ceId | string | 0..1 | The CCO record identifier of the Linear Service referred to by the canonical Schedule Event (if one is specified). |
| OnDemand. availability.star t | yv:availabil ityStart | datetime | 1 | The start of the availability window of the On-demand Publication. |
| OnDemand. availability.end | yv:availabil ityEnd | datetime | 1 | The end of the availability window of the On-demand Publication. |
| OnDemand. availability.actu al | yv:mediaA vailable | Boolean | 1 | A Boolean flag to indicate whether the Content Provider has expressed that this Publication is "actually available" (i.e. has an available media asset) |
| Price.amount | yv:price | decimal number | 0..1 | Indicative price of the content, if paid content. The absence of this element indicates that the Publication is free to view. |
| Price.currency | yv:currency | string | 0..1 | Currency of the price. "GBP" (United Kingdom Pounds). |

(continued)

| LMM Field Ref. | B2C XML Element | Content | Cardinality | Notes |
|---|---|---|---|---|
| Publication. otherIdentifiers | yv:identifier Type1 yv: identifier Value1 etc | strings | 0..* | Identifiers which may be private to the Content Provider, or may be of a standard type. Those of a standard type must use a type string from the YouViewIdentifierTypeCS, supplied with the B2B interface. |
| Descri ption. classifiers | yv:cdn1 yv: cdn2 etc | strings | 0..* | Terms indicating the Content Distribution Networks on which this Publication is made available. Each element contains a term from YouViewContentDistribution NetworkCS, provided with the B2B specification. Used both for Minimum Quality Threshold signalling, and optionally for providing media URLs in conjunction with the yv:mediaURL elements. The term ID unspecified, when matched to a Media URL, indicates distribution is not via one of the known CDNs. |
| OnDemand. mediaLocator OnDemand. cdnMediaLocat ors | yv:mediaU RL1 yv: mediaURL2 etc | strings | 0..* | URLs indicating the location of the media asset for this Publication on the corresponding CDNs (as listed in the correspondingly-numbered yv:cdn elements). These URLs need only be provided for content which is to be played using the default player application (content played using a CP's own application generally uses private identifiers instead). A pair of yv:cdn and yv: mediaURL elements may also be used to indicate the URL for an asset to be served directly by the CP without use of a CDN ("over the top" delivery) by the provision of a term in YouViewContentDistribution NetworkCS to indicate such a case. |

Example XML:

```
<entry>
<content />
<yv:entityType>ondemand</yv:entityType>
<id>75317531 </id>
<yv:serviceId>123123</yv:serviceId>
<media:content bitrate="5000" duration="3600" medium="video" channels="2">
<yv:minBitrate>3500</yv:minBitrate>
<yv:audioDubbingLanguage>eng</yv:audioDubbingLanguage>
<yv:audioDescriptionLanguage>eng</yv:audioDescriptionLanguge>
<yv:aspectRatio>16:9</yv:aspectRatio>
<yv:hd>1</yv:hd>
<yv:colour>1</yv:colour>
<yv:subtitlesLanguage>eng</yv:subtitlesLanguage>
<yv:signingLanguage>bsl</yv:signingLanguage>
</media:content>
<yv:availabilityStart>2010-01-01T16:00Z</yv:availabilityStart>
<yv:availabilityEnd>2010-01-08T16:00Z</yv:availabilityEnd>
<yv:mediaAvailable>1</yv:mediaAvailable>
<yv:identifierType1>http://youview.com/identifiers/crid.programme</yv:identifierType1>
<yv:identifierValue1>crid://bbc.co.uk/654321</yv:identifierValue1>
<yv:scheduleSlot>2010-01-01T00:00</yv:scheduleSlot>
<yv:linearServiceId>888222</yv:linearServiceId>
<media:category
```

```
scheme="http://refdata.youview.com/mpeg7cs/YouViewContentDistributionNetworkCS/2010-
05-07">GB/bt-wcc</media:category>
<yv:price>0.99</yv:price>
<yv:currency>GBP</yv:currency>
<yv:cdn1>
http://refdata.youview.com/mpeg7cs/YouViewContentDistributionNetworkCS/2010-05-
07#GB/akamai</yv:cdn1>
<yv:mediaURL1>http://akami.com/498732165</yv:mediaURL1>
</entry>
```

### Programme

This entity type describes a Programme, which is derived from Editorial Version with some additional denormalised information (including from its parent Episode). It is used to populate a Programme structure in the System API. It has an entityType of programme.

Fields:

| LMM Field Ref. | B2C XML Element | Content | Cardin ality | Notes |
|---|---|---|---|---|
| Record.ident ifier | id | string | 1 | The CCO record identifier of this Programme. |
| Description. fullTitle | title | string | 1 | The title of this Programme. |
| Description. classifiers | yv:cdn1, yv:cdn2 etc | strings | 0..* | A union of all the Content Distribution Networks on which available (in-window) child On-demand Publications are available. Each element contains a term from YouViewContentDistribution NetworkCS, provided with the B2B specification. Used for Assured Delivery signalling. |
| AVAttributes . bitRate | yv: minBitrate | integer | 1 | The lowest target bitrate of any currently available child On-demand publication. Used for calculating Assured Delivery. |
| [Series] Record.identifier | yv:seriesId | string | 0..1 | The CCO record identifier of the parent Series (if any). |
| [Brand] Record.identifier | yv:brandId | string | 0..1 | The CCO record identifier of the parent Brand (if any). |
| [Top-level Editorial Object] Record.identifier | yv:topGroupId | string | 0..1 | The CCO record identifier of the Brand or Series at the top level of this content hierarchy. Not present if this Programme has no parent Groups. |
| [Series] Description. fullTitle | yv:seriesTitle | string | 0..1 | The title of the parent Series (if any). |
| [Brand] Description. fullTitle | yv:brandTitle | string | 0..1 | The title of the parent Brand (if any). |
| Group. owningService | yv:serviceId | string | 1 | The CCO record identifier of the Content Owning Service which owns this Programme. |
| Description. shortSynopsis | summary | string | 1 | A short editorial description of this Programme. |
| Description. mediumSynopsis | yv:description | string | 0..1 | A medium-length editorial description of this Programme, |

(continued)

| LMM Field Ref. | B2C XML Element | Content | Cardinality | Notes |
|---|---|---|---|---|
| Description. longSynopsis | yv: longDescription | string | 0..1 | A long editorial description of this Programme. |
| Description. originalProduction Languages[] | yv: production Languages | string | 0..1 | A comma-separated list of languages (using ISO 639-2 Alpha-3 language codes as elsewhere) in which the Programme was originally produced. |
| Version. productionDate | yv: production Date | date | 0..1 | W3C date indicating when the Programme was produced. |
| Version. productionTerritory | yv: production Territories | string | 0..1 | Comma-separated list of ISO 3166 Alpha-3 country codes indicating the country or countries in which the Programme was produced. |
| Guidance.codes | media:rating | string | 0..1 | Denton or BBFC codes. Subject to the controlled vocabulary provided with the B2B specification. The CS term is used as the content of the element, while the CS name space is used as the scheme attribute. |
| Guidance. longExplanation | yv:guidanceText | string | 0..1 | A description of why guidance has been applied. |
| Version.duration | yv:duration | integer | 1 | The advertised duration of this Programme in seconds |
| Publication.free | yv:paidContent | Boolean | 1 | A simple denormalisation of the pay status of child On-demand Publications. "1" if all available Publications have a pay flag set, otherwise "0". |
| AVAttributes.video. highDefinition | yv:hd | Boolean | 1 | A simple denormalisation of the status of child On-demand Publications. "1" if any available publication is HD, otherwise "0". |
| AVAttributes . signing | yv:signing | Boolean | 1 | A simple denormalisation of the status of child On-demand Publications. "1" if any available publication has signing (in any language), otherwise "0". |
| AVAttributes .signing | yv:signing | Boolean | 1 | A simple denormalisation of the status of child On-demand Publications. "1" if any available publication has signing (in any language), otherwise "0". |
| AVAttributes .audio.audio Description | yv: audioDescription | Boolean | 1 | A simple denormalisation of the status of child On-demand Publications. "1" if any available publication has AD (in any language), otherwise "0". |

Example XML:

```
<entry>
<content />
<yv:entityType>programme</yv:entityType>
<updated>2010-03-26T18:07:54Z</updated>
<id>654321</id>
<title>Midnight</title>
<yv:brandId>456789</yv:brandId>
<yv:seriesId>987654</yv:seriesId>
<yv:topGroupId>456789</yv:topGroupId>
<yv:seriesTitle>Series 4</yv:seriesTitle>
<yv:brandTitle>Doctor Who</yv:brandTitle>
<yv:serviceId>123123</yv:serviceId>
<summary>As part of a well-deserved holiday, the Doctor takes a bus tour on the planet
Midnight. Little does he know that something is knocking on that bus' wall...</summary>
<yv:longDescription>As part of a well-deserved holiday, the Doctor takes a bus tour on the
planet Midnight. Little does he know that something is knocking on that bus' wall... While
Donna stays getting pampered, the Doctor goes onto a plane/spaceship without her.
Everything is fine until the knocking on the wall begins. With a woman on the ship who has
the ability to turn all his powers against him, passengers who are willing to throw him out of
the ship and a unknown alien possesing everyone, will the Doctor and passengers ever get
out alive? </yv:longDescription>
<yv:description>While Donna stays getting pampered, the Doctor goes onto a
plane/spaceship without her. Everything is fine until the knocking on the wall begins. With a
woman on the ship who has the ability to turn all his powers against him, passengers who are
willing to throw him out of the ship and a unknown alien possesing everyone, will the Doctor
and passengers ever get out alive?</yv:Description>
<yv:productionLanguages>eng</yv:productionLanguages>
<yv:productionTerritories>gbr</yv:productionTerritories>
<yv:productionDate>2010-01-01T00:00:00Z</yv:productionDate>
<media:rating
scheme="http://bbc.co.uk/refdata/mpeg7cs/DentonContentWarningCS/2010/04/19
">G</media:rating>
<yv:guidanceText>Contains scenes involving violence.</yv:guidanceText>
<yv:duration>2700</media:duration>
<yv:paidContent>0</yv:paidContent>
<yv:hd>1</yv:hd>
<yv:signing>1</yv:signing>
<yv:audioDescription>0</yv:audioDescription>
<yv:cdn1>http://refdata.youview.com/mpeg7cs/YouViewContentDistributionNetworkCS/2010-
05-07#GB/bt-wcc</yv:cdn1>
<yv:minBitrare>5000<yv:minBitrate>
</entry>
```

***Programme (summary)***

This entity provides basic information about a Programme. It is used to populate a Summary structure (of type Programme) in the System API. The entity type is programme, just as with the full Programme entity, but this variant displays a simpler view of it than the full Programme specified above.

Fields:

| LMM Field Ref. | B2C XML Element | Content | Cardinality | Notes |
|---|---|---|---|---|
| Record.identifier | id | string | 1 | The CCO record identifier of this Programme. |
| Description. fullTitle | title | string | 1 | The title of this Programme. |
| Description.n. classifiers | yv:cdn1, yv:cdn2 etc | string | 0..* | A set of classifiers which describe the Programme. The current use case is for listing Content Distribution Networks, denormalised from all available child On-Demand Publications. A controlled term from the vocabulary YouViewContentDistributionNetworkC S, supplied with the B2B specification, where the CS name space is the scheme attribute and the term is the element content. |
| AVAttributes. bitRate | yv: lowestTargetBitrate | integer | 1 | The lowest target bitrate of any currently available child On-demand publication. Used for ca |
| [Series] Description. fullTitle | yv: seriesTitle | string | 0..1 | The title of the parent Series (if any). |
| [Brand] Description. fullTitle | yv: brandTitle | string | 0..1 | The title of the parent Brand (if any). |
| Description. shortSynopsis | summary | string | 1 | A short editorial description of the Programme. |
| Group. owningService | yv:serviceld | string | 1 | The CCO record identifier of the Content Owning Service which owns this Programme. |
| Version.duration | yv:duration | integer | 1 | The advertised duration of this Programme in seconds |
| Guidance. codes | media:rating | string | 0..1 | Denton or BBFC codes. Subject to the controlled vocabulary provided with the B2B specification. The CS term is used as the content of the element, while the CS name space is used as the scheme attribute. |
| Publication.free | yv: paidContent | Boolean | 0..1 | A simple denormalisation of the pay status of child On-demand Publications. "1" if all available Publications have a pay flag set, otherwise "0". |
| AVAttributes.video. highDefinition | yv:hd | Boolean | 1 | A simple denormalisation of the status of child On-demand Publications. "1" if any available publication is HD, otherwise "0". |
| AVAttributes. subtitles | yv:subtitles | string | 0..1 | A simple denormalisation of the status of child On-demand Publications. "1" if any available publication has subtitles, otherwise "0". |
| AVAttributes. signing | yv:signing | Boolean | 1 | A simple denormalisation of the status of child On-demand Publications. "1" if any available publication has signing (in any language), otherwise "0". |

(continued)

| LMM Field Ref. | B2C XML Element | Content | Cardinality | Notes |
|---|---|---|---|---|
| AVAttributes.audio.audioDescription | yv: audioDescription | Boolean | 1 | A simple denormalisation of the status of child On-demand Publications. "1" if any available publication has AD (in any language), otherwise "0". |

Example XML

```
<entry>
<content />
<yv:entityType>programme</yv:entityType>
<updated>2010-03-26T18:07:54Z</updated>
<id>654321</id>
<yv:serviceId>123123</yv:serviceId>
<title>Midnight</title>
<yv:seriesTitle>Series 4</yv:seriesTitle> <yv:brandTitle>Doctor Who</yv:brandTitle>
<summary>As part of a well-deserved holiday, the Doctor takes a bus tour on the planet
Midnight. Little does he know that something is knocking on that bus' wall...</summary>
<media:rating
scheme"http://bbc.co.uk/refdata/mpeg7cs/DentonContentWarningCS/2010/04/19">
G</media:rating>
<yv:paidContent>0</yv:paidContent>
<yv:hd>1</yv:hd>
<yv:subtitles>1</yv:subtitles>
<yv:signing>1</yv:signing>
<yv:audioDescription>0</yv:audioDescription>
<yv:cdn1>http://refdata.youview.com/mpeg7cs/YouViewContentDistributionNetworkCS/2010-
 10-22#GBR-bt_wcc</yv:cdn1>
<yv:lowestTargetBitrare>5000<yv:lowestTargetBitrate>
<yv:duration>2700</media:duration> </entry>
```

***Schedule Event***

This entity type describes a linear publication; that is to say, a schedule event. It populates a Publication structure in the System API and has an entityType of scheduleevent.

Fields:

| LMM Field Ref. | B2C XML Element | Content | Cardinality | Notes |
|---|---|---|---|---|
| Record.ident ifier | id | string | 1 | The CCO record identifier of this Publication. |
| Description. classifiers | media:category | string | 0..* | A set of classifiers which describe the Publication. The current use case is for DVB Genre Codes. A controlled term from the vocabulary DTGContentCS or FreesatContentCS, included with the B2B Specification, where the CS name space is the scheme attribute and the term is the element content. |

(continued)

| LMM Field Ref. | B2C XML Element | Content | Cardinality | Notes |
|---|---|---|---|---|
| Description. shortTitle | title | string | 1 | The title of this Schedule Event. Used for populating EPG views. |
| Description. mediumSynopsis | yv:description | string | 0..1 | An editorial description of the content. |
| Publication. serviceRef | yv:serviceId | string | 1 | The CCO record identifier of the Linear Service to which this Publication belongs. |
| Publication. publishedDuration | media:content [@duration] | integer | 1 | The duration of the linear event, in seconds. |
| AVAttributes . mediaType | media:content [@medium] | string | 1 | The media type of the Publication, according to the controlled vocabulary specified in the Yahoo Media RSS specification version 1.5.0. |
| AVAttributes audio.mixType | media:content [@channels] | integer | 1 | The number of audio channels used, i.e. 1 (mono), 2 (stereo) or 6 (5.1 surround). |
| AVAttributes .audio.Language | media:content [@lang] | string | 1 | Indicates the language of the main audio. |
| AVAttributes .audio.dubbingLanguage | media:content/yv: audioDubbing Language | string | 0..1 | Indicates the language in which this Publication has been dubbed. The absence of this element indicates that there is no dubbing. |
| AVAttributes .audio.audio Description Language | media:content/yv: audioDescription Language | string | 0..1 | The language of the embedded audio description. The absence of this element indicates that no audio description is present. |
| AVAttributes . video. aspectRatio | media:content/ yv:aspectR atio | string | 1 | The aspect ratio of the content, which shall be either "16:9" or "4:3". |
| AVAttributes . video. highDefinition | media:content/ yv:hd | Boolean | 1 | A Boolean flag to indicate whether this linear event is in High Definition or not. This element shall not be present for audio-only content. |
| AVAttributes video. colour | media:content/ yv:colour | Boolean | 1 | A Boolean flag to indicate whether this linear event is in colour or not. This element shall not be present for audio-only content. |

(continued)

| LMM Field Ref. | B2C XML Element | Content | Cardin ality | Notes |
|---|---|---|---|---|
| AVAttributes . subtitles.language | media:content/ yv:subtitles Language | string | 0..1 | Indicates the language of any associated subtitles provided with this linear event. The absence of this element indicates the absence of subtitles. |
| AVAttributes signing.language | media:content/ yv:signing Language | string | 0..1 | Indicates the language of any signing provided in this Publication. The absence of this element indicates that no signing is present. |
| Broadcast.start | yv:scheduleSlot | datetime | 1 | The start time of the linear event. |
| [On-demand] Record.identifier | yv:onDemandId | string | 0..1 | The Content Provider may indicate on the B2B interface that a particular On-demand Publication provides the catch-up for this schedule event. If such an indication has been made, the CCO Record Identifier of that On-demand Publication appears here. |
| OnDemand. availability.start | yv:availability Start | datetime | 0..1 | The start of the availability window of the associated On-demand Publication, if one is indicated. |
| OnDemand. availability.end | yv:availability End | datetime | 0..1 | The end of the availability window of the associated On-demand Publication. |
| OnDemand. availability. actual | yv: mediaAvailable | Boolean | 0..1 | A Boolean flag to indicate whether the Content Provider has expressed that the corresponding On-demand Publication (if one has been indicated) is "actually available" (i.e. has an available media asset). |
| Publication. otherIdentifiers | yv: identifierType1 yv: identifierValue1 etc | strings | 0..* | Identifiers which may be private to the content provider, or may be of a standard type. Those of a standard type must use a type string from the YouViewIdentifierTypeCS, supplied with the B2B interface. |

EP 3 313 080 A1

(continued)

| LMM Field Ref. | B2C XML Element | Content | Cardin ality | Notes |
|---|---|---|---|---|
| Publication.free | yv:paidContent | Boolean | 1 | A flag to indicate that viewing this broadcast requires payment. "1" indicates that payment is required, "0" indicates that viewing is free. |
| Broadcast. airingAttributes. repeat | yv:repeat | Boolean | 0..1 | "1" indicates that this broadcast is a repeat, "0" indicates the first showing of this content. |
| Guidance.codes | media:rating | string scheme attribute | 0..1 | Denton or BBFC codes. Subject to the controlled vocabulary provided with the B2B specification. The CS term shall be the element's content, while the CS name space is the scheme attribute. |
| Guidance. longExplanation | yv:guidanceText | string | 0..1 | A description of why guidance has been applied. |

Example XML

```
<entry>
<content />
<yv:entityType>scheduleevent</yv:entityType>
<updated>2010-01-01T00:00:00Z</updated>
<id>75307530</id>
<yv:serviceId>123123</yv:serviceId>
<title>Doctor Who - Midnight</title>
<yv:description> While Donna stays getting pampered, the Doctor goes onto a
plane/spaceship without her. Everything is fine until the knocking on the wall begins. With a
woman on the ship who has the ability to turn all his powers against him, passengers who are
willing to throw him out of the ship and a unknown alien possesing everyone, will the Doctor
and passengers ever get out alive?</yv:description>
<media:content duration="3600" medium="video" channels="2" lang="eng">
<yv:audioDubbingLanguage>eng</yv:audioDubbingLanguage>
<yv:audioDescriptionLanguage>eng</yv:audioDescriptionLanguge>
<yv:aspectRatio>16:9</yv:aspectRatio>
<yv:hd>1</yv:hd>
<yv:colour>1</yv:colour>
<yv:subtitlesLanguage>eng</yv:subtitlesLanguage>
<yv:signingLanguage>bsl</yv:signingLanguage>
</media:content>
<yv:scheduleSlot>2010-01-01T00:00</yv:scheduleSlot>
<yv:onDemandId>452386</yv:onDemandId>
<yv:availabilityStart>2010-01-01T16:00Z</yv:availabilityStart>
<yv:availabilityEnd>2010-01-08T16:00Z</yv:availabilityEnd>
<yv:mediaAvailable>0</yv:mediaAvailable>
<yv:identifierType1>http://refdata.youview.com/mpeg7cs/YouViewIdentifierTypeCS/2010-05-
24#grouptd.programConcept</yv:identifierType1>
<yv:identifierValue1>crid://bbc.co.uk/654321</yv:identifierValue1>
<media:rating
scheme="http://bbc.co.uk/refdata/mpeg7cs/DentonContentAlertCS/2007/09/10">G</media:rat
```

120

```
ing>
<yv:paidContent>0</yv:paidContent>
<yv:repeat>1</yv:repeat>
<yv:guidanceText>Contains scenes involving violence.</yv:guidanceText>
</entry>
```

### Schedule Event (Summary)

This entity type describes a linear publication; that is to say, a schedule event. It populates a ScheduleEvent structure in the System API and has an entityType of scheduleevent.

Fields:

| LMM Field Ref. | B2C XML Element | Content | Cardinality | Notes |
|---|---|---|---|---|
| Record.identifier | id | string | 1 | The CCO record identifier of this Schedule Event. |
| [Programme] Record.identifier | yv:programmeId | string | 0..1 | The CCO record identifier of the parent Programme, supplied only if that Programme contains enhanced metadata supplied by the CP to CCO. |
| Publication . serviceRef | yv:serviceId | string | 1 | The CCO record identifier of the Linear Service to which this Schedule Event belongs. |
| Description . shortTitle | title | string | 1 | The title of this Broadcast Publication. Used for populating EPG views. |
| Publication . publishedDuration | media:content [@duration] | integer | 1 | The duration of the linear event, in seconds. |
| Broadcast. start | yv:schedule Slot | datetime | 1 | The start time of the linear event. |
| [On-demand] Record, identifier | yv:onDemandId | string | 0..1 | The CCO record identifier of an On-demand Publication which the Content Provider has indicated provides the catch-up for this schedule event. |
| OnDemand availability. start | yv:availability Start | datetime | 0..1 | The start of the availability window of the associated On-demand Publication. |
| OnDemand . availability. end | yv: availabilityEnd | datetime | 0..1 | The end of the availability window of the associated On-demand Publication. |
| OnDemand . availability. actual | yv: mediaAvailable | Boolean | 0..1 | A Boolean flag to indicate whether the Content Provider has expressed that the corresponding On-demand Publication is "actually available" (i.e. has an available media asset) |
| Publication . otherIdentifiers | yv: identifierType1 yv: identifierValue1 etc | strings | 0..* | Identifiers which may be private to the content provider, or may be of a standard type. Those of a standard type must use a type string from the YouViewIdentifierTypeCS, supplied with the B2B interface. |

Example XML:

```
<entry>
<content />
<yv:entityType>scheduleevent</yv:entityType>
<updated>2010-01-01T00:00:00Z</updated>
```

```
<id>75307530</id>
<yv:programmeId>654321</yv:programmeId>
<yv:serviceId>996633</yv: serviceId >
<title>Doctor Who - Midnight</title>
<media:content duration="3600 />
<yv:scheduleSlot>2010-01-01T00:00</yv:scheduleSlot>
<yv:availabilityStart>2010-01-01T16:00Z</yv:availabilityStart>
<yv:availabilityEnd>2010-01-08T16:00Z</yv:availabilityEnd>
<yv:onDemandId>753753</yv:onDemandId>
<yv:mediaAvailable>1</yv:mediaAvailable>
<yv:identifierType1>http://youview.com/identifiers/EventLocator
</yv:identifierType1>
<yv:identifierValue1>dvb://233a..2045;1ab6</yv:identifierValue1>
<yv:identifierType2>http://refdata.youview.com/mpeg7cs/YouViewldentifierTypeCS/2010-05-
24#groupld.programConcept</yv:identifierType2>
<yv:identifierValue2>dvb://233a..2045;1ab6</yv:identifierValue2>
</entry>
```

*Series*

This entity provides the information describing a Series. It is used to populate a Summary structure (of type series) in the system API. It has an entityType of series.

Fields:

| LMM Field Ref. | B2C XML Element | Content | Cardinality | Notes |
|---|---|---|---|---|
| Record.identifier | id | string | 1 | The CCO record identifier of this Series. |
| Description. fullTitle | title | string | 1 | The title of this Series. |
| Group. parentGroup | yv:brandId | string | 0..1 | The CCO record identifier of the parent Brand (if any). |
| [Brand] Description. fullTitle | yv: brandTitle | string | 0..1 | The title of the parent Brand (if any). |
| Description. shortSynopsis | summary | string | 0..1 | A short editorial description of the Series. |
| Group.owningService | yv: serviceId | string | 1 | The CCO record identifier of the Content Owning Service which owns this Series. |
| Group. childCount | yv: childCount | integer | 1 | The number of descendent Programmes of this Series with available On-demand Publications. |

Example XML:

```
<entry>
<content />
<yv:entityType>series</yv:entityType>
<updated>2010-01-01T00:00:00Z</updated>
<id>987654</id>
<yv:serviceId>123123</yv:serviceId>
<title>Series 4</title>
<yv:brandId>456789</yv:brandId>
<yv:brandTitle>Doctor Who</yv:brandTitle>
<summary>Series 4 of The Doctor's adventures.</summary>
<yv:childCount>2</yv:childCount>
</entry>
```

*Service*

This entity provides information about a Service. It is used to populate a Service structure in the System API. It has an entityType of service.

Fields

| LMM Field Ref. | B2C XML Element | Content | Cardinality | Notes |
|---|---|---|---|---|
| Record.identifier | id | string | 1 | The CCO record identifier of this Service. |
| Service. mediaPlayer | yv:player | string | 0..1 | The CCO record identifier of the Application associated with this Service. |
| Service. parentService | yv:parentId | string | 0..1 | The CCO record identifier of the parent Service of this Service. Allows a hierarchy of services by denoting another service which is the parent of this one. |
| Service. providerName | yv: providerName | string | 1 | The name of the Content Provider who provides this Service. |
| Description. fullTitle | title | string | 0..1 | The title of this Service. |
| Description. shortTitle | yv:shortTitle | string | 0..1 | A shortened title for this Service. |
| Description. shortSynopsis | summary | string | 0..1 | A short description of this Service. |
| Description. mediumSynopsis | yv:description | string | 0..1 | A medium-length description of this Service. |
| Description. longSynopsis | yv: longDescription | string | 0..1 | A longer description of this Service. |

Example XML:

```
<entry>
<yv:entityType>service</yv:entityType>
<updated>2010-01-01T00:00:00T</updated>
<id>123123</id>
<yv:parentId>001002<yv:parentId>
<yv:player>123456</yv:player>
<yv:providerName>BBC</yv:providerName>
<title>BBC One</title>
<yv:shortTitle>BBC1 </yv:shortTitle>
<summary>The BBC's flagship entertainment channel.</summary>
<yv:description>BBC One brings you the best entertainment from the BBC.</yv:description>
<yv:longDescription>BBC One is the BBC's flagship channel, bringing you the best
entertainment from the BBC.</yv:longDescription>
</entry>
```

**B2C: Browse Service**

The Browse Service supplies the metadata to support browse journeys through the user interface, such as browsing content by category.
It provides a number of endpoints, which are preconceived views onto the metadata. The difference between these endpoints lies in the type(s) of entity or entities returned. The output from each endpoint is further customisable through the use of additional view parameters (filters and sort options) which may be applied as part of the request URL.

*B2C Browse Service: Request specification*

Requests are made to the Browse Service using the HTTP interface specified above.

The endpoints required from the Browse Service are listed below. In almost all use cases, some additional filter is applied, such as the ID of a particular entity to return, or the ID of a parent entity or category. Available filters are listed below.

| Endpoint Template Name | Description | Placeholders in Template | Type(s) Returned |
|---|---|---|---|
| categories | Summaries of Categories themselves. | ${view} | category |
| summaries | Summaries of various entities. For example, category browsing is achieved using this feed, filtered by category. | ${view} | brand series programme (summary) service application |
| programmes | Full information about a Programme (or multiple Programmes). | ${view} | programme |
| ondemands | A list of On-demand Publications. | ${view} | ondemand |
| scheduleevents | A list of Schedule Events. | ${view} | scheduleevent |

Any of the Browse endpoints may need to be filtered or sorted in additional ways. The endpoint URL templates include a ${view} placeholder where additional filter parameters can be added, which are replaced by one or more processed view parameter templates, separated by ampersands.

The view parameter templates themselves are supplied by the CCO provider, reflecting the URL structure of the implementation.

*Filters & Sorting:*

The following table lists the filters which apply to the Browse Service endpoints. Each filter may only be used against certain endpoints, and may not be applied to others. The Applicable Endpoint Templates column lists the endpoints to which the filters apply, using the template names defined above.

The placeholders in some templates may be replaced by multiple terms separated by Boolean operators. The Valid Operators column indicates which operators may be used with each filter. The OR operator is represented in URLs as a pipe character (|). The AND operator is represented in URLs as a plus symbol (+).

If no filter is applied to an endpoint, all entities of the appropriate type are returned.

| Filter Template Name | Description | Placeholder(s) in Template | Valid Values | Valid Operators | Applicable Endpoint Templates |
|---|---|---|---|---|---|
| browse. entity | Specifies the type(s) of entity which should be returned. | ${entity} | "programme" "series" "brand" "service" "application" | OR | summaries |
| browse. id | Return only one entity, with the specified ID, or multiple entities, where the IDs are pipe-separated (e.g. to request abc and def insert abc\|def) | ${id} | Any CCO record identifier | OR | summaries programmes ondemands scheduleevents |
| browse. programme | Returns Publications belonging to a given parent Programme. | ${programme-id} | Any CCO Programme record identifier | | ondemands scheduleevents |

(continued)

| Filter Template Name | Description | Placeholder (s) in Template | Valid Values | Valid Operators | Applicable Endpoint Templates |
|---|---|---|---|---|---|
| browse. brand | Return content which belongs to the specified Brand. | ${brand-id} | Any CCO Brand record identifier | | summaries programmes |
| browse. series | Return Programmes which belong to the specified Series. | ${series-id} | Any CCO Series record identifier | | summaries programmes |
| browse. service | Return entities whose yv:serviceId matches the service ID supplied. | ${service-id} | Any CCO Service record identifier | | summaries programmes ondemands scheduleeven ts |
| browse. category | Return entities which belong to the specified category, or sub-categories of the specified category. | ${category-id} | Any CCO Category record identifier. | OR | summaries programmes categories |
| browse. language | Allows the client to request metadata in a particular language (where available). | ${lang} | "eng" (English) "cym" (Welsh) "gla" (Scots Gaelic) | | summaries programmes |
| browse. paid | Requests content which is specifically defined as paid or free. Excluding this filter returns both paid and free content. | ${paid} | "0" (Return free content only) "1" (Return paid content only) | OR | summaries programmes |
| browse. adult | Return adult content or exclude it. If the filter is not present, all endpoints shall default to excluding adult content for all requests. | ${adult} | "0" (Return non-adult content only) "1" (Return adult content only) | OR | categories summaries programmes |
| browse. paginate | Index of the first and last results to be returned, in order to paginate results. If not supplied, endpoints shall default to returning items 1 to 10. | ${start} ${end} | Any integer. | | categories summaries programmes ondemands scheduleeven ts |
| browse. location | This parameter allows the client to specify its location, for the purposes of accessing content only available to, or targeted at, certain regions. | ${location} | Any term from TargetRegio n CS, supplied with the B2B interface specification | OR | summaries programmes |

(continued)

| Filter Template Name | Description | Placeholder(s) in Template | Valid Values | Valid Operators | Applicable Endpoint Templates |
|---|---|---|---|---|---|
| | The client may provide one or more location terms, to the finest granularity which it is able to supply. The CCO service then matches based on these base terms, but also match on prefixes further up the hierarchy. (e.g. a client supplying the term GBR-ENG-london shall also be provided with metadata about content targeted at GBR-ENG and GBR). | | . | | |
| browse. include | This filter enables the Closed User Groups feature, which allows certain users to see content not available to the whole user base. The filter allows the client to specify a list of terms. Additional content may then be included in results, based the matching term being applied to that content. For example, terms may include the name of the ISP to which the client is connected, causing results to include content available only to a specific ISP. | ${terms} | Terms from Internet Service ProviderCS, supplied with the B2B interface specification . | OR | summaries programmes ondemands |
| browse. access | Allows the client to request Programmes with certain access services, or with none ("base"). The default to be used in the absence of this filter to return all Programmes. | ${access} | "base" "signed" "ad" "subtitles" | OR | summaries |
| browse. format | Allows the client to request Programmes with certain format options. The default to be used in the absence of this filter to return all Programmes. | ${format} | "hd" "sd" | OR | summaries |
| browse. medium | Request content in a particular medium (for example, audio or video). | ${medium} | Terms from the Yahoo Media RSS specification version 1.5.0 medium attribute. | OR | summaries |
| browse. groupby | Specifies that results should be grouped by some common parameter; the parent brand or series, or the top level editorial object. The default is to apply no grouping. | ${groupby} | "brand" "series" "topGroup" | | summaries |

(continued)

| Filter Template Name | Description | Placeholder (s) in Template | Valid Values | Valid Operators | Applicable Endpoint Templates |
|---|---|---|---|---|---|
| browse. inwindow | Return or exclude Programmes, Series and Brands based on availability of descendent On-demand Publications. For Applications, return or exclude based | ${window} | One of the following terms: "now" (have a past or absent start of availability and a future | OR | summaries |
| | upon the entity's own availability window. Availability windows do not apply to Services. Options are within availability window, coming soon or return everything regardless of availability. The default shall be "now". | | or absent end of availability) "soon" (have a future start of availability and a future or absent end of availability) "all" | | |
| browse. available | Return or exclude Programmes, Series and Brands based on actual asset availability of descendent On-demand Publications. For Applications, return or exclude based upon the entity's own actual availability. Availability does not apply to Services. The default shall be to return all content (1 OR 0) | ${available} | "1" (return only actually available items) "0" (return only items which are not available) | OR | summaries |
| browse. sort | Sort the results by the specified parameter, such that the client may render results without re-sorting. If this parameter is absent, the order is undefined. For example, if the template were: sort=${param}:${order} Then sorting by title a-z would produce the following filter: sort=title: asc | ${param} ${order} | ${param} shall be the sort parameter: "title" (uses top level group sort title) "soa" (start of availability) "expiry" (end of availability) "broadcast" (date-time of broadcast) "index" (series or episode number) ${order} shall be one of the following terms: "asc" "desc" | | categories summaries programmes ondemands scheduleevents |

*B2C Browse Service: Response specification*

Responses from the Browse Service shall be according to the XML response format detailed above. Each endpoint shall return an XML instance document containing zero or more <entry> elements, each representing an entity. The types of entities returned depend on the endpoint, as specified above.

*B2C: Search Service*

The Search Service supplies metadata for search journeys in the user interface.
The Search Service provides a single endpoint for submitting search queries. The output from the search endpoint is further customisable through the use of additional view parameters (filters) which may be applied as part of the request URL.

*B2C Search Service: Request specification*

Requests are made to the Search Service using the HTTP interface detailed above.
The Search Service endpoint template is as follows:

| Endpoint Template Name | Description | Placeholders in Template | Type(s) Returned |
|---|---|---|---|
| search | The query endpoint for search requests. The query placeholder is the point at which the (URL-encoded) search query is to be inserted. | $ {query.search} ${view} | brand series programme (summary) service application |

The template includes the placeholder ${query.search} which the client replaces with the query string. Terms may be specified using AND or OR operators, using the same separator characters as with Boolean operators in other browse and search filters. Terms separated by a (URL encoded) space (with no special operator) are treated as an AND query.
The search endpoint may need to be filtered in additional ways. The endpoint URL template includes a ${view} placeholder where additional filter parameters can be added, which are replaced by one or more processed view parameter templates separated by ampersands. The view parameter templates themselves are supplied by the CCO provider in the same manner as the endpoint template.

*Filters & Sorting:*

The following table lists the filters which apply to the Search Service.
The placeholders in some templates may be replaced by multiple terms separated by Boolean operators. The Valid Operators column indicates which operators may be used with each filter. The OR operator is represented in URLs as a pipe character (|).The AND operator is represented in URLs as a plus symbol (+).

| Filter Template Name | Description | Placeholder ( s) in Template | Valid Values | Valid Operators |
|---|---|---|---|---|
| search. scope | Specifies the scope of search to be performed. Differently scoped searches matches the search term(s) against different fields in the data. If this filter is not used, the scope shall be "default". | ${type} | "default" "castcrew" | |
| search. entity | Specifies the type(s) of entity which should be returned. | ${entity} | "programme" "series" "brand" "service" "application" | OR |
| search. brand | Return content which belong to the specified Brand. | ${brand-id} | Any CCO Brand record identifier | |

(continued)

| Filter Template Name | Description | Placeholder (s) in Template | Valid Values | Valid Operators |
|---|---|---|---|---|
| search. series | Return Programmes which belong to the specified Series. | ${series-id} | Any CCO Series record identifier | |
| search. service | Return entities whose yv:serviceId matches the service ID supplied. | ${service-id} | Any CCO Service record identifier | |
| search. category | Return entities which belong to the specified category. | ${category-id} | Any CCO Category record identifier. | OR |
| search. language | Allows the client to request metadata in a particular language (where available). | ${lang} | "eng" (English) "cym" (Welsh) "gla" (Scots Gaelic) | |
| search. paid | Requests content which is specifically defined as paid or free. Excluding this filter shall return both paid and free content. | ${paid} | "0" (Return free content only) "1" (Return paid content only) | OR |
| search. adult | Return adult content or exclude it. If the filter is not present, all endpoints shall default to excluding adult content for all requests. | ${adult} | "0" (Return non-adult content only) "1" (Return adult content only) | OR |
| search. access | Allows the client to request Programmes with certain access services, or with none ("base"). The default to be used in the absence of this filter to return all Programmes. | ${access} | "base" "signed" "ad" "subtitles" | OR |
| search. format | Allows the client to request Programmes with certain format options. The default to be used in the absence of this filter to return all Programmes. | ${format} | "hd" "sd" | OR |
| search. medium | Request content in a particular medium (for example, audio or video). | ${medium} | Terms from the Yahoo Media RSS specification version 1.5.0 medium attribute. | OR |
| search. group by | Specifies that results should be grouped by some common parameter; the parent brand or series, or the top level editorial object. The default is to apply no grouping. | ${groupby} | "brand" "series" "topGroup" | |
| search. paginate | Index of the first and last results to be returned, in order to paginate results. If absent, endpoints shall default to returning items 1 to 10. | ${start} ${end} | Any integer. | |
| search. location | This parameter allows the client to specify its location, for the purposes of accessing content only available to, or targeted at, certain regions. | ${location} | Any term from the TargetRegionCS supplied with the B2B interface specification. | OR |

(continued)

| Filter Template Name | Description | Placeholder ( s) in Template | Valid Values | Valid Operators |
|---|---|---|---|---|
| | The client may provide one or more location terms, to the finest granularity which it is able to supply. The CCO service then matches based on these base terms, but also match on prefixes further up the hierarchy. (e.g. a client supplying the term GBR-ENG-london shall also be provided with metadata about content targeted at GBR-ENG and GBR). | | | |
| search. include | This filter enables the Closed User Groups feature, which allows certain users to see content not available to the whole user base. The filter allows the client to specify a list of terms. Additional content may then be included in results, based the matching term being applied to that content. For example, terms may include the name of the ISP to which the client is connected, causing results to include content available only to a specific ISP. | ${terms} | Terms from YouViewInternetSer viceProviderCS, supplied with the B2B interface specification. | OR |
| search. inwindow | Return or exclude Programmes, Series and Brands based on availability of descendent On-demand Publications. For Applications, return or exclude based upon the entity's own availability window. Availability windows do not apply to Services. Options are within availability window, coming soon or return | ${window} | One of the following terms: "now" (have a past or absent start of availability and a future or absent end of availability) "soon" (have a future start of availability and a future or absent end of availability) "all" | OR |
| | everything regardless of availability. The default shall be "now". | | | |
| search. available | Return or exclude Programmes, Series and Brands based on actual asset availability of descendent On-demand Publications. For Applications, return or exclude based upon the entity's own actual availability. Availability does not apply to Services. The default shall be to return all content (1 OR 0) | ${available} | "1" (return only actually available items) "0" (return only items which are not available) | OR |

(continued)

| Filter Template Name | Description | Placeholder ( s) in Template | Valid Values | Valid Operat ors |
|---|---|---|---|---|
| search. sort | Sort the results by the specified parameter, such that the client may render results without re-sorting. If this parameter is absent, the sorting shall be by decreasing relevance. For example, if the template were: sort=${param}:$ {order} Then sorting by title a-z would produce the following filter: sort=title:asc | ${param} $ {order} | ${param} is the sort parameter: "title" (uses top level group sort title) "soa" (start of availability) "expiry" (end of availability) "broadcast" (date-time of broadcast) "index" (series or episode number) "relevance" (search relevance) ${order} shall be one of the following terms: "asc" "desc" | |

**B2C Search Service: Response specification**

Responses from the Search Service are according to the XML response format detailed above. The endpoint returns an XML instance document containing zero or more <entry> elements, each representing an entity.

**B2C: Search Suggestions Service**

The Search Suggestions Service provides suggestions of popular search terms based upon a small number of letters supplied by the client receiver device. It has one endpoint, for making search suggestion queries. The output from the endpoint is further customisable through the use of additional view parameters which may be applied as part of the request URL.

**B2C Search Suggestions Service: Request specification**

Requests are made to the Search Suggestions Service using the HTTP interface detailed above.
The Search Suggestions Service endpoint template is as follows:

| Endpoint Template Name | Description | Placeholders in Template | Type(s) Returned |
|---|---|---|---|
| suggestions | The query endpoint for search suggestion requests. The query placeholder is the point at which the (URL-encoded) search query is to be inserted. | $ {query.suggestions} ${view} | Simple list of terms. See below. |

The template includes the placeholder ${query.suggestions} which the client replaces with the query string.
The search suggestions endpoint may need to be filtered in additional ways. The endpoint URL template includes a ${view} placeholder where additional filter parameters can be added, which are replaced by one or more processed view parameter templates. The view parameter templates themselves are supplied by the CCO provider in the same manner as the endpoint template.

**Filters & Sorting:**

The following table lists the filters which apply to the Search Suggestions Service.
The placeholders in some templates may be replaced by multiple terms separated by Boolean operators. The Valid Operators column indicates which operators may be used with each filter. The OR operator is represented in URLs as a pipe character (|).The AND operator is represented in URLs as a plus symbol (+).

| Filter Template Name | Description | Placeholder(s) in Template | Valid Values | Valid Operators |
|---|---|---|---|---|
| suggestions. paginate | Index of the first and last results to be returned, in order to paginate results. If this filter is absent, suggestions 1 to 10 are returned. | ${start} ${end} | Any integer. | |
| suggestions. include | This filter enables the Closed User Groups feature, which allows certain users to see content not available to the whole user base. The filter allows the client to specify a list of terms. Additional suggestions may then be included in results, based the matching term being applied to the suggested content. For example, terms may include the name of the ISP to which the client is connected, causing results to include content available only to a specific ISP. | ${include} | Any exclusive content label provided to the client device by configuration. N.B. These sets may include for example content only available by customers of a particular ISP or application. | OR |
| suggestions. location | This parameter allows the client to specify its location, for the purposes of accessing content only available to, or targeted at, certain regions. The client may provide one or more location terms3, to the finest granularity which it is able to supply. The CCO service then matches based on these base terms, but also matches on prefixes further up the hierarchy. (e.g. a client supplying the term GBR-ENG-london shall also be provided with metadata about content targeted at GBR-ENG and GBR). | ${location } | Any term from the YouViewTarg et RegionCS, supplied with the B2B interface specification. | OR |
| suggestions. adult | Return suggestions for adult content or exclude them. If the filter is not present, the default shall be to exclude adult content for all requests. | ${adult} | "0" (Return non-adult content only) "1" (Return only adult content) | OR |
| suggestions. inwindow | Return suggestions for content which is within availability window (has a past or absent start of availability and a future or absent end of availability), coming soon (has a future start of availability and a future or absent end of availability) or all content. The default shall be to return only suggestions for content which has in-window On-demand Publications ("now"). | ${window} | One of the following terms: "now" "soon" "all" | OR |

No language filtering is available for the Search Suggestions Service. All titles (in any language) may be provided as suggestions, subject to the same rules as those in the default language.

Search suggestions are always sorted according to relevance, in a descending order (the most relevant result appears first).

**B2C Search Suggestions Service: Response specification**

The simpler nature of the data returned by the Search Suggestions Service leads to a requirement for a simpler data format than the XML format described elsewhere.

The response from the Search Suggestions Service is a plain-text set of search terms in a simple newline-separated list.

Example:

    Top Gear
    Top Gun
    Topsy Turvy
    Toploader In Concert

*B2C: Recommendations Service*

The Recommendations Service accepts a CCO Programme Record Identifier, and returns metadata about related or recommended content, based upon the ID supplied.

The Recommendations Service provides one endpoint, for making recommendation requests. The output from the endpoint is further customisable through the use of additional view parameters (filters) which may be applied as part of the request URL.

*B2C Recommendations Service: Request specification*

Requests are made to the Recommendations Service using the HTTP interface detailed above.

The Recommendations Service endpoint template is as follows:

| Endpoint Template Name | Description | Placeholders in Template | Type(s) Returned |
|---|---|---|---|
| recommend | The recommendations endpoint accepts a record identifier for a Programme, and returns related or recommended Programmes, optionally rolled-up into Series and/or Brands. | ${recommend.programme} | programme (summary) series brand |

The template includes the placeholder ${recommend.programme} which the client replaces with the CCO record identifier of the Programme on which to base the recommendations.

The Recommendations Service endpoint may need to be filtered in additional ways. The endpoint URL template includes a ${view} placeholder where additional filter parameters can be added, which are replaced by one or more processed view parameter templates. The view parameter templates themselves are supplied by the CCO provider in the same manner as the endpoint template.

*Filters & Sorting:*

The following table lists the filters which apply to the Recommendation Service.

| Filter Template Name | Description | Placeholder(s) in Template | Valid Values | Valid Operators |
|---|---|---|---|---|
| recommend. language | Allows the client to request metadata in a particular language (where available). | ${lang} | "eng" (English) "cym" (Welsh) "gla" (Scots Gaelic) | |
| recommend. access | Allows the client to request Programmes with certain access services, or with none ("base"). The default to be used in the absence of this filter to return all Programmes. | ${access} | "base" "signed" "ad" "subtitles" | OR |

(continued)

| Filter Template Name | Description | Placeholder(s) in Template | Valid Values | Valid Operators |
|---|---|---|---|---|
| recommend. format | Allows the client to request Programmes with certain format options. The default to be used in the absence of this filter to return all Programmes. | ${format} | "hd" "sd" | OR |
| recommend. groupby | Specifies that results should be grouped by some common parameter; the parent brand or series, or the top level editorial object. The default is to apply no grouping. | ${groupby} | "brand" "series" "topGroup" | |
| recommend. paginate | Index of the first and last results to be returned, in order to paginate results. If absent, endpoints shall default to returning items 1 to 10. | ${start} ${end} | Any integer. | |
| recommend. location | This parameter allows the client to specify its location, for the purposes of accessing content only available to, or targeted at, certain regions. The client may provide one or more location terms4, to the finest granularity which it is able to supply. The CCO service then matches based on these base terms, but also match on prefixes further up the hierarchy. (e.g. a client supplying the term GBR-ENG-london shall also be provided with metadata about content targeted at GBR-ENG and GBR). | ${location} | Any term from YouViewTargetRegionCS, supplied with the B2B interface specification. | OR |
| recommend. include | This filter enables the Closed User Groups feature, which allows certain users to see content not available to the whole user base. The filter allows the client to specify a list of terms. Additional content may then be included in results, based the matching term being applied to that content. For example, terms may include the name of the ISP to which the client is connected, causing results to include content available only to a specific ISP. | ${terms} | Terms from YouViewInternetServiceProviderCS, supplied with the B2B interface specification. | OR |
| recommend. inwindow | Return or exclude Programmes based on availability of descendent On-demand Publications Options are to return items within availability window, items which are coming soon or all items regardless of availability. The default shall be "now". | ${window} | One of the following terms: "now" (have a past or absent start of availability and a future or absent end of availability) "soon" (have a future start of availability and a future or absent end of availability) "all" | OR |
| recommend. available | Return or exclude Programmes based on actual asset availability of descendent On-demand Publications. The default shall be to return all Programmes (1 OR 0) | ${available} | "1" (return only actually available items) "0" (return only items which are not available) | OR |

Returned entities are sorted according to the algorithms of the Recommendations Service. No sorting options are provided to the client.

*B2C Recommendations Service: Response specification*

Responses from the Recommendations Service are according to the XML response format detailed above. The endpoint returns an XML instance document containing zero or more <entry> elements, each one representing a Programme, Series or Brand entity.

*B2C: Highlights Service*

The Highlights Service accepts a CCO Category Record Identifier, and returns metadata about highlighted or promoted content within that category. It enables the platform to feature certain content for prominent display in the user interface.
The Highlights Service provides one endpoint, for making highlight requests. The output from the endpoint is further customisable through the use of additional view parameters (filters) which may be applied as part of the request URL.

*B2C Highlights Service: Request specification*

Requests are made to the Highlights Service using the HTTP interface detailed above.
The Highlights Service endpoint template is as follows:

| Endpoint Template Name | Description | Placeholders in Template | Type(s) Returned |
|---|---|---|---|
| highlights | The highlights endpoint accepts a record identifier for a category, and returns highlighted Programmes, optionally rolled-up into Series and/or Brands. | ${highlights.category} | programme (summary) series brand |

The template includes the placeholder ${highlights.category} which the client shall replace with the CCO record identifier of the category from which the highlighted items shall be selected.
The Highlights Service endpoint may need to be filtered in additional ways. The endpoint URL template includes a ${view} placeholder where additional filter parameters can be added, which shall be replaced by one or more processed view parameter templates. The view parameter templates themselves shall be supplied by the CCO provider in the same manner as the endpoint template.

*Filters & Sorting:*

The following table lists the filters which apply to the Recommendation Service.

| Filter Template Name | Description | Placeholder(s) in Template | Valid Values | Valid Operators |
|---|---|---|---|---|
| highlights. language | Allows the client to request metadata in a particular language (where available). See above. | ${lang} | "eng" (English) "cym" (Welsh) "gla" (Scots Gaelic) | |
| highlights. access | Allows the client to request Programmes with certain access services, or with none ("base"). The default to be used in the absence of this filter is to return all Programmes. | ${access} | "base" "signed" "ad" "subtitles" | OR |

(continued)

| Filter Template Name | Description | Placeholder(s) in Template | Valid Values | Valid Operators |
|---|---|---|---|---|
| highlights. format | Allows the client to request Programmes with certain format options. The default to be used in the absence of this filter is to return all Programmes. | ${format} | "hd" "sd" | OR |
| highlights.g roupby | Specifies that results should be grouped by some common parameter; the parent brand or series, or the top level editorial object. The default is to apply no grouping. | ${groupby} | "brand" "series" "topGroup" | |
| highlights. paginate | Index of the first and last results to be returned, in order to paginate results. If absent, endpoints default to returning items 1 to 10. | ${start} ${end} | Any integer. | |
| highlights. location | This parameter allows the client to specify its location, for the purposes of accessing content only available to, or targeted at, certain regions. The client may provide one or more location terms*, to the finest granularity which it is able to supply. The CCO service then matches based on these base terms, but also matches on prefixes further up the hierarchy. (e.g. a client supplying the term GBR-ENG-london is also be provided with metadata about content targeted at GBR-ENG and GBR). * The current business rule is for the client to supply only a single location term, but the Highlights Service supports multiple terms. | ${location} | Any term from YouViewTargetReg ionCS, supplied with the B2B interface specification. | OR |
| highlights. include | This filter enables the Closed User Groups feature, which allows certain users to see content not available to the whole user base. The filter allows the client to specify a list of terms. Additional content may then be included in results, based the matching term being applied to that content. For example, terms may include the name of the ISP to which the client is connected, causing results to include content available only to a specific ISP. | ${terms} | Terms from YouViewInternetSe rviceProviderCS, supplied with the B2B interface specification. | OR |
| highlights. inwindow | Return or exclude Programmes based on availability of descendent On-demand Publications Options are to return items within availability window, items which are coming soon or all items regardless of availability. The default is "now". | ${window} | One of the following terms: "now" (have a past or absent start of availability and a future or absent end of availability) "soon" (have a future start of availability and a future or absent end of availability) "all" | OR |

(continued)

| Filter Template Name | Description | Placeholder(s) in Template | Valid Values | Valid Operators |
|---|---|---|---|---|
| highlights. available | Return or exclude Programmes based on actual asset availability of descendent On-demand Publications. The default is to return all Programmes (1 OR 0) | ${available} | "1" (return only actually available items) "0" (return only items which are not available) | OR |

Returned entities are sorted according to the algorithms of the Highlights Service. No sorting options are provided to the client.

*B2C Highlights Service: Response specification*

Responses from the Highlights Service are according to the XML response format detailed in above. The endpoint returns an XML instance document containing zero or more <entry> elements, each one representing a Programme, Series or Brand entity.

*B2C: Linear Event Resolution Service*

This service returns a Programme entity, which provides additional information about a programme being shown on a linear channel. It does this by accepting the broadcast identifiers (DVB event locator and Programme CRID) of a linear Event and returning the Programme whose list of Publications contains those broadcast identifiers.
The Linear Event Resolution Service provides one endpoint, for making event resolution requests.

*B2C Linear Event Resolution Service: Request specification*

Requests are made to the Linear Event Resolution Service using the HTTP interface detailed in above. The Linear Event Resolution Service endpoint template is as follows:

| Endpoint Template Name | Description | Placeholders in Template | Type(s) Returned |
|---|---|---|---|
| eventresolve | This endpoint returns a Programme entity when provided a broadcast CRID and DVB event locator. It is used to resolve a broadcast linear schedule event into the enhanced metadata for the associated Programme. | ${programme-crid} ${event-locator} ${view} | programme |

The template includes placeholders for both the linear programme CRID and an event locator of the event to be resolved into a Programme. The event locator is required, and the programme CRID is optional, and is supplied where available.
The accepted values for ${programme-crid} are linear programme CRIDs only. Linear series CRIDs and linear Recommendation CRIDs are not resolved.

*Filters & Sorting:*

The following table lists the filters which apply to the Linear Event Resolution Service.

| Filter Template Name | Description | Placeholder(s) in Template | Valid Values |
|---|---|---|---|
| eventresolve. language | Allows the client to request metadata in a particular language (where available). See above. | ${lang} | "eng" (English) "cym" (Welsh) "gla" (Scots Gaelic) |

Usually, only one result will be returned. If multiple Programmes match, they are returned in decreasing order of the proximity of their scheduleSlot (broadcast date and time) to the present. In other words, the Programme whose schedule slot is closest to "now" is returned first, and the one furthest in the past/future appears last.

Where resolution is successful, the Linear Event Resolution Service returns the appropriate Programme entity, regardless of whether it currently has any available child On-demand Publications.

*B2C Linear Event Resolution Service: Response specification*

Responses from the Linear Event Resolution Service are according to the XML response format detailed in above. The endpoint returns an XML instance document containing zero or more <entry> elements, each one representing a Programme entity. Each Programme entity appears only once in the response.

*B2C: Linear Service Resolution Service*

This service returns a Service record when presented with a linear service locator. This allows the client receiver device to discover enhanced metadata about that service.

The Linear Service Resolution Service provides one endpoint, for making service resolution requests.

*B2C Linear Service Resolution Service: Request specification*

Requests are made to the Linear Service Resolution Service using the HTTP interface detailed in above. The Linear Service Resolution Service endpoint template is as follows:

| Endpoint Template Name | Description | Placeholders in Template | Type(s) Returned |
|---|---|---|---|
| serviceresolve | This endpoint returns a Service entity when provided a DVB service locator, and is used to obtain enhanced metadata for a linear service. | ${service-locator} ${view} | service |

The template includes a ${service-locator} placeholder, which the client is required to replace with the service locator of the service to be resolved.

*Filters & Sorting:*

The following table lists the filters which apply to the Linear Service Resolution

Service.

| Filter Template Name | Description | Placeholder (s) in Template | Valid Values |
|---|---|---|---|
| serviceresolve. language | Allows the client to request metadata in a particular language (where available). See above. | ${lang} | "eng" (English) "cym" (Welsh) "gla" (Scots Gaelic) |

Only one result may ever be returned by this service, as two CCO service entities may not share a service identifier. Therefore, no sorting is applied.

As the Linear Service Resolution Service deals only with Service entities, availability windows are not applicable at all. Any resolved service is returned, irrespective of the date and time of the request.

*B2C Linear Service Resolution Service: Response specification*

Responses from the Linear Service Resolution Service are according to the XML response format detailed in above. The endpoint returns an XML instance document containing zero or one <entry> elements, representing a Service entity.

*B2C: Schedule service*

- The client may request a schedule of events from the Schedule Service.
- The request shall bound the data using three parameters:
- The start time of the schedule block (accepted to a granularity of full hours only)
- The end time of the schedule block (accepted to a granularity of full hours only)
- The Service(s) (channels) for which the schedule is requested
- The Schedule Service provides one endpoint, for requesting a schedule.

*B2C Schedule service: Request specification*

Requests are made to the Schedule Service using the HTTP interface detailed above.

The Schedule Service endpoint template is as follows:

| Endpoint Template Name | Description | Placeholders in Template | Type(s) Returned |
|---|---|---|---|
| schedule | This endpoint returns a Schedule for a particular time block, for a particular linear Service or Services. Start and end times to be a valid W3C datetime, bounding the start or end time of the events (in other words, includes all events which fall at least partly within the specified time block). | ${sched-start} ${sched-end} ${sched-service} ${view}<br><br>A schedule for multiple services may be requested by using the OR operator in the same manner as with filters on other services (multiple IDs separated by a \| character). | schedule event (summary) |

The template includes placeholders for the client to replace with the start time, end time and the CCO record identifier(s) of the Service(s) for which the schedule is requested.

In order to aid caching, the B2C client only ever requests schedule blocks of 3 hours, beginning at one of the following UTC times:

00:00, 03:00, 06:00, 09:00, 12:00, 15:00, 18:00, 21:00

### Filters & Sorting:

The following table lists the filters which apply to the Linear Service Resolution Service.

| Template Name | Description | Placeholder (s) in Template | Valid Values |
|---|---|---|---|
| schedule.languag e | Allows the client to request metadata in a particular language (where available). | ${lang} | "eng" (English) "cym" (Welsh) "gla" (Scots Gaelic) |

The events in the schedule returned are sorted according to service first, and then chronologically, beginning with the event with the earliest scheduled start time.

The Schedule Service deals only with Schedule Event entities, so On-demand availability windows are not applicable. All items in the requested schedule are returned, irrespective of the availability of sibling On-Demand Publications.

### B2C Schedule service: Response specification

Responses from the Schedule Service is according to the XML response format detailed above. The endpoint returns an XML instance document containing zero or more <entry> elements, each representing a scheduleevent entity in summary form.

This list of Schedule Event Summaries describes a schedule in that each entry corresponds to one Event in the linear schedule. Each Schedule Event Summary includes some simple descriptive metadata (such as title) sufficient to populate an EPG grid. This data may be supplied directly over the B2B interface or else denormalised from the parent Programme, if one exists.

### B2C: Roll-up of Programme groups

The following description provides implementation information on how metadata is exposed by the CCO. It is not part of the interface, but has a direct effect on the information which is supplied across the B2C interface.

In order to ease the process of navigating a very large amount of content, the content guide may wish to employ Roll-up to simplify the presentation of large sets of content to the user. Roll-up is a process of grouping content from the same parent group (Brand or Series) into a single result in a browse or search list. Here a means is defined by which a client may request that a response be grouped (rolled-up) in this manner.

For example, if grouping by Brand is requested, the following rules apply:

- If a Brand contains multiple programmes, then a browse or search result includes the Brand itself, and not the individual Programmes. However, this only applies where multiple Programmes belong to the same Brand.
- If the result set contains a single Programme belonging to a Brand, then the Programme entity itself is included in the results.

Result sets may contain a mixture of different results types. For example, if a particular result set contains both a rolled-up Brand and a single Programme, it would appear as shown below:

```
<entry>
<yv:entityType>brand</yv:entityType>
<id>123456</id>
<title>Doctor Who</title>
{additional brand information would appear here}
</entry>
<entry>
<yv:entityType>programme</yv:entityType>
<id>654320</id>
<title>Doctor Dolittle</title>
```

```
{additional programme information would appear here}
</entry>
```

If roll-up by Top Level Editorial Object is requested, then roll-up may also occur on Series for Programmes which have a parent Series but no parent Brand.

If rolling up a result set would cause only one entity to be returned then roll-up should not occur. The most likely use-case is that the children of a Brand have been requested from the Browse service, but all the resulting Programmes belong to the same Series. In this case, the Series entity is not returned, rather the Programmes are returned instead.

In order to be able to signal to the user how many results will be revealed when a rolled-up Brand or Series is selected, the B2C interface includes a <yv:programmeCount> element. This contains a number indicating how many Programme descendents the entity has.

### B2C: Examples of URL templates

Here information is provided regarding the URL templating system the client developer uses. This is not part of the interface specification, but is relevant for possible implementations. The URL templates presented here are designed such that they provide a high level of flexibility for the B2C client to request data in a variety of ways. However, for a given client user interface, it may well be the case that only a small number of templates are required from the total possible set of combinations of endpoints, filters and sorting options. It may therefore be advantageous to provide to the client software a smaller set of templates, which may be based around the implementation of the client. The following worked examples show how some simple use-cases could be translated into URL templates based on the client Metadata Broker's methods, rather than the CCO endpoints.

### B2C Example URL template: Browse Use Case

Step 1: List Categories

Once the user selects a category root in the content guide (e.g. "TV & Film"), retrieve its contents.

| B2C URL Templates | categories browse.category browse. language | http://browse.youview.com/Ca tegories?${view} byCategoryId=${category} preferred Lang uag e=${lang} |
|---|---|---|
| Client URL Templates | getmembers.category categoryroot. 1. id preferences. language | http://browse.youview.com/Ca tegories? byCategoryId=${cate gory}&preferred Lang uage=${l ang} 123123 eng |
| Resulting URL | http://browse.youview.com/Categories?byCategoryId=123123& preferred Lang uage=eng | |

The configuration parameter categoryroot.1.id contains the CCO record identifier of the "TV & Film" root Category and its value is substituted into the ${category} template.

Step 2: List Sub-Categories

The user selects a category with the CCO record ID 456456. Retrieve the list of subcategories.

| B2C URL Templates | categories browse.category browse.language | http://browse.youview.com/Ca tegories?${view} byCategoryId=${category} preferred Language=${lang} |
|---|---|---|
| Client URL Templates | getmembers.category [ID of selected Category] preferences.language | http://browse.youview.com/Ca tegories? byCategoryId=${cat egory}&preferred Lang uage=$ {lang} 456456 eng |

(continued)

| Resulting URL | http://browse.youview.com/Categories?byCategoryId=456456 &preferred Lang uage=eng |
|---|---|

Step 3: List Programmes

The user selects a sub-category with the CCO record ID 789789. Retrieve the list of summaries for the programmes in this category.

| B2C URL Templates | summaries browse.category browse.language | http://browse.youview.com/Sum maries?${view} byCategoryId=${category} preferred Lang uage=${lang} |
|---|---|---|
| Client URL Templates | getdeepmembers.category [ID of selected Category] preferences.language | http://browse.youview.com/Sum maries? byCategoryId=${catego ry}&preferredLanguage=${lang} 789789 eng |
| Resulting URL | http://browse.youview.com/Summaries?byCategoryId=789789 &preferred Lang uage=eng | |

Step 4: Request a programme

The user selects a programme with the CCO record ID 001001. Retrieve the full information for this Programme.

| B2C URL Templates | programmes browse.id browse.language | http://browse.youview.com/ Programmes?${view} byId=$ {id} preferred Language=${lang } |
|---|---|---|
| Client URL Templates | getprogramme [ID of selectedProgramme] preferences.language | http://browse.youview.com/ Programmes?byId=${id}& preferred Language=${lang } 001001 eng |
| Resulting URL | http://browse.youview.com/Programmes?byId=001001&p referred Language=eng | |

***B2C Example URL template: Schedule Use Case***

Step 1: Request a schedule

Request information to render an EPG grid.

| B2C URL Templates | schedule | http://schedule.youview.com/Schedule ?start=${sched-start} &end=${sched-end}&services=${ sched-service} |
|---|---|---|
| Client URL Templates | getschedule | http://schedule.youview.com/Schedule ?start=${sched-start} &end=${sched-end}&services=${ sched-service} |
| Resulting URL | http://schedule.youview.com/Schedule?start=2010-01-01T09:00Z&end=2010-01-01T12:00&services=1001|1002|1003 | |

Step 2a: Request full metadata for a schedule event

If the user requests more information for an event for which enhanced metadata is not available, the client mav request more information about the schedule event.

| B2C URL Templates | scheduleevents browse.id browse.language | http://browse.youview.com/Sc heduleEvents?${view} byId=${id} preferred Language=${lang} |
|---|---|---|
| Client URL Templates | getpublication [ID of selected Schedule Event] preferences.language | http://browse.youview.com/Sc heduleEvents?byId=$ {id}&pref erred Lang uage=${lang} 555888 eng |
| Resulting URL | http://browse.youview.com/ScheduleEvents?byId=555888&pref erred Language | |

Step 2b: Request full metadata for a Programme

If the user requests more information about an event for which enhanced metadata is available, the parent Programme may be requested, which will provide a greater level of information.

| B2C URL Templates | programmes browse.id browse.language | http://browse.youview.com/Pro grammes?${view} byId=${id} preferredLanguage=${lang} |
|---|---|---|
| Client URL Templates | getprogramme [ID of selected Programme] preferences.language | http://browse.youview.com/Pro grammes?byId=${id} &preferre dLanguage=${lang} 555222 eng |
| Resulting URL | http://browse.youv iew.com/Prog ram mes?byId=555222&preferred Language=eng | |

*B2C: Media asset availability*

The CCO does not manage media assets directly: it aggregates and presents metadata about the content available, but the Content Providers themselves serve the media files to users and may not publish fully resolved media URLs in the metadata. Therefore, where content is marked as available for on-demand consumption, CCO may never be able to know for certain whether the corresponding media asset is actually available. Even in cases where automatic checking is possible, a Content Provider's server or a Content Distribution Network could suffer a temporary outage. It is therefore assumed that all best attempts have already been made to avoid situations where a user is presented with metadata about an asset which is claimed to be available but in fact is not. The CCO metadata services only make metadata available in the B2C feeds once the Content Provider has indicated to (via the B2B interface) that the assets are actually available.

**Business-to Business (B2B) metadata contribution technical interface**

The description below describes a technical interface for the contribution of descriptive and technical metadata to a centralised Metadata Aggregation Service by multiple Metadata Publishing Parties ("Publishers") / content providers. The centrally aggregated metadata is then offered to a population of receiver devices via a business-to-consumer (B2C) technical interface described elsewhere in this document. Typically, each Metadata Publishing Party will itself be a Content Provider, but it may also be the nominated third-party representative of one (or more) Content Providers.

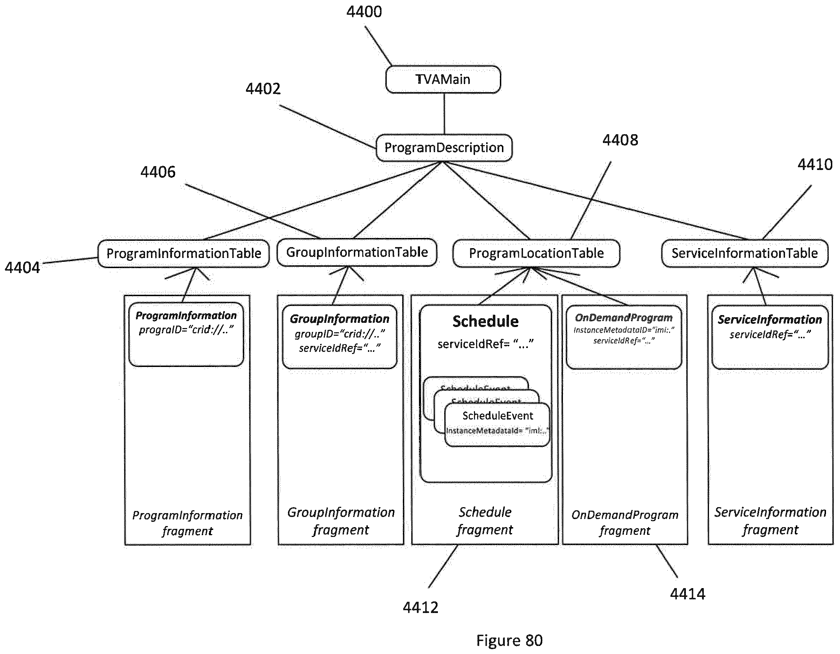

Conceptually, the Metadata Aggregation Service maintains a TV-Anytime (TVA) Metadata Description [ETSI TS 102 822-3-1, TS 102 822-3-3] which is the logical union of all metadata submitted by the various Metadata Publishing Parties. This, in turn, is a specialisation of an MPEG-7 Multimedia Content Description [ISO/IEC 15938-5]. The metadata is organised into a hierarchy of tables and records referred to here as the Description Tree, and summarised in Figure 80. The TVAMain 4400 comprises all program descriptions 4402. This is split into several categories, the 'ProgrammeInformation Table 4404, the GroupInformation Table 4406, the ProgrammeLocation Table 4408 and the ServiceInformation Table 4410. The ProgrammeLocation Table 4408 comprising a Schedule Fragment 4412 for broadcast content and an OnDemandProgramme Fragment 4414 for On Demand content.

*B2B Metadata Description fragmentation*

It would be impractical for a Metadata Publishing Party to resubmit its entire Description Tree every time there was an addition or update. Instead, the MPEG-7 System specification [ISO/IEC 15938-1 Clause 5] specifies a means to break down the overall Description Tree into a set of Fragment Update Units which can be transmitted individually from a publisher to a recipient. Using these controlled fragments avoids the need to update larger portions of the Description Tree when changes have taken place in just a few nodes. The TV-Anytime system specification for unidirectional environments [ETSI TS 102 822-3-2 Clause 4.3] further refines this by specifying that the granularity of updates to a Description Tree occurs at whole record level rather than at individual field level.

The profile of TV-Anytime described in the present specification defines a particular subset of TV-Anytime fragment types that are to be supported by compliant Metadata Publishing Parties and compliant Metadata Aggregation Services.

The TV-Anytime metadata schema defines a specific, unique identifier for each fragment that allows the Metadata Publishing Party and receiving system to explicitly track the creation, update and deletion of individual fragments in an unambiguous manner. For reasons of simplicity, this specification adopts a simpler approach to identifying fragments that combines the fragment's primary identifier (e.g. CRID) with the identity of the metadata source (the so-called Metadata Originating Party) to synthesise an implicit "proxy" fragment identifier. This is further described below.

### B2B Distributed Allocation of Unique Identifiers

The B2B metadata contribution technical interface makes extensive use of strings to identify various different resources unambiguously. In an environment where metadata is being aggregated from a number of disparate organisations, it is important that these identifiers remain unique across organisational boundaries. In general, the principle applied is to allow the Metadata Publishing Party to assign values of these identifiers itself wherever possible.

To guarantee that identifier values never clash, a number of different techniques are employed:

- The use of the Uniform Resource Identifier (URI) format [IETF STD 66, RFC 3986]. A number of different URI schemes are used, including crid: [IETF RFC 4078] for uniquely referring to media content, and options of http: [IETF RFC 2616] or tag: [IETF RFC 4151] schemes for all other identifier types.

- The scoping part of these URIs must include the Internet Domain Name of the authority responsible for assigning the unique identifier.

- The data part of these URIs must then be managed uniquely by a competent authority within the organisation that owns the Internet Domain Name.

A number of the examples presented here suggest the use of Globally Unique Identifiers (GUIDs) in the data part, but alternative ways of allocating unique values within an organisation are equally valid. In cases where GUID values are used, it is still useful to include an Internet Domain Name in the identifier string to indicate the authority responsible. This, in turn, is helpful in tracing faults in a practical implementation.

### B2B Referential Integrity

Fragments in the inbound metadata stream correspond to records in the logical metadata model. These are linked by references between records of various kinds, such as the link between an editorial version and its parent episode, or between a broadcast event and its containing service.

As a general principle, referential integrity must be maintained in the aggregated metadata description, i.e. any new record must link only to records already declared and present. However, to allow for the realities of metadata workflow management, a short-term Referential Integrity Quarantine (RIQ) is specified for holding records that do not yet have the necessary referential integrity. The Referential Integrity Quarantine is a conceptual state that may be implemented in a number of different ways, provided always that a record in quarantine is barred from any type of onward publication, and cannot remain in quarantine beyond a configurable maximum time. The expectation is that in many cases the missing referents will arrive before the end of this period. More detail on Referential Integrity Quarantine is given below.

### B2B Metadata Origination attribution

Every fragment in the Metadata Description is attributed by the receiving system to a single Metadata Originating Party ("Originator") for management and copyright ownership purposes. This is a logical relationship which is not exposed to downstream systems, but enables the tracking of metadata ownership within the Metadata Aggregation Service. It could be used, for example, to prevent one Originator from accidentally updating fragments published by another. Note that it is permissible for different Originators to update the same content item at different periods over its life-time, but not at the same time. See above for the distinction between fragment and content identifiers.

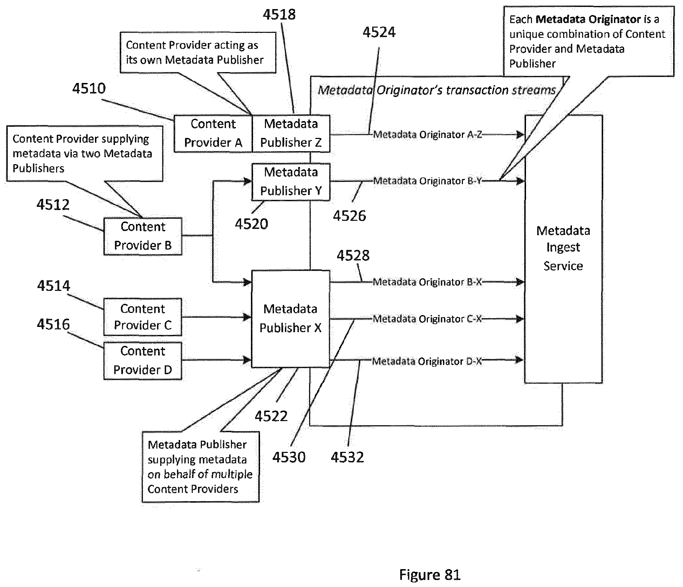

The concept of Metadata Originating Party is subtly different from that of Metadata Publication Party. To illustrate the distinction, consider a third-party Metadata Publishing Party acting on behalf of several Content Providers (4510, 4512, 4514, and 4516 in Figure 81). The Metadata Publishing Party 4512 is responsible for publishing metadata fragments relating to each of the Content Providers 4510, 4512, 4514, 4516, but the copyright relating to the information resides with the original Content Provider 4510. As a consequence, each combination of Content Provider 4510, 4512, 4514, 4516 and Metadata Publication Party 4518, 4520, 4522 amounts to a unique Metadata Originating Party.

In simple cases, the Content Provider 4510 and the Metadata Publication Party 4518 are one and the same organisation, in which case a single Metadata Originating Party is sufficient 4524. A single content provider 4512may chose to supply metadata via more than one metadata publisher 4520, 4522 (as shown by lines B-X 5426 and B-Y 5428). This is acceptable provided that transaction ordering rules are observed, for example, to respect referential integrity.

*B2B Security model*

Access to the Metadata Aggregation Service is strictly controlled so that only authorised Metadata Publishing Parties 4518, 4520, 4522 can interact with the system and submit transactions. The primary goal is to prevent identity "spoofing" and "man-in-the-middle" attacks.

An important additional objective is to prevent one Metadata Originating Party 4524, 4526, 4528 (combination of Content Provider and Metadata Publishing Party) from interfering with the metadata of another (creating, updating or deleting fragments).

Any logical partitioning of metadata does not prevent one Metadata Originating Party from referencing metadata submitted by another Metadata Originating Party since this is a valid Use Case (e.g. descriptive metadata supplied by one party; technical metadata by another). Normal rules of Referential Integrity apply in such cases.

Each different Metadata Originating Party is issued with a different set of credentials so that transactions can be traced and policed at this level of granularity. This means that a Metadata Publishing Party 4522 acting for multiple Content Providers 4512, 4514 4516 has a different set of credentials 4528 4530 4532 for each Content Provider.

*B2B Transaction handling*

The Metadata Aggregation Service maintains a separate notional queue of inbound transactions for each Metadata Originating Party. Transactions submitted by a given Metadata Origination Party are guaranteed to be processed in the order of submission.

The Metadata Aggregation Service is also resilient in the sense that the actions of one Metadata Originating Party will not interfere with the processing of transactions for other Metadata Originating Parties.

*B2B Republishing scenarios*

Republishing of metadata occurs in two main cases:

- Routine: republishing of metadata items that have been amended in the normal course of daily workflow. In this case, the priority is minimising the work required to update the necessary metadata nodes. This is achieved by selecting for update the smallest possible set of metadata Fragments.
- Emergency: wholesale republishing by a publisher of all its current metadata, coordinated with the operator of the Metadata Aggregation Service (in fact most likely at the request of the Metadata Aggregation Service operator, after a major, data-corrupting system failure). In this case, a full set of metadata Fragments is required. The Metadata Publishing Party may need to sequence carefully the transactions to maximise the Referential Integrity and return the Metadata Description to a useful state as quickly as possible.

*B2B Transport and Packaging specification*

This section specifies an example of a mechanism by which a Metadata Publishing Party publishes metadata to a Metadata Aggregation Service.
Metadata transactions are pushed by the Metadata Publishing Party to the Metadata Aggregation Service rather than being polled by the Metadata Aggregation Service. The Metadata Publishing Party is best placed to know when significant events are occurring in upstream media workflows that require the publication of some metadata. A pushed approach also ensures a low update latency in the end-to-end metadata chain.

Fragments of the Metadata Description are published to the Metadata Aggregation Service in well-defined transactions. The transport protocol used to convey transactions is secure HTTP [IETF RFC 2616, RFC 2818] over TCP/IP.

A well-defined HTTP service endpoint is specified to which transactions are to be submitted using the HTTP POST method. Depending on implementation there may be a single endpoint for all Metadata Originating Parties or a different endpoint for each one.

Each transaction is conveyed in a single HTTP server interaction. The same endpoint is used for submitting both new and updated metadata fragments.

An HTTP response is returned by the Metadata Aggregation Service indicating whether the transaction has been processed fully or accepted for later processing. Each transaction is assigned a unique transaction identifier by the Metadata Aggregation Service, which is returned to assist with transaction tracking and logging by the Metadata Publishing Party.

Additionally, the ongoing status of transactions can be monitored asynchronously by the Metadata Publishing Party via a second HTTP service endpoint.

### B2B Transaction handling specification

A Metadata Publishing Party submits metadata updates, of various types such as Service reference data, Descriptive metadata or Publication metadata, to the aggregation service via messages referred to as Transactions. Two types of Transaction are given below:

- Fragment update Transaction. This is the means by which a Metadata Publishing Party adds or updates a fragment of the Metadata Description.
- Fragment delete Transaction. This is the means by which a Metadata Publishing Party explicitly removes a fragment from the Metadata Description.

Each Transaction is formatted as an HTTP request message and the Metadata Aggregation Service supplies an HTTP response message in reply.

In the case of Fragment update Transactions, two different modes of operation are specified:

- A simple fully synchronous mode in which the Fragment updates in the Transaction are processed immediately and the HTTP response message contains a Status Report indicating the success (or otherwise) of the Transaction.
- An asynchronous mode in which the HTTP response message indicates acceptance, but may not confirm the full, formal correctness of the entire transaction.

These two operational modes are fully specified below. Support for either or both modes of operation is a decision for individual implementations.

### Transaction identifier:

Every transaction is assigned a globally unique transaction identifier by the recipient system. This is returned in the synchronous response as a location header, containing a URL that can be queried subsequently to determine the status of the transaction.

Transaction identifier values shall take the form of Uniform Resource Locators using the http: URI scheme. For example:

http://<hostname>/transaction/<transaction_id>

Transaction identifiers are returned to the Metadata Publishing Party using the Location header in the HTTP response header. The URL can then be re-presented to the Metadata Aggregation Service to query the status of the Transaction identified.

### Asynchronous Fragment update Transaction:

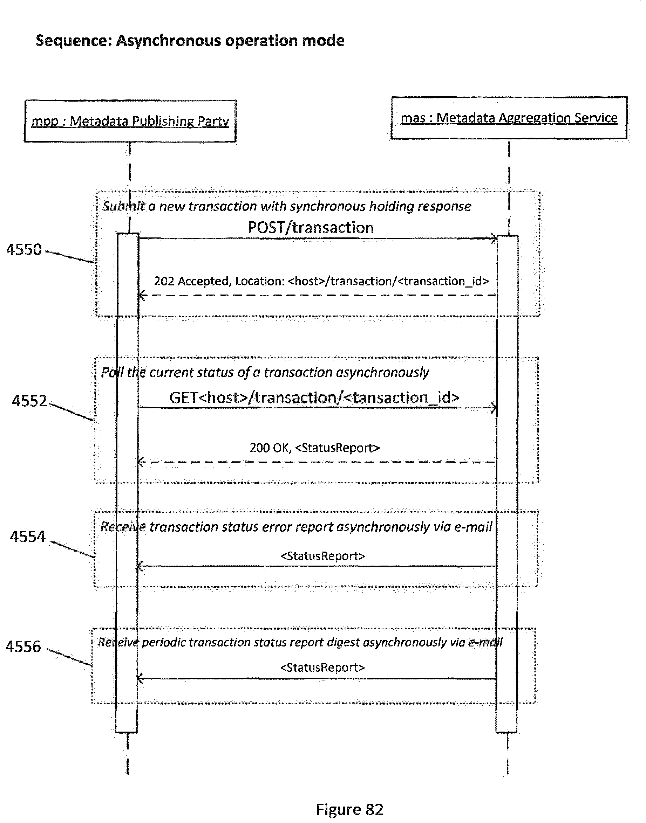

Figure 82 illustrates an asynchronous fragment update transaction. After initial stages of validation, an early synchronous response declares that the transaction has been accepted onto a queue for further processing/validation 4550. Only when all stages of validation have been passed later is the Transaction deemed to have completed successfully. The current status of a Transaction can be monitored by means of a status poll 4552. Equally, a failure in these later stages causes an error notification in the form of a Status Report to be sent asynchronously to the Metadata Originating Party 4554. This mode is useful if later stages of validation are demanding enough resources so that the transactions queue becomes too long for synchronous Success messages to be possible. In the validation sequence, the step "accepted for further processing" 4550 would be an example of the point where the early synchronous response might be sent.

***Synchronous Fragment update Transaction:***

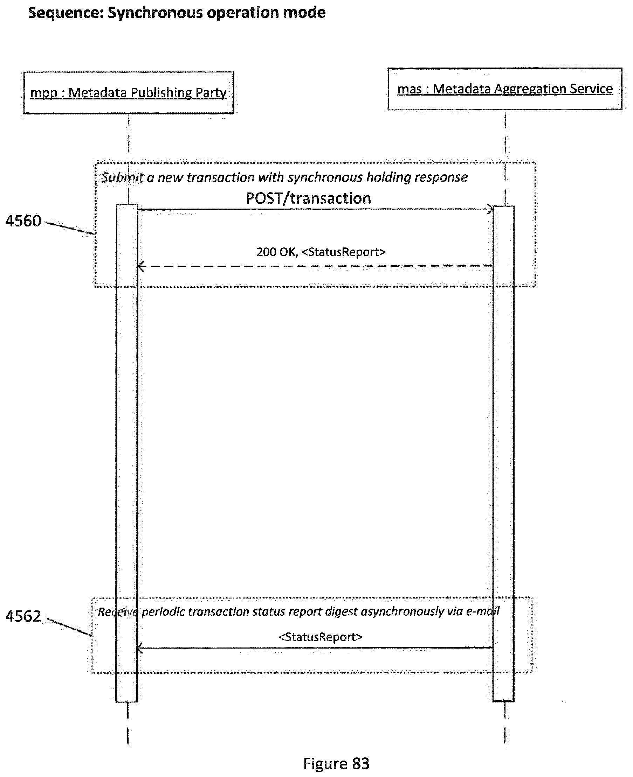

Figure 83 illustrates a synchronous fragment update transaction. In this simpler model, all validation of an update transaction occurs before a single, late synchronous response, which must be either an Error or a Success message 4560. The whole HTTP POST method is therefore blocking, and the synchronous response contains the Status Report. There is no asynchronous response. This mode of operation may be found acceptable if the overall processing speed of the metadata ingest system is high enough.

***Transaction life-cycle:***

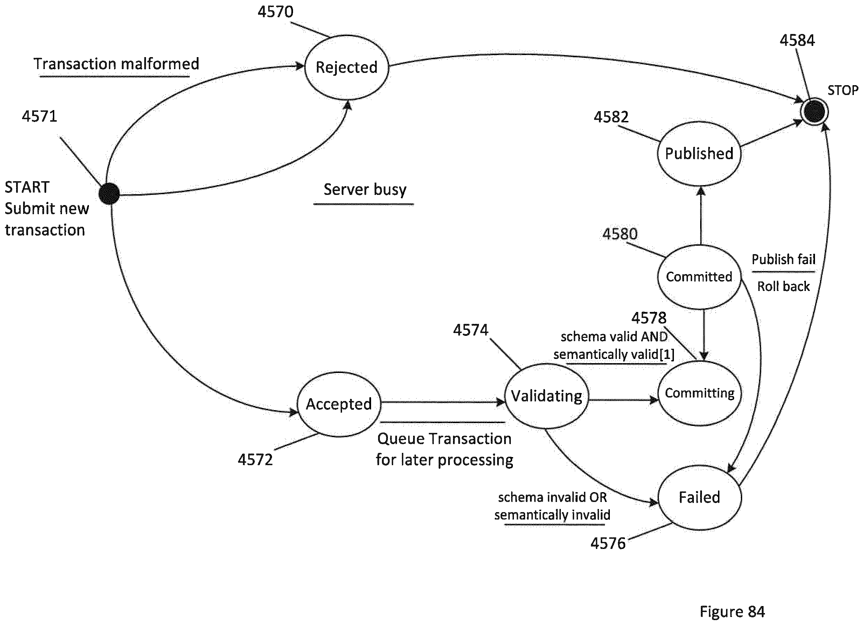

Every transaction submitted to the Metadata Aggregation Service via the Fragment update operation passes through the states outlined in the Figure 84.

1. If the ingest service is too busy to deal with the Transaction, or if the server is in a maintenance mode, the Transaction is rejected outright 4570.
2. If the Metadata Publishing Party fails to provide a valid set of security credentials, the Transaction is also rejected 4570.
3. Otherwise, the basic structure of the HTTP request is examined and the HTTP request headers verified. If any mandatory header is absent, or if any header has been given a syntactically incorrect value, then the Transaction is rejected as Malformed 4570.
4. Otherwise, the Transaction is accepted for further processing 4572 and it enters the Accepted Pending state, joining the tail of the transaction queue.
5. At some later point in time, the Transaction will be picked off the head of the queue and considered by the Metadata Aggregation Service for incorporation into the Metadata Description 4574. At this point the Transaction enters the In progress state.
6. Any XML instance document in the Transaction is first verified to ensure it is well-formed. If not, the Transaction is rejected and goes into the Error state 4576.
7. The XML instance document and its constituent fragments are next subjected to a more rigorous XML schema validation process. This determines whether the fragments are syntactically valid with respect to the TV-Anytime schema profile. If any discrepancies are discovered, the Transaction is rejected and goes into the Error state 4576.
8. The Transaction is next checked to ensure that it contains at least one create, delete or update request (trap for duplicates).
9. The individual fragments in the Fragment update transaction are tested for semantic validity. For example, it is a semantic error to declare an episode number of 7 within a series that has been declared to have only 6 episodes. Again, any problems detected result in the transaction being rejected and entering the Error state 4576.
10. The transaction is checked for correctness of reference data values, such as programme classifiers.
11. The importer then enforces a configurable basic set of editorial constraints (e.g. "must have a medium length title", "must not exceed maximum character count limit").
12. Lastly, the body undergoes a referential integrity check to ensure that all cross-references already exist in the aggregated Metadata Description, or else are included in the transaction under consideration. If this is not true, the transaction is marked as being in a Referential Integrity Quarantine (RIQ) state. The quarantined transaction can proceed to the next Committing state 4578, but its fragments must remain unpublishable until the quarantine is lifted. The transaction is rejected if the Referential Integrity is still not satisfied. Processes must be in place to:

- Clear a transaction from Referential Integrity Quarantine when all missing referents have appeared
- Ensure that a transaction may not remain quarantined indefinitely, being rejected if necessary after a configurable maximum time.

13. If all verification checks are passed successfully, the Metadata Aggregation Service attempts to commit the metadata contained in the various fragments, including to the Metadata Description. This is handled as a composite database commit so that any problems occurring at this stage can be rolled back to revert the database to its previous state before this transaction was accepted for committal. Such problems result in the transaction leaving the Committing state 4578 and entering the Error state 4576.
14. Only once the transaction has been successfully committed to the Metadata Description does the transaction enter the Success state 4572.

The behaviour of the metadata ingest service depends on which operational mode it supports:

- In the fully synchronous mode of operation, the HTTP operation is blocked between the START 4571 and STOP 4584 states. The publisher is informed whether the transaction was successful or not by means of a Status Report in the HTTP response message.
- In the asynchronous mode of operation, the HTTP operation is blocked between the START state 4571 and the Accepted state 4572. The HTTP response message contains a status code indicating that the Transaction has been queued for later processing. The processing of the Transaction continues in the background and the Metadata Publishing Party has the option to poll the ongoing status of the Transaction using the mechanism described below.

***Asynchronous Transaction monitoring:***

The Metadata Aggregation Service maintains a chronological record of all transactions separately for each Metadata Originator. Each transaction must remain on record for a configurable period. The Service provides a means of monitoring the progress of transactions through their life-cycle, via the Transaction state query operation, described in more detail below.

***Error reporting:***

If a transaction enters the Error state at any point in the sequence of validation steps above, the receiving system sends a notifying electronic mail message automatically to the Metadata Publishing Party.

***Transaction Status Report digest:***

The Service also supplies each Metadata Originating Party with a (configurable) periodic report of the status of all transactions, whether successful or unsuccessful (Figure 82 4556, Figure 83 4562). All transactions that were unresolved in the last report and all that appeared subsequently are eligible for inclusion.

***Initialisation and re-initialisation:***

Initialisation occurs when a publisher first begins to send Transactions to the Metadata Aggregation Service. It requires an establishing Service transaction to occur before all others: see below for more information on this transaction. Certain occasional scenarios may require a Re-initialisation, a repeat of the initialisation event with the same leading transaction being repeated (its content updated as appropriate).

A re-initialisation may be requested of one or more publishers by the Metadata Aggregation Service, most probably offline by its operators, because of some problem with database state. Under certain circumstances a Metadata Publishing Party may be required to re-submit all its current data, but this is not mandatory for all re-initialisations.

A Metadata Publishing Party may choose to re-initialise for its own reason, in which case the same establishing transaction must come first. As with a re-initialisation at the request of the Metadata Aggregation Service, full data updates may follow but are not mandatory in the general case.

***B2B Transport: Application transport protocol specification***

Hypertext Transport Protocol version 1.1 [IETF RFC 2616] shall be used by the Metadata Publishing Party to transmit transactions to the Metadata Aggregation Service. Requests [RFC 2616 Section 5] shall be initiated by the Metadata Publishing Party and responses [RFC 2616 Section 6] returned by the Metadata Aggregation Service.

***Application transport security layer:***

Secure HTTP [IETF RFC 2818] shall be used by all Metadata Publishing Parties as the application transport protocol. All traffic between the Metadata Publishing Party and the Metadata Aggregation Service shall be encrypted using SSL/TLS.

All parties shall support HTTP "Basic" authentication scheme [IETF RFC 2617 Section 2]. When challenged, the Metadata Publishing Party shall present its Base64 encoded username and password credentials to the Metadata Aggregation Service using the Authorization: HTTP request header.

Certificate-based authentication may additionally be supported by the implementation.

***Application transport service endpoints:***

The Metadata Aggregation Service responds to the following requests:

| Operation | HTTP request method | Request path | Request headers | Request message body | Response headers | Response message body |
|---|---|---|---|---|---|---|
| Fragment update Transaction *(asynchronou s)* | POST | /transaction | Content-Type: Content-Length: | <TVAMain> XML instance document | Location: | - |
| Fragment update Transaction *(synchronous )* | | | Content-Type: Content-Length: Accepts: text/xml | | Location: Content-Type: text/xml Content-Length: | <StatusRep ort> XML instance document |
| Fragment delete Transaction *(asynchronou s)* | DELETE | /fragment/<i dentifier> | - | | Location: | - |
| Fragment delete Transaction *(synchronous )* | | | Accepts: text/xml | | Location: Content-Type: text/xml Content-Length: | <StatusRep ort> XML instance document |
| Query status of an individual Transaction | GET | /transaction ? id=<identifi er> | Accepts: text/xml | - | Content-Type: text/xml Content-Length: | <StatusRep ort> XML instance document |
| Query state of a specific fragment | GET | /fragment?i d= <identifier > | Accepts: text/xml | - | Content-Type: text/xml Content-Length | TV-Anytime single-Frag ment XML instance document |
| Individual operations are fully specified below. | | | | | | |

*B2B Application transport operation:*

The individual operations are described in detail in the following subsections.

*Fragment update Transaction:*

The Fragment update Transaction is used both for adding new fragments to the aggregated Metadata Description, and for submitting updates to existing fragments.

- Using HTTP POST method request to a well-defined request URI endpoint.

- HTTP request message body contains a <TVAMain> XML instance document containing one or more fragments to be updated.

- Transaction may contain an arbitrary mix of new fragments and updates to fragments already in the Metadata Description.

- Various possible status codes in HTTP response.

- Synchronous HTTP response tells Metadata Publishing Party whether or not the Transaction has been processed (synchronous mode) or accepted for later processing (asynchronous mode).

- In both operational modes a Transaction identifier is returned in the Location header of the HTTP response message telling the publisher where the transaction status can be queried later.

- In asynchronous mode, no processing of the XML request message body is done at this stage.

Example: Fragment update operation (request):

```
POST /transaction HTTP/1.1
Content-Type: text/xml
Content-Length: 1456

<?xml version="1.0" encoding="UTF-8"?>
<TVAMain xml:lang="en-GB" xmlns="urn:tva:metadata:2010"
xmlns:mpeg7="urn:tva:mpeg7:2008"
xmlns:xsi="http://www.w3.org/2001/XMLSchema-instance">
     <!-- etc. -->
</TVAMain>
```

Example: Fragment update Transaction (asynchronous mode)

```
HTTP/1.1 202 Accepted
Location: http://<servername>/transaction/123456789
```

Example: Fragment update operation (synchronous mode

```
HTTP/1.1 201 Created
Location: http://<servername>/transaction/123456789
Content-Type: text/xml
Content-Length: 1121

<?xml version="1.0" encoding="UTF-8"?>
<StatusReport>
     <!-- etc. -->
</StatusReport>
```

***Specific HTTP status codes relating to this operation:***

| Status code | Reason phrase | Meaning for this operation |
|---|---|---|
| 201 | Created | The Fragment update Transaction has been processed (synchronous mode) and a new Transaction resource created in the process. The enclosed Status Report indicates whether the processing was successful or not. |
| 202 | Accepted | The Fragment update Transaction has been queued for later processing (asynchronous mode). |

(continued)

| Status code | Reason phrase | Meaning for this operation |
|---|---|---|
| 400 | Bad request | The request was malformed in some way, e.g. missing or syntactically invalid request headers. |
| 401 | Unauthorized | The client credentials presented by the Metadata Publishing Party were either invalid or missing altogether. |
| 411 | Length required | The Content-Length header was not supplied in the request. |
| 413 | Request entity too large | The request entity body exceeds the (configurable) maximum size supported by the Metadata Aggregation Service. |
| 415 | Unsupported media type | The only valid value of the Content-Type header for this operation is text/xml. |
| 503 | Service unavailable | The Metadata Aggregation Service is down or experiencing high load, and is unable to accept the transaction at this time. |

### Query status of an individual transaction:

This operation is used by the Metadata Publishing Party to determine asynchronously the current status of a submitted transaction. The Metadata Publishing Party may periodically poll the status of each transaction until it reaches one of the terminating states in its life-cycle.

- Using HTTP GET method request to a well-defined request URI endpoint.
- An existing transaction identifier must be quoted in the HTTP request URI.
- Synchronous HTTP response includes a Status Report about the transaction in question.
- Response Content-Type: text/xml
- Various possible status codes in HTTP response.

Example: transaction status query operation (request)

```
GET /transaction/123456789 HTTP/1.1
```

Example: transaction status query operation (response)

```
HTTP/1.1 200 OK
Content-Type: text/xml
Content-Length: 1121

<?xml version="1.0" encoding="UTF-8"?>
<StatusReport>
        <!-- etc. -->
</StatusReport>
```

### Specific HTTP status codes relating to this operation:

| Status code | Reason phrase | Meaning for this operation |
|---|---|---|
| 200 | OK | A Status Report document for the specified transaction is included in the response message body. |
| 400 | Bad request | The request was malformed in some way, e.g. missing or syntactically invalid request headers. |
| 401 | Unauthorize d | The client credentials presented by the Metadata Publishing Party were either invalid or missing altogether. |
| 404 | Not Found | The resource requested was unknown to the recipient system. |
| 503 | Service unavailable | The Metadata Aggregation Service is down or experiencing high load, and is unable to accept the query at this time. |

### Query state of a specific fragment:

This operation enables a Metadata Publishing Party to inspect the most up-to-date version of a particular fragment as processed by the Metadata Aggregation Service. This represents the current state of the fragment in the aggregated Metadata Description resulting from earlier successfully committed fragment updates. It does not reflect any updates to the fragment included in pending transactions.

- Using HTTP GET method request to a well-defined request URI endpoint.
- The fragment is identified by passing the identifying Record identifier, such as a CRID or, for a publication, CRID+IMI. The aggregation service combines this with the credentials of the publisher to form the full fragment identifier (see table below)
- Because passing these Record identifiers requires embedding one URI within another, HTTP requires escaping of the characters ":", "/" and "#" (see IETF RFCs 1738 and 2396).
- Synchronous HTTP response includes the parsed TV-Anytime fragment as an XML instance document. This is presented bare (i.e. without any enclosing <TVAMain> wrapper element).
- Response Content-Type: text/xml
- Various possible status codes in HTTP response.

Example: (content) Fragment state query operation (request)

```
GET
/fragment?id=crid%3A%2F%2Fsyndication.content.co.uk%2Fepisode%2F
234154
```

Example: Fragment state query operation (response)

```
HTTP/1.1 200 OK
Content-Type: text/xml
Content-Length: 1948

<?xml version="1.0" encoding="UTF-8"?>
<ProgramInformation xml:lang="en-GB" programId="
crid://syndication.co.uk/episode/234154">
        <!-- etc. -->
</ProgramInformation>
```

Example: (publication) Fragment state query operation (request)

In the case of querying the status of a Publication fragment, the requestor must pass both the fragment's Instance Metadata Identifier (IMI) and the CRID of the published content, as the IMI is only required to be unique within the scope of that CRID. This example illustrates the querying of imi:syndication.co.uk/23734 within the scope of crid://syndication.co.uk/episode/234154. The IMI is appended, hash-separated, to the CRID in the specified URL, viz:

crid://syndication.co.uk/episode/234154#imi:syndication.co.uk/23734 and the resulting Record identifier string is finally encoded to escape characters not permitted in URL strings.

```
GET /fragment?id=crid%3A%2F%2Fsyndication.content.co.uk%2Fepisod
e%2F234154%23imi%3Asyndication.co.uk%2F23734 HTTP/1.1
```

*Specific HTTP status codes relating to this operation:*

| Status code | Reason phrase | Meaning for this operation |
|---|---|---|
| 200 | OK | The specified TV-Anytime fragment is included in the response message body. |
| 400 | Bad request | The request was malformed in some way, e.g. missing or syntactically invalid request headers. |
| 401 | Unauthorized | The client credentials presented by the Metadata Publishing Party were either invalid or missing altogether. |
| 404 | Not Found | The requested fragment is not currently part of the Metadata Description. |
| 503 | Service unavailable | The Metadata Aggregation Service is down or experiencing high load, and is unable to accept the query at this time. |

*Fragment delete Transaction:*

An explicit fragment delete operation is supported by the application transport protocol. See also below, where this operation is linked to the use case of revocation.

- Removes a single fragment from the aggregated Metadata Description.
- Using HTTP DELETE method request to a well-defined URI endpoint.
- The fragment is identified by passing the identifying Record identifier, such as a CRID or, for a publication, CRID+IMI. The aggregation service combines this with the credentials of the publisher to form the full fragment identifier (see table below)
- Because passing these recordIDs requires embedding one URI within another, HTTP requires escaping of the characters ":", "/" and "#" (IETF RFCs 1738 & 2396).
- Transaction may be handled asynchronously or synchronously, depending on implementation decision.
- Various possible status codes in HTTP response.
- It is the Metadata Aggregation Service's responsibility to ensure that referential integrity is maintained in the aggregated Metadata Description. Any attempt to delete a fragment that is still referenced by other fragments will result in an error status in the HTTP response.

Example: Content Fragment delete operation (request)

```
DELETE
/fragment?id=crid%3A%2F%2Fsyndication.content.co.uk%2Fepisode%
2F234154 HTTP/1.1
```

Example: Publication Fragment delete operation (request)

In the case where a Publication fragment is to be deleted, both the fragment's Instance Metadata Identifier (IMI) and the CRID of the published content need to be passed since the IMI is only required by TV-Anytime to be unique within the scope of that CRID. The example below illustrates the deletion of Publication fragment imi:syndication.co.uk/23734 within the scope of Content fragment crid://syndication.co.uk/episode/234154. Prior to character escaping, the two identifiers are combined with the hash symbol thus: crid://syndication.co.uk/episode/234154#imi:syndication.co.uk/23734 to produce the required Record identifier.

```
DELETE /fragment?id=crid%3A%2F%2Fsyndication.content.co.uk%2Fepi
sode%2F234154%23imi%3Asyndication.co.uk%2F23734 HTTP/1.1
```

Example: Fragment delete operation (asynchronous response)

```
HTTP/1.1 202 Accepted
Location: http://<servername>/transaction/987654321
```

The above example illustrates a Transaction to delete a fragment whose Record identifier is crid://syndication.co.uk/episode/234154. The colon and forward slash characters in the identifier are escaped so that they can be passed as part of the HTTP request URL.

Example: Fragment delete operation (synchronous response)

```
HTTP/1.1 201 Created
Location: http://<servername>/transaction/987654321
Content-Type: text/xml
Content-Length: 1121

<?xml version="1.0" encoding="UTF-8"?>
<StatusReport>
     <!-- etc. -->
</StatusReport>
```

***Specific HTTP status codes relating to this operation:***

| Status code | Reason phrase | Meaning for this operation |
|---|---|---|
| 201 | Created | The specified fragment was successfully removed from the aggregated Metadata Description (synchronous mode). A new Transaction resource has been created in the process. |
| 202 | Accepted | The Fragment delete Transaction has been queued for later processing (asynchronous mode). |
| 400 | Bad request | The request was malformed in some way, *e.g.* missing or syntactically invalid request headers. |
| 401 | Unauthorized | The client credentials presented by the Metadata Publishing Party were either invalid or missing altogether. |

(continued)

| Status code | Reason phrase | Meaning for this operation |
|---|---|---|
| 403 | Forbidden | The fragment could not be deleted because it is still referred to by another fragment in the Metadata Description, or because the specified fragment is not owned by the Metadata Originating Party indicated in the client credentials. |
| 404 | Not Found | The requested fragment is not currently part of the Metadata Description. |
| 503 | Service unavailable | The Metadata Aggregation Service is down or experiencing high load, and is unable to accept the delete request at this time. |

*Dealing with error conditions:*

The Metadata Publishing Party must, in general, be able to deal with any of the HTTP status codes defined in [RFC 2616 Section 6.1.1]. The following specific guidance is included in this specification to help implementers to deal with certain application-specific error conditions.

| Status code | Reason phrase | Suggested action for publisher |
|---|---|---|
| 400 | Bad request | Inspect request for malformation |
| 401 | Unauthorized | Check that client credentials were offered and are valid |
| 403 | Forbidden | Send one or more other enabling transactions before this one |
| 404 | Not found | Check the formation of the request URI |
| 405 | Method not allowed | The method requested cannot be used with the request URL. |
| 411 | Length required | Check Content-Length header was supplied |
| 413 | Request entity too large | Check the maximum size permitted and resubmit a smaller transaction |
| 415 | Unsupported media type | Check value of Content-Type header was valid for the operation |
| 501 | Not implemented | Check that the method requested was one of POST, GET and DELETE, the only methods the Metadata Aggregation Service is required to support |
| 503 | Service unavailable | Retry the transaction later, employing exponentially increasing back-off period before each successive attempt. Maintain an appropriately ordered queue of pending transactions, including the current one, to be submitted once the Metadata Aggregation Service becomes available again. |
| 505 | HTTP Version not supported | Check that the HTTP protocol stated was version 1.1, the only version the Metadata Aggregation Service is required to support |

*B2B Transaction Status Report transport specification*

A means is required for the Metadata Aggregation Service to notify the Metadata Publishing Party of the status of one or more Transactions. Transaction Status Reports are generated by the Metadata Aggregation Service in the following scenarios:

| Scenario | Context | Transport specification |
|---|---|---|
| Error detected during the processing of a Fragment update Transaction | Synchronous mode | Status Report returned in HTTP response message. |
|  | Asynchronous mode | Status Report sent via e-mail. |

(continued)

| Scenario | Context | Transport specification |
|---|---|---|
| Error detected during the processing of a Fragment Delete Transaction | Synchronous mode | Status Report returned in HTTP response message. |
| | Asynchronous mode | Status Report sent via e-mail. |
| Digest of the status of several Transactions | Asynchronous mode Synchronous mode | Status Report sent via e-mail. |

An XML schema for Transaction Status Reports is described in later.

### Status Report e-mail specification:

Every Metadata Originating Party supplies a recipient address for the delivery of Transaction Status Reports. Every Metadata Originating Party specifies the frequency with which Transaction Status Report digests messages are to be sent.

The Transaction Status Report XML instance document is packaged as the message body of an [IETF RFC 5322] message. The message content type is text/xml. The message is transported to its recipient using SMTP [IETF RFC 5321].

### B2B Transport: Exceptional scenarios

The following sections outline how the specification provides support for some exceptional occurrences, i.e. less common and/or unplanned events outside "business as usual".

### Metadata resynchronisation:

A metadata resynchronisation may be required in exceptional circumstances when the aggregation service's repository becomes corrupted unrecoverably. In this case, a metadata publisher may be asked to resubmit some or all metadata. The three main cases are (in order of increasing severity):

1. Reinitialisation only.
2. Reinitialisation followed by a repeat of all transactions since a specified date-time.
3. Reinitialisation followed by transactions incorporating all metadata for content items (that should be) available on the service.

### Revocation:

Revocation occurs when there is a need, typically urgent, to revoke the publishing of a particular piece of content.

Content providers or metadata publishers can revoke content in a number of ways (listed here in order of increasing severity):

1. Using a Fragment update Transaction to remove the media availability indicator, described in more detail below. This will have the effect of removing the content from some parts of the platform content guide (e.g. the on-demand catalogue) but may still allow the content to be advertised as "coming soon" in other views (e.g. the linear programme guide) depending on the dates provided for the availability window.
2. This is the softest form of revocation and is only really suitable in cases where there is a temporary problem with the media distribution chain. The revocation can be reversed simply by republishing the affected Fragment with the media availability indicator restored.
3. Using a Fragment update Transaction to amend one or more availability windows for the problem content, for example moving the start and end dates into the past.
4. Using a Delete fragment Transaction to delete one or more current Publications (such as On-demand Publications) of the content.
5. Using a Delete fragment Transaction to delete the Content Description metadata altogether, whether a single Editorial Version or even an Episode.
6. Manual revocation, i.e. direct deletion of metadata by an operator using the Configuration & Management interface onto the Metadata Aggregation System.

### B2B: Fragment update Transaction specification

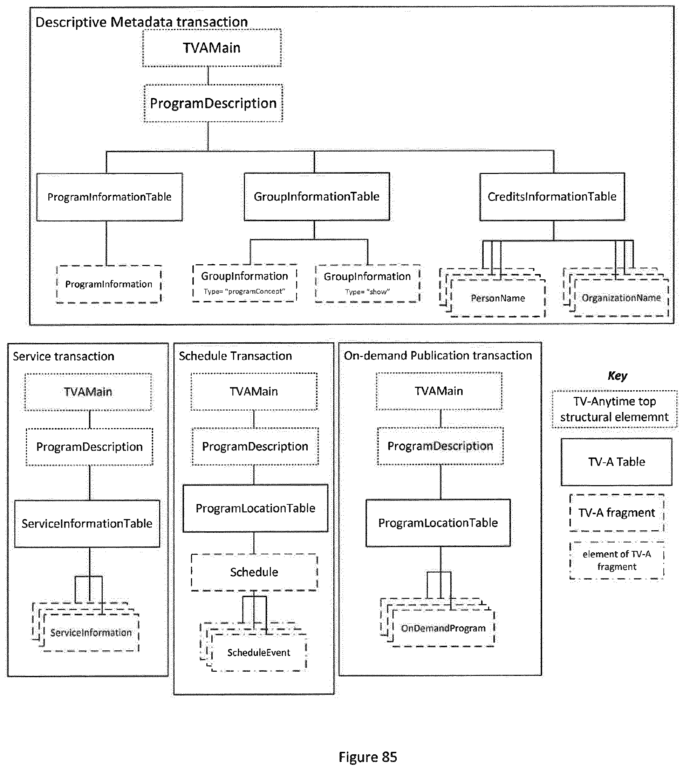

This section specifies a set of acceptable transactions that are supported by the Metadata Aggregation Service in a Fragment update operation. These *pro forma* transactions define exactly which TV-Anytime fragments are allowed to appear in a transaction. The purpose of being prescriptive here is to simplify implementation for both the Metadata Publishing Party and the Metadata Aggregation Service. Transactions not conforming to one of the *pro forma* transaction specifications may be rejected by the Metadata Aggregation Service as malformed. Figure 85 gives a graphical overview of transaction shapes; with the subsequent sections giving more detailed definitions.

### Service metadata Transaction:

- One or more ServiceInformation Fragments wrapped in the Service Information Table.
- The first transaction in an Initialisation.
- In each new initialisation, every Service must be declared afresh before it can be referenced from a Descriptive metadata transaction.
- It is valid to publish a Service transaction at any point, subject to the aforementioned rules around declaration before use. This could, for example, be used to declare a new Service without a full re-initialisation.

The Service metadata Transaction provides basic information about the logical Services provided by the Metadata Originating Party. These fall into one of three different categories:

1. Content-owning Service. These are the Services to which the descriptive metadata for content items is attributed in the User Experience. (The Content-owning Service corresponds roughly to the concept of "masterbrand" in other ecosystems.) The exact service names and brand groupings exposed to end users may include brands borrowed from the linear world (e.g. "Channel Four", "Five") or brands more familiar from the on-demand world (e.g. "4oD", "Demand Five"). In practice, the Fragments in Descriptive metadata Transactions are attributed to one of these Owning Services and this is the branding that appears against the corresponding content item in the on-demand catalogue.

2. On-demand Portal Service. These Services are relevant only to originators intending to deliver an on-demand catalogue. These Services are an indication of the on-demand service provider (e.g. "BBC iPlayer", "Kangaroo"). This explicit attribution enables filtering of metadata by on-demand provider. In practice, every Fragment representing an On-demand Publication is attributed to one (or more) such On-demand Portal Service. This implies that each Metadata Originating Party must provide at least one such Service.

3. Linear Service. These Services are relevant only to originators intending to deliver Schedule or Schedule linkage metadata Transactions. Each Linear Service represents a single linear channel variant. For example, a linear channel such as "BBC One" with 18 regional variants may be represented by a single Content-owning Service for the purposes of the User Experience, but at this level will need to be modelled as 18 separate Linear Services with names such as "BBC One North West" and "BBC One Scotland".

### Descriptive metadata Transaction:

The Descriptive Metadata transaction is the main vehicle for publishing information about programme content itself (as opposed to publication information such as broadcasts or on-demand availabilities), such as titles, synopses and cast list.

- Zero or more ProgramInformation Fragments in the Program Information Table, each representing an Editorial Version in the logical metadata model.
- Zero or more GroupInformation Fragments of type programConcept in the Group Information Table, each representing an Episode Group in the logical metadata model.
- Zero or more GroupInformation Fragments of type series in the Group Information Table, each representing a Series Group in the logical metadata model.
- Zero or more GroupInformation Fragments of type show in the Group Information Table, representing a Brand Group in the logical metadata model.
- Zero or more normalised person credits as PersonName Fragments in the Credits Information Table, representing an Agent in the logical metadata model.

- Zero or more normalised company credits as OrganizationName Fragments in the Credits Information Table, representing an Agent in the logical metadata model.

The above transaction shape specification allows a wide variety of different implementations by Metadata Publishing Parties. In one extreme case, an entire on-demand metadata catalogue could be published as a single Transaction containing a very large number of Fragments. At the opposite end of the spectrum, a Metadata Publisher could publish an update to a single Fragment. In practice, a particular deployment would likely impose a maximum allowed Transaction size to protect itself against Denial of Service attacks. This could be defined in terms of the number of individual Fragment updates, or as a raw size in bytes.

### *Publication metadata Transactions:*

Publication transactions carry information about the *availability* of content, as opposed to the content itself.

### *Schedule Transaction*

The Schedule transaction is only relevant to Metadata Publishing Parties supplying full schedules for linear channels. This includes

- Broadcast linear channels.
- IP channels.
- Virtual/placeholder channels.

The primary purpose of the transaction is to convey a master schedule of linear events. This includes provision of full schedule metadata for non-broadcast linear channels and provision of historical schedule metadata for broadcast linear channels.

- One Schedule Fragment in the Program Location Table, containing a set of <ScheduleEvent> objects, which correspond to a set of Broadcast Publications in the logical metadata model from a particular linear time period.
- All <ScheduleEvent> elements in the Schedule Fragment must be related to the same linear Service.

One typical approach to supplying linear schedules is to publish one Schedule Transaction per channel variant per programme schedule day.

The business rules surrounding the completeness of linear schedule metadata are not specified in the B2B interface. It merely specifies the mechanism for conveying this information. It may be a requirement that a Metadata Publishing Party supplies complete schedules with no gaps, for example.

### *Schedule linkage Transaction*

The purpose of the Schedule linkage transaction is to enable a Metadata Publishing Party to cross-reference linear schedule metadata provided by a different Metadata Publishing Party in a Schedule transaction. The Schedule linkage transaction carries minimal details of a linear schedule slot and links it to enhanced Content Description metadata, including on-demand content,

- One or more BroadcastEvent Fragments in the Program Location Table, each one representing one linear schedule slot.
- All Fragments in the transaction must refer to the same Editorial Version CRID (the programId value of a ProgramInformation Fragment), i.e. all describe linear publications of the same programme (version).

### *On-demand publication Transaction*

The On-demand Publication transaction carries details of a window of availability for content that can be consumed on-demand. While the on-demand catalogue is populated with descriptive metadata from the Descriptive metadata Transaction, it is the availability metadata present in the On-demand publication Transaction that controls the appearance of content items in the catalogue as seen by the end user.

- One or more OnDemandProgram Fragments in the Program Location Table, representing an On-demand Publication in the logical metadata model.

- All Fragments in the transaction must refer to the same Editorial Version CRID (the programId value of a Program-Information Fragment), i.e. all describe on-demand availabilities of the same programme (version).

Typically, there is expected to be one OnDemandProgram Fragment per Media Set of an Editorial Version. A Media Set comprises one or more media files transcoded at different bit rates, but all encoding identical source pictures and/or sound. Media Sets for High Definition and Standard Definition video are represented by separate logical On-demand Publications and therefore separate OnDemandProgram Fragments. However, both Fragments reference the same Editorial Version CRID. This pair of Fragments may be published in the same On-demand Publication transaction.

**B2B Transaction Status Report specification**

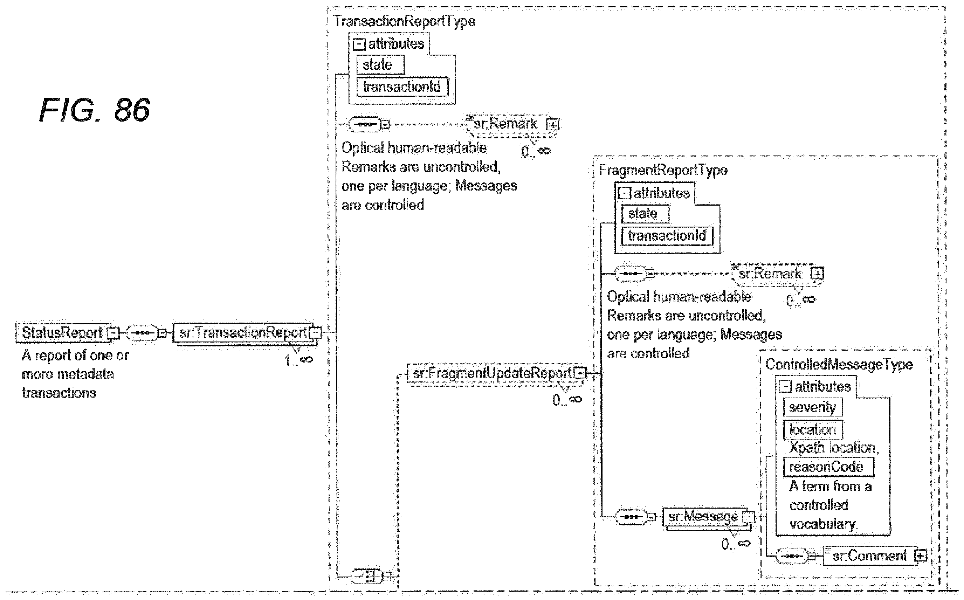

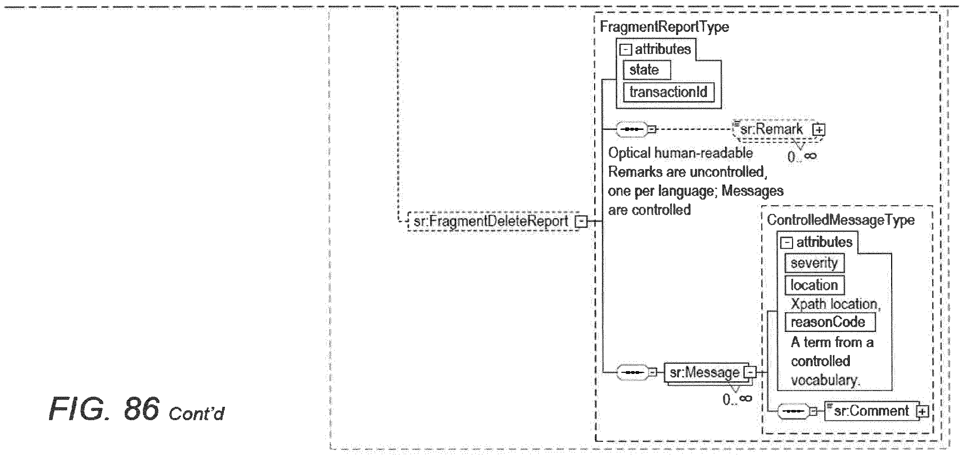

The following uses Figure 86 as a reference. Provided they are well formed and not rejected outright, the Fragment Update operation and the Fragment Delete operation both yield a Transaction Status Report.

- In the synchronous mode of operation, the Transaction Status Report is returned in the body of the HTTP response message.
- In asynchronous mode a URL is returned in the Location: response header, and the Metadata Publishing Party may poll this subsequently to monitor the ongoing status of that particular Transaction.

The additional transport specified above provides for the delivery of Transaction Status Reports by electronic mail in two scenarios:

1. If a Transaction fails a Transaction Status Report is automatically sent.
2. A periodic digest of Transaction Status Reports detailing both successful and failed Transactions accepted by the Metadata Ingest Service within a specific window of time.

**Transaction Status Report schema specification:**

In one example, Transaction Status Reports is formatted as an XML instance document complying with the schema with the following name space:

http://refdata.youview.com/schemas/YouViewStatusReport/2010-06-03

**Root element specification:**

In one example, the root element of the instance document is <StatusReport> and contains one or more <TransactionReport> elements.

The Root element may also provide human-readable remarks using the <Remark> element (one per language). The language of the remark is optionally indicated by the xml: lang attribute.

**Transaction Report specification:**

In one example, the <TransactionReport> element carries a system-unique Transaction Identifier in the transactionId attribute. This is the URL by which the ongoing status of the Transaction can be monitored by the Metadata Publishing Party. The current state of the Transaction is encoded in the state attribute. The set of possible states is the same as those outlined in Figure 84 (with the exception of the Rejected state since outright rejection is reported via the HTTP response status code). The Transaction Report may also provide human-readable remarks using the <Remark> element (one per language). The language of the remark is optionally indicated by the xml: lang attribute.

Transactions in pre-validate states have no further elements. Otherwise, each <TransactionReport> contains:

- Zero or more <FragmentUpdateReport> elements (it is possible to update several Fragments in a single Transaction).
- Zero or one <FragmentDeleteReport> elements (it is only possible to delete a single Fragment per Transaction).

**Fragment Update Report specification:**

In one example, the <FragmentUpdateReport> element carries in its fragmentId attribute the Fragment Identifier of the TV-Anytime Fragment whose update was requested in the Transaction. This is a proxy Fragment identifier of the form supplied to the Fragment State operation, as described above. The overall acceptability of the new metadata Fragment is conveyed in the Boolean success attribute. This indicates whether (or not) the new Fragment successfully passed all the ingest validation tests.

The Fragment Update Report may provide human-readable remarks using the <Remark> element (one per language). The language of the remark is optionally indicated by the xml:lang attribute. A number of <Message> entities may then follow, detailing individual aspects of the validation tests conducted on the new Fragment.

### *Fragment Delete Report specification:*

In one example, the <FragmentDeleteReport> element carries in its fragment Id attribute the Fragment Identifier of the TV-Anytime Fragment whose deletion was requested in the Transaction. This is a proxy Fragment identifier of the form supplied to the Fragment Delete operation, as described above. The overall success of the Fragment deletion is indicated in the Boolean success attribute.

The Fragment Delete Report may provide human-readable remarks using the <Remark> element (one per language). The language of the remark is optionally indicated by the xml:lang attribute. A number of <Message> entities may then follow, detailing individual aspects of the Fragment deletion.

### *Message specification:*

In one example, each <Message> entity provides a machine-readable reason code (in the reasonCode attribute) taken from the following Classification Scheme name space:

http://refdata.youview.com/mpeg7cs/YouViewMetadataIngestReasonCS/2010-09-23

This Classification Scheme defines a controlled vocabulary of reason codes.
The location in the Fragment to which this message relates is indicated in the location attribute in the form of an XPath.
The severity of the message is indicated in the severity attribute. The permitted values are detailed in the table below along with their meaning:

| Severity | Meaning |
|---|---|
| error | A fatal error that has caused the Transaction to enter the "Fail" state. |
| warning | A non-fatal problem that has not prevented the Transaction from passing to the next state in its life-cycle, but which **should** be noted by the Metadata Publishing Party and corrected. |
| information | A message provided for information only. No action on the part of the Metadata Publishing Party is required. |

### *B2C Profile of TV-Anytime Metadata Description*

This section specifies a domain-specific profile of the TV-Anytime Metadata Description [ETSI TS 102 822-3-1], and Extended Metadata Description [ETSI TS 102 822-3-3].

### *Fundamental TV-Anytime concepts: Fragmentation of Metadata Description*

The TV-Anytime Metadata Description is a logical tree of metadata tables containing individual records called Fragments. The Metadata Description is conceptually maintained by the Metadata Aggregation Service as the union set of metadata Fragments received from all Metadata Originating Parties. The smallest granularity of update to the Metadata Description by a Metadata Publishing Party is a single metadata Fragment. It is not possible to update individual fields within a Fragment without republishing the entire Fragment. The mechanism for adding Fragments to the Metadata Description, and updating existing Fragments already in it, is the Fragment update Transaction specified above.

For reasons of efficient batch processing, any number of Fragments may be conveyed in a single Fragment update Transaction, subject to business rules imposed by a particular deployment.

The set of TV-Anytime Metadata Description Fragments that may appear in a TV-Anytime XML instance document is specified in [ETSI TS 102 822-3-2]. The present specification further profiles this set down to the following Fragment types and their enclosing tables:

1. Group Information Table

- *GroupInformation* Fragment (schema type: GroupinformationType).

2. Program Information Table

- *ProgramInformation* Fragment (schema type: ProgramInformationType).

3. Program Location Table

- *Schedule* Fragment (schema type: ScheduleType).
- *BroadcastEvent* Fragment (schema type: BroadcastEventType).
- *OnDemandProgram* Fragment (schema type: OnDemandProgramType).

4. Service Information Table

- *ServiceInformation* Fragment (schema type: ServiceinformationType).

5. Credits Information Table

- *PersonName* Fragment (schema type: PersonNameType).
- *OrganizationName* Fragment (schema type: OrganizationNameType).

In one example, no other tables or Fragment types are permitted by this TV-Anytime profile.

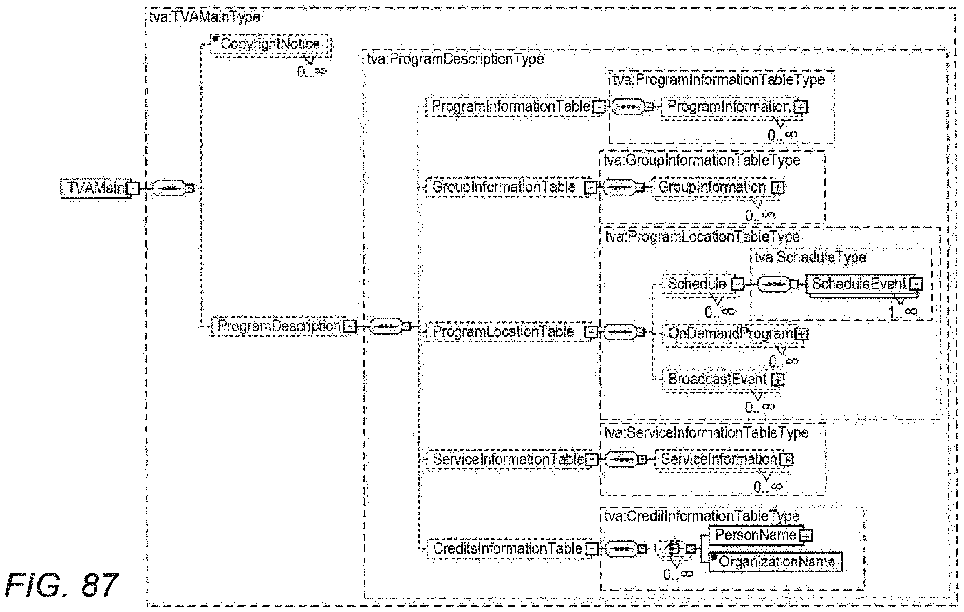

The order of the various tables in the <TVAMain> instance document is fixed by the XML schema. This is the order shown in the list above and in Figure 87.

The remainder of this specification describes the various TV-Anytime Metadata Description Fragments in a more logical order, but they must appear in the correct schema order in the XML instance document.

***Fundamental TV-Anytime concepts: <TVAMain> document specification***

In one example, the payload of the Fragment update Transaction is an XML instance document complying with the TV-Anytime metadata schema (and Extended Metadata schema, as appropriate). That is, an XML instance document whose root element is <TVAMain> (see Figure 87).

- The XML instance document shall be encoded using the UTF-8 character set.
- The XML instance document is introduced by a valid XML processing instruction.

The value of the encoding attribute shall be "UTF-8".

- The <TVAMain> root element shall declare the following name spaces:

  http://www.w3.org/2001/XMLSchema-instance
  urn:tva:mpeg7:2008
  urn:tva:metadata:2010
  urn:tva:metadata:extended:2010
  http://refdata.youview.com/schemas/20 10-09-23

- The xsi : schemaLocation attribute is omitted.

The xsi : schemaLocation attribute is useful for validating instance documents locally against copies of the XML schemas, but must not be transmitted to the Metadata Aggregation Service.

***Fundamental TV-Anytime concepts: Mapping from the Logical Metadata Model***

The table below specifies the mapping from the various Record types in the Logical Metadata Model to the corresponding Fragments of the TV-Anytime Content Description and their respective XML schema types.

| Logical Record type | TV-Anytime Fragment | XML schema type |
|---|---|---|
| Service Record | *ServiceInformation* | ServiceInformationT ype |
| Agent Record | *OrganizationName* | OrganizationNameTyp e |
| | *PersonName* | PersonNameType |
| Group Record (Brand) | *GroupInformation* | GroupInformationTyp e |
| Group Record (Series) | | |
| Group Record (Episode) | | |
| (Group Record (Clip)) | | |
| (possibly: Group Record (Collection)) | | |
| Editorial Version Record | *ProgramInformation* | ProgramInformationT ype |
| Broadcast Publication Record | *Schedule* | ScheduleEventType |
| *(Not applicable)* | *BroadcastEvent* | BroadcastEventType |
| On-demand Publication Record | *OnDemendProgram* | OnDemendProgramType |

The Schedule Fragment aggregates a number of <ScheduleEvent> elements, each of which models a single Broadcast Publication Record.

The BroadcastEvent is purely a linking device, and does not correspond to any Record in the Logical Metadata Model.

*Fundamental TV-Anytime concepts: Fragment identification specification*

The use of the TV-Anytime fragmentId attribute is not permitted in this profile. Instead, the ingest stage of the Metadata Aggregation Service will synthesise a "proxy" unique fragment identifier based on the supplied identifier (CRID and, if present IMI or TVAID) and the identity of the Metadata Originating Party. This identifier will then be used to track subsequent updates to the same Fragment. The specification for constructing a "proxy" unique fragment identifier is provided in Appendix 4 of this specification.

The use of the TV-Anytime fragmentversion attribute is not permitted in this profile. Fragment revision control is handled automatically by the Metadata Aggregation Service.

The use of the TV-Anytime fragmentExpirationDate attribute is permitted in this profile. The Metadata Aggregation Service may use the date-time information included in this attribute to automatically delete the metadata Fragment so labelled.

*Fundamental TV-Anytime concepts: Content Referencing Identifier (CRID)*

*specification*

In one example, every piece of descriptive metadata in the TV-Anytime Metadata Description is identified by a globally unique Content Referencing Identifier or CRID. This is a Uniform Resource Identifier of the form crid://<authority>/<data>.

- The <authority> part indicates the CRID Issuing Authority and is a registered Internet Domain Name. Typically, this is the domain name of the Metadata Originating Party or that of its nominated Metadata Publishing Party.
- The <data> part is an identifier assigned by the CRID Issuing Authority and unique within its scope.

In this way, management of the CRID name space is delegated and a CRID value issued by one Issuing Authority is guaranteed not to clash with values issued by other authorities by virtue of the scoping <authority> part.

- For *GroupInformation* Fragments the CRID is specified in the groupId attribute.
- For *ProgramInformation* Fragments the CRID is specified in the programId attribute.
- For <ScheduleEvent> elements in a *Schedule* Fragment the CRID of the parent *ProgramInformation* Fragment is quoted in the <Program> element.

- For <BroadcastEvent> Fragments the CRID of the parent *ProgramInformation* Fragment is quoted in the <Program> element.
- For *OnDemandProgram* Fragments the CRID of the parent *ProgramInformation* Fragment is quoted in the <Program> element.

While the CRID is sufficiently unique to identify a piece of content, it is *not* sufficiently unique to use the CRID as a primary key to a database of Fragments describing content. Several different Metadata Originating Parties may wish to publish metadata Fragments describing *the same piece of content*, in which case they would each submit a Fragment with the same CRID. One possible implementation strategy that solves this problem is outlined in Appendix 4.

### Fundamental TV-Anytime concepts: Instance Metadata Identifier (IMI) specification

Every Publication Record describes an instance of a *ProgramInformation* Fragment. As well as quoting the programId CRID of the parent *ProgramInformation* Fragment, a disambiguating Instance Metadata Identifier (IMI) must additionally be provided for every <ScheduleEvent> in a *Schedule* Fragment, for every *BroadcastEvent* Fragment, and for every *OnDemandProgram* Fragment. The IMI need only be unique within the scope of the parent CRID, so the combination of the two identifiers uniquely pinpoints both the instance and the content.

Again, the IMI takes the form of a Uniform Resource Identifier: imi:*[<authority>/]<data>*.

- The optional *<authority>* part indicates the IMI Issuing Authority and shall be a registered Internet Domain Name. Typically, this is the domain name of the Metadata Originating Party or of its nominated Metadata Publishing Party. If omitted, the authority is assumed to be the same as that of the parent CRID.
- The *<data>* part is an identifier assigned by the IMI Issuing Authority and unique within the scope of the *ProgramInformation* CRID.

In this way, management of the IMI name space is delegated and an IMI value issued by one Issuing Authority is guaranteed not to clash with values issued by other authorities by virtue of the scoping *<authority>* part.

The use of an explicit *<authority>* part in the IMI allows for architectures in which the publication instance metadata is provided by a different Metadata Publishing Party.

### Fundamental TV-Anytime concepts: Linear Service Locator specification

Linear Service Locators are used to identify the location of a linear Service within a broadcast network or within an internetwork. A Linear Service Locator is declared in every Service Fragment.

The Linear Service Locator shall be a Uniform Resource Identifier (URI) complying with [IETF STD 66, RFC 3986].

This profile of TV-Anytime permits two alternative URI formats for a Linear Service Locator:

1. For broadcast linear Services, the DVB Event Locator format [ETSI TS 102 727] is used.

- All numeric values is expressed as hexadecimal strings.
- The optional transport stream id field is omitted.
- The optional service_id field is present.
- The optional component_tag fields are omitted.
- The optional event_id field is omitted.
- The optional path_segments field is omitted.

For example:

dvb://233a..1044

2. For virtual/placeholder channels the Linear Service Locator is omitted. *Fundamental TV-Anytime concepts: Linear Event Locator specification*

Linear Event Locators are used to identity slots in the linear schedule. A Linear Event Locator is declared in every *BroadcastEvent* Fragment and in every <ScheduleEvent> element of a *Schedule* Fragment.

The Linear Event Locator is a Uniform Resource Identifier (URI) complying with [IETF STD 66, RFC 3986].

This profile of TV-Anytime permits two alternative URI formats for a Linear Event Locator:

1. For events on broadcast linear Services, the DVB Event Locator format [ETSI TS 102 727] is used.

- All numeric values are expressed as hexadecimal strings.
- The optional transport stream id field is omitted.
- The optional service _id field is present.
- The optional component_tag fields are omitted.
- The optional event_id field is present.
- The optional path_segments field is omitted.

For example:

dvb://233a..1044;c3bf

2. For events on all other types of linear Service, the Linear Event Locator shall comply with the specification below.

***Fundamental TV-Anytime concepts: Other TV-Anytime identifier specification***

All other formal identifiers in the Metadata Description are defined to use the schema type TVAIDType. To eliminate the risk of name space clashes between different Metadata Publishing Parties this profile restricts this schema type to use only valid Uniform Resource Identifiers (URIs). This restriction ensures that identifiers are appropriately scoped and their values do not clash.
This profile recommends that Metadata Publishing Parties use either the http: [IETF RFC 2616] or tag: [IETF RFC 4151] URI scheme. However, alternative URI schemes may also be acceptable in particular deployment scenarios. For example:

http://syndication.channel3.co.uk/service/channel3/scotland        tag:syndication.channel3.co.uk,2010-05:service:channel3:Scotland

***Fundamental TV-Anytime concepts: Date and time formats***

***Date-time format***

Unless otherwise specified, all date-time values in the TV-Anytime Metadata Description complies with [ISO 8601 Clause 5.4.1 a], a complete representation including the additional separators of the extended format.
All times are expressed in Coordinated Universal Time (UTC) and carry the Zulu time-zone designator [ISO 8601 Clause 5.3.3].
For example:

2010-06-25T20:42:40Z

***Time period format***

Unless otherwise specified, all time period and duration values in the TV-Anytime Metadata Description comply with [ISO 8601 Clause 5.5.3.2]. Incomplete representations are permitted.
For example:

PT2H30M5S
PT1H20M

***Fundamental TV-Anytime concepts: Language signalling specification***

The signalling of language is useful in at least two distinct contexts:

1. Indicating the languages available in the content. This includes spoken languages and the languages used for accessibility services such as subtitles, audio description and sign language. The TV-Anytime schema elements and attributes used for this signalling vary depending on context.
2. Indicating the written language of the metadata itself. The standard xml: lang attribute is used for metadata language signalling.

These two cases are described in more detail below. In both cases, the same set of language codes is used, so these are described first.

### Language codes

Both content and metadata languages shall be signalled using either ISO two- [ISO 639-1 or three-letter [ISO 639-2 ISO 639-3] codes as specified in the table below:

| Language | ISO 639-1 | ISO 639-2 | ISO 639-3 | Additional codes |
|---|---|---|---|---|
| English | en | eng | | |
| Welsh | cy | cym | | |
| Scottish Gaelic | gd | gla | | |
| British Sign Language | | | bfi | sgn-GB |

The system of regional suffixes used in ISO 639-1, giving such English variants as en-GB (*British*) and en-US (*American*), is adopted to support the proper specification of deaf sign languages by extending the generic sgn *Sign Language* of ISO 639-2. So British Sign Language (BSL) is indicated by sgn-GB.

### Content languages

Content languages relating to particular productions are indicated using sub-elements of <BasicDescription> at the Editorial Version or Episode levels of the metadata hierarchy, *i.e.* in the *ProgramInformation* Fragment or a *GroupInformation* Fragment of type programConcept. This is described in more detail below.
Content languages relating to accessibility (subtitles, audio description and sign language) are indicated using sub-elements of <InstanceDescription> at the Publication level of the metadata hierarchy, i.e. in the *OnDemandProgram* Fragment or in the <ScheduleEvent> element of the *Schedule* fragment. This is described in more detail below.
See also the Transactions examples below.

### Metadata language

Metadata language (*i.e.* the written language of the descriptive metadata) is signalled using the standard xml:lang attribute, which may be applied optionally at many points in the Metadata Description tree. The most minimal method is to apply the xml: lang attribute to the root document element <TVAMain>:

```
<TVAMain xml:lang="en-GB">
   ...
</TVAMain>
```

and for a completely monolingual metadata set this is sufficient, since any Fragment lacking an xml:lang attribute implicitly inherits the value of its containing element in the XML document tree.
Another simple approach, only slightly less economical, is to apply the element to each of the main tables for example:

```
<TVAMain>
    <ProgramDescription>
        ...
        <ProgramInformationTable          xml:lang="en-
GB">...</ProgramInformationTable>
        ...
        <GroupInformationTable          xml:lang="en-
GB">...</GroupInformationTable>
        ...
    </ProgramDescription>
</TVAMain>
```

In this case a Fragment will automatically inherit the default metadata language signalled in its parent table.

Similarly, it is valid to apply the xml: lang attribute to individual Fragment elements:

```
<TVAMain>
    <ProgramDescription>
        ...
        <GroupInformationTable>
            ...

        <GroupInformation xml:lang="en-GB" groupId="crid://...">...
        </GroupInformation>

        <GroupInformation xml:lang="cym" groupId="crid://...">...
        </GroupInformation>
            ...
        </GroupInformationTable>
        ...
    </ProgramDescription>
</TVAMain>
```

Most importantly, individual descriptive metadata fields *within* a Fragment can carry the xml: lang attribute and so override the default, inherited value. Furthermore, most free-text descriptive fields (such as titles or synopses) can occur many times within a single Fragment. This provides a mechanism for supplying multilingual metadata descriptions for the same piece of content within a single Fragment.

A simple example would be the parallel provision of Welsh and English synopses for a programme:

```
<GroupInformation xml:lang="en-GB" groupId="crid://...">
    ...
    <BasicDescription>
        ...

        <Synopsis    length="medium"    xml:lang="cym">Beth    fydd
penderfyniad Gwyneth ynglyn â'r babi? Cyfaddefa Colin i Izzy ei
fod yn gwybod am yr hyn ddigwyddodd rhyngddi hi a Macs. Pam nad
yw Dani'n yn hapus efo Dai a Diane?</Synopsis>
        <Synopsis    length="medium"    xml:lang="eng">What    will
Gwyneth decide to do about the baby? Colin admits to Izzy that
he knows the truth about her and Macs. Why isn't Dani happy with
Dai and Diane?</Synopsis>
        ...
    </BasicDescription>
    ...
</GroupInformation>
```

*Fundamental TV-Anytime concepts: Classification Schemes*

The TV-Anytime Metadata Description borrows the concept of Classification Schemes from the MPEG-7 Content Description. Classification Schemes are simply vocabularies of controlled terms whose identifiers are collected into a particular name space. Term identifiers tend to be numeric or alphanumeric. (The MPEG-7 specification also allows other punctuation characters to appear.) Each Classification Scheme defines terms in a particular conceptual domain and these are presented in a reference XML instance document whose name space is defined by the uri attribute of the root element, <ClassificationScheme>.

Terms are applied to the TV-Anytime Metadata Description using elements such as <Genre> the fully-qualified term identifier being the concatenation of the Classification Scheme name space identifier with the locally unique term identifier from that Classification Scheme.

- If the name space has a urn: scheme then a colon character (":") is used to append the local term identifier to the name space identifier.
- If the name space has an http: // scheme then a hash character ("#") is used to append the local term identifier to the name space identifier.

For example:

| Name space identifier | Local term identifier | Fully-qualified term identifier |
| --- | --- | --- |
| urn:mpeg:mpeg7:cs:RoleCS:200 1 | ACTOR | urn:mpeg:mpeg7:cs:RoleCS:2001:AC TOR |
| http://refdata.youview.com/mpeg 7cs/ YouViewIntendedAudienceC S/2010-09-20 | 4.2.3 | http://refdata.youview.com/mpeg7cs/ YouViewIntendedAudienceCS/2010-09-20#4.2.3 |

These fully-qualified terms might then appear in the Metadata Description as:

```
<BasicDescription>
    ...
    <Genre
href="http://refdata.youview.com/mpeg7cs/YouViewIntendedAudience
CS/2010-09-20#4.2.3"/>
    <CreditsList>
        ...
        <Credit
role="urn:mpeg:mpeg7:cs:RoleCS:2001:ACTOR">...</Credit>
        ...
    </CreditsList>
    ...
</BasicDescription>
```

*B2B Reference Metadata Fragments: ServiceInformation Fragment profile*

Reference Metadata Fragments provide metadata that is referenced by subsequent Fragments of Content Description metadata and Fragments of publication Instance Description metadata, which are both described in more detail below.

The ServiceInformation Fragment is used to represent the Service Record in the Logical Metadata Model. Its Record identifier for the purposes of manipulation is the value of the serviceId attribute. This identifier shall comply with the profile of TVAIDType above.

Three different types of service are modelled:

1. Linear Services (e.g. "BBC One North West", "ITV1 Granada"). There is one Service for every regional variant of a linear channel. All linear schedules reference one or more of these Linear Services.
2. On-demand Portal Services (e.g. "BBC iPlayer", "ITV Player", "STV Player", "Demand Five", "SeeSaw"). These Services advertise the on-demand portals of individual Content Providers. Subject to business rules, a particular Content Provider may operate several such branded portals at the same time (e.g. "CBBC iPlayer" and "BBC iPlayer"). All on-demand Publications reference one or more On-demand Portal Services. A media player Application can optionally be associated with an On-demand Portal Service.

3. Content-owning Services. These are user-facing brands (e.g. "BBC Four", "ITV3", "CITV", "FilmFour", "Milkshake") to which content is attributed so that the correct branding can be applied in content listings. The user-facing brands described by the set of Content-owing Services may be a mixture of linear channel brands, branded "blocks" and on-demand "channel" brands. The topmost Fragment in every Content Description metadata chain (whether Brand or Series or Episode) references exactly one Content-owning Service for attribution purposes in the end user experience. Fragments below the topmost in the chain may override this value by specifying a different Content-owing Service.

- The serviceId attribute is a scoped unique identifier to avoid name space clashes.
- Models both linear services and on-demand Services (e.g. BBC iPlayer, BT Vision).
- May optionally be arranged into a Service hierarchy.
- Must be (re)published at each reinitialisation.
- May be updated at any time by the Metadata Publishing Party to signal changes in the service line-up.
- Descriptive metadata is provided in <ServiceDescription> child element.
- Image references (e.g. service logos) may be provided using <RelatedMaterial> child element. (The use of the TV-Anytime <Logo> child element is prohibited by this profile.)

### Service name

This is the name of the Service as it appears in the content guide.

- Up to two service names may be supplied: a full service name and an abbreviated one.

```
<ServiceInformation
serviceId="http://syndication.channel3.co.uk/service/midlands">
  <Name>Channel Three (Midlands)</Name>
  <Name length="short">Ch3 Midl</Name>
</ServiceInformation>
```

### Service ownership

The name of a Service's owner as it is to appear in the content guide.
For example:

```
<ServiceInformation
serviceId="http://syndication.channel3.co.uk/service/midlands">
  <Owner>Channel Three Broadcasting</Owner>
</ServiceInformation>
```

This is a user-facing string. A separate machine-readable tag must also be provided for all Services to assist with the compilation of usage reports. See below for further details.

### Service locator

A Uniform Resource Locator for the Service may be specified using the <ServiceURL> element.

1. Linear Services specify a service locator URL.
For broadcast Linear Services this is the so-called DVB triplet of the form:

dvb://<original_network_id>.[<transport_stream_id>].<service_id>

The optional <transport_stream_id> element is always omitted since this varies between Service Insertion Points. This leaves two adjacent dots in the middle of the triplet, e.g. "dvb://233a..2045".
For IP-delivered Linear Services the URL of the Service Description resource is supplied as the Service locator.
2. On-demand Portal Services may optionally provide the CRID of a media player Application. This media player will then be invoked to present all Publications associated with the Service. If no Service locator is specified in the Service fragment a default media player will be used for playback.

3. Content-owning Services do not specify a Service locator.

### Service description

This is a user-facing description of the Service for display in the content guide.

• Up to three different lengths of description may be specified in the Service fragment using the optional length attribute to the <ServiceDescription> element:

| Service description length | Optionality | Maximum character count |
|---|---|---|
| short | Mandatory | 90 characters |
| medium | Recommended | 210 characters |
| long | Optional | 1200 characters |

• If a <ServiceDescription> is provided without the optional length attribute, the text is automatically used as a default value for any of the three missing Service descriptions.

### Primary service language

The primary language of the Service is conveyed in the <ServiceLanguage> element. This information supports the filtering of Services by language in the content guide.

### Logical channel number

**[1194]** The logical channel number for Linear Services is *not* conveyed in the *Service* Fragment. Other mechanisms may be used for this purpose.

### Service classifiers

In one example, services need to be further classified for a number of different reasons. Terms from Controlled Vocabularies are applied using the <ServiceGenre> element as follows:

1. Service category. The placement of Services into user-facing categories is achieved by labelling the Service fragment with one or more terms from the Classification Schemes IntendedAudienceCS, FormatCS, ContentCS, OriginationCS and IntentionCS.

Terms intended for the purpose of classification (later mapped into user-facing categories) are signalled using the type="main" attribute of the <ServiceGenre> element.

2. Service type. A single term from MediaTypeCS or YouViewServiceTypeCS is provided to indicate whether the *Service* Fragment represents a Linear Service (television and radio have separate terms), an On-demand Portal Service (video-on-demand and audio-on-demand are similarly discriminated) or a Content-owning Service. This influences the placement of the Service in the content guide.

This term is signalled using the type="other" attribute value.

3. Content provider. A single term from YouViewContentProviderCS is provided to assist with the compilation and routing of usage reports to the correct content provider.

This term is signalled using the type="other" attribute value.

### Parent service linkage

A hierarchy of Services can be created using the <ParentService> linkage element. The serviceId of the parent service is quoted in the serviceIDRef attribute of this element. The exact Service hierarchies expressed are at the discretion of individual Metadata Originating Parties.

• Linear Services typically point to a Content-owning Service parent (e.g. the parent of the "Granada" Linear Service is the "ITV1" Content-owning Service).

- On-demand Portal Services may form natural hierarchies as a result of brand extension (e.g. "CBBC iPlayer" as a child of "BBC iPlayer").
- Content-owning Services may fall into similar hierarchies (e.g. "T4" branded block as a child of "Channel Four" or "BBC7" as a child of "BBC Radio 4").

Services automatically inherit the Service classifiers of all their ancestors. These are additive.

Services automatically inherit the Branding identity logos of all their ancestors. However, where the same <IntendedUse> content attribute value is specified, the image specified in the child overrides that of any ancestor.

*Branding identity logos*

In one example, each Service specifies one or more still images corresponding to Service logos for display in the content guide.

- Realising the Image entity in the Logical Metadata Model.
- Using <RelatedMaterial> element of type ExtendedRelatedMaterialType.
- The href attribute of the <HowRelated> element carries the fixed value urn:tva :metadata :cs:HowRelatedCS:2010: 19 to indicate that this is a promotional still image.
- The file format of the image may be supplied using the appropriate term from MPEG-7 FileFormatCS in the href attribute of the <Format> element.
- A textual description of the image content is supplied in the <PromotionalText> element to support accessibility aids such as screen readers.
- The source URL of the image is supplied in the MediaLocator/MediaUri element.
- The width and height of the image are indicated in the elements ContentProperties/ContentAttributes/Width and ContentProperties/ContentAttributes/Height.
- A controlled term from YouViewImageUsageCS is provided in the <IntendedUse> element indicating the logical purpose of the image in the content guide.
- A controlled term from YouViewImageUsageCS may be provided in an additional <IntendedUse> element to indicate the source type of the image.
- The main display logo for the Service is indicated using the term source-ident. For Content-owning Services, a digital on-screen graphic logo may be indicated using the term source-dog.
- The controlled term do_not_resize from YouViewImagePropertyCS may be provided in a further <IntendedUse> element to indicate that the image is not a high-resolution master image, i.e. it is not suitable for resizing to fit varying requirements in the user experience.
- Omission of this term implies that the image may be resized by the recipient system.

The protocol for updating a branding identity logo is to republish the affected Service Fragment with a different value of <MediaUri>.

*B2B Reference Metadata Fragments: Credit Fragments*

The intention of this class of Fragments is to allow Metadata Publishing Parties to build up a normalised database of credits in the Metadata Aggregation Service that can be referenced by many different descriptive metadata Fragments. Support for these two Fragment types is optional; an alternative denormalised approach to listing credits is also supported inside the BasicDescription/CreditsList element of *ProgramInformation* and *GroupInformation* Fragments.

The two Fragments described below correspond to the Agent Record in the Logical Metadata Model.

*OrganizationName Fragment profile*

The Record identifier for the purposes of Fragment manipulation is the value of the organizationNameId attribute. This identifier complies with the profile of TVAIDType specified above.

- Normalised organisation representing broadcasters, production companies, copyright holders.
- The organizationNameId attribute is a scoped unique identifier to avoid name space clashes.

Example:

```
<OrganizationName organizationNameId="http://syndication.channel
3.co.uk/agent/724233">Associated Rediffusion</OrganizationName>
```

### PersonName Fragment profile

The Record identifier for the purposes of Fragment manipulation is the value of the personNameId attribute. This identifier complies with the profile of TVAIDType specified above.

- Normalised person represents individual cast/crew member.
- The personNameId attribute is a scoped unique identifier to avoid name space clashes.
- An individual may have several different names over time (*e.g.* actor credited with different names).
- No plans to have a single, managed credits database, but individual Metadata Publishing Parties may choose to co-operate on the use of common personNameId values in order to allow cross-referencing of cast/crew members between content from different content partners, or else agree to label *PersonName* Fragments with common third-party identifiers as described below.

### Third-party person reference identifier

Unique identifiers from external data sets may optionally be provided to assist with cross-referencing credits from different Metadata Originating Parties. This is achieved using one or more <otherIdentifier> elements. The authority attribute shall be a registered Internet domain name that uniquely identifies the owner of the external data set.

Example:

```
<PersonName
personNameId="http://syndication.channel3.co.uk/agent/6284">
    <mpeg7:GivenName>Stephen</mpeg7:GivenName>
    <mpeg7:FamilyName>Fry</mpeg7:FamilyName>
    <OtherIdentifier authority="imdb.com">http://uk.imdb.com/name/
nm0000410/</OtherIdentifier>
    <OtherIdentifier authority="dbpedia.org">http://dbpedia.org/pa
ge/Stephen_Fry</OtherIdentifier>
</PersonName>
```

### B2B Reference Metadata Fragments: Content Description metadata Fragments

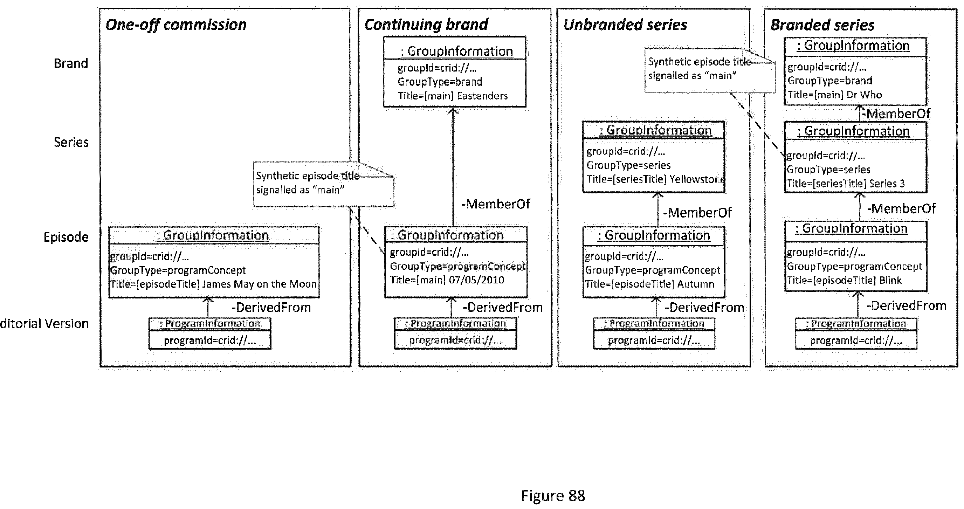

These Fragments are used to represent the programme hierarchy in the Logical Metadata Model: Brand, Series, Episode and Editorial Version. Figure 88 illustrates how the TV-Anytime Fragment types are arranged to represent four common programme archetypes. Each archetype forms a distinct Content Description metadata chain; although in practice Fragments are expected to share common ancestors thereby forming inverted tree structures.

The object of the exercise is to avoid repeating the same descriptive metadata for all the Episodes in a given Series or all the Series in a particular Brand by normalising out the common fields into separate Fragments. The benefit of this normalised approach is that any change to a metadata field in (say) a Series requires only one metadata Fragment to be republished.

The simplest archetype, the One-off commission illustrates the minimum set of metadata Fragments required: a single Episode Record (*GroupInformation* Fragment of type programConcept) plus a single Editorial Version Record (*ProgramInformation* Fragment). This archetype is sufficient for modelling the Content Description metadata for flat film catalogues and unstructured music videos. The more complex archetypes are only necessary where grouping structures such as programme Brands and Series are brought into play.

### Distinction between Episodes and Editorial Versions

Each Editorial Version Record corresponds to a *concrete* entry in the content guide.

The Episode Record, by contrast, represents an *abstract* commissioned editorial concept such as a programme, film or music video. From the outset, a number of different Editorial Versions of this abstract commission may be ordered by the original commissioner (linear channel controller, studio producer). Sometimes requirements for additional Editorial Versions emerge over time.

Valid reasons for modelling different Editorial Versions of an Episode include:

- Different run length. For a film, the duration of a director's cut may differ from that of the original studio cut.
- Different parental guidance. A post-watershed cut may have deleted scenes restored compared with a pre-watershed edit. This may result in different guidance flagging to prevent children from consuming the content unrestricted. (Of course, different edits may result in a different duration as well.)

The inclusion of accessibility services does not constitute a different Editorial Version in the Logical Metadata Model. Such differences are represented by multiple Publications of the same basic Editorial Version since the underlying editorial content is identical at scene level.

For example, in-vision Sign Language interpretation is modelled as a separate Publication of the same Editorial Version despite the fact that the source media may be different.

Typically, the majority of the Content Description metadata is common to all Editorial Versions of the Episode, in which case the common metadata is published once at Episode level rather than repeating it in each Editorial Version. Where the metadata differs, it is expressed at Editorial Version level. This general principle applies for reasons of economy and efficiency so that the smallest amount of metadata needs to be republished when there is a change (e.g. changing a synopsis, adding a new Editorial Version) and the impact on downstream systems (execution of business logic, denormalisation of metadata, consequent cache invalidation) is minimised.

In this profile of TV-Anytime, run length and parental guidance flagging is specified *only* at Editorial Version level. Other Content Description metadata fields, such as title and synopsis, are generally supplied at Episode level, but may optionally be re-specified at Editorial Version level, in which case the field at Editorial Version level overrides the corresponding field in the Episode Record.

Other Content Description metadata fields are additive. For example, the set of classifiers, the additional keywords and the list of cast and crew are all inherited from Brand to Series to Episode to Editorial Version.

This profile does not provide any metadata field for explicitly signalling the difference between different Editorial Versions so that it can be displayed in the content guide: any difference is implied by the different run length or guidance supplied in the Content Description metadata. However, some Metadata Originating Parties may wish to provide additional discrimination at Editorial Version level, e.g. by specifying an overriding title at Editorial Version level.

### B2B Reference Metadata Fragments: GroupInformation Fragment profile

This Fragment is used to realise all the different types of Group Record in the Logical Metadata Model. The Record identifier for the purposes of Fragment manipulation is the value of the groupId attribute. This identifier complies with the profile of CRIDs specified above.

- Used to represent Brand Group, Series Group and Episode Group Records in the Logical Metadata Model, describing the main grouping structures of conventional programming.
- Also used to represent Collection Group, Clip and Application Records.
- The groupId attribute is required by the schema to be a valid Content Referencing Identifier (CRID).
- Most of the descriptive metadata resides at Episode level, and provision of this is mandatory, but Content Description metadata is also useful at optional Series and Brand levels.
- Classifiers can be applied at any level in a Content Description metadata chain.
- Credits can be provided optionally at any level, whether inlined or as normalised credit pointers.
- Pointer to Content-owning Service for attribution purposes in the content guide.

Preferably provided at the topmost level of each Brand-Series-Episode hierarchy, but can be overridden lower down also.

- Optional pointers to editorial Images can be provided at any or all levels of the hierarchy using <RelatedMaterial> tagged with term 19 (Promotional Still Image) from HowRelatedCS.
- Optional pointers to promotional Clips (e.g. series trailer, episode trailer) may be provided at any or all levels of the hierarchy.

### Content-owning Service linkage

In any chain of Brand Group, Series Group or Episode Group Records the topmost Record in the chain declares a linkage to one Content-owning Service by means of the serviceIDRef attribute on the <GroupInformation> element. The value of this attribute is the serviceId of a Service Fragment.

Conventional inheritance rules apply to the Content-owning Service linkage. A Series Group may override the value specified in the parent Brand if this needs to be different. Similarly, an Episode Group may override the value specified in its parent Series or Brand.

Depending on metadata ingest business rules, failure to provide a Content-owning Service linkage anywhere in a chain of Content Description metadata may cause the metadata to be rejected. Alternatively, the metadata may be accepted and displayed in the content guide without any attribution.

### Ordered flag

If the order of the items in a Group is significant (*i.e.* its members are displayed in a particular sequence in the content guide) then the ordered="true" attribute is declared in the <GroupInformation> element.

If a Group is declared to be ordered then every member of that Group includes an index attribute in the linkage to its parent Group, further detail below.

In the absence of the ordered attribute a Group is assumed to be unordered and members of that Group do not include an index attribute in the linkages to their parent Group. Likewise if the ordered attribute is present but set to the value "false".

### Group type

The type of Group Record is specified via the <GroupType> element. The following table details how the xsi : type and value attributes of this element are to be specified for the different types of Group Record.

| Record type | xsi : type | value |
|---|---|---|
| Brand Group | ProgramGroupTypeT ype | show |
| Series Group | ProgramGroupTypeT ype | series |
| Episode Group | ProgramGroupTypeT ype | programConce pt |
| Clip Group | ProgramGroupTypeT ype | clip |
| Application Group | ProgramGroupTypeT ype | application |
| Collection Group | ProgramGroupTypeT ype | otherCollect ion |

### Basic Content Description

The <BasicDescription> element is specified 0 below since it is common to both types of Content Description metadata Fragment.

### Linkage to parent Group

- The optional <MemberOf> linkage element may be used to refer to a parent *GroupInformation* Fragment of this Group when assembling a Brand-Series-Episode chain (as illustrated in Figure 88).
- The groupId attribute of the parent *GroupInformation* Fragment is quoted in the mandatory crid attribute of the <MemberOf> element.
- If the parent Group has been declared as ordered, the optional index attribute indicates the position of this Group within its parent Group.
- If the parent Group is unordered, the optional index attribute is not present.

```
<GroupInformation groupId="crid://provider.co.uk/series3"
ordered="true">
   <GroupType xsi:type="ProgramGroupTypeType" value="series"/>
   ...
</GroupInformation>

<GroupInformation groupId="crid://provider.co.uk/series3-
episode1">

   <GroupType xsi:type="ProgramGroupTypeType"
value="programConcept"/>
   ...
   <MemberOf crid="crid://provider.co.uk/series3" index="21"/>
</GroupInformation>

<GroupInformation groupId="crid://provider.co.uk/series3-
episode2">
   <GroupType xsi:type="ProgramGroupTypeType"
value="programConcept"/>
   ...
   <MemberOf crid="crid://provider.co.uk/series3" index="36"/>
</GroupInformation>
```

Positional indices do not have to form a contiguous sequence. For example, a Series Group may have a set of child Episodes with index attribute values 21, 36 and 54.

### Private Group identifiers

This profile makes provision for Content Providers to supply private identifiers against Group Records. These are intended to be passed through metadata systems unaltered to the content guide.

- Any number (subject to external business rules) of private identifiers may optionally be supplied using the <otherIdentifier> element.
- The mandatory attribute authority is supplied in the form of an Internet-style domain name that uniquely identifies the type of identifier in a meaningful way to the Content Provider.
- Each authority value is used only once in any given Brand-Series-Episode-Editorial Version-Publication metadata chain.

```
<GroupInformation groupId="crid://provider.co.uk/654321">
   <GroupType xsi:type="ProgramGroupTypeType"
value="programConcept"/>
   ...
   <OtherIdentifier authority="episode.provider.co.uk">3411/G</Ot
herIdentifier>      ...
</GroupInformation>
```

### B2B Reference Metadata Fragments: ProgramInformation Fragment profile

This Fragment type realises the Editorial Version Record in the Logical Metadata Model. Each such Fragment represents the embodiment of an Episode, Clip or Application. The Record identifier for the purposes of Fragment manipulation is the value of the programId attribute. This identifier shall comply with the profile of CRIDs as described above.

### Basic Content Description

The <BasicDescription> element is specified below since it is common to both types of Content Description metadata Fragment.

*Private Editorial Version identifiers*

This profile makes provision for Content Providers to supply private identifiers against Editorial Version Records. These are intended to be passed through metadata systems unaltered to the content guide.

- One or more Content Provider private identifiers may optionally be supplied using the <OtherIdentifier> element.
- The mandatory attribute authority is supplied in the form of an Internet-style domain name that uniquely identifies the type of identifier in a meaningful way to the Content Provider.
- Each authority value is used only once in any given Brand-Series-Episode-Editorial Version-Publication metadata chain.

For example:

```
<ProgramInformation programId="crid://provider.co.uk/123456">
   ...
   <OtherIdentifier
authority="version.provider.co.uk">3411/G/1</OtherIdentifier>
   ...
</ProgramInformation>
```

*Production audio-visual attributes*

The <AVAttributes> element is no longer supported by this profile in the *ProgramInformation* Fragment. Audio-visual attributes are instead conveyed in Instance Description metadata Fragments.

*Membership of Collection Group*

An Editorial Version **may** optionally be declared to be part of a Collection Group. This linkage shall be represented by the <MemberOf> element which carries the groupId value of the Collection's *GroupInformation* Fragment in its crid attribute.

- The target Collection Group is of type "otherCollection".
- If the target Collection Group is ordered, an index attribute is provided in the <MemberOf> linkage element.

*Linkage to parent Episode*

- The mandatory <DerivedFrom> linkage element **shall** be used to refer to the Episode (*GroupInformation* Fragment of type programConcept).
- The groupId attribute of the target *GroupInformation* Fragment is quoted in the crid attribute of the <DerivedFrom> element.

*<BasicDescription> element*

The <BasicDescription> element is common to the two Content Description metadata Fragment types. However, different elements of descriptive metadata are permitted depending on the Fragment type and the type of Group:

| Logical Metadata Model Record type | Brand Group | Series Group | Episode Group | Editorial Version | Inheritance rule |
|---|---|---|---|---|---|
| TV-Anytime Fragment<br><br>Element | \<Grou pInfo rmati on> brand | \<Grou pInfo rmati on> series | \<Group Inform ation> progra mConce pt | \<Progr amInfo rmatio n> | |
| \<Title> | ✓ | ✓ | ✓ | ✓ | Independent in Brand and Series. |
| \<Synopsis> | ✓ | ✓ | ✓ | ✓ | Editorial Version overrides Episode. |
| \<Keyword> | ✓ | ✓ | ✓ | ✓ | Cumulative from Brand to Series to Episode to Editorial Version. |
| \<Genre> | ✓ | ✓ | ✓ | ✓ | Duplicates removed. |
| \<ParentalGuida nce> | × | × | × | ✓ | None. |
| \<Language> | × | × | ✓ | ✓ | Editorial Version overrides Episode. |
| \<CaptionLangua ge> | × | × | × | ✓ | Conveyed in Instance Description. |
| \<SignLanguage> | × | × | × | ✓ | Conveyed in Instance Descrip tion. |
| \<CreditsList> | ✓ | ✓ | ✓ | ✓ | Cumulative from Brand to Series to Episode to Editorial Version. |
| \<RelatedMateri al> | ✓ | ✓ | ✓ | ✓ | Duplicates removed. |
| \<ProductionDat e> | × | × | × | ✓ | None. |
| \<ProductionLoc ation> | × | × | × | ✓ | |
| \<Duration> | × | × | × | ✓ | |
| \<PurchaseList> | × | × | × | ✓ | Conveyed in Instance Description. |
| \<TargetingInfo rmation> | ✓ | ✓ | ✓ | ✓ | Inherited from Brand to Series to Episode to Editorial Version. Re-specifying overrides all parent values. |

No other elements are permitted to appear in the \<BasicDescription>.

*Titling*

At least one title shall be provided for every Brand, Series and Episode Record *(i.e.* all *GroupInformation* Fragments). In the absence of a type attribute on the \<Title> element, this is assumed to be the main title (type="main"). This profile also ascribes meaning to some of the other MPEG-7 title types to signal specific special cases:

- "secondary": is used to signal an additional explicit sorting title, for example when leading articles such as "A" or "The" must be treated as first-order words in title sorting, rather than ignored. For example:

```
<BasicDescription>
  ...
  <!-- Display title (Note: "main" is the default value if the
type attribute is omitted altogether) -->
  <Title type="main">The Archers</Title>

  <!-- Sort title -->
  <Title type="secondary">Archers, The</Title>
  ...
</BasicDescription>
```

The secondary title element is omitted when it is the same as the primary title.

The secondary title is intended to be presented by the content guide in alphabetically sorted views. It is also intended to be used by the search engine as an additional means of indexing the content item.

If no secondary title is supplied, alphabetically sorted catalogue views are presented in strict lexicographic order based on the primary title submitted. It should be assumed that no automatic reordering of leading articles is performed by the metadata recipient system.

- "episodeTitle": is used to indicate an editorially significant Episode title that is considered by the search engine indexer. Unless this type is used, Episode-level titles are assumed to be "synthetic" (*e.g.* "Wednesday, 3rd February", "Episode 5") and so are not indexed.
- "seriesTitle": for Series, shall be used to indicate an editorially significant title as with episodeTitle above.

The titles of Series without a parent Brand are always considered editorially significant, as are Brand titles.

- "songTitle", "albumTitle": may be used when describing content objects oriented primarily around single pieces of music.

### Synopsis

• At least one synopsis is provided for every Brand, Series or Episode Record (*i.e.* for all *GroupInformation* Fragments).
• Three different synopsis lengths are supported by this profile, as detailed in the table below:

| Synopsis length | Optionality | Maximum character count |
| --- | --- | --- |
| short | Mandatory | 90 characters |
| medium | Recommende d | 210 characters |
| long | Optional | 1200 characters |

• External business rules determine which synopsis lengths must be populated by Metadata Publishing Parties.

### Additional keywords

This profile allows Metadata Publishing Parties to supply additional keywords in the supplied Content Description metadata to assist with the indexing of content by the Search Service.

- Present in Brand, Series or Episode Records only (*GroupInformation* Fragments).
- Each additional keyword is supplied in a separate <Keyword> element. The contents of the element **may** contain composite keywords containing spaces, e.g. "social deprivation", "royal wedding".
- Keywords are inherited in an additive fashion from Brand to Series to Episode.

### Content placement classifiers

Classifiers drive the placement of content items into user-facing categories in the content guide. Because the set of user-facing categories is volatile, the placement is achieved through a mapping such that the classifiers applied to content by Metadata Publishing Parties can remain relatively static even if the user-facing categories are reorganised.

- Present in Brand, Series or Episode Records only (*GroupInformation* Fragments).
- A Fragment implicitly inherits content placement classifiers from its closest ancestor in the hierarchy. However, if a particular Fragment declares its own content placement classifiers, these completely replace any classifiers that would otherwise have been inherited.

The placement of content into user-facing categories is driven by content classifiers either directly specified at Episode level, or implicitly inherited by the Episode Record.

- Computer-readable terms selected from intentionCs, FormatCS, ContentCS, IntendedAudienceCS or OriginationCS.
- The palette of available terms is a profiled subset of those defined by TV-Anytime and can be found in an accompanying specification.
- Any number of terms may be applied to a Fragment, subject to implementation business rules.
- Each term is included as the content of a <Genre type="main"> element.
- By default, content is assumed to be aimed at a general audience unless one of the terms described in the subsections below is applied.

### Adult content classifiers

All content of a pornographic nature suitable for adults only is tagged either with the following classifier:

urn:tva:metadata:cs:ContentCS:2010:3.9 *(ADULT)*

or else with one of the more specific adult content classifier terms 3.9.* from the controlled vocabulary YouViewContentCS.

Content of general interest to an audience of adults may be tagged with the following classifier:

urn:tva:metadata:cs:IntendedAudienceCS:2010:4.2.2 *(Adults)*

The classifier terms are included in the element <Genre type="main">.

### Children's content classifier

All content suitable for viewing by children is tagged with the following classifier:

urn:tva:metadata:cs:IntendedAudienceCS:2010:4.2.1 *(Children)*

The classifier term is included in the element <Genre type="main">.

### Educational content classifier

All content intended primarily for educational purposes is tagged with the following classifier:

urn:tva:metadata:cs:IntentionCS:2005:1.3 *(EDUCATE)*

More specific classifiers may additionally be specified.
The classifier terms is included in the element <Genre type="main">.

### Content type classifiers

At least one Fragment in any Brand-Series-Episode-Editorial Version chain specifies the type of content to assist in the placement of the content item in the content guide. The terms specified in the following table shall be supplied with the element <Genre type="main">.

| Controlled term | Meaning |
|---|---|
| urn:tva:metadata:cs:**MediaTypeCS**:2005:**7.1.1** *(Linear \| Audio only)* | Radio |

(continued)

| Controlled term | Meaning |
|---|---|
| urn:tva:metadata:cs:**MediaTypeCS**:2005:**7.1.3** (*Linear \| Audio and video*) | Television |
| urn:tva:metadata:cs:**MediaTypeCS**:2005:**7.1.3** (*Linear \| Audio and video*)<br>urn:tva:metadata:cs:**OriginationCS**:2005:**5.7** (*Cinema*) | Film |
| urn:tva:metadata:cs:**MediaTypeCS**:2005:**7.1.3** (*Linear \| Audio and video*)<br>http://refdata.youview.com/mpeg7cs/YouView**FormatCS**/2010-05-20#**2.5.5** (*Music video*) | Music video |

### Parental guidance

Provision of parental guidance metadata on every Editorial Version record is mandatory.

Depending on the configured parental control settings, the presence of a parental guidance flag on an Editorial Version Record may restrict the consumption of the corresponding content item in the content guide.

- Present in Editorial Version Records only (*ProgramInformation* Fragment).
- Expressed using MPEG-7 <ParentalGuidance> element, extended by TV-Anytime schema.
- A single computer-readable term from one of DentonContentWarningCS, BBFCRatingCS or YouViewContentRatingCS carried in <ParentalRating> element.
- If, after editorial content compliance, it is decided that no other content rating is applicable, the term unrated from YouViewContentRatingCS is applied. External business rules may mandate the provision of Parental guidance metadata.
- A human-readable editorial guidance message may be provided in the <ExplanatoryText> child element. As with all textual elements, this editorial text can be supplied in several different languages by repeating the <ExplanatoryText> element with different values of the xml: lang attribute.

### Production language

- The main language of the content is indicated either in the Episode Group Record or in the Editorial Version Record (*GroupInformation* Fragment of type programConcept or *ProgramInformation* Fragment).
- Used to place non-English content into an appropriate category in the content guide.
- Encoded using the <Language> element.

```
<BasicDescription>
   ...
   <Language>cym</Language>
   ...
</BasicDescription>
```

A production language specified at Editorial Version level overrides a value specified at Episode level. Otherwise, the Editorial Version inherits the production language of its parent Episode.

### Credits

- Present in Brand Group, Series Group, Episode Group or Editorial Version Records (*GroupInformation* Fragments or *ProgramInformation* Fragment).
- Expressed using the <CreditsList> element.
- The receiving system is responsible for collating the lists from the different levels of the metadata chain.
- The index attribute on the <CreditsItem> element may be used to explicitly control the order of interleaving. The presentation order is from low indices to high indices.
- Optional use of <PresentationRole> to control the presentation of crew roles.

Credits follow a simple additive pattern of inheritance from Brand to Series to Episode to Editorial Version. An Editorial Version inherits credits from all its direct ancestors.

In the absence of explicit ordering (index attribute of <CreditsItem> element), the order of the Credits shall be the natural lexical order as presented in the Fragment with Brand-level Credits first, then Series, then Episode then Editorial Version. If there is a mixture of ordered and unordered Credits, all the ordered Credits shall appear first followed by all the unordered Credits presented in the natural lexical order specified immediately above.

This profile of TV-Anytime supports two different approaches for expressing credits:

1. Referenced credit using <PersonNameIDRef> (or <OrganizationNameIDRef>) element in <CreditsList> to reference a *PersonName* (or *OrganizationName*) Fragment separately published, see previous sections for more detail.
2. This approach is more appropriate if the Metadata Publishing Party manages credits internally as a normalised database.
3. Inlined credit using <PersonName> element in <CreditsList>.
4. This approach is more appropriate if the Metadata Publishing Party handles credits as a simple list alongside the content metadata.

The two approaches may be mixed and matched arbitrarily so that a particular content billing has some referenced credits and some inlined credits.

In both cases, the machine-readable role of each credited individual/organisation is provided in the role attribute of the enclosing <CreditsItem> element using a term from one of the approved Classification Schemes (MPEG-7 RoleCS, TV-Anytime TVARoleCS).

- Where the role is "ACTOR" the name of the character played **may** be supplied in the optional <Character> child element of <CreditsItem>.
- For all other role terms, the crew member's role displayed in the content guide may be specified explicitly using the <PresentationRole> element.
- Otherwise, the role displayed against the name in the content guide is decoded from the controlled term specified in the role attribute.

### Editorial images

- Realising the Image entity in the Logical Metadata Model.
- Editorial images may be present in Brand Group, Series Group, Episode Group or Editorial Version Records (*GroupInformation* Fragments or *ProgramInformation* Fragment).
- Using <RelatedMaterial> element of type ExtendedRelatedMaterialType.
- The href attribute of the <HowRelated> element carries the fixed value urn: tva:metadata:cs:HowRelatedCS:2010:19 to indicate that this is a promotional still image.
- The file format of the image may be supplied using the appropriate term from MPEG-7 FileFormatCS in the href attribute of the <Format> element.
- A textual description of the image content is supplied in the <PromotionalText> element to support accessibility aids such as screen readers.
- The source URL of the image is supplied in the MediaLocator/MediaUri element.
- The width and height of the image is indicated in the elements ContentProperties/ContentAttributes/Width and ContentProperties/ContentAttributes/Height.
- A controlled term from YouViewImageUsageCS is provided in the <IntendedUse> element indicating the role of the image in the content guide. The term role-primary shall be used to label standard images for display in the content guide. The term role-secondary shall be used to indicate non-standard images.
- A controlled term from YouViewImageUsageCS may be provided in an additional <IntendedUse> element to indicate the source type of the image.
- The controlled term do_not_resize from YouViewImagePropertyCS may be provided in a further <intendeduse> element to indicate that the image is not a high-resolution master image, i.e. it is not suitable for resizing to fit varying requirements in the user experience.

Omission of this term implies that the image may be resized by the recipient system.

- The controlled term has DOG from YouViewImagePropertyCS may be provided in a further <IntendedUse> element to indicate that the image carries a digital on-screen graphic (DOG). Omission of this term implies the contrary.

Editorial images follow an additive-override pattern of inheritance from Brand to Series to Episode to Editorial Version. They are additive in the sense that an Editorial Version inherits images from all its direct ancestors. Where there is a duplication of the same combination of intended use controlled terms, the image specified in the nearest ancestor overrides that of a more distant ancestor.

The protocol for updating an editorial image is to republish the affected metadata fragment with a different value of <MediaUri>.

### Editorially-driven cross-promotions

This mechanism is intended to enable a Metadata Originating Party to explicitly cross-promote content (e.g. "if you liked this piece of content you may also like these other content items").

- Realising the Internal Reference entity in the Logical Metadata Model.
- Cross-promotions may be present in Brand Group, Series Group, Episode Group or Editorial Version Records (*GroupInformation* Fragments or *ProgramInformation* Fragment).
- Using <RelatedMaterial> element of type ExtendedRelatedMaterialType.
- Any Brand Group, Series Group, Episode Group or Editorial Version may be recommended.
- CRID of the recommended Fragment (from its groupId or programId attribute) **shall** be supplied in MediaLocator/MediaUri> element.
- The href attribute of the <HowRelated> element carries the fixed value urn: tva:metadata:cs:HowRelatedCS:2010:7 (Group Recommendation) if the target CRID is a Brand, Series or Episode Group; the value urn:tva:metadata:cs:HowRelatedCS:2010:6 (Recommendation) is used if the target CRID is an Editorial Version.

Cross-promotions follow a simple additive pattern of inheritance from Brand to Series to Episode to Editorial Version. An Editorial Version inherits cross-promotions from all its direct ancestors.

Editorially-driven cross-promotions are not intended to be dynamic: the set of recommended CRIDs is fixed when the metadata Fragment is published. To change the set of cross-promotions, the metadata Fragment must be republished.

### Supporting material

• Realising the External Reference entity in the Logical Metadata Model.

• Supporting material may be present in Brand Group, Series Group, Episode Group or Editorial Version Records (*GroupInformation* Fragments or *ProgramInformation* Fragment).

• Using <RelatedMaterial> element of type ExtendedRelatedMaterialType.

• Target URL is supplied in the MediaLocator/MediaUri element.

• The href attribute of the <HowRelated> element shall carry one of the following values from urn:tva:metadata:cs:HowRelatedCS:2010:...

| Term identifier | Meaning | Protocol prefix of target URL |
|---|---|---|
| 10.1 | Programme e-mail address | mailto: |
| 14.1 | Support e-mail address | |
| 10.2 | Programme website | http:// |
| 14.2 | Support website | |
| 10.3 | Programme telephone number | tel: |
| 14.3 | Telephone helpline | |

### Production date

A production date may be provided for an Editorial Version (*ProgramInformation* Fragment) only. Although optional, this metadata field is essential for the chronological ordering of non-broadcast content (such as films and music videos) in the content guide.

- The original year of production is expressed as an ISO 8601 date and conveyed in the ProductionDate/TimePoint element.
- The year is specified; month and day number may optionally be provided additionally.
- A time point is not specified.

### Production country

The original country (or countries) of production may be specified for an Editorial Version (*ProgramInformation* Fragment) only..

- Each country is specified using a separate <ProductionLocation> element with a single ISO 3166 country code apiece.

### Content duration

The running time of the content is specified against Editorial Version Records only *(i.e. ProgramInformation* Fragment).

- The duration shall be conveyed in a <Duration> element.
- The duration indicates the running time of the underlying content item only, excluding interstitials, accurate to the nearest minute (or better).

### Indicative pricing

The indicative price of content may be expressed in Instance Description metadata (see description below).

### B2B: Instance Description metadata Fragments

These Fragments correspond to the Publication Records in the Logical Metadata Model.

### Schedule Fragment profile

This Fragment type does not correspond to any particular Record in the Logical Metadata Model. It describes a set of event slots in a linear channel schedule and therefore realises a set of Broadcast Publication Records. Each Broadcast Publication Record is encoded as a single <ScheduleEvent> element in the *Schedule* Fragment. The identifier for the purposes of Fragment manipulation is the value of the serviceIdRef plus the start and end date-time values.

- Contains a set of <ScheduleEvent> elements, each one corresponding to a Broadcast Publication record in the Logical Metadata Model.
- Mandatory pointer to linear Service Fragment using serviceIDRef attribute.
- A separate Schedule Fragment needs to be published for every regional variant of a linear channel with a different schedule.
- Temporal scope of the schedule in each Fragment is at the discretion of the Metadata Publisher. One programme day per Fragment is conventional. The time block is indicated using the start and end attributes on the <Schedule> element.
- A particular <ScheduleEvent> falls within the scope of a particular Schedule Fragment if its <PublishedStartTime> is earlier than the end date-time indicated by the enclosing Schedule Fragment.
- A *Schedule* Fragment may be updated at any time, but the time block indicated by the start and end attributes must remain invariant across its life-cycle since these attribute value are used to synthesise the proxy Fragment identifier.
- Business rules will determine whether it is acceptable for delivered schedules to be sparse (*i.e.* containing a non-contiguous set of <ScheduleEvent> elements.)

To summarise, the Metadata Publishing Party is given the freedom to define whatever schedule block size is convenient (one day, six hours, *etc.*) and the duration of one schedule block may be different from other schedule blocks. However, for the life-cycle of a particular schedule block, the start and end date-time must remain the same.

### Timing of publication

Schedule Fragments may be published at any time before, during (or even after!) the set of events contained in the indicated schedule. Typically, a full linear schedule needs to be delivered well in advance of the scheduled start time and is updated as and when required by changes in the planned schedule.

### Edge cases

There is an edge case where a particular linear slot is shifted along the linear timeline such that its start time moves from the scope of one schedule block to that of the next schedule block. In this case, both affected Schedule Fragments are republished. In so doing, the <ScheduleEvent> in question is implicitly deleted from one *Schedule* Fragment and added to a different Schedule Fragment.

Importantly, the *migration* of a <ScheduleEvent> out of a *Schedule* Fragment (with the intention of adding it subsequently to another schedule block) is indistinguishable from the *implicit deletion* of a linear slot by the republication of that Fragment with the unwanted <ScheduleEvent> deleted.

This implies the need for the metadata ingest system to keep track of which <ScheduleEvent>s currently exist in which Schedule Fragments so that it can correctly handle the implicit deletion and moving of individual linear slots. One way of achieving this would be to index the CRID and IMI values of the individual <ScheduleEvent>s present in each *Schedule* Fragment.

### <ScheduleEvent> element

- The programId CRID of the parent Editorial Version Record (*ProgramInformation* Fragment) is indicated using crid attribute of <Program> element.
- A Linear Event Locator is provided in the <ProgramURL> element.
- Every <ScheduleEvent> is assigned an Instance Metadata Identifier compliant with the profile discussed above and this is conveyed in the <InstanceMetadataId> child element.

TV-Anytime requires only that the value of the Instance Metadata Identifier is unique within the scope of the parent ProgramInformation Fragment. However, it is recommended that Metadata Publishing Parties assign globally unique values to simplify system debugging. This is relevant to the below description also.

- Title, synopsis and airing attributes are supplied in the <InstanceDescription> to support Use Cases such as historical schedule. Where relevant, the metadata provided corresponds exactly to the schedule sent to linear metadata collator systems (e.g. Freeview Central Collator, Freesat Central Collator).
- If this is the canonical scheduled linear outing of the content identified by the programId CRID, the controlled term broadcast-canonical from YouViewPublicationTypeCS may be applied in InstanceDescription/Genre. The type attribute is given the value "other".
  It is recommended that the Metadata Publishing Party does not label more than one <ScheduleEvent> with the same programId CRID as canonical.
  The purpose of this feature is to present a definitive date, time and channel of broadcast against on-demand items in the platform content guide.
  If no <ScheduleEvent> is marked as canonical, or if more than one is marked as canonical, the platform is at liberty to select one at its discretion.
- The scheduled start time of the linear slot is conveyed in the <PublishedStartTime> element and is formatted according to the time-date profile described above.
  This is the time advertised to end users in the linear billing and may be rounded (e.g. to the nearest five minutes) for optimal display in the content guide.
- The scheduled duration of the slot is conveyed in the <PublishedDuration> element and is formatted according to the time period profile described above.
  This is the duration advertised to end users in the linear billing and may be rounded (e.g. to the nearest five minutes) for optimal display in the content guide.
- The <Repeat> element may be present to indicate whether this is a repeat screening of the content. If absent, it is assumed not to be a repeat.
- The <Free> element is present to indicate whether or not the content in the linear slot may be consumed free of charge.

### BroadcastEvent Fragment profile

The purpose of the *BraodcastEvent* Fragment is to explicitly link Content Description metadata to a <ScheduleEvent> provided by a different Metadata Publishing Party. Support for this Fragment type is optional.

By allowing a Metadata Publishing Party to link its enhanced metadata to a schedule published by a third party, three Use Cases are supported:

1. Decorate an Electronic Programme Guide slot with enhanced metadata.
2. Decorate an Electronic Programme Guide slot with on-demand availability and allow the user to initiate content playback from historical/future EPG slots.
3. Capture a definitive broadcast date-time for an on-demand catalogue item. This may be displayed in the on-demand catalogue and/or used to sort "Catch-up" items by date.

If *BroadcastEvent* Fragments are not published for a given Linear Service, these Use Cases cannot be supported and the Electronic Programme Guide will instead present basic metadata.

The *BroadcastEvent* Fragment does not correspond to any particular Record type in the Logical Metadata Model. (Formally, it models the relationship between a set of On-demand Publication Records and a Broadcast Record.)

- Mandatory pointer to linear *Service* Fragment using the serviceIDRef attribute.
- The programId CRID of the parent Editorial Version Record (*ProgramInformation* Fragment) is conveyed in the crid attribute of the <Program> element.
- Every *BroadcastEvent* Fragment is assigned an Instance Metadata Identifier and this is conveyed in the <InstanceMetadataId> child element.
- The element InstanceDescription/Genre may be used to indicate that this Fragment points to the "canonical" schedule slot for the enhanced metadata. The controlled term broadcast-canonical from YouViewPublicationTypeCS is used for this purpose. The type attribute is given the value "other".
- No more than one *BroadcastEvent* Fragment with the same parent Editorial Version Record is labelled as "canonical" because of the ambiguity this creates.
- If the metadata recipient system finds more than one "canonical" *BroadcastEvent* Fragment for a given Editorial Version Record, it is at liberty to select one schedule slot over the others as "canonical" using whatever algorithm is deemed appropriate by the business.
- Similarly, if no single *BroadcastEvent* Fragment for a given Editorial Version Record is marked as "canonical" the metadata recipient system is permitted to make its own choice according to a business rule not specified here.
- No other elements may be present in Fragments of this type, with the exception of those specified in the subsections below.

Two alternative signalling methods are supported to enable the *BroadcastEvent* Fragment to identify its target schedule event. These are described in the following subsections.

It is recommended that a separate *BroadcastEvent* linkage Fragment be published for every repeat airing of an Editorial Version on every linear service, including all regional variants.

This ensures that every repeat on every channel is decorated.

In the case where linear identifiers identify the target schedule event, the metadata recipient system may be able to infer repeats automatically. This is described in more detail below.

### *Match on linear identifiers*

In this method, the target schedule event is identified by identifiers present in the master linear schedule.

- A Linear Event Locator is conveyed in the <ProgramURL> element.
- A Linear Programme CRID is provided where possible to disambiguate the Linear Event Locator.
  The value of a Linear Programme CRID is conveyed in the element InstanceDescription/OtherIdentifier. There may be zero or one of these elements per Fragment.
  The authority attribute has the value "pcrid.dmol.co.uk" for a Freeview Programme CRID or "pcrid. freesat. co. uk" for a Freesat Programme CRID. Supplying the Linear Programme CRID allows the metadata recipient system to identify repeat events of the same programme in the linear schedule.
  It is recognised that not all linear channels label their schedules with Linear Programme CRIDs.

### *Match on billed date-time*

In this method, the target event in the master schedule is identified by its start time and duration.

- The scheduled start time of the linear slot is conveyed in the <PublishedStartTime> element and is formatted according to the time-date profile described above.
- The scheduled duration of the slot is conveyed in the <PublishedDuration> element and is formatted according to the time period profile described above.

The metadata recipient system is at liberty to use "fuzzy logic" where there is not an exact match between the information conveyed in the BroadcastEvent Fragment and the start time and duration of an event in the master linear schedule.

*Timing of publication*

The *BroadcastEvent* Fragment may be published at any time before, during or after the time of the target schedule event. Referential integrity is achieved if the CRID of the referenced *ProgramInformation* Fragment has previously been accepted into the Metadata Description.

If the *BroadcastEvent* Fragment targets a schedule event that is currently unknown to the recipient metadata system, a business rule determines whether and for how long a match is sought.

*OnDemandProgram Fragment profile*

This Fragment type represents the On-demand Publication Record in the Logical Metadata Model. The identifier for the purposes of Fragment manipulation is the CRID of the referenced *ProgamInformation* Fragment concatenated with the Instance Metadata Identifier with an additional hash character (#) between the two identifiers.

- Mandatory pointer to one or more on-demand *ServiceInformation* Fragments using the serviceIDRef attribute.
- The programId CRID of parent Editorial Version Record (*ProgramInformation* Fragment) is indicated using crid attribute of <Program> element.
- Every *OnDemandProgram* Fragment is assigned an Instance Metadata Identifier compliant with the profile described above and this is conveyed in the <InstanceMetadataId> child element.
- Any discontinuous availability windows are modelled as multiple *OnDemandProgram* Fragments.

*Timing of publication*

In one example, *OnDemandProgram* Fragments can be published at any time before, during (or even after) the indicated availability window.

- In the case where a Metadata Publishing Party is confident of the window start and end point (for example, if the content rights have been purchased with fixed start and end points and the media content has already been distributed), publishing the Fragment in advance results in the corresponding content item appearing in the user-facing content guide at the start of the availability window.
- In cases where the availability window is driven by external real-time factors (e.g. "Catch-up" rights dependent on the end of linear broadcast), it is equally acceptable for the Metadata Publishing Party to publish an *OnDemandProgram* Fragment in real time. Ingest of the Fragment by the Metadata Aggregation Service is subject to prevailing processing latencies. This may result in the start of the availability window falling in the past by the time the Fragment is processed, but the content item will appear in the user-facing content guide as expected provided the end of the availability window has not passed.
- If the Metadata Publishing Party wishes to advertise forthcoming availability of content, it is permissible to publish an *OnDemandProgram* Fragment with start and end of availability both in the future. Depending on business rules, a corresponding content item may appear in the user-facing content guide, advertised as "coming soon". It may be possible for an end user to book a future acquisition of the on-demand Publication, but it is not possible to consume the content.
  If the "coming soon" feature is not supported then the content item will simply not appear in the content guide.
- Alternatively, a Metadata Publishing Party may pre-publish Content Description Metadata only and simply refrain from publishing any Instance Description metadata until later.
- To remove a content item from the user-facing content guide all on-demand Publication instance Fragments are explicitly deleted by the Metadata Publication Party using a mechanism specified for this purpose described above.

*Availability "black-out" periods*

Under certain circumstances, a Metadata Originator needs to specify a discontinuous on-demand availability window for an item of content, for example to represent a "black-out" period during which the content is hidden from the user-facing content guide. Since each *OnDemandProgram* Fragment can only model a single availability window, the recommended solution is for multiple Fragments to be published, each one representing a continuous availability window before or after a "black-out" period.

*Simple media locator*

A fully-resolved playback URL for the on-demand publication may be provided as the content of the element <ProgramURL>. This facility maybe preferably used by smaller content providers with no need for a separate media resolution service. In one example, this feature may not be used in conjunction with the signalling of Content Distribution Network availability specified below.

*Content Distribution Network availability*

A Metadata Publishing Party **may** indicate the set of Content Distribution Networks from which the media corresponding to this On-demand Publication is available. The set of Content Distribution Networks is used to indicate to the end user whether the media corresponding to the On-demand Publication can be played back immediately with assured quality.

- The set of available Content Distribution Networks is not inherited from the On-demand Portal Service indicated by the serviceIDRef attribute of the *OnDemandProgram* Fragment.
- Availability of media from a Content Distribution Network is indicated in the *OnDemandProgram* Fragment by using controlled terms from YouViewContentDistributionNetworkCS in the <Genre> child element of <InstanceDescription>. The type attribute are "other".
- Where a default media player is to be used for playback, the Metadata Publishing Party additionally publishes at least one corresponding Media locator for each Content Distribution Network, as specified below.
- Where a custom media player is to be used for playback, the Metadata Publishing Party may publish corresponding media locators for each Content Distribution Network, or it may alternatively publish Private On-demand Publication Identifiers, as specified below.
- Where Content Distribution Network availability is signalled in an On-demand Publication Record, the use of the Simple media locator specified above is prohibited.

*Publication duration*

In one example, the running time of the overall on-demand presentation is signalled in the <PublishedDuration> element.

- The calculation of the duration (where possible) includes any interstitials such as pre-roll promotional trailers and commercial breaks.
- The value is accurate to the nearest minute (or better).

*Advertised availability window*

Each *OnDemandProgram* Fragment may specify an availability window using the <StartOfAvailability> and <EndOfAvailability> elements. Both of these elements are optional in the schema, but business rules enforce the presence of at least one of them. The table below summarises the semantics of the different permutations:

| <StartOfAvailabili ty> | <EndOfAvailabili ty> | Semantics |
|---|---|---|
| *Element absent* | *Element absent* | Not permitted |
| *Element absent* | Past date-time | Not permitted |
| *Element absent* | Future date-time | Available until end of window |
| Past date-time | *Element absent* | Available indefinitely |

(continued)

| <StartOfAvailabili ty> | <EndOfAvailabili ty> | Semantics |
|---|---|---|
| Past date-time | Past date-time | Temporarily revoked |
| Past date-time | Future date-time | Available during window |
| Future date-time | *Element absent* | Future indefinite availability |
| Future date-time | Past date-time | Not permitted |
| Future date-time | Future date-time | Future availability |

The signalled availability window is only a general indication of the intended availability period. In addition, an explicit indication of actual media availability is separately specified below.

The separation of these two concepts allows the Metadata Publishing Party to advertise future intended availability prior to actual media availability.

*Pay/Free flag*

- The <Free> element is used to indicate whether (or not) an On-demand Publication instance is offered free-of-charge to all end users.
- If set to false the end user may be charged for consuming the content.
- This element is mandatory in this profile of TV-Anytime.

See also the sections below which describe how an indicative price can be signalled.

*<InstanceDescription> element*

The <InstanceDescription> element is common to the two Instance Description metadata Fragment types. (Where BroadcastEvent Fragments are supplied, the Instance Description is not required, as in that case the schedule data supplied separately is the definitive source for billings metadata.) However, different child elements are allowed in the three cases. The table below summarises the position (✔: permitted, ×: not permitted):

| TV-Anytime Fragment<br>Element | Broadcast Publication<br>*Schedule* <ScheduleEven t> | Schedule Event Linkage<br>*BroadcastEvent* | On-Demand Publication<br>*OnDemandProg ram* |
|---|---|---|---|
| <Title> | ✔ | × | × |
| <Synopsis> | ✔ | × | × |
| <Genre> | ✔ | × | ✔ |
| <PurchaseList> | × | × | ✔ |
| <Language> | × | × | × |
| <CaptionLanguage> | ✔ | ✔ | ✔ |
| <SignLanguage> | ✔ | ✔ | ✔ |
| <AVAttributes> | ✔ | × | ✔ |
| <OtherIdentifier> | × | ✔ | ✔ |
| <RelatedMaterial> | ✔ | × | ✔ |

*Instance title*

A particular Instance Description Fragment may provide an event-specific title using the <Title> element. This is particularly relevant for schedule metadata where the linear broadcast title may differ from the title in the Content Description metadata.

The <Title> element is not provided in the Instance Description of an *OnDemandProgram* Fragment.

### Instance synopsis

A particular Instance Description Fragment may provide a single event-specific synopsis using the <Synopsis> element. This is particularly relevant for schedule metadata where the linear broadcast synopsis may differ from the synopsis in the Content Description metadata.

A synopsis provided in this context indicates length="medium" only. No other synopsis lengths are permitted.

The <Synopsis> element is not provided in the Instance Description of an *OnDemandProgram* Fragment.

### Linear event classifiers

Linear broadcast event classifiers may be provided for Broadcast Publication Records (<ScheduleEvent> elements of a *Schedule* Fragment) only using the <Genre> element. The type attribute carries the value "secondary".

- Freeview event genre (exactly one) encoded using a term from DTGContentCS.
- Freesat event genres (one or two) encoded using a term from FreesatContentCS.

### On-demand Content Distribution Network availability

Using <Genre> element in an On-demand Publication instance. See above for details.

### Indication of actual media availability

In one example, by default an *OnDemandProgram* Fragment is assumed to be a placeholder On-demand Publication advertising future on-demand availability, even if the current date-time lies within the specified availability window. A separate indicator is specified here to indicate that the associated media is actually available for consumption/acquisition.

The setting of this indicator enables additional playback/acquisition user journeys in the user-facing content guide.

- Actual media availability is indicated using a single <Genre> element. The type attribute carries the value "other". The content of the element shall be the fully-qualified term identifier media_available from the controlled vocabulary YouViewMediaAvailabilityCS.
- The absence of this term is interpreted as meaning that the media is not yet available.

### Indicative pricing

The indicative cost of a publication instance may optionally be encoded using the PurchaseList/PurchaseItem/Price element.

• The value of the currency attribute on the <Price> element is one of those listed in the following table:

| Currency | Value of currency attribute |
| --- | --- |
| Pounds Sterling | GBP |

• A number of different <PurchaseItem> elements may be supplied in the same Publication Record, each with a separate pricing window indicated by the date-time values of the start and end attributes.

• Where a number of pricing windows are supplied they are contiguous and nonoverlapping.

Profiling indicative price in the Instance Description metadata allows for differential pricing of different publications (*e.g.* high definition and standard definition publications). This is intended purely as an indication of the maximum amount that an end user may be charged in the absence of individual per-customer pricing information. If, for example, this piece of content is part of a particular end user's on-demand package subscription, content signalled with an indicative price may, in fact, be available free of charge to that end user until the subscription expires.

*Subtitles*

The availability of subtitles in a particular Publication is indicated via the <CaptionLanguage> element, along with the language of the subtitles.

```
<InstanceDescription>
   ...
   <CaptionLanguage closed="true">eng</CaptionLanguage>
   ...
</InstanceDescription>
```

*Sign language*

In one example, the availability of sign language in a particular Publication is indicated using the <signLanguage> element, along with the language of the signing.

```
<InstanceDescription>
   ...
   <SignLanguage>sgn-GB</SignLanguage>
   ...
</InstanceDescription>
```

*<AVAttributes> element*

The audio-visual attributes of the Publication (sometimes referred to as technical metadata) are signalled in the <AVAttributes> element. The attributes permitted by this profile are summarised in the following table:

| Element | Sub-element | Broadcast Publication Record | On-Demand Publication Record |
|---|---|---|---|
| <AudioAttribu tes> | <MixType> | mandatory | mandatory |
| | <AudioLangua ge> | optional | optional |
| <VideoAttribu tes> | <HorizontalS ize> | optional | mandatory |
| | <VerticalSiz e> | optional | mandatory |
| | <AspectRatio > | mandatory | mandatory |
| | <Color> | mandatory | mandatory |
| <BitRate> | | optional | mandatory |

- The <AVAttributes> element is present in all <ScheduleEvent> elements.
- The <AVAttributes> element is omitted altogether from *BroadcastEvent* Fragments.
- The <AVAttributes> element is present in all *OnDemandProgram* Fragments where the actual media availability indicator is present. The element may be omitted entirely if this indicator is absent.
- For Publications representing media with no audio (such as a silent film), the <AudioAttributes> element is omitted altogether.
- For Publications representing media with no video (such as linear radio or audio-on-demand), the <videoAttributes> element is omitted altogether.

*Audio mix type*

The type of audio mix available in an audio-visual Publication is indicated by the <MixType> sub-element of <AudioAttributes>. The href attribute carries a term value from AudioPresentationCS.
For non-audio-visual Publications the <MixType> sub-element is omitted altogether.

*Audio Description*

The availability of Audio Description in a particular Publication is indicated using the <AudioLanguage> sub-element of <AudioAttributes>. The content of this element is an ISO 639 language code from a specified set.

- The supplemental flag shall be set to "true".
- The purpose attribute shall have the value

  urn: mpeg:mpeg7:cs:AudioPurposeCS:2007:1 (Audio Description for the visually impaired).

*Video resolution*

- The horizontal resolution of the encoded video elementary stream is indicated in the <HorizontalSize> sub-element of <VideoAttributes>.
- The vertical resolution of the encoded video elementary stream is indicated in the <VerticalSize> sub-element of <VideoAttributes>.

In cases where the Publication represents a media set with different encoded resolutions the *maximum* resolution available in the media set is signalled in both elements.

*Picture aspect ratio*

The aspect ratio of the video raster in the encoded video elementary stream is indicated in the content of the <AspectRatio> element.
Only the following values are used in this profile:

| Aspect ratio value |
| --- |
| 4:3 |
| 16:9 |

*Colour flag*

The type attribute of the <Color> element is used to indicate whether the encoded video elementary stream contains colour or black and white material.

*Bit rate*

The content of the <BitRate> element indicates the target bit rate required to consume the On-demand Publication with a minimum acceptable quality (as defined by external business rules). Where the On-demand Publication describes a set of encoded media files intended for the Adaptive Streaming service, the acceptable quality corresponds to the bit rate of one of these streams.
The optional minimum and maximum attributes respectively indicate the bit rates of the lowest and highest bit rate streams in an Adaptive Streaming media set.
For single constant bit rate streams, only the target bit rate is supplied.

*Media locators*

The location(s) of media on one or more Content Distribution Network may be indicated against an On-demand Publication Record.

- The URL of the media is specified in the content of an <OtherIdentifier> element.
- The only mandatory attribute is authority which shall convey an unqualified term identifier from YouViewContent-DistributionNetworkCS corresponding to one of the fully-qualified Content Distribution Network terms signalled as described above.

- The same authority value may be used more than once in a particular On-demand Publication Record if the media is available from more than one location on a particular Content Distribution Network.

***Private On-demand Publication identifiers***

This profile makes provision for Content Providers to supply private identifiers against On-demand Publication Records. These are intended to be passed through metadata systems unaltered to the content guide.

- One or more Content Provider private identifiers may optionally be supplied using the <OtherIdentifier> element.
- The only mandatory attribute is authority which shall be in the form of an Internet-style domain name that uniquely identifies the type of identifier.
- Each authority value is used only once in any given metadata Brand-Series-Episode-Editorial Version-Publication chain.

***Linear broadcast identifiers***

In order to support the Use Case for looking up availability of on-demand content from a linear content guide, Metadata Publishing Parties decorate each <ScheduleEvent> with a linear broadcast Programme CRID and one or more DVB Event Locators.

- Supplied using the <otherIdentifier> element.
- The only mandatory attribute is authority which shall be in the form of an Internet-style domain name that uniquely identifies the type of identifier.
- The authority values "event.dmol.co.uk" and "event.freesat.co.uk" are used to encode broadcast Event Locator values from (respectively) Freeview and Freesat. These values of authority are reserved for this purpose and do not appear elsewhere in any metadata chain.
- The authority values "pcrid.dmol.co.uk" and "pcrid.freesat.co.uk" are used to encode broadcast Programme CRID values from (respectively) Freeview and Freesat. These values of authority are reserved for this purpose and do not appear elsewhere in any metadata chain.

For example:

```
<InstanceDescription>
   ...
   <OtherIdentifier authority="pcrid.dmol.co.uk">crid://broadcast
er.co.uk/FXM9G</OtherIdentifier>
   <OtherIdentifier authority="event.dmol.co.uk">dvb://233a..1044
;24b2</OtherIdentifier>
   <OtherIdentifier authority="event.freesat.co.uk">dvb://2..23fb
;24b2</OtherIdentifier>
   ...
</InstanceDescription>
```

Receivers with access to linear broadcast metadata (e.g. DVB Event Information Table) are able to present the broadcast Programme CRID and/or DVB Event Locator to the Metadata Aggregation Service. By matching these against values stored in a <ScheduleEvent>, the Metadata Aggregation Service can locate the *ProgramInformation* of which it is an instance and then establish whether there are any *OnDemandProgram* instances of the same Editorial Version.

***Examples of transactions: Full-stack Content Transaction***

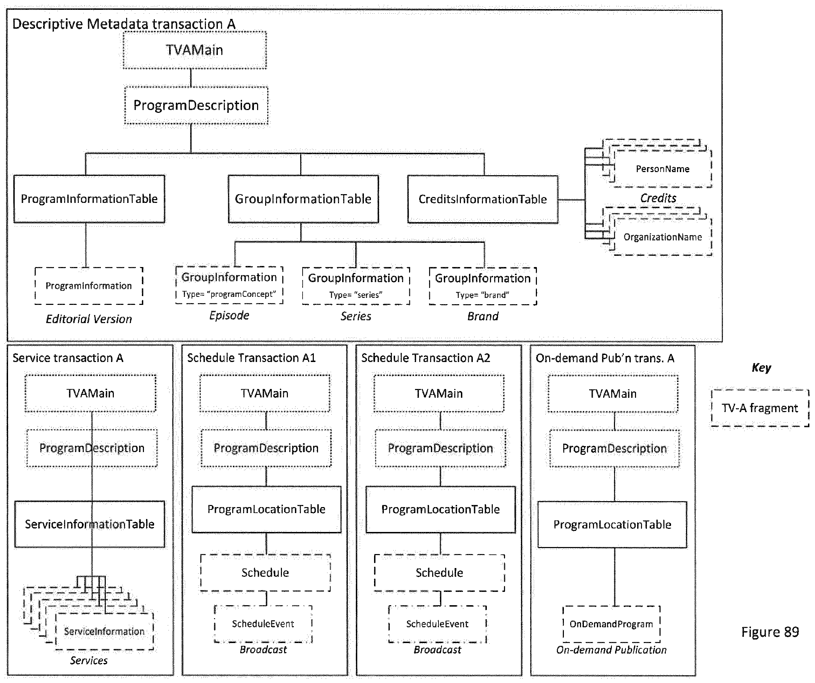

Figure 89 shows the "full-stack" pattern of content transaction, where all objects from Editorial Version up to Brand (if present) are contained in the same single transaction body. The transactions for Service and the two publication types (Broadcast and On-demand Publication) remain separate.

***Examples of transactions: Atomised Content Transactions***

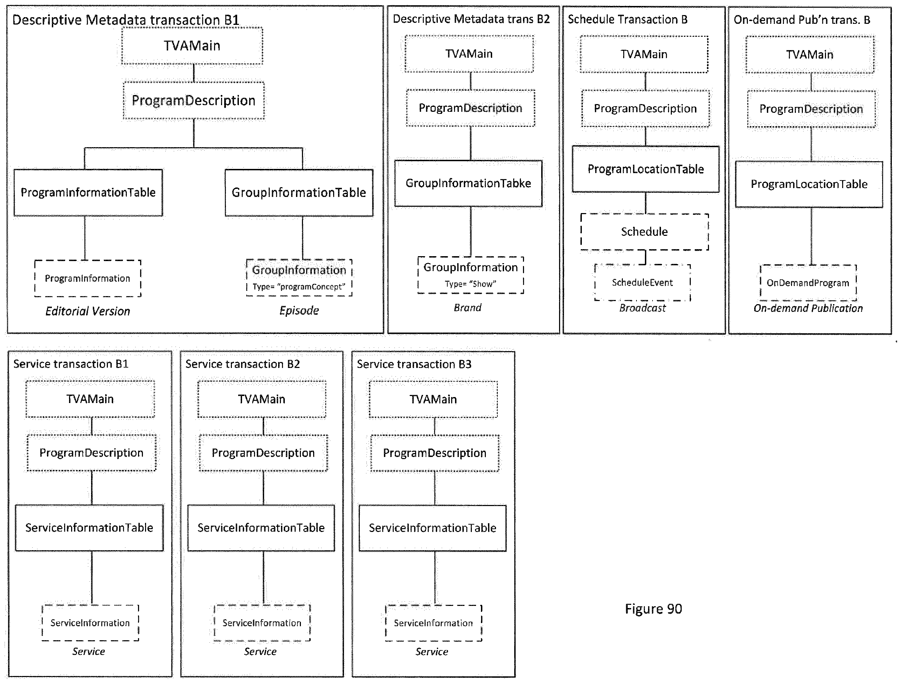

Figure 90 shows the "atomic" pattern of content transactions, where TVA fragments representing content objects from Editorial Version up to Brand are each contained in individual transactions (except that the Editorial Version and Episode are together). The transactions for Service and the two publication types (Broadcast and On-demand Publication) remain separate.

### Examples of transactions: Music video

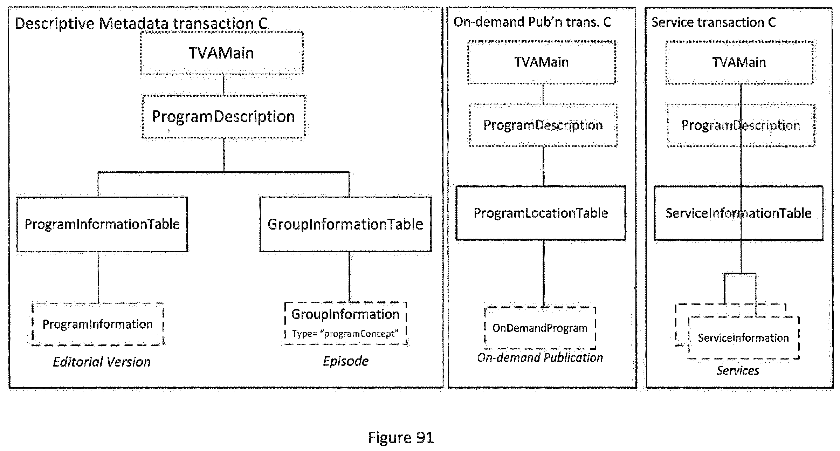

Figure 91 shows a simple modelling of a single music video, one on-demand publication of it and the associated on-demand service.

### Examples of transactions: Adult film

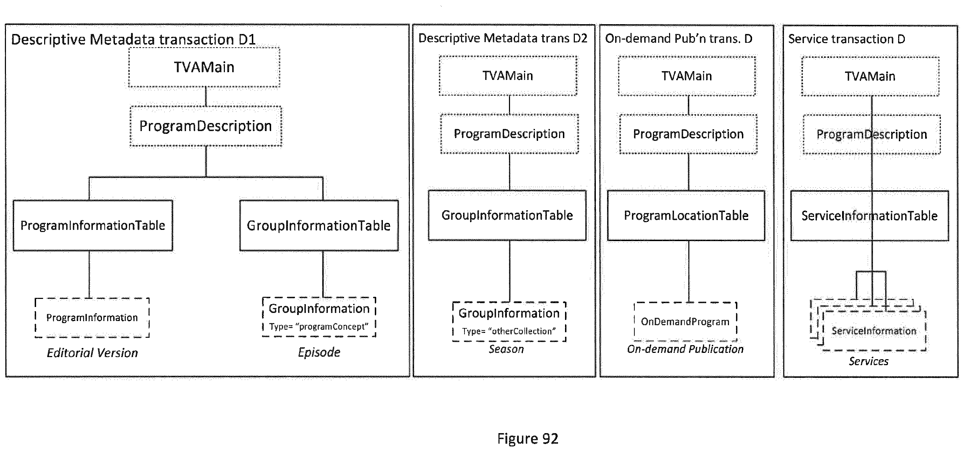

Figure 92 models a cinema film/movie, showing also how adult content is labelled, and how content can be grouped into editorial collections such as thematic seasons.

### Examples of transactions: Minimal Metadata

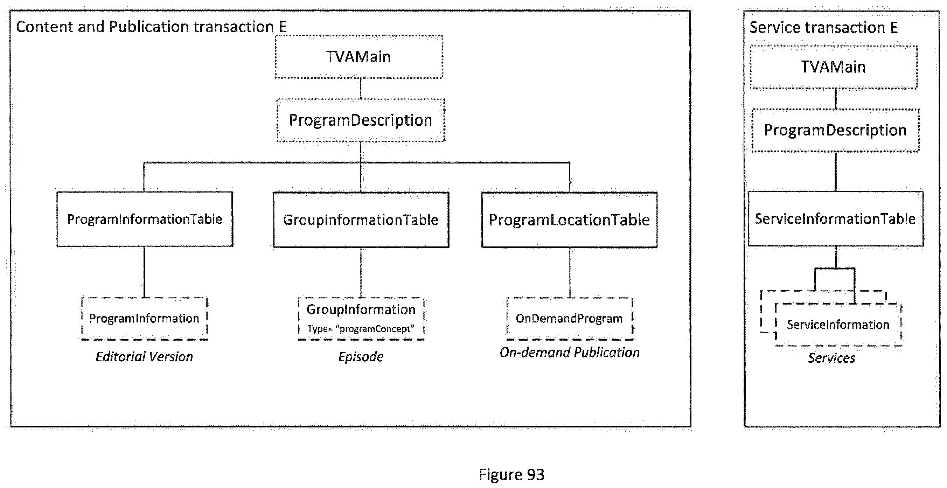

Figure 93 illustrates the minimum set of metadata that needs to be contributed. It represents the metadata that might be contributed by (or on behalf of) a small content provider wishing to make some standalone content items available with no series or brand groupings.

This example includes only two Transaction files:

1. Service Transaction. Terse definition of a Content-owning Service and an On-demand Portal Service. The latter points at a default media player Application. This Transaction is submitted once to establish the set of reference Services.

2. Combined Content and Publication Transaction. Minimal interpretation of the TV-Anytime profile, including only the metadata absolutely essential for a workable user experience. One such Transaction is submitted per content item.

It will be understood that the present invention has been described above purely by way of example, and modifications of detail can be made within the scope of the invention.

Each feature disclosed in the description, and (where appropriate) the claims and drawings may be provided independently or in any appropriate combination.

Reference numerals and/or titles appearing in the claims are by way of illustration only and shall have no limiting effect on the scope of the claims.

### Claims

1. A system for providing a plurality of users with access to a plurality of media content from a plurality of media content sources, comprising:

   means for determining a data communications network that a remote client device is connected to, the remote client device being adapted to provide one of the plurality of users with access to the media content; and
   means for providing configuration settings for the remote client device in dependence on said determined network.

2. A system according to Claim 68, wherein said determining means utilises the IP address of the remote client.

3. A system according to Claim 68 or 69, further comprising storage means adapted to store a data communications network look-up table, the look-up table including data relating said IP address to the data communications network.

4. A system according to Claim 68, 69 or 70, said means for providing configuration settings comprising storage means, adapted to store a configuration settings look-up table, the look-up table including data relating said data communications network to the configuration settings.

5. A system according to any of claims 68 to 71, wherein said configuration settings are specific to one of: all remote client devices, a plurality of remote client devices or a specific remote client device.

**6.** A system according to any of claims 68 to 71, wherein said configuration settings include at least one of: a remote client device user interface; a remote client device media content player; user identifiers; media content identifiers; and media content locations.

**7.** A system according to Claim 73, wherein at least one of the user interface, media content and media player is specific to the determined data communications network.

**8.** A system according to any of claims 68 to 74, wherein said configuration settings are provided to the remote client by directing the remote client, utilising a Uniform Resource Indicator, to a storage means.

**9.** A system according to Claim 75, wherein the Uniform Resource Indicator, comprises a plurality of components, including at least one address component and at least one remote client device identification component.

**10.** A system according to Claim 75 or 76, wherein the Uniform Resource Indicator, comprises at least one of: a base Uniform Resource Indicator; a remote client device manufacturer identifier; a remote client device identifier; a firmware identifier; a software identifier; and a configuration settings identifier.

**11.** A system according to Claim 75, 76 or 77, wherein said configuration settings are provided in XML format.

**12.** A system according to any of claims 68 to 78, further comprising means for receiving data from the remote client device indicating the current configuration settings.

**13.** A system according to Claim 79, wherein said current configuration settings data indicates whether updated configuration settings are required.

**14.** A system according to any of claims 68 to 80, further comprising means for determining whether updated configuration settings are required.

**15.** A system according to Claim 81, wherein said update determining means operates at predetermined intervals.

Figure 1

Figure 2

EP 3 313 080 A1

Figure 3

Figure 4

Figure 5

Figure 6

Figure 7

Figure 8

ISP data in need of update — Start

Client device sends request for settings — S1

IDS looks up device's IP address and maps IP address to ASN — S2

Request is redirected to ICS — S3

ICS determines ISP specific settings file — S4

Configuration settings downloaded and implemented — S5

Figure 9

8000

Device IP address

3000

Content data/
metadata

8002

Device location
data

3020

128

Data
collector

3022

3024

Data
comparer

Memory

3026

Processor

Output

3028

8018

Content data added to UI in dependence
on device location

Figure 10

Figure 11

Figure 12

Figure 13

**156**

**158**

**160**

**164**

**162**

Fat CSI originator

| *ServiceInformation* Fragment |
|---|
| - serviceId=S1 |
| - Service Locator=dvb://o..s |
| - Name= "BBC One Midlands" |
| - ... |

equivalent

Content Partner originator

| *ServiceInformation* Fragment |
|---|
| - serviceId=S2 |
| - Service Locator=dvb://o..s |
| - Name= "BBC One Midlands" |
| - ... |

| *GroupInformation* Fragment |
|---|
| - groupId = CRIDe |
| - Title |
| - Synopsis |
| - ... |

Episode Record

serviceIdRef=S1

*Schedule* Fragment

| *ScheduleEvent* Element |
|---|
| - Linear Event Locator |
| - (Linear Programme CRD) |
| - Short title |
| - Medium synopsis |
| - Start date-time |
| - Duration |

| *ScheduleEvent* Element |
|---|
| + Linear Event Locator |
| + (Linear Programme CRD) |
| - Short title |
| - Medium synopsis |
| * Start date-time |
| * Duration |

| *ScheduleEvent* Element |
|---|
| - Linear Event Locator |
| - (Linear Programme CRD) |
| - Short title |
| - Medium synopsis |
| - Start date-time |
| - Duration |

serviceIdRef=S2

| *ProgramInformation* Fragment |
|---|
| - programId = CRIDv |
| - ... |

Editorial Version Record

CRIDv

equivalent

| *BroadcastEvent* Element |
|---|
| + Linear Event Locator |
| + (Linear Programme CRD) |
| * Start date-time |
| * Duration    (Canonical) |

CRIDv

| *OnDemandProgram* Fragment |
|---|
| - Start of availability |
| - End of availability |
| - Duration |

On-demand Publication Record

**166**

**168**

**154**

Figure 14

**CCO originator**
*(manual reference data)*

*ServiceInformation* Fragment

- serviceId=S1
- Service Locator=dvb://o..s
- Name= "BBC One Midlands"
- ...

serviceIdRef=S1

**Fat CSI originator**

**Schedule** Fragment

CRIDp1

*ProgramInformation* Fragment

- programId = CRIDp1
- Short title
- Medium synopsis
- (Linear Programme CRID)

*ScheduleEvent* element

- Linear Event Locator
- Start date-time
- Duration

CRIDp2

*ProgramInformation* Fragment

- programId = CRIDp2
- Short title
- Medium synopsis
- (Linear Programme CRID)

*ScheduleEvent* element

- Linear Event Locator
- Start date-time
- Duration

CRIDp3

*ProgramInformation* Fragment

- programId = CRIDp3
- Short title
- Medium synopsis
- (Linear Programme CRID)

*ScheduleEvent* element

- Linear Event Locator
- Start date-time
- Duration

Figure 15

Figure 16

Figure 17

Figure 18

102

Now

Backward

250

Forward

252

Figure 19

254

Miniguide with 'More Like This'

256

Channels column highlighted

258

Programmes column highlighted

260

Figure 20

262

264

Single carousel

Rollup

Double carousel

Action Panel

266

268

Figure 21

270

Backwards EPG
(e.g. Catch up)

OD Placeholder
Channels

Recently Watched /
Purchased OD

Search

On Demand Player

Players

ISP Area

Browse OD

Highlights

More Like This/
More Episondes

Red Button

Figure 22

(A) Legal and Regulatory

(B) TV Quality Principles

(C) Security, reliability and stability

(D) Governance

## Player

(E) Compatibility

(F) Usage Data

(G) Adult Authentication

(H) Parental Contols

(I) Pricing, Payments and Purchasing

(J) Accessibility Features

(K) Error Messaging

(L) RCU Button Behaviours

### Playback

(M) Pre-Playback ⟩ (N) Playback ⟩ (O) Interrupted Exit ⟩ (P) End of Play ⟩

Interstitials

(N1) Playback Controls

Exit Messages

End of Play Screen

(N2) Feedback Messages

(N3) Playback Bar

(N4) Info Panel

Figure 23

290      292      294      296      298

| Entry Point | Pre-Playback Behaviour | Playback | Interrupted Exit | End of Play |

Figure 24

**Protected Buttons**      **Other Buttons**      **Non Button**

Power Button      Close Button      Error message action

300 — Canvas Button      Back Button      302      304

Guide Button      ISP Button

Figure 25

*Shows content above on the full screen*      ¦*Off initial screen*

| Search | My View | Guide | On Demand | ISP | Settings | Help |

306      308      310      312

Figure 26

*Shows a list of Players' (i.e. portals such as BBC iPlayer, ITV player)*

| Music Videos | Film | Players | TV Shows | Radio |
|---|---|---|---|---|

314          316                              318

Figure 27

*Shows View of that Music Video Content* ¦Off initial screen

| All Videos | Latest Videos | Most Popular | Charts & Pop | Classical | Dance, RnB, Urban | Easy Listening | Folk & Country | Golden Oldies | Indie | Jazz & Soul | Karaoke | Reggae & World | Rock & Metal |
|---|---|---|---|---|---|---|---|---|---|---|---|---|---|

Figure 28

320

*Shows View of that Film OD Content* ¦Off initial screen

| Trailers | Latest Releases | Most Popular | Action | Comedy | Drama | Factual | Family | Horror | Indie | Romance | Sci-Fi | Sport | Thriller | War | World | Adult | AD |
|---|---|---|---|---|---|---|---|---|---|---|---|---|---|---|---|---|---|

Figure 29

322

324

Figure 30

Figure 31

Figure 32

340

Figure 33

*Shows View of that Content on
the underlying screen*        Off initial screen

| Sitcom & Sketch | All Comedy | Most Popular | Animated | Romantic Comedy | Stand-Up | Teen |

Figure 34

*Shows View of that Content on
the underlying screen*        Off initial screen

| All Drama & Soaps | Soaps | Most Popular | Crime | Historical & Period | Medical | Romance | Sci-Fi | Teen |

Figure 35

*Shows View of that Content on
the underlying screen*        Off initial screen

| Talent & Variety | All Entertain ment | Most Popular | Celebrity & Reality | Chat Shows | Games & Quizzes |

Figure 36

*Shows View of that Content on
the underlying screen*        Off initial screen

| Travel | All Factual | Most Popular | Arts | Current Affairs & Politics | History & Biography | Learning | Nature & Environ ment | People & Society | Religion & Ethics | Science & Tech |

Figure 37

220

Shows View of that Content on the underlying screen | Off initial screen

| Home & Garden | All Lifestyle | Most Popular | Business, Work, Money | Family & Relationships | Fashion & Shopping | Food & Drink | Gadgets & Motors | Health & Beauty | Holidays |

Figure 38

Shows View of that Content on the underlying screen

| Before Yesterday | Yesterday | Today | All News & Weather |

Figure 39

Shows View of that Content on the underlying screen | Off initial screen

| Olympics | All Sport | Most Popular | Cricket | Football | Golf | Horse Racing | Motor Sports | News & Round Ups | Rugby League | Rugby Union | Tennis | Winter Sports | Extreme Sports |

Figure 40

Shows View of that Content | Off initial screen

| Children's | Comedy | Most Popular | Drama & Soaps | Entertainment | Factual | Lifestyle | Music | News & Weather | Regional | Sport |

Figure 41

*Shows View of that Content*    Off initial screen

| Children's | Comedy | Most Popular | Drama & Soaps | Entertain ment | Factual | Lifestyle | Music | News & Weather | Regional | Sport |

Figure 42

*Shows View of that Content or Radio Highlights*

| Sport | Spoken Word | Most Popular | Music |

Figure 43

360

*Shows View of that Content or Music Highlights*    Off initial screen

| Rock & Metal | All Music | Most Popular | Charts & Pop | Classical | Dance, RnB, Urban | Easy Listening | Folk & Country | Golden Oldies | Indie | Jazz & Soul | Reggae & World |

Figure 44

368

*Shows View of that Content on the underlying screen*    Off initial screen

| News & Weather | All Talk Radio | Most Popular | Comedy | Drama & Soaps | Entertain ment | Factual | Kids | Lifestyle | Religion & Ethics | Northern Ireland | Scotland | Wales |

Figure 45

**Shows View of that Content on the underlying screen**

Off initial screen

| Olympics | All Sport | Most Popular | Cricket | Football | Horse Racing | Motorsp ort | News & Round Ups | Rugby | Tennis |

Figure 46

**380**

**Key**

◼ Optional Step

**382**

▣ Either / Or Step

**384**

☐ Necessary Step

①
Accessibility Pre-Filters

②
Enter Text in Search Field

③a
Select an Auto-Suggestion and Search

③b
Free Text Search

④
Device Returns Ordered Results

⑤
Browse Search Results

⑥
Amend Search Filters

⑦
Action a Search Result

Figure 47

Figure 48

Figure 49

398          400                    402

| Platform Configuration | Platform Applications |   | Content Application | Content Application |

Developer APIs                                    406

396

Application Players
(e.g. Flash, W3C technologies)          e.g. MHEG

404                                              394

System APIs and Message Bus

| System Services (e.g. Media Playback | System Services (e.g. DVR) | System Services (e.g. Metadata) |

392

Linux kernel & drivers

390

Figure 50

| Core device software | >—1:n— | Platform software | >—1:n— | Device configuration |

Figure 51

Application Player Extensions

API binding support library

406

Developer APIs

Developer API implementation

System APIs

System API bus proxy

D-Bus binding support library

404

Message Bus

System API bus adaptor

D-Bus binding support library

System APIs

System Service Implementation

Figure 52

Figure 53

Figure 54

Figure 55

438    440    442

**Control Panel**

**Generic Software Image**

Platform Settings Descriptor

Platform Settings Generic Controls

Platform Settings Custom Controls

**Manufacturer Software Image**

Manufacturer Settings Descriptor

Manufacturer Settings Custom Controls

Aggregate Settings Descriptor

Control Panel Aggregated Settings View

Developer APIs    406

Manufacturer Provided Component

Platform Provided Component

Figure 56

Figure 57

List view

Subtitles

Change PIN

Figure 58

3500

3502

3504

Product
Definition

**+**

Purchase
Proposition

**=**

Offer

Offer

Entitlement

Entitlement

Entitlement

Title

Title

Title

3504

3506

3508

Figure 59

Figure 60

128-1

Figure 61

Figure 62

FIG. 63

**logotype**

TV Highlights (24)

16:9

Title

Title | Title

Title
**Series 1**
Episode 3

16:9

16:9 | 16:9

Logo | £2.99

16:9 | 16:9

A small river named Duden flows by their place and supplies it with the necessary regellaila. It is a paradisematic country, in which roasted parts of sentences fly into your mouth.

**Press [Back] for the menu**

TV Highlights

Figure 64

FIG. 65

*FIG. 66*

**logotype**

**TV Highlights (24)**

16:9

Title

Title                Title

Title
Series 1
Episode 3

16:9                16:9

16:9

Logo                £2.99

Title                Title

16:9                16:9

A small river named Duden flows by their place and
supplies it with the necessary regalialia. It is a
paradisematic country, in which roasted parts of
sentences fly into your mouth.

**Press [Back] for the menu**

TV Highlights

Figure 67

*FIG. 68*

loop:Package[]

getPackageType()

alt: package_type=transactional II ad-funded

getPrice()

getPricingUHL()

alt: pricingUrl I=null

getPrice(user, package)

cacheQuote
(user, package, quote)

Transactional & Ad-funded models are handled the same way, in this loop...

The 'Get Offers' loop

render()

Presentation Rules:

title.displayPlayButton=false;
title.setOffers(Offer[])

viewContent(user, package)

hasEntitlement(user, package)

If there is more than one transactional package:
only present the lowest priced package
if there is more than one ad-funded package:
only present the lowest priced package
OR
if there is a dynamic price that is lower than the 'static price' for a package then present as a discount? (e.g. with strikethrough on the static price)

*FIG. 68* Cont'd

# logotype

## TV Highlights (24)

16:9

Title

Title

**Title**

Series 1
Episode 3

16:9

Logo

£2.99 or
£0.99 with Ads

Title

Title

16:9

16:9

16:9

16:9

A small river named Duden flows by their place and
supplies it with the necessary regelialia. It is a
paradisematic country, in which roasted parts of
sentences fly into your mouth.

**Press [Back] for the menu**

TV Highlights

Figure 69

FIG. 70

Figure 71

FIG. 72

Figure 73

FIG. 74

**logotype**

*TV Highlights (24)*

16:9

Title

Series 1
Episode 3

16:9

Title

16:9

Title

16:9

Title

16:9

Title

16:9

Logo #1

Logo

Logo #2

A small river named Duden flows by their place and
supplies it with the necessary regelialia. It is a
paradisematic country, in which roasted parts of
sentences fly into your mouth.

**Press [Back] for the menu**

TV Highlights

Figure 75

**logotype**

**TV Highlights (24)**

16:9

Title

Series 1
Episode 3

£2.99 or
£0.99 with Ads

16:9

Title

16:9

Title

16:9

Title

16:9

Title

16:9

Logo #1

Logo

Logo #2

A small river named Duden flows by their place and
supplies it with the necessary regelialia. It is a
paradisematic country, in which roasted parts of
sentences fly into your mouth.

**Press [Back] for the menu**

TV Highlights

Figure 76

*FIG. 77*

EP 3 313 080 A1

alt: package_type=transactional II ad-funded

getPackageIconUrl()

getPackageSubscriptionUrl()

The 'Get Offers' loop

render()

Presentation Rules:

boolean displayPlayButton = false;
If (Entitlement)
    displayPlayButton = true
    If(entitlement.package_type==Subscription)
        package.image_url
...

If (Offer)
loop:offers
    If(offer.package_type!=Subscription)
        package.image_url
        package.subscription_url
If(offer.package_type==Subscription)
package.image_url
package.subscription_url

If there is more than one transactional package:
only present the lowest priced package if there is more than one ad-funded package:
only present the lowest priced package
OR
If there is a dymanic price that is lower than the 'static price' for a package then present as a discount? (e.g. with strikethrough on the static price

viewContent(user, package)

alt: !entitlement

hasEntitlement(user, package)

Return purchase page & CDN token

alt: !entitlement

getPurchaseDetails(user, package)

checkQuotes(user, package)

return purchase details

cacheQuote
(user, package, quote )

return purchase page

buyContent(user, package, quote, PIN)

manage Transaction()

setEntitlement(user, content)

return player page & CDN token

render()

flushCache(user, package)

*FIG. 77* Cont'd

FIG. 78

FIG. 79

Figure 80

EP 3 313 080 A1

252

**4518**

**4524**

Content Provider acting as
its own Metadata Publisher

Each **Metadata Originator** is a
unique combination of Content
Provider and Metadata
Publisher

**4510**

*Metadata Originator's transaction streams*

Content Provider supplying
metadata via two Metadata
Publishers

| Content | Metadata |
| Provider A | Publisher Z |

Metadata Originator A-Z

Metadata
Publisher Y

Metadata Originator B-Y

**4512**

**4520**

**4526**

Content
Provider B

**4528**

Metadata
Ingest
Service

**4514**

Metadata Originator B-X

**4516**

Content
Provider C

Metadata
Publisher X

Metadata Originator C-X

Content
Provider D

Metadata Originator D-X

**4522**

Metadata Publisher
supplying metadata
*on behalf of multiple*
Content Providers

**4530**    **4532**

Figure 81

**Sequence: Asynchronous operation mode**

Figure 82

**Sequence: Synchronous operation mode**

Figure 83

Figure 84

Figure 85

# FIG. 86

**TransactionReportType**

- attributes
  - state
  - transactionId

sr:Remark

Optical human-readable
Remarks are uncontrolled,
one per language; Messages
are controlled

0..∞

**FragmentReportType**

- attributes
  - state
  - transactionId

sr:Remark

Optical human-readable
Remarks are uncontrolled,
one per language; Messages
are controlled

0..∞

**ControlledMessageType**

- attributes
  - severity
  - location
    Xpath location,
  - reasonCode
    A term from a
    controlled
    vocabulary.

StatusReport — sr:TransactionReport

A report of one or
more metadata
transactions

1..∞

sr:FragmentUpdateReport

0..∞

sr:Message

0..∞

sr:Comment

*FIG. 86 Cont'd*

*FIG. 87*

Figure 88

Figure 89

Figure 90

Figure 91

**Descriptive Metadata transaction C**

- TVAMain
- ProgramDescription
  - ProgramInformationTable
    - ProgramInformation — *Editorial Version*
  - GroupInformationTable
    - GroupInformation, Type= "programConcept" — *Episode*

**On-demand Pub'n trans. C**

- TVAMain
- ProgramDescription
  - ProgramLocationTable
    - OnDemandProgram — *On-demand Publication*

**Service transaction C**

- TVAMain
- ProgramDescription
  - ServiceInformationTable
    - ServiceInformation — *Services*

EP 3 313 080 A1

**Descriptive Metadata transaction D1**

TVAMain

ProgramDescription

ProgramInformationTable

GroupInformationTable

ProgramInformation

*Editorial Version*

GroupInformation
Type= "programConcept"

*Episode*

**Descriptive Metadata trans D2**

TVAMain

ProgramDescription

GroupInformationTable

GroupInformation
Type= "otherCollection"

*Season*

**On-demand Pub'n trans. D**

TVAMain

ProgramDescription

ProgramLocationTable

OnDemandProgram

*On-demand Publication*

**Service transaction D**

TVAMain

ProgramDescription

ServiceInformationTable

ServiceInformation

*Services*

Figure 92

Figure 93

Figure 94

Content Description
Metadata

Product & Offer Metadata

| On-demand 1 | Product Membership 1 | Package A |
| On-demand 2 | Product Membership 2 | |
| On-demand 3 | Product Membership 3 | Package B |
| On-demand 4 | Product Membership 4 | |
| On-demand 5 | Product Membership 5 | Package C |

9414

9412

9410

Figure 95

Europäisches
Patentamt

European
Patent Office

Office européen
des brevets

# EUROPEAN SEARCH REPORT

Application Number

EP 17 19 8690

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 049 826 A (BESER NURETTIN B [US]) 11 April 2000 (2000-04-11) * page 28, line 7 - page 33, line 37 * * page 3, line 19 - page 4, line 30 * ----- | 1-3,5, 8-15 | INV. H04N21/258 H04N21/443 H04N21/431 H04N21/6547 |
| X | WO 2009/157831 A1 (ERICSSON TELEFON AB L M [SE]; LJUNGGREN ANDREAS [SE]; SMITH OLA [SE];) 30 December 2009 (2009-12-30) * paragraphs [0019] - [0055] * ----- | 1-15 | H04N21/45 H04N21/81 H04H60/31 H04H60/66 H04N21/2665 |
| A | US 2010/077362 A1 (ALLRED CURT [US] ET AL) 25 March 2010 (2010-03-25) * paragraphs [0014] - [0031] * ----- | 1-15 | H04N21/442 H04N21/462 H04N21/472 H04N21/482 |
| A | US 2002/138592 A1 (TOFT ROLF [US]) 26 September 2002 (2002-09-26) * paragraphs [0016] - [0028] * ----- | 1-15 | H04N21/658 |
| A | US 2010/082777 A1 (MONTGOMERY GREGORY [US] ET AL) 1 April 2010 (2010-04-01) * paragraph [0047] * ----- | 1-15 | |
| A | US 2003/001883 A1 (WANG DONGYAN [US]) 2 January 2003 (2003-01-02) * paragraphs [0212] - [0271] * ----- | 1-15 | TECHNICAL FIELDS SEARCHED (IPC) H04N G06F H04L H04W |
| A | US 5 852 722 A (HAMILTON GRAHAM [US]) 22 December 1998 (1998-12-22) * the whole document * ----- | 1-15 | |

The present search report has been drawn up for all claims

| Place of search | Date of completion of the search | Examiner |
|---|---|---|
| Munich | 30 January 2018 | Sanahuja, Francesc |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**                    EP 17 19 8690

This annex lists the patent family members relating to the patent documents cited in the above-mentioned European search report.
The members are as contained in the European Patent Office EDP file on
The European Patent Office is in no way liable for these particulars which are merely given for the purpose of information.

30-01-2018

| Patent document cited in search report | Publication date | Patent family member(s) | Publication date |
|---|---|---|---|
| US 6049826 A | 11-04-2000 | NONE | |
| WO 2009157831 A1 | 30-12-2009 | EP 2291769 A1 | 09-03-2011 |
| | | JP 5209114 B2 | 12-06-2013 |
| | | JP 2011527782 A | 04-11-2011 |
| | | US 2011145103 A1 | 16-06-2011 |
| | | WO 2009157831 A1 | 30-12-2009 |
| US 2010077362 A1 | 25-03-2010 | US 2010077362 A1 | 25-03-2010 |
| | | WO 2009132154 A2 | 29-10-2009 |
| US 2002138592 A1 | 26-09-2002 | NONE | |
| US 2010082777 A1 | 01-04-2010 | CN 102171997 A | 31-08-2011 |
| | | EP 2335397 A1 | 22-06-2011 |
| | | JP 5145306 B2 | 13-02-2013 |
| | | JP 2010086533 A | 15-04-2010 |
| | | US 2010082777 A1 | 01-04-2010 |
| | | WO 2010037901 A1 | 08-04-2010 |
| US 2003001883 A1 | 02-01-2003 | AU 7281701 A | 05-02-2002 |
| | | AU 7675401 A | 05-02-2002 |
| | | AU 2001276754 B2 | 08-07-2004 |
| | | CA 2416276 A1 | 31-01-2002 |
| | | CA 2416300 A1 | 31-01-2002 |
| | | CN 1443352 A | 17-09-2003 |
| | | CN 1443353 A | 17-09-2003 |
| | | EP 1301926 A1 | 16-04-2003 |
| | | EP 1305801 A1 | 02-05-2003 |
| | | JP 3677268 B2 | 27-07-2005 |
| | | JP 4778033 B2 | 21-09-2011 |
| | | JP 2004505356 A | 19-02-2004 |
| | | JP 2004505478 A | 19-02-2004 |
| | | JP 2006185464 A | 13-07-2006 |
| | | JP 2006190326 A | 20-07-2006 |
| | | JP 2006209790 A | 10-08-2006 |
| | | JP 2006209791 A | 10-08-2006 |
| | | JP 2006216071 A | 17-08-2006 |
| | | JP 2006216072 A | 17-08-2006 |
| | | JP 2009064452 A | 26-03-2009 |
| | | KR 20030010746 A | 05-02-2003 |
| | | KR 20030011096 A | 06-02-2003 |
| | | US 2003001883 A1 | 02-01-2003 |
| | | US 2003009537 A1 | 09-01-2003 |
| | | WO 0209105 A1 | 31-01-2002 |
| | | WO 0209106 A1 | 31-01-2002 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 17 19 8690

This annex lists the patent family members relating to the patent documents cited in the above-mentioned European search report.
The members are as contained in the European Patent Office EDP file on
The European Patent Office is in no way liable for these particulars which are merely given for the purpose of information.

30-01-2018

| Patent document cited in search report | Publication date | Patent family member(s) | Publication date |
|---|---|---|---|
| US 5852722 A | 22-12-1998 | CN 1168509 A | 24-12-1997 |
| | | DE 69717885 D1 | 30-01-2003 |
| | | DE 69717885 T2 | 28-08-2003 |
| | | EP 0793170 A1 | 03-09-1997 |
| | | HK 1003519 A1 | 11-04-2003 |
| | | JP 4550172 B2 | 22-09-2010 |
| | | JP H1074147 A | 17-03-1998 |
| | | KR 100421302 B1 | 17-04-2004 |
| | | SG 75114 A1 | 19-09-2000 |
| | | US 5826000 A | 20-10-1998 |
| | | US 5852722 A | 22-12-1998 |

EPO FORM P0459

For more details about this annex : see Official Journal of the European Patent Office, No. 12/82

page 2 of 2